# EUROPEAN PATENT APPLICATION

(11) **EP 4 368 074 A1**
(43) Date of publication of application: **15.05.2024**
(21) Application number: 22836996.3
(22) Date of filing: 07.07.2022
(51) Int. Cl.: A47J 27/00, A47J 36/06

(54) **COOKING DEVICE**

(30) Priority: 07.07.2021 CN 202110768960; 22.07.2021 CN 202110832977; 22.07.2021 CN 202110832993; 30.09.2021 CN 202111162767; 30.09.2021 CN 202111166088; 30.09.2021 CN 202111166089; 30.09.2021 CN 202111166080; 30.09.2021 CN 202111162784; 30.09.2021 CN 202111166076
(71) Applicant: Tineco Intelligent Technology Co., Ltd., Suzhou, Jiangsu 215168 (CN)
(72) Inventor: GONG, Heng, Suzhou, Jiangsu 215168 (CN); CUI, Zhenmin, Suzhou, Jiangsu 215168 (CN); WEI, Wei, Suzhou, Jiangsu 215168 (CN); WU, Rendi, Suzhou, Jiangsu 215168 (CN); JIANG, Hongbin, Suzhou, Jiangsu 215168 (CN); LV, Hao, Suzhou, Jiangsu 215168 (CN); REN, Huaiqiang, Suzhou, Jiangsu 215168 (CN); LIU, Kai, Suzhou, Jiangsu 215168 (CN); LIANG, Guilin, Suzhou, Jiangsu 215168 (CN); XU, Feixiang, Suzhou, Jiangsu 215168 (CN); CUI, Yunhao, Suzhou, Jiangsu 215168 (CN); DONG, Guangwei, Suzhou, Jiangsu 215168 (CN)
(74) Representative: Renaudo, Adrien Hanouar
(86) International application number: PCT/CN2022/104283
(87) International publication number: WO 2023/280251

(57) **Abstract**

A cooking device (1), comprising: a pot (30), comprising a pot body (310) and a cover body (220), the cover body (220) covering the pot body (310) to form a cooking cavity; and a spatula assembly (40), which is located in the cooking cavity, the spatula assembly (40) comprising a spatula (420), a lifting apparatus (440), and a driving apparatus (410). The lifting apparatus (440) is provided on the cover body (220) and is in driving connection with the spatula (420). The lifting apparatus (440) may drive the spatula (420) to move up and down relative to the pot body (310) between a first position and a second position. The driving apparatus (410) is in driving connection with the spatula (420) so as to drive the spatula (420) to rotate. When the spatula (420) is in the first position, the spatula (420) is in close contact with the inner surface of the cover body (220). Under the drive of the driving apparatus (410), the spatula (420) is able to clean the inner surface of the cover body (220) in the first position. When the spatula (420) is in the second position, the spatula (420) is out of contact with the inner surface of the cover body (220). Thus, a pot cover (20) of the cooking device (1) may be reasonably and automatically cleaned, the spatula (420) may be moved up and down, and different cooking requirements and different cleaning requirements of the cooking cavity may be met.

## Description

### CROSS-REFERENCE TO RELATED APPLICATIONS

The present disclosure claims priority to Chinese Patent Applications in the table below, which are hereby incorporated by reference in their entireties:

| Priority date | Priority number | Patent title |
|---|---|---|
| 2021-09-30 | 202111166088.0 | Cooking device |
| 2021-09-30 | 202111166080.4 | Cooking device and feeding system |
| 2021-09-30 | 202111166089.5 | Cooking device and feeding system |
| 2021-09-30 | 202111166076.8 | Cooking device, device with self-cleaning function, accessory and self-cleaning method |
| 2021-09-30 | 202111162767.0 | Cooking device, cleaning and stirring accessory, and device with self-cleaning function |
| 2021-07-22 | 202110832993.9 | Cooking device and feeding system |

### FIELD

The present disclosure relates to the field of cooking, and in particular to a cooking device.

### BACKGROUND

In order to meet people's different needs for various cooking scenarios, related household appliance categories have been introduced. Products have evolved from tools that helped you cook in the past to intelligent partners that teach you how to cook. At present, some people who are not good at cooking and busy at work are becoming more and more interested in home appliances that are simple to operate and highly intelligent, such as automatic cookers, cooking machines, wall breakers, and smart rice cookers, etc.

Although this type of product solves the cooking problem to a large extent, it still faces some problems in actual application scenarios that need to be further overcome to improve the user experience.

### SUMMARY

In one embodiment of the present disclosure, a cooking device is provided, including: a main body, having a cooking container;
a plurality of material boxes, the material boxes are provided with a discharging structure;
a feeding apparatus, having a feeding element and a discharging element interconnected with each other, and the discharging element is interconnected with the cooking container;
a switching apparatus, switching the discharging structure of different material boxes to correspond to a position of the feeding element, so that when the discharging structure is in an open state, cooking material is transported into the cooking container through the feeding element and the discharging element.

Optionally, the switching apparatus is in driving connection with the plurality of material boxes for driving the movement of the plurality of material boxes; or the switching apparatus is in driving connection with the feeding apparatus to drive the movement of the feeding apparatus.

Optionally, a mounting plate is further provided, and the plurality of material boxes is provided on the mounting plate;

The switching apparatus includes a driver, and an output shaft of the driver is in driving connection with a rotation center of the mounting plate, when the mounting plate is driven to rotate, the plurality of material boxes is driven to rotate through the mounting plate; or
the driver drives the feeding apparatus to move, and a position of the mounting plate is fixed.

Optionally, the mounting plate is located below the material box.

Optionally, an outer cover is further provided, at least a part of the plurality of material boxes is provided in the outer cover;
when the switching apparatus drives the mounting plate to rotate, the mounting plate rotates relative to the outer cover.

Optionally, the outer cover includes a first mounting bracket and a second mounting bracket;
the first mounting bracket has a first side and a second side opposite to each other; the switching apparatus and the feeding apparatus are both provided on the first mounting bracket and located on the first side of the first mounting bracket; the mounting plate and the plurality of material boxes are located on the second side of the first mounting bracket;
the second mounting bracket is in connection with the second side of the first mounting bracket to form a half-pack space on the second side of the first mounting bracket to contain a part of the plurality of material boxes and the mounting plate within the half-pack space.

Optionally, the mounting plate is provided with a discharge hole corresponding to the discharge structure of the material box;
the mounting plate is provided with a connection protrusion; the connection protrusion is provided with a discharge hole with an insertion depth; the discharge structure of the material box is at least partially inserted into the discharge hole.

Optionally, the feeding element is a funnel, and an end face of a large mouth end of the funnel is provided with a sealing ring sealing with the mounting plate;
the feeding apparatus further includes a feeding pump; a smaller mouth end of the funnel is in connection with the feeding pump by a feeding pipe; and the discharging element is in interconnection with the feeding pump.

Optionally, the discharging structure includes a discharging port at the bottom of the material box and a one-way valve;
the one-way valve is in connection with the material box and blocks the discharging port; when the feeding pump is turned on, the one-way valve is triggered to open, so that the inside of the material box is in interconnected with outside through the discharging port.

Correspondingly, the embodiment of the present disclosure also provides a feeding system, including:
a plurality of material boxes, the material boxes are provided with a discharging structure;
a feeding apparatus, having a feeding element and a discharging element interconnected with each other, and the discharging element is interconnected with the cooking container;
a switching apparatus, switching the discharging structure of different material boxes to correspond to a position of the feeding element, so that when the discharging structure is in an open state, cooking material in corresponding material box is transported into the cooking container through the feeding element and a discharging element.

The technical solution provided by the embodiment of the present disclosure may switch the discharging structure of different material boxes to correspond to the position of the feeding element by the switching apparatus, thereby realizing multiple and cyclic feeding of materials into the cooking container through a plurality of material boxes, improving cooking efficiency, meanwhile the feeding amount may be precisely controlled by the feeding apparatus, and the measurement is accurate.

In one embodiment of the present disclosure, a cooking device is provided, including: a main body, having a cooking container;
a plurality of material boxes, the material boxes are provided with a discharging structure;
a feeding apparatus, having a feeding element and a discharging element interconnected with each other;
a cleaning channel for interconnecting medium assisting cleaning the feeding apparatus;
a switching apparatus switching the discharging structure of different material boxes to correspond to a position of the feeding element, so that when the discharging structure is in an open state, cooking material in corresponding material box is transported into the cooking container through the feeding element and a discharging element; switching the feeding element to correspond to the cleaning channel, so as to assist cleaning of the feeding apparatus with the help of the cleaning channel.

Optionally, a mounting base is further provided;
the plurality of material boxes are provided on the mounting base; the mounting base is provided with a plurality of discharge holes respectively corresponding to the discharging structures of the plurality of material boxes;
a through hole is provided on the mounting base, and a through hole is provided between adjacent discharge holes, the through hole constitutes at least a part of the cleaning channel.

Optionally, the switching apparatus is in driving connection with the mounting base to drive the movement of the plurality of material boxes; or
the switching apparatus is in driving connection with the feeding apparatus to drive the movement of the feeding apparatus.

Optionally, the switching apparatus includes a driver;
an output shaft of the driver is in driving connection with a rotation center of the mounting base, so that when the mounting base is driven to rotate, the mounting base drives the plurality of material boxes to move;
   or
the driver drives the feeding apparatus to move, and a position of the mounting base is fixed.

Optionally, an outer cover is further provided, and a part of the plurality of material boxes, the switching apparatus and the mounting base are all provided in the outer cover;
when the switching apparatus drives the mounting base to rotate, the mounting base rotates relative to the outer cover.

Optionally, the outer cover includes a first mounting bracket and a second mounting bracket;
the first mounting bracket has a first side and a second side opposite to each other; the switching apparatus and the feeding apparatus are both provided on the first mounting bracket and located on the first side of the first mounting bracket; the mounting base and the plurality of material boxes are located on the second side of the first mounting bracket;
the second mounting bracket is in connection with the second side of the first mounting bracket to form a half-pack space on the second side of the first mounting bracket, and a part of the plurality of material boxes and the mounting base are contained in the half-pack space.

Optionally, at least one cleaning box is further provided;
the cleaning box contains cleaning fluid;
the cleaning box is provided with at least part of the cleaning channel and a cleaning valve; the cleaning valve is provided in the cleaning channel.

Optionally, a control apparatus is further provided;
the control apparatus is electrically connected with the switching apparatus, and is used to control the switching apparatus to switch the feeding element to correspond to the cleaning channel to clean the feeding apparatus before switching from one of the material boxes to another of the material boxes; and/or
after the cooking device completes a cooking task, controlling the switching apparatus to switch the feeding element to correspond to the cleaning channel to clean the feeding apparatus.

Optionally, the feeding apparatus further includes a channel switching valve;
the channel switching valve is in interconnection with the discharging element, and the channel switching valve is in connection with the control apparatus; the control apparatus is used to control the on and off of the channel switching valve and the switching of channels to transfer the outflowing cooking material to different areas. Correspondingly, the embodiment of the present disclosure also provides a feeding system, including:
a plurality of material boxes, the material boxes are provided with a discharging structure;
a feeding apparatus, having a feeding element and a discharging element interconnected with each other;
a cleaning channel for interconnecting medium assisting cleaning the feeding apparatus;
a switching apparatus switching the discharging structure of the different material boxes to correspond to a position of the feeding element, so that when the discharging structure is in an open state, cooking material in the corresponding material box are transported into the container through the feeding element and the discharging element; switching the feeding element to correspond to the cleaning channel, so as to assist cleaning of the feeding apparatus with the help of the cleaning channel.

The technical solution provided by the embodiment of the present disclosure may switch the discharging structure of different material boxes to correspond to the position of the feeding element by the switching apparatus, thereby realizing multiple and cyclic feeding of materials into the cooking container through the plurality of material boxes, improving cooking efficiency, meanwhile the feeding amount may be precisely controlled by the feeding apparatus, and the measurement is accurate. In addition, the cleaning channel may be used to assist cleaning of the feeding apparatus, so as to avoid the mixing of various cooking materials in the feeding apparatus when feeding through the plurality of material boxes, and reduce the residual cooking materials in the feeding apparatus, to avoid bacterial growth caused by uncleaning for a long time, which may lead to the deterioration of cooking material and the generation of odor.

In one embodiment of the present disclosure, a cooking device is provided. The cooking device includes:
a cooking body;
a cover body, covering on the cooking body to form a closed cooking cavity;
a device driving apparatus for outputting driving force;
a cleaning piece located in the cooking cavity and in connection with the driving apparatus;
the cleaning piece is in contact with an inner wall of the cooking body and an inner wall of the cover body, and is used to clean the inner wall of the cooking body and the inner wall of the cover body under the driving of the driving apparatus.

In one embodiment of the present disclosure, a cooking device is provided. The cooking device includes:
a cooking body having a cooking cavity;
a cleaning piece located in the cooking cavity and against the inner wall of the cooking cavity;
a driving apparatus, provided on the cooking body and in connection with the cleaning piece;
a heating apparatus;
a control apparatus, electrically connected to the driving apparatus and the heating apparatus, is used to control the operation of the heating apparatus to heat the cleaning liquid in the cooking cavity to generate steam; steam condensate is formed at a place where cavity wall area of the cooking cavity being exposed to the steam; also used to control the operation of the driving apparatus to drive the action of the cleaning piece; at least part of the cavity wall area of the cooking cavity is cleaned under the combined action of the counteracting force of the cleaning piece, the steam and the steam condensate.

In another embodiment of the present disclosure, a device with a self-cleaning function is provided. The device includes:
a device body, having a working cavity with an opening;
a device cover, covering the opening to close the working cavity;
a driving apparatus for outputting driving force;
a cleaning piece located in the working cavity;
the cleaning piece is in contact with a cavity wall of the working cavity and an inner wall of the device cover, and is used to clean the cavity wall of the working cavity and the inner wall of the device cover under a drive of the driving apparatus.

In another embodiment of the present disclosure, a device with a self-cleaning function is provided. The device includes:
a device body having an accommodation cavity;
a cleaning piece, located in the accommodation cavity and abutting against an inner wall of the accommodation cavity;
a driving apparatus, provided on the device body and in connection with the cleaning piece;
a heating apparatus; and
a control apparatus, electrically connected to the driving apparatus and the heating apparatus, used to control the operation of the heating apparatus to heat cleaning liquid in the accommodation cavity to generate steam, steam condensate is formed at a place where cavity wall area of the accommodation cavity being exposed to the steam; and is also used to control the operation of the driving apparatus to drive the action of the cleaning piece;
at least part of the cavity wall area of the accommodation cavity is cleaned under the combined action of the counteracting force of the cleaning piece, the steam and the steam condensate.

In yet another embodiment of the present disclosure, a self-cleaning accessory is provided. The self-cleaning accessory includes:
a frame having a connecting end for connection with a driving apparatus of a cooking device;
a cleaning execution part, provided on the frame;
the cleaning execution part is in contact with an inner wall of the cooking body and an inner wall of a cover body of the cooking device, so that when the cooking device is in a self-cleaning working state, the driving apparatus drives the frame to move, so that the cleaning execution part clean the inner wall of the cooking body and the inner wall of the cover body.

In yet another embodiment of the present disclosure, a self-cleaning accessory is provided. The self-cleaning accessory includes:
a frame having a connection end for connection with an external driving apparatus;
a cleaning execution part, provided on an outer periphery of the frame and used to abut against a cavity wall of an external to-be-cleaned inner cavity;
the cleaning execution part may work in an environment with steam, so as to move in the to-be-cleaned inner cavity under a drive of the driving apparatus, and exert force on the cavity wall to enable the material softened by steam and steam condensate to be taken away.

In another embodiment of the present disclosure, a self-cleaning method for a cooking device is provided, including:
starting a heating apparatus to heat cleaning liquid in a cooking cavity to generate steam;
starting a driving apparatus to drive a cleaning piece to move in the cooking cavity;
steam condensate is formed at a place where cavity wall area of the cooking cavity being exposed to the steam; under the combined action of the counteracting force of the cleaning piece, the steam and the steam condensate, at least part of the cavity wall area of the cooking cavity is cleaned.

In another embodiment of the present disclosure, a self-cleaning method for a cooking device is provided. The cooking device includes a cooking body and a cover body. The self-cleaning method includes:
starting a heating apparatus to heat cleaning liquid in a cooking cavity to generate steam;
starting a driving apparatus to drive a cleaning piece to move in the cooking cavity; the cleaning piece contacts an inner wall of the cooking body and an inner wall of the cover body to clean the inner wall of the cooking body and the inner wall of the cover body; steam condensate is formed at a place where cavity wall area of the cooking cavity being exposed to the steam; under the combined action of the counteracting force of the cleaning piece, the steam and the steam condensate, at least part of the cavity wall area of the cooking cavity is cleaned.

In the technical solution provided by the embodiment of the present disclosure, the cleaning piece is in contact with both the inner wall of the cooking body and the inner wall of the cover body. Under the drive of the driving apparatus, the inner wall of the cooking body and the inner wall of cover body may be cleaned at the same time, since the cleaning piece moving in the cooking cavity is in contact and acts on the inner wall of the cooking body and the inner wall of cover body at the same time.. Thereby, the cleaning efficiency is relative high and the cleaning time is shortened accordingly, which helps to improve the cooking efficiency when being used by a user.

In one embodiment of the present disclosure, a cooking device is provided, including: a device main body including a cooking body and a cover body, the cooking body and the cover body cooperate to form a cooking cavity;
a cleaning piece, located in the cooking cavity and able to move in the cooking cavity;
a driving apparatus, provided on the device main body and in connection with the cleaning piece;
a control apparatus, in connection with the driving apparatus, used to control the operation of the driving apparatus to drive the cleaning piece to move;
in a cleaning mode, the cleaning piece contacts the cover body to clean the cover body; in a cooking mode, the cleaning piece moves in the cooking cavity to present a gap with the cover body.

In another embodiment of the present disclosure, a cleaning stirring accessory is also provided. The cleaning stirring accessory includes:
a connecting component having a connecting component for connecting with a driving apparatus of a cooking device;
a cleaning piece, variable connection with the connecting component;
a stirring paddle, provided on the connecting component and performing stirring action under a drive of a driving apparatus;
in a cleaning mode, the cleaning piece contacts a cover body of the cooking device to clean the cover body; in a cooking mode, the cleaning piece is in a second position by the variable connection to present a gap with the cover body, and cooperates with the stirring paddle to exert force on a cavity inner wall of the of the cooking device where being in contact, to remove cooking materials attached to the cavity inner wall.

In another embodiment of the present disclosure, a device with a self-cleaning part is also provided, which includes:
a device main body having a working cavity;
a cleaning piece, located in the working cavity and having at least two postures;
a driving apparatus, provided on the device main body and in connection with the cleaning piece;
a control apparatus, electrically connected to the driving apparatus, used to control the operation of the driving apparatus to drive the cleaning piece to move;
when the cleaning piece is in different postures, to contact the inner walls of different areas of the working cavity.

The solution provided by the embodiment of the present disclosure adds a cleaning piece with variable position. The cleaning piece has at least two postures. The cleaning piece is able to clean different areas in the cooking cavity in different postures. For example, when the cleaning piece is in at least one of the two postures, the cleaning piece is able to clean the inner wall of the cooking body and the cover body at the same time. When the cleaning piece is in at least another of the two postures, the cleaning piece is able to clean the inner wall of the cooking body alone. In addition to the cleaning function, the cleaning piece may also assist in cooking to scrape off ingredients, sauces, condiments, etc. attached to the inner wall during the cooking, thereby eliminating the need to disassemble and assemble the cleaning piece and bringing a good user experience.

A first aspect of the embodiment of the present disclosure provides a cooking device, including:
a pot including a pot body and a cover body, and the cover body covers the pot body to form a cooking cavity;
a spatula assembly, located in the cooking cavity, and the spatula assembly including a spatula, a lifting apparatus and a driving apparatus;
the lifting apparatus is provided on the cover body and is in driving connection with the spatula, the lifting apparatus is able to drive the spatula to move up and down relative to the pot body between a first position and a second position;
the driving apparatus is in driving connection with the spatula so as to drive the spatula to rotate;
when the spatula is in the first position, the spatula in close contact with an inner surface of the cover body; under a drive of the driving apparatus, the spatula is able to clean the inner surface of the cover body in the first position;
when the spatula is in the second position, the spatula is out of contact with the inner surface of the cover body.

In some embodiments, when the spatula is in the first position, the spatula is in clearance fit or interference fit with an inner wall surface of the pot body, and the spatula is in clearance fit or interference fit with a bottom surface of the pot body; when the spatula is in the second position, the spatula is an interference fit with the inner wall surface of the pot body, and the spatula is in an interference fit with the bottom surface of the pot body.

In some embodiments, when the spatula is in the second position, under the drive of the driving apparatus, the spatula is able to clean the bottom surface and the inner wall surface of the pot body in the second position.

In some embodiments, the spatula includes: a bracket, a mixing spatula and an auxiliary spatula, and wherein the bracket is in connection with the cover body, and the mixing spatula and the auxiliary spatula are respectively provided on the bracket, and the mixing spatula and the auxiliary spatula are both able to rotate relative to the cover body;
a rotation axis of the mixing spatula is parallel to and spaced apart from a rotation axis of the auxiliary spatula.

In some embodiments, the rotation axis of the auxiliary spatula coincides with a central axis of the cover body.

In some embodiments, the mixing spatula and the auxiliary spatula are engaged and driven by a planetary gear set;
the planetary gear set comprises a sun gear and a planetary gear, the sun gear is in connection with the auxiliary spatula, the planetary gear is in connection with the mixing spatula, and the auxiliary spatula rotates when the sun gear receives rotational power, and the mixing spatula is trigger to rotate while rotating around the rotation axis of the auxiliary spatula.

In some embodiments, the mixing spatula includes a mixing part and a connecting component connecting the mixing part to the cover body; when the cover body covers the pot body, the mixing part faces the bottom surface and the inner wall surface of the pot body.

In some embodiments,
the auxiliary spatula includes a first execution part and a second execution part, when the cover body covers the pot body, the first execution part faces the inner surface of the cover body, the second execution part faces the inner wall surface of the pot body, and the first execution part extends radially from the rotation axis of the auxiliary spatula to an edge of the cover body.

In some embodiments, during a movement of the spatula from the first position to the second position, an interference amount between the second execution part and the inner wall surface of the pot body increases;
and/or, during the movement of the spatula from the first position to the second position, the interference amount between the mixing part and the bottom surface of the pot body increases.

In some embodiments, the first execution part includes a first elastic part, the first elastic part is used for scraping contact with the inner surface of the cover;
and/or, the second execution part comprises a second elastic part, the second elastic part is used for scraping contact with the inner wall surface of the pot body;
and/or, the mixing part comprises a third elastic body, the third elastic body is used for scraping contact with the inner wall surface of the pot body and the bottom surface of the pot body.

In some embodiments, the first execution part includes a first rigid body, and the first elastic part covers an outer surface of the first rigid body;
the second execution part comprises a second rigid body, and the second elastic part covers an outer surface of the second rigid body.

In some embodiments, a first elastic contact part is formed on the first elastic portion at a position for contacting the inner surface of the cover body, on a cross section of the first execution portion, a distance from the first elastic contact part to the first rigid body is greater than a distance from other positions on the first elastic part to the first rigid body;
a second elastic contact part is formed on the second elastic part at a position for contacting the inner wall surface of the pot body, on a cross section of the second execution portion of the second execution portion, a distance from the second elastic part to the second rigid body is greater than a distance from other positions on the second elastic part to the second rigid body.

In some embodiments, the mixing part comprises a third rigid body, and the third elastic body covers an outer surface of the third rigid body.

In some embodiments, a third elastic contact part is formed on the mixing part at a position for contacting the bottom surface of the pot body, and on a cross section of the mixing part, a distance from the third elastic contact part to the third rigid body is greater than a distance from other positions on the third elastic body to the third rigid body.

In some embodiments, a sum of an extension length of the second execution part and a height of the mixing part is greater than a height of the inner wall surface of the pot body.

In some embodiments, the spatula has a connecting piece, the connecting piece is in connection with the spatula and is able to be movably provided on the bracket;
the lifting apparatus includes:
a cam, having a near rest point and a far rest point on a circumference of the cam, wherein the cam is used for abutting contact with the connecting piece;
a cam motor, being in connection with the cam, and is used to drive the cam to rotate, so that the near rest point and the far rest point of the cam alternately abut against the connecting piece, so as to drive the spatula to move up and down.

In some embodiments, the cooking device further including:
a reset element, the reset element is provided between the bracket and the connecting piece, and a deformation direction of the reset element is consistent with a moving direction of the connecting piece;
when the far rest point of the cam is in contact with the connecting piece, the reset element is in a deformed state;
during a process of the cam to rotate from the far rest point to the near rest point to be in contact with the connecting piece, a deformation amount of the reset element gradually decreases.

A second aspect of the embodiment of the present disclosure provides a cooking device, including:
a pot including a pot body and a cover body, and the cover body covers the pot body to form a cooking cavity; and
a spatula assembly located in the cooking cavity, the spatula assembly comprises a spatula and a lifting apparatus;
the lifting apparatus is provided on the cover body and is in driving connection with the spatula, the lifting apparatus is able to drive the spatula to move up and down relative to the pot body between a first position and a second position;
when the spatula is in the first position, the spatula is in close contact with an inner surface of the cover body;
when the spatula is in the second position, the spatula is out of contact with the inner surface of the cover body.

A third aspect of the embodiment of the present disclosure provides a cooking device, including:
a pot, including a pot body and a cover body, the cover body covers the pot body to form a cooking cavity; and
a spatula assembly located in the cooking cavity, wherein the spatula assembly comprises a spatula and a lifting apparatus, the spatula comprises an auxiliary spatula being able to be in contact with the cover body, and a mixing spatula being able to be in contact with a bottom surface of the pot body;
the lifting apparatus is provided on the cover body, and is in driving connection with the spatula, the lifting apparatus is able to drive the spatula to move up and down relative to the pot body.

In the embodiment of the present disclosure, by bringing the spatula into contact with the cover body, reasonable automatic cleaning of the pot cover of the cooking device may be achieved, and the spatula may move up and down to meet different cooking needs and different cleaning of the cooking cavity.

### BRIEF DESCRIPTION OF THE DRAWINGS

In order to more clearly explain the embodiments of the present disclosure or the technical solutions in the prior art, the following will briefly introduce the drawings that need to be used in the description of the embodiments or the prior art. Obviously, the drawings in the following description are some embodiments of the present disclosure. For those of ordinary skill in the art, other drawings may be obtained based on these drawings without exerting creative efforts.
FIG. 1 is a schematic three-dimensional structural diagram of a feeding system provided by an embodiment of the present disclosure;
FIG. 2 is a schematic structural diagram of a feeding apparatus provided by an embodiment of the present disclosure;
FIG. 3 is a schematic three-dimensional cross-sectional structural diagram of a feeding system provided by an embodiment of the present disclosure;
FIG. 4 is a schematic plan view of a feeding system provided by an embodiment of the present disclosure;
FIG. 5 is a schematic diagram of the exploded structure of a feeding system provided by an embodiment of the present disclosure;
FIG. 6 is a schematic plan view of a switching element provided by an embodiment of the present disclosure;
FIG. 7 is a planar structure of a feeding system provided by an embodiment of the present disclosure;
FIG. 8 is a schematic three-dimensional structural diagram of a feeding system provided by an embodiment of the present disclosure;
FIG. 9 is a schematic structural diagram of a feeding apparatus provided by an embodiment of the present disclosure;
FIG. 10 is a schematic three-dimensional cross-sectional structural diagram of a feeding system provided by an embodiment of the present disclosure;
FIG. 11 is a schematic plan view of a feeding system provided by an embodiment of the present disclosure;
FIG. 12 is a schematic diagram of the exploded structure of a feeding system provided by an embodiment of the present disclosure;
FIG. 13 is a schematic plan view of a switching element provided by an embodiment of the present disclosure;
FIG. 14 is a planar structure of a feeding system provided by an embodiment of the present disclosure;
FIG. 15 is a schematic structural diagram of a first mounting bracket provided by an embodiment of the present disclosure;
FIG. 16 is a schematic structural diagram of a cooking device provided by an embodiment of the present disclosure;
FIG. 17 is a partial cross-sectional schematic diagram of a cooking device provided by an embodiment of the present disclosure;
FIG. 18 is a schematic structural diagram of a cleaning piece in a cooking device provided by an embodiment of the present disclosure;
FIG. 19 is a schematic cross-sectional view of a cleaning piece in a cooking device provided by an embodiment of the present disclosure;

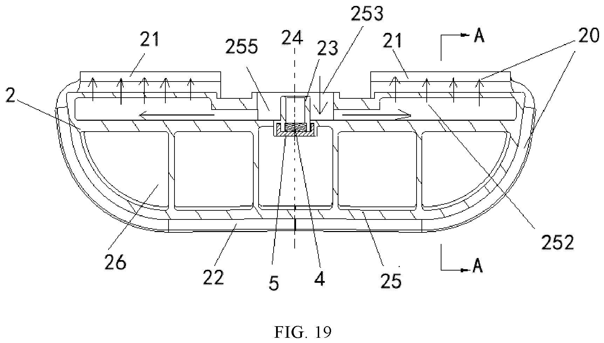

FIG. 20 A-A cross-sectional view shown in FIG. 19;

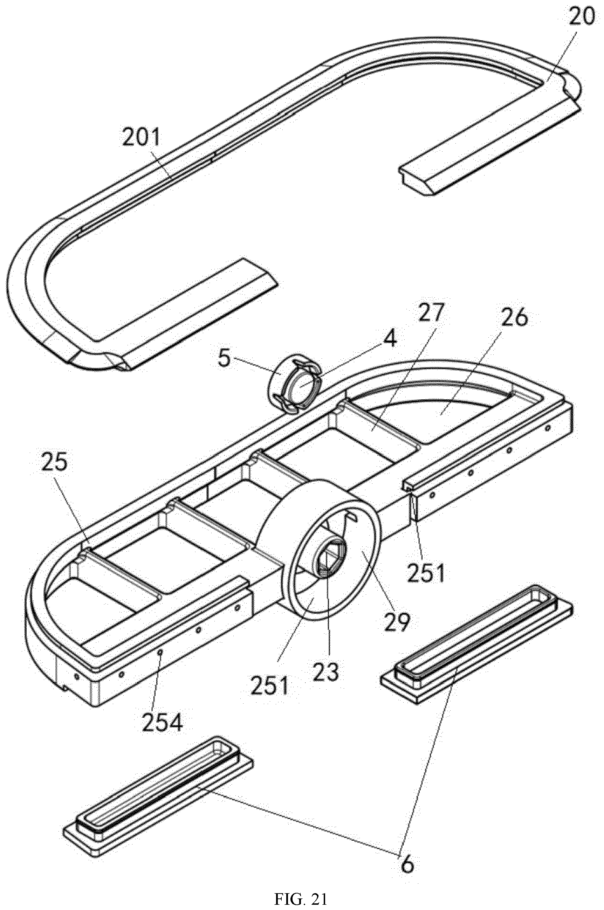

FIG. 21 is an exploded schematic diagram of the cleaning piece shown in FIG. 19;

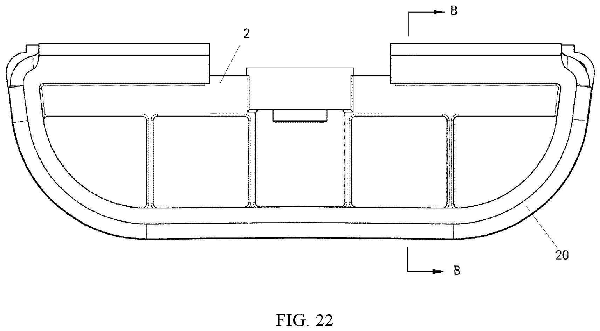

FIG. 22 is a schematic diagram of another implementation structure of a cleaning piece in a cooking device provided by an embodiment of the present disclosure;

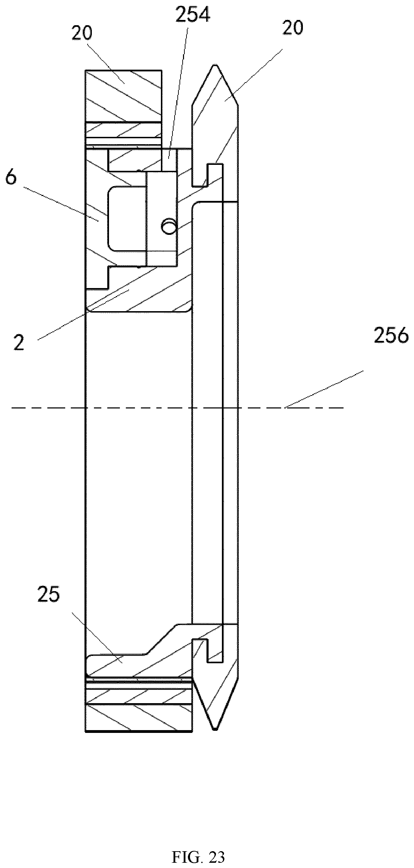

FIG. 23 is a cross-sectional view along B-B shown in FIG. 22;

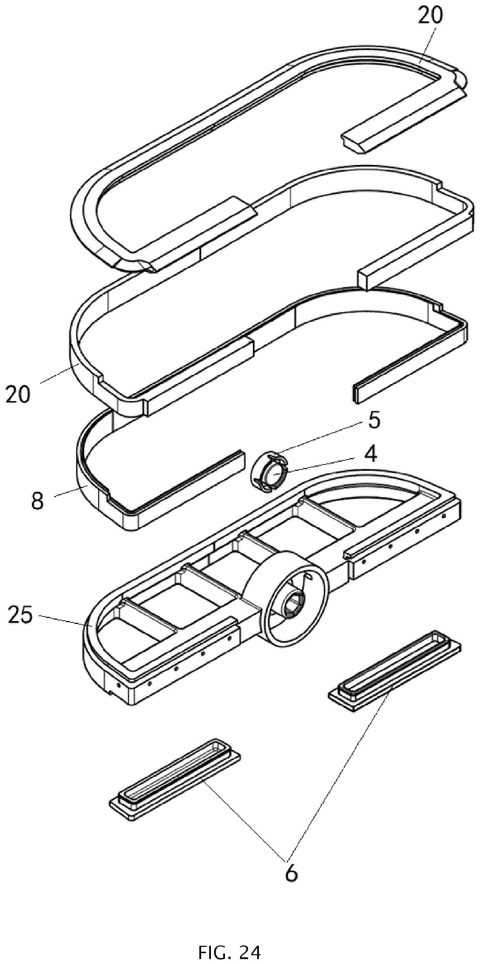

FIG. 24 is an exploded schematic diagram of the cleaning piece shown in FIG. 22;

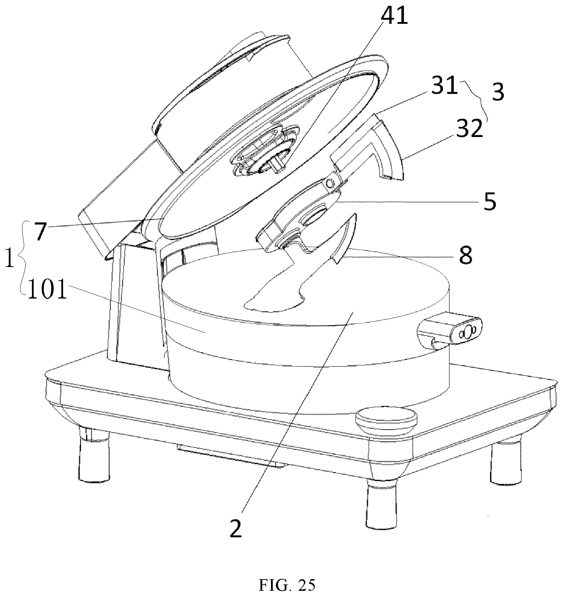

FIG. 25 is a schematic structural diagram of a cooking device provided by an embodiment of the present disclosure;

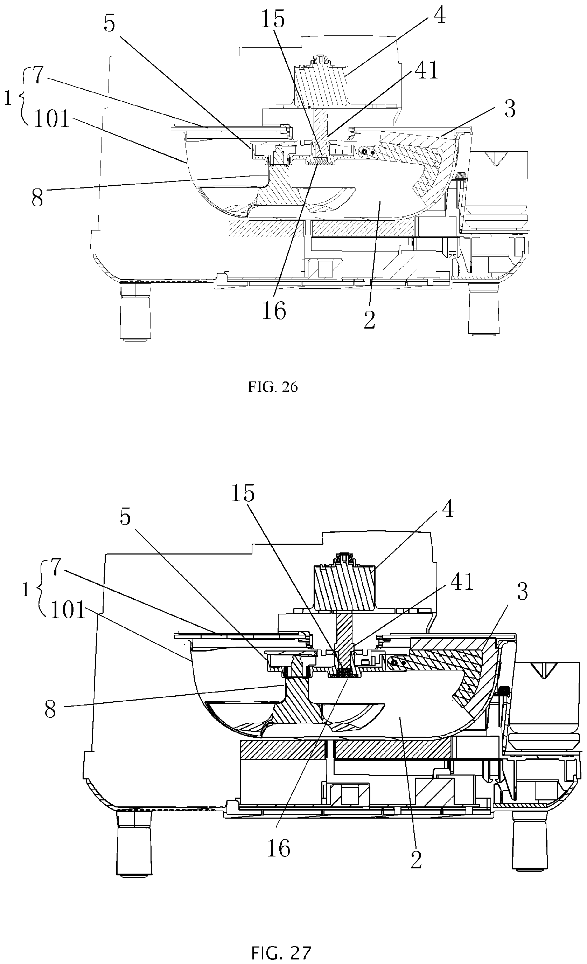

FIG. 26 is a partial cross-sectional view of a cleaning piece in a cooking device being a cooking mode provided by an embodiment of the present disclosure;
FIG. 27 is a partial cross-sectional view of a cleaning piece in a cooking device being in a cleaning working mode provided by an embodiment of the present disclosure;

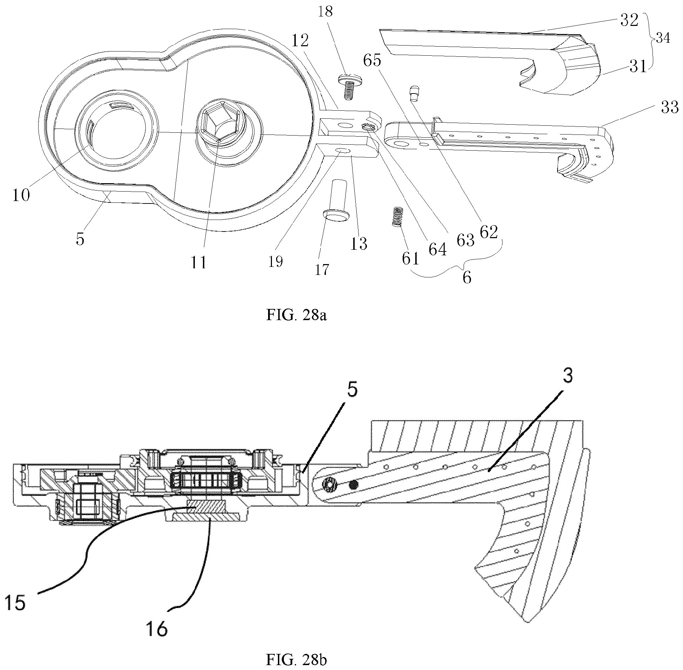

FIG. 28a is an exploded schematic diagram of a cleaning piece assembly including a cleaning piece, a connecting component, etc. provided by an embodiment of the present disclosure;
FIG. 28b is a cross-sectional view of a cleaning piece assembly including a cleaning piece, a connecting component, etc.;

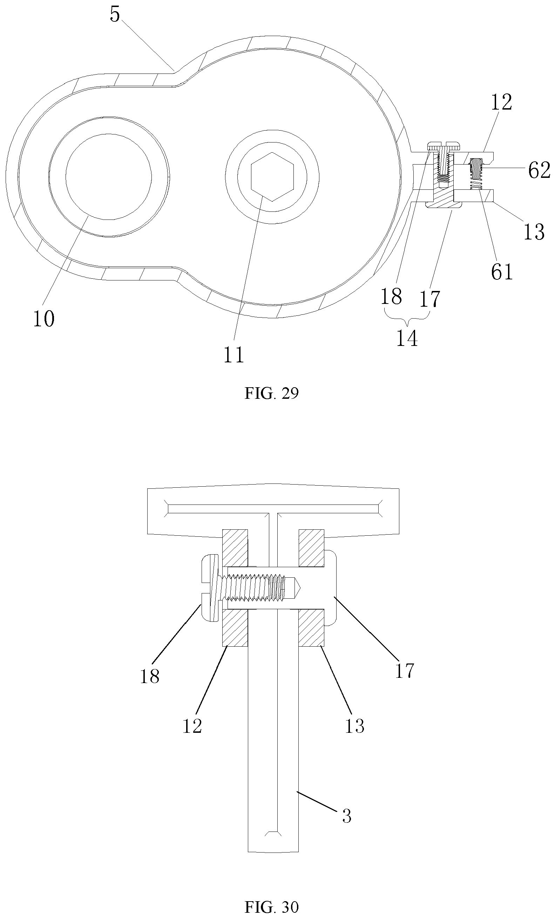

FIG. 29 is a cross-sectional view of a connecting component provided by an embodiment of the present disclosure;
FIG. 30 is a cross-sectional view from another perspective of a connection structure provided by an embodiment of the present disclosure;

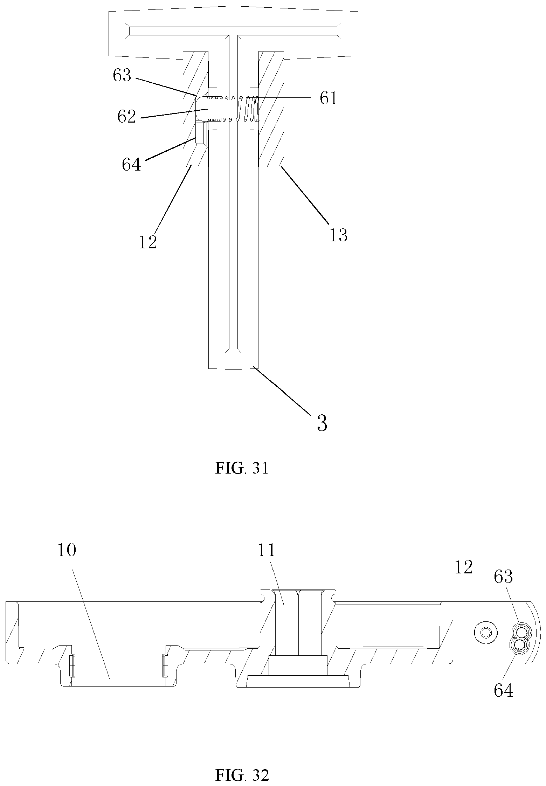

FIG. 31 is a cross-sectional view of a variable position structure provided by an embodiment of the present disclosure;
FIG. 32 is a cross-sectional view of a connecting component provided by an embodiment of the present disclosure from another perspective;

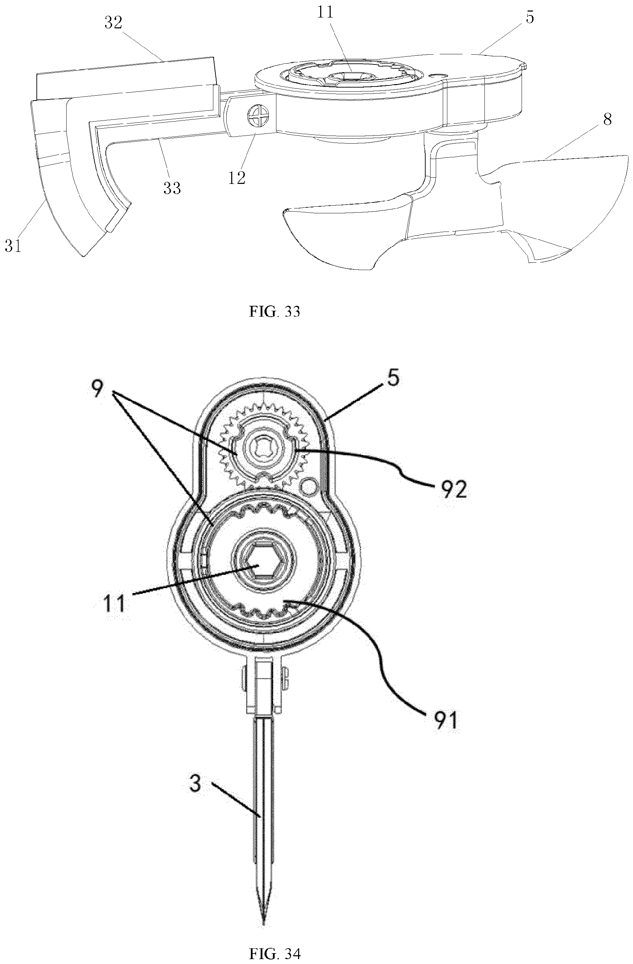

FIG. 33 is a schematic diagram of a connection of a stirring paddle, a connecting component and a cleaning piece provided by one embodiment of the present disclosure;
FIG. 34 shows a schematic structural diagram of a transmission component in an embodiment of the present disclosure;

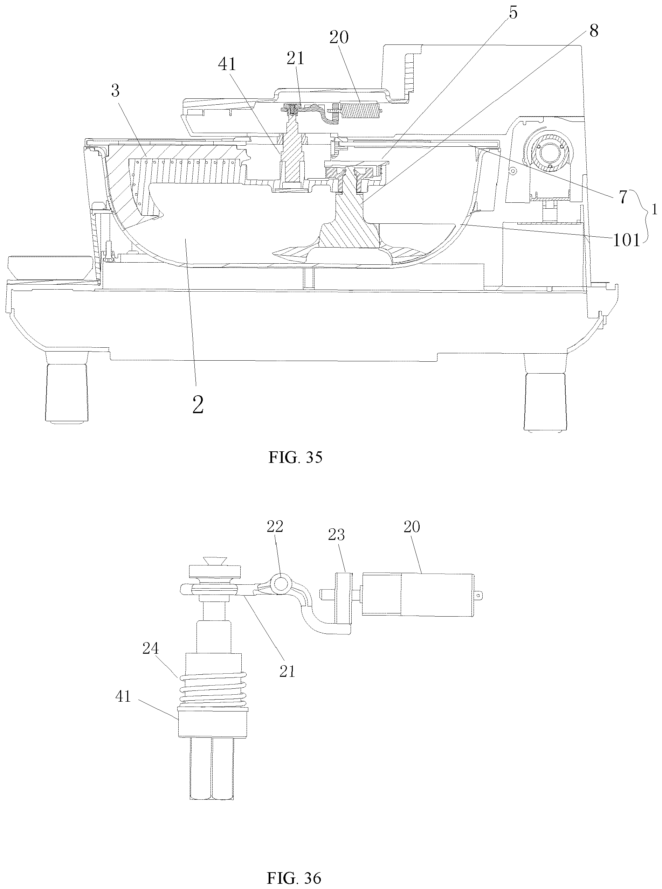

FIG. 35 is a partial cross-sectional view of a cooking device provided by another embodiment of the present disclosure;
FIG. 36 is a schematic structural diagram of a connecting component and a lifting component provided by an embodiment of the present disclosure;

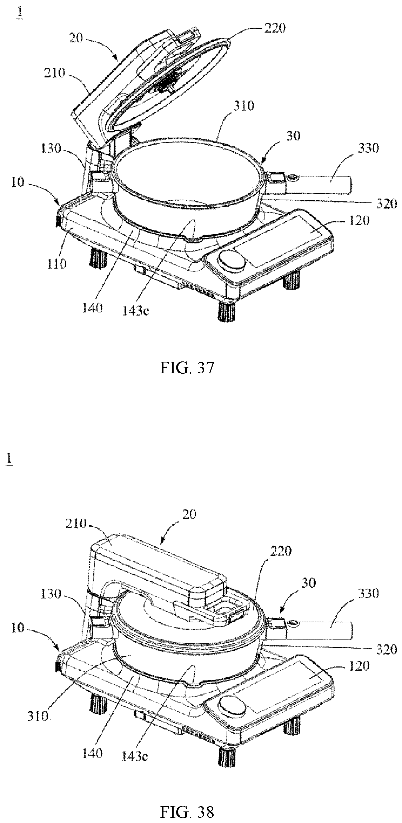

FIGs. 37 and 38 are respectively perspective views of a cooking device provided by an embodiment of the present disclosure;

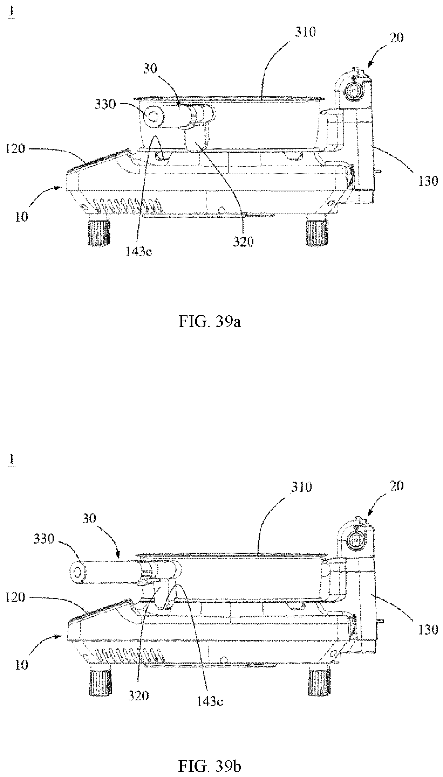

FIGs. 39a and 39b are respectively right side views of the cooking device provided by an embodiment of the present disclosure;

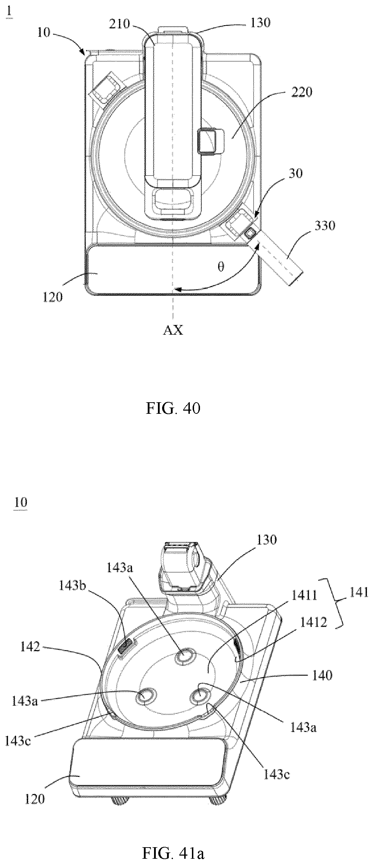

FIG. 40 is a top view of a cooking device provided by an embodiment of the present disclosure;
FIG. 41a is a perspective view of the base of a cooking device provided by an embodiment of the present disclosure;

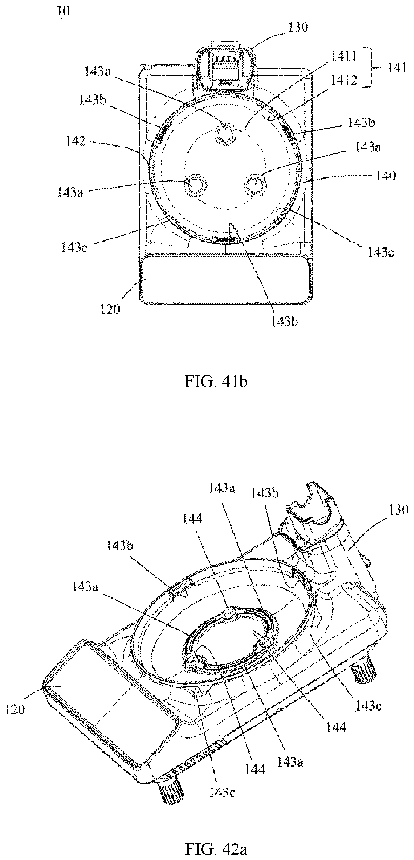

FIG. 41b is a top view of the base of a cooking device provided by an embodiment of the present disclosure;
FIG. 42a is a perspective view of a cooking device provided by another embodiment of the present disclosure;

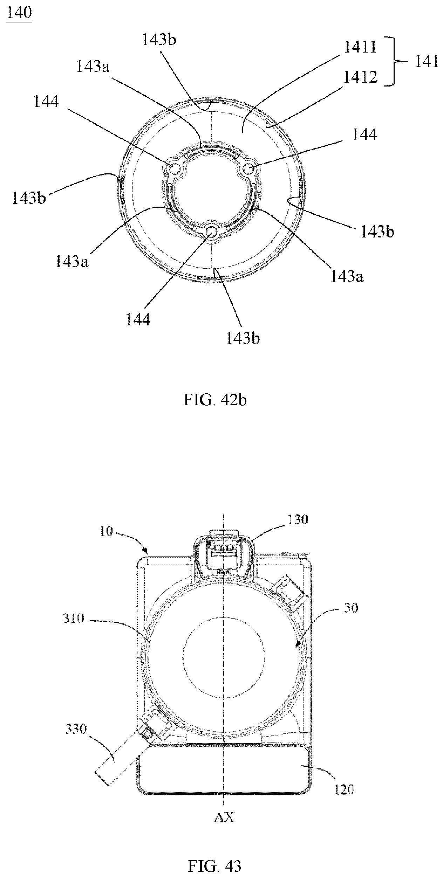

FIG. 42b is a top view of a stovetop of a cooking device provided by another embodiment of the present disclosure;

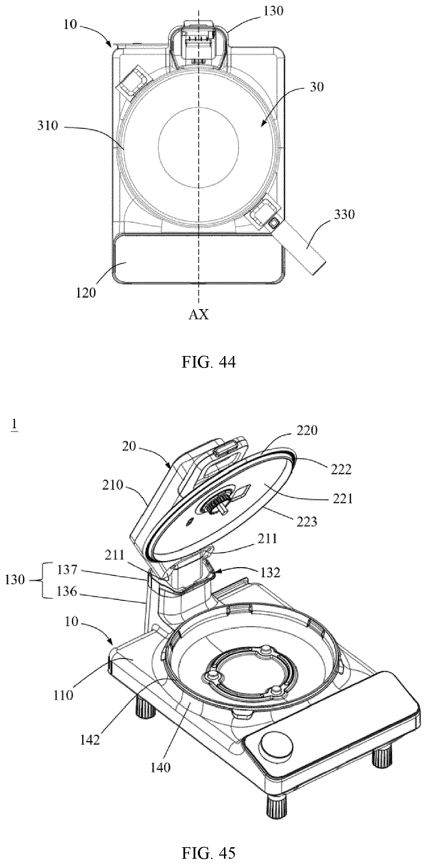

FIGs. 43 and 44 are respectively schematic diagrams of use states of a base provided by an embodiment of the present disclosure;
FIG. 45 is a perspective view of a cooking device provided by an embodiment of the present disclosure;

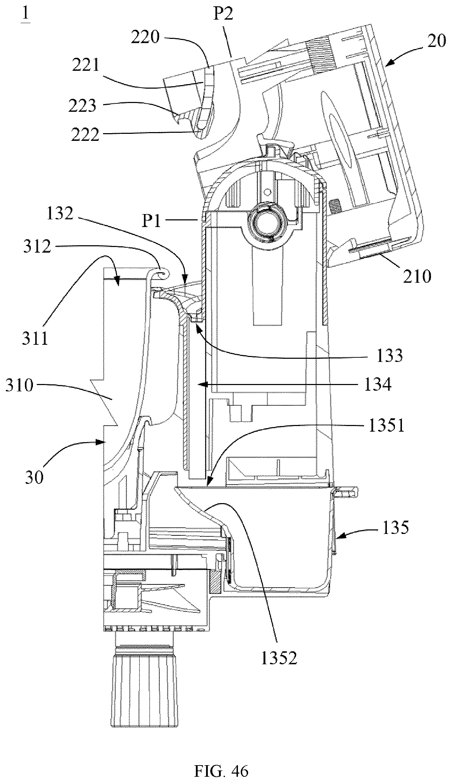

FIG. 46 is a partial cross-sectional view of a cooking device provided by an embodiment of the present disclosure;

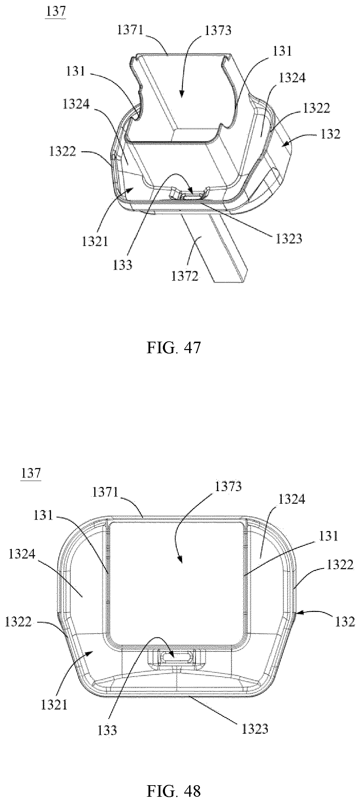

FIG. 47 is a perspective view of a flow guide bracket provided by an embodiment of the present disclosure;
FIG. 48 is a top view of a flow guide bracket provided by to an embodiment of the present disclosure;

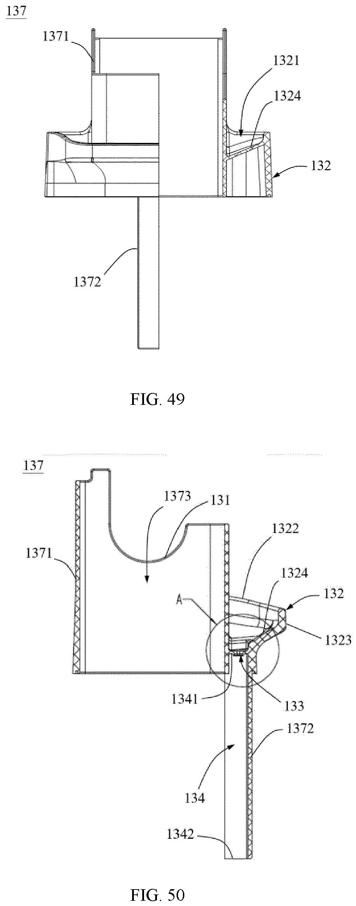

FIG. 49 is a rear view of a flow guide bracket provided by an embodiment of the present disclosure;
FIG. 50 is a cross-sectional view of a flow guide bracket provided by an embodiment of the present disclosure;

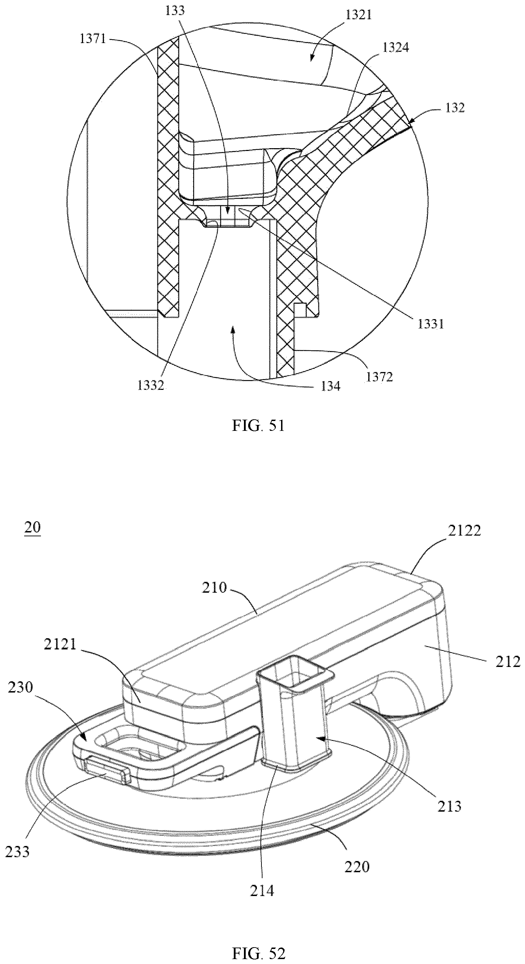

FIG. 51 is a partial enlarged view of FIG. 50;
FIG. 52 is a perspective view of the pot cover provided by an embodiment of the present disclosure;

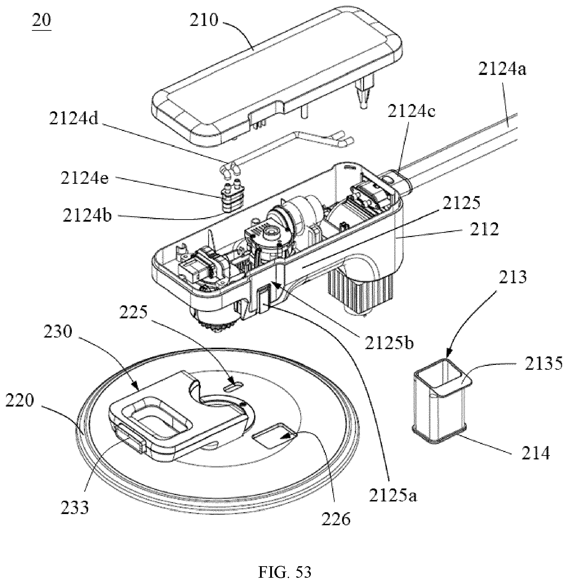

FIG. 53 is an exploded view of a pot cover provided by an embodiment of the present disclosure;

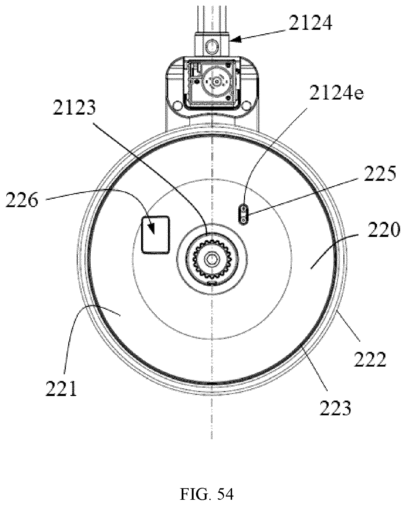

FIG. 54 is a bottom view of a pot cover provided by an embodiment of the present disclosure;

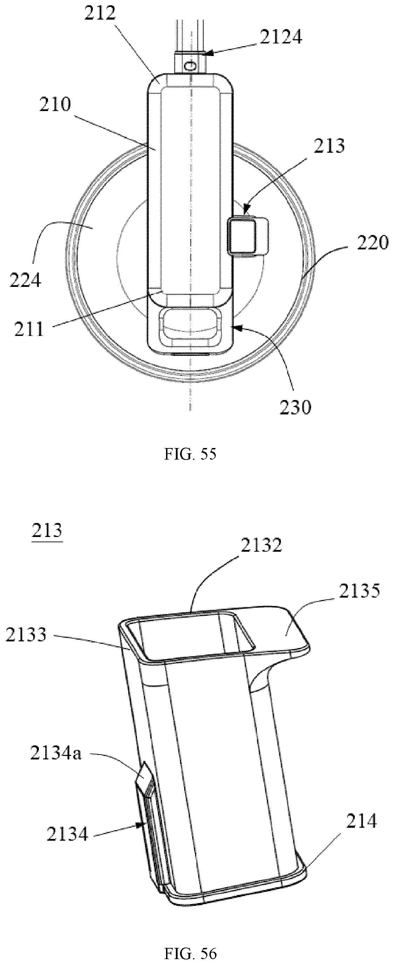

FIG. 55 is a top view of a pot cover provided by an embodiment of the present disclosure;
FIG. 56 is a perspective view of a smoke exhaust pipe provided by an embodiment of the present disclosure;

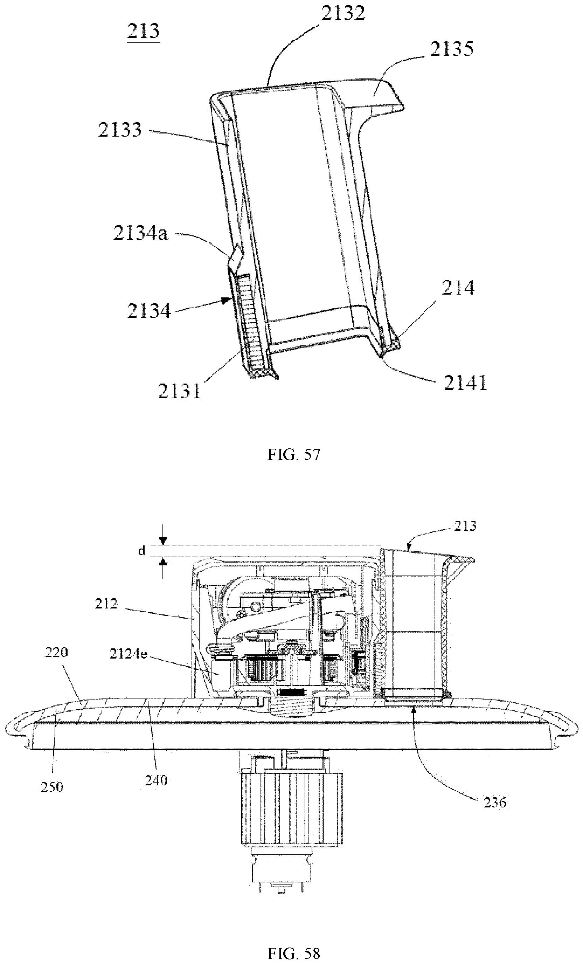

FIG. 57 is a cross-sectional view of a smoke exhaust pipe provided by an embodiment of the present disclosure;
FIG. 58 is a cross-sectional view of a pot cover provided by an embodiment of the present disclosure;

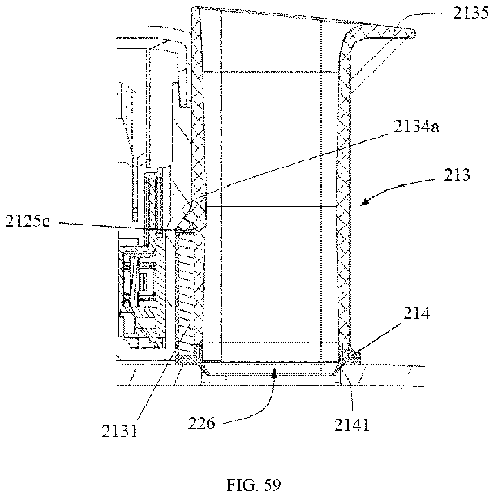

FIG. 59 is a partial enlarged view of FIG. 58;

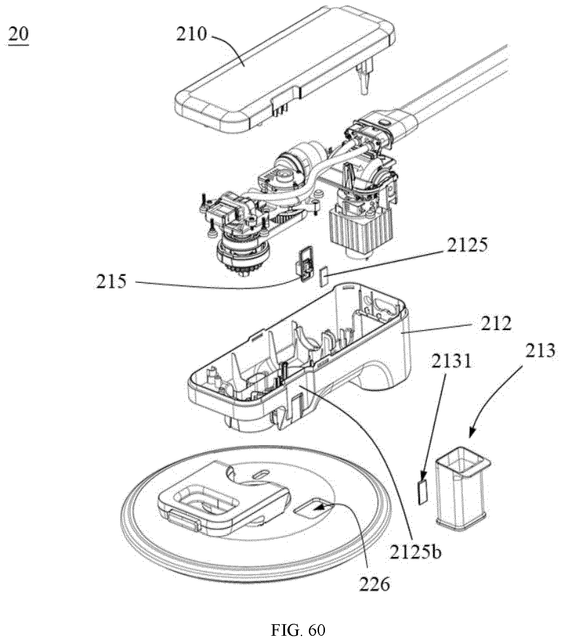

FIG. 60 is an exploded view of a pot cover provided by another embodiment of the present disclosure;

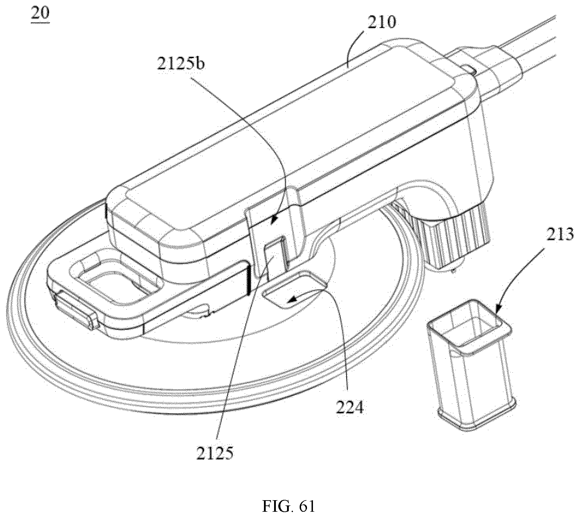

FIG. 61 is a schematic diagram of a pot cover in use state provided by another embodiment of the present disclosure;

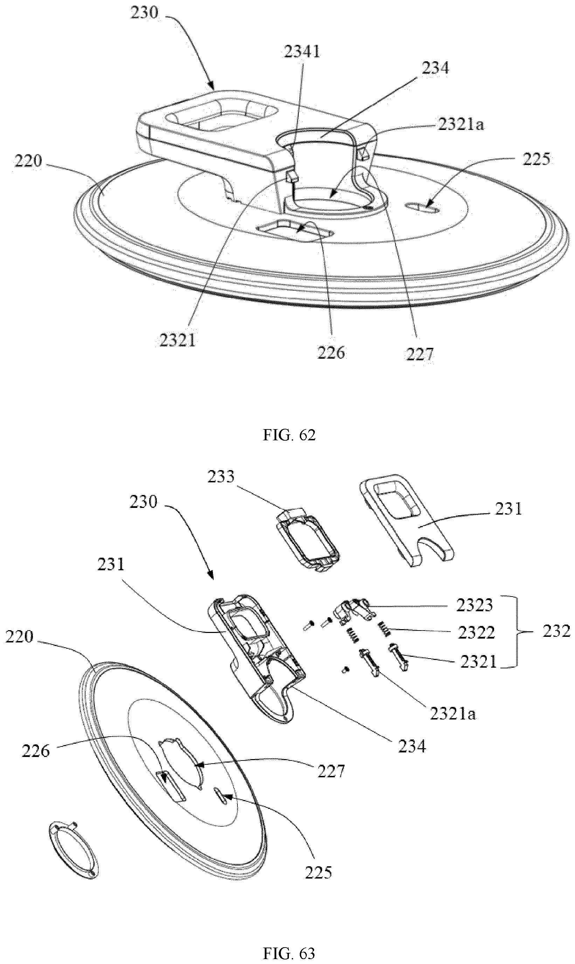

FIG. 62 is a perspective view of a pot cover provided by another embodiment of the present disclosure;
FIG. 63 is an exploded view of a pot cover provided by another embodiment of the present disclosure;

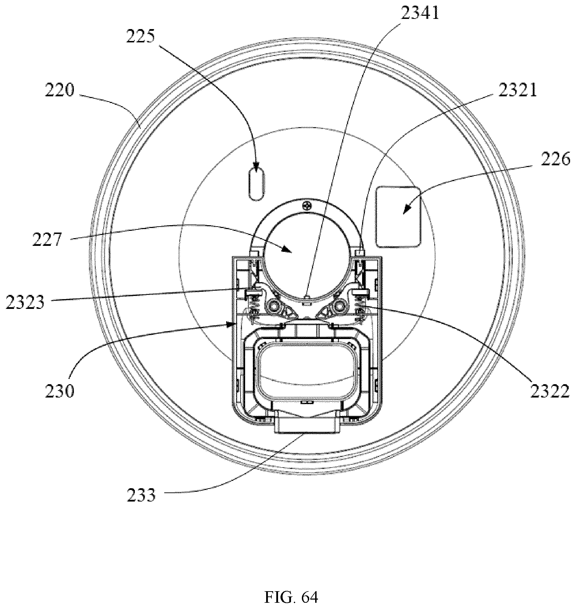

FIG. 64 is a cross-sectional view of a pot cover provided by another embodiment of the present disclosure;

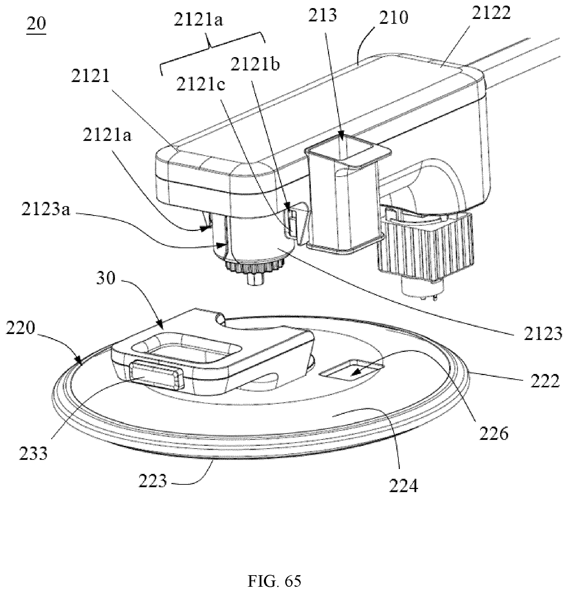

FIG. 65 is a schematic diagram of a use state of a pot cover provided by other embodiments of the present disclosure;

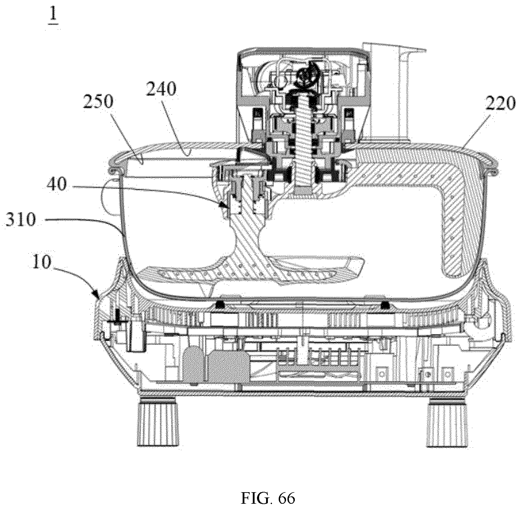

FIG. 66 is a cross-sectional view of a cooking device provided by an embodiment of the present disclosure;

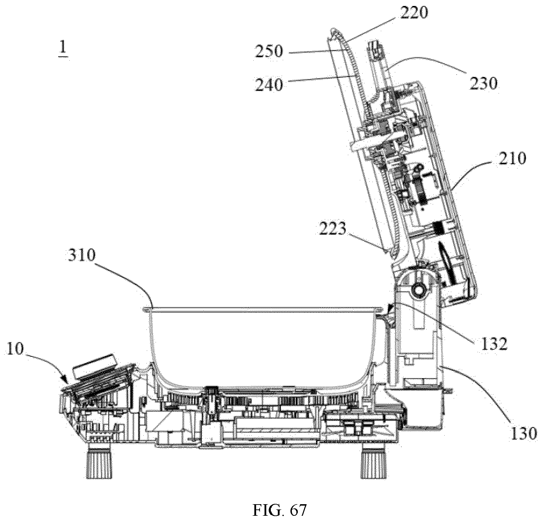

FIG. 67 is a schematic diagram of a use state of a cooking device provided by an embodiment of the present disclosure;

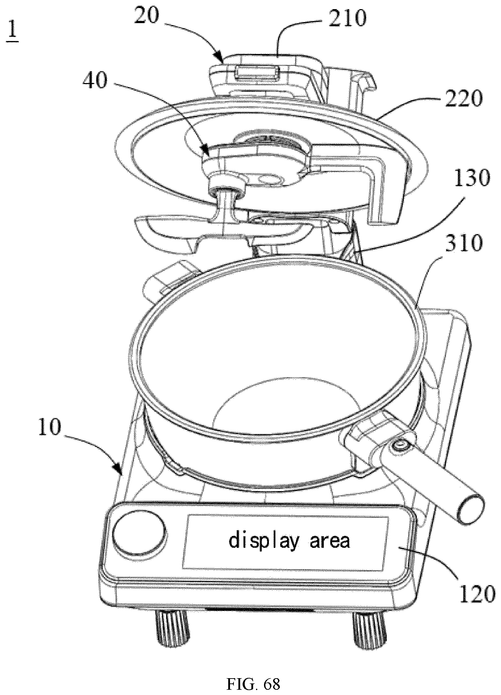

FIG. 68 is a perspective view of a cooking device provided by an embodiment of the present disclosure;

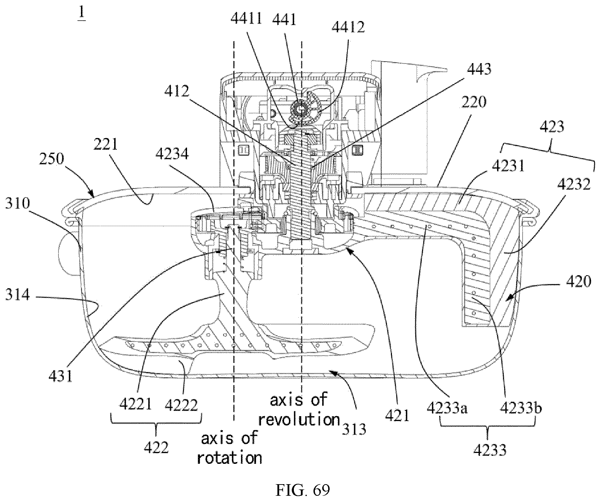

FIG. 69 is a cross-sectional view of a cooking device provided by an embodiment of the present disclosure;

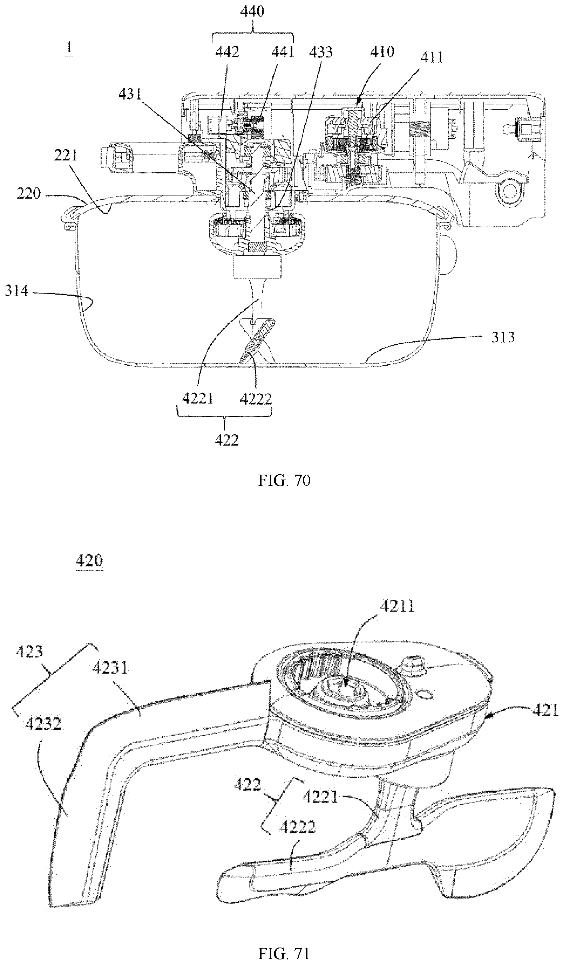

FIG. 70 is a cross-sectional view of a cooking device provided by an embodiment of the present disclosure from another perspective;
FIG. 71 is a perspective view of a spatula provided by an embodiment of the present disclosure;

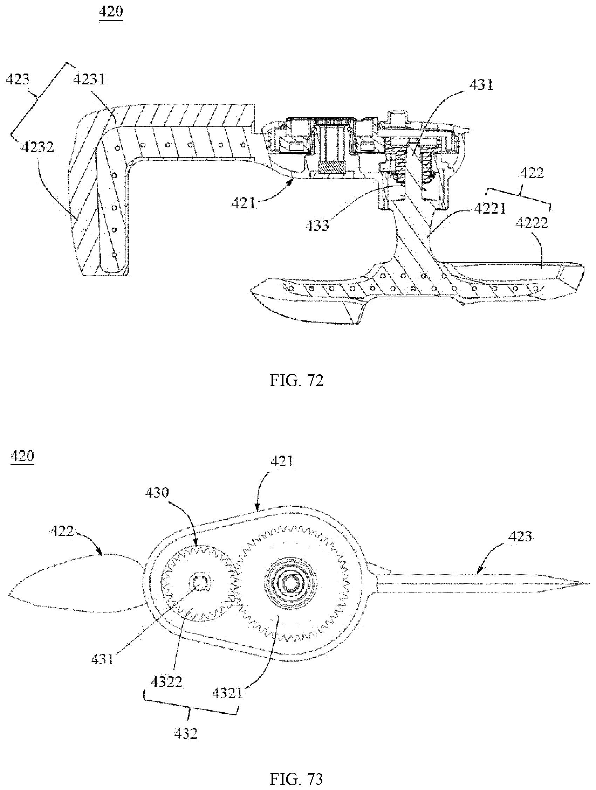

FIG. 72 is a cross-sectional view of a spatula provided by an embodiment of the present disclosure;
FIG. 73 is a top view of a spatula provided by an embodiment of the present disclosure;

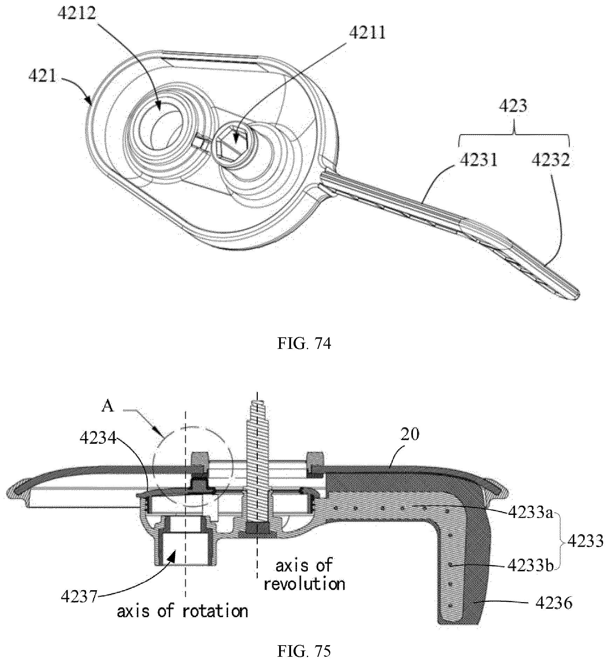

FIG. 74 is a perspective view of a bracket provided by an embodiment of the present disclosure;
FIG. 75 is a schematic cross-sectional view of a partial structure of a cooking device provided by an embodiment of the present disclosure;

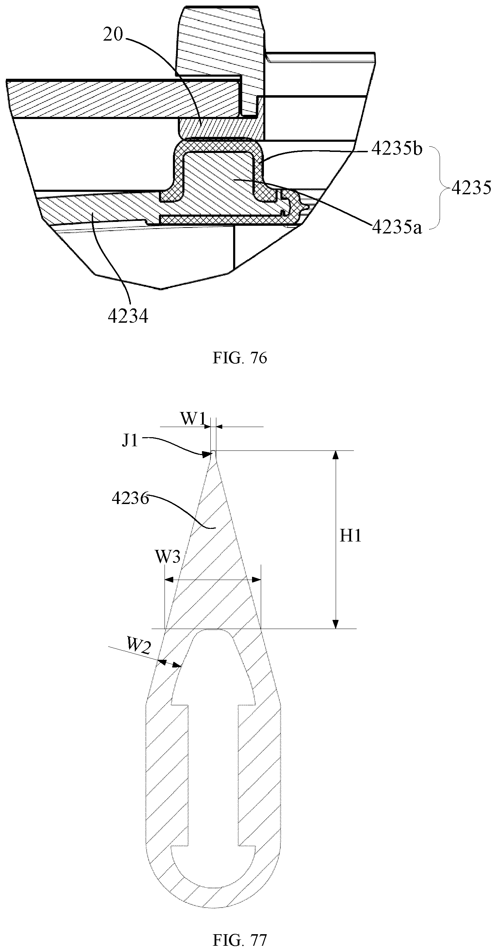

FIG. 76 is an enlarged schematic diagram of position A in FIG. 75;
FIG. 77 is a cross-sectional view of an auxiliary spatula of a spatula provided by an embodiment of the present disclosure;

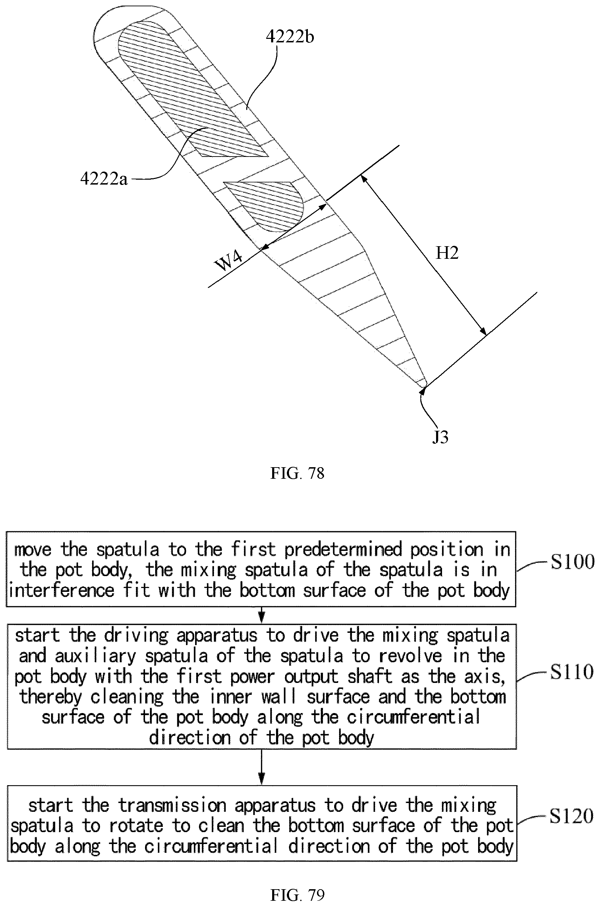

FIG. 78 is a cross-sectional view of a mixing spatula of a spatula provided by an embodiment of the present disclosure;
FIG. 79 is a flow chart of a self-cleaning method provided by an embodiment of the present disclosure;

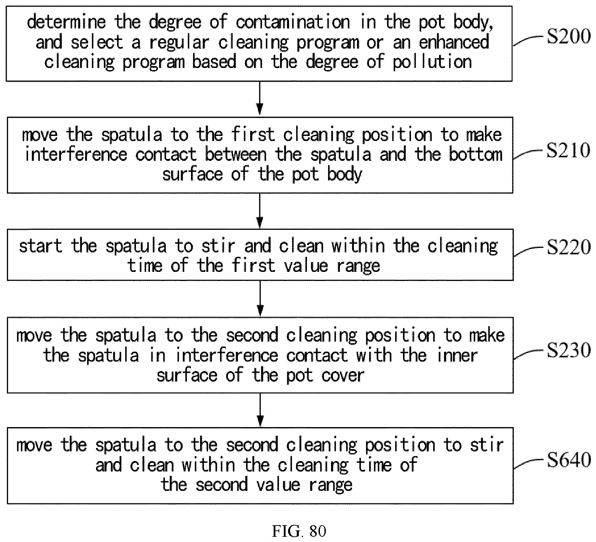

FIG. 80 is a flow chart of a control method provided by an embodiment of the present disclosure;

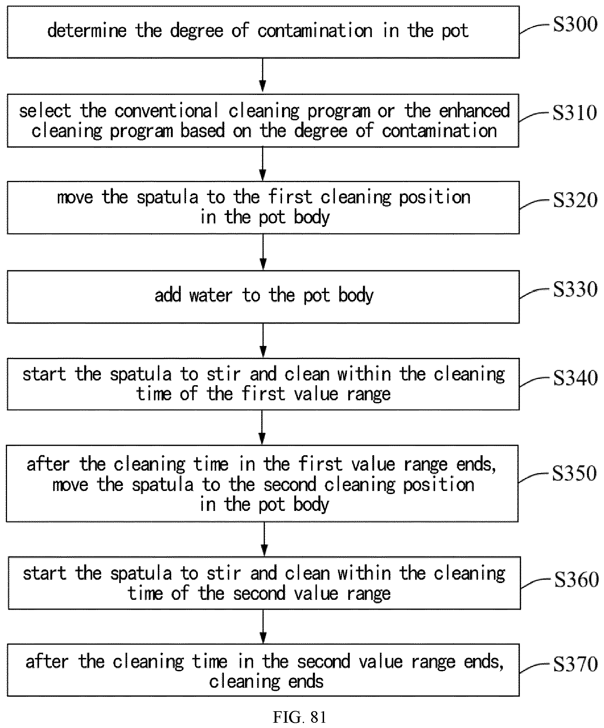

FIG. 81 is a flow chart of a cleaning method of a cooking device control method embodiment of the present disclosure;

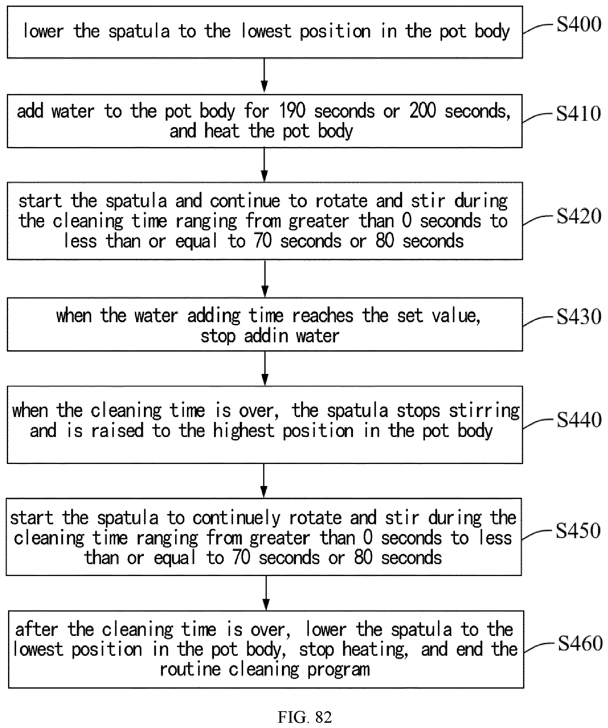

FIG. 82 is a flow chart of a routine procedure of a cleaning method provided by an embodiment of the present disclosure;

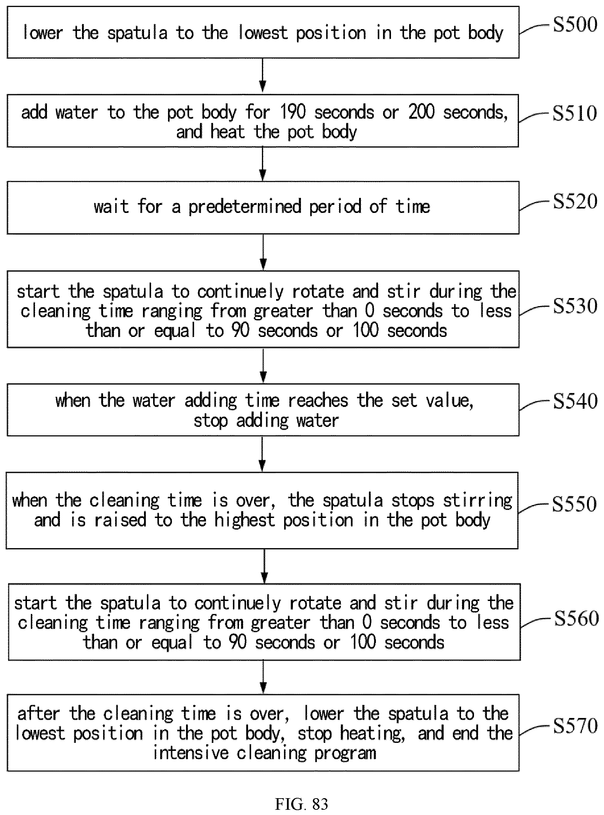

FIG. 83 is a flow chart of an enhanced procedure of a cleaning method provided by an embodiment of the present disclosure; and

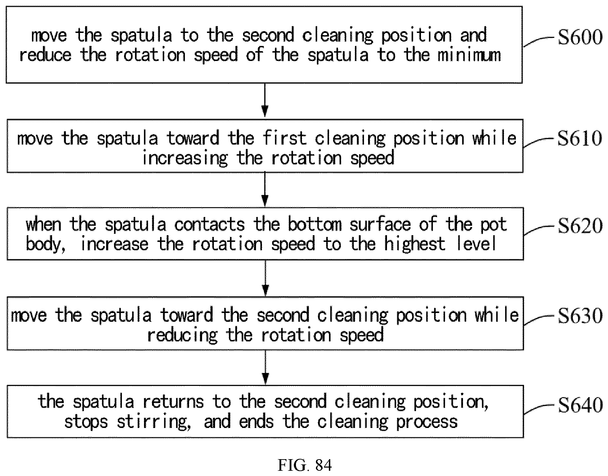

FIG. 84 is a flow chart of a cleaning method of a cooking device provided by another embodiment of the present disclosure.

### DETAILED DESCRIPTION OF EXAMPLE EMBODIMENTS

In practicing the embodiments of the present disclosure, the inventor found that when users use traditional cooking machines, the cooking efficiency is usually low.

The reason is that in traditional cooking device, when adding seasonings, it is usually a single addition, and the measurement is inaccurate, which affects the cooking efficiency and thus impacting the user's experience.

In response to the above problems, embodiments of the present disclosure provide a cooking device and a feeding system that solve the above problems, which may realize multiple and cyclic feeding and improve cooking efficiency accordingly.

The technical solutions in the embodiments of the present disclosure will be clearly and completely described below with reference to the accompanying drawings in the embodiments of the present disclosure. Obviously, the described embodiments are only part embodiments of the present disclosure, but not all of the embodiments. Based on the embodiments in the present disclosure, all other embodiments obtained by those skilled in the art without creative efforts shall fall within the scope of protection of the present disclosure.

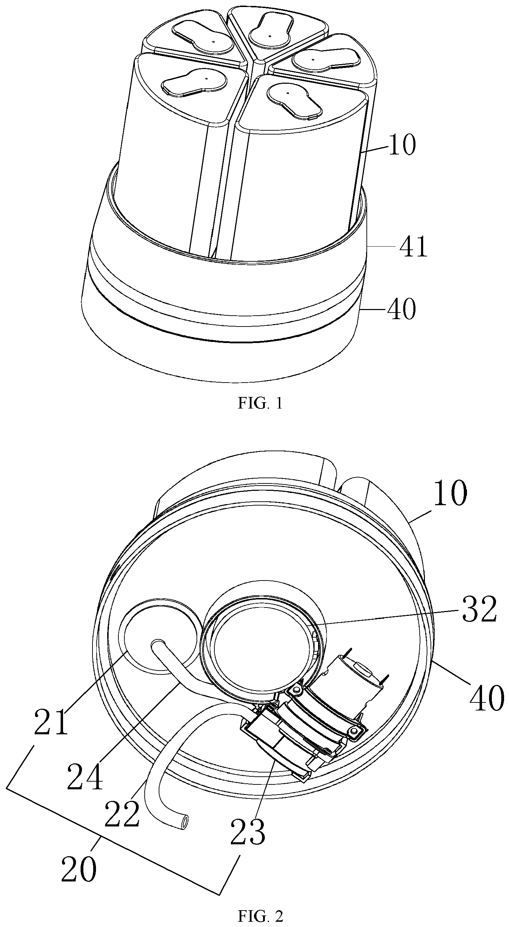

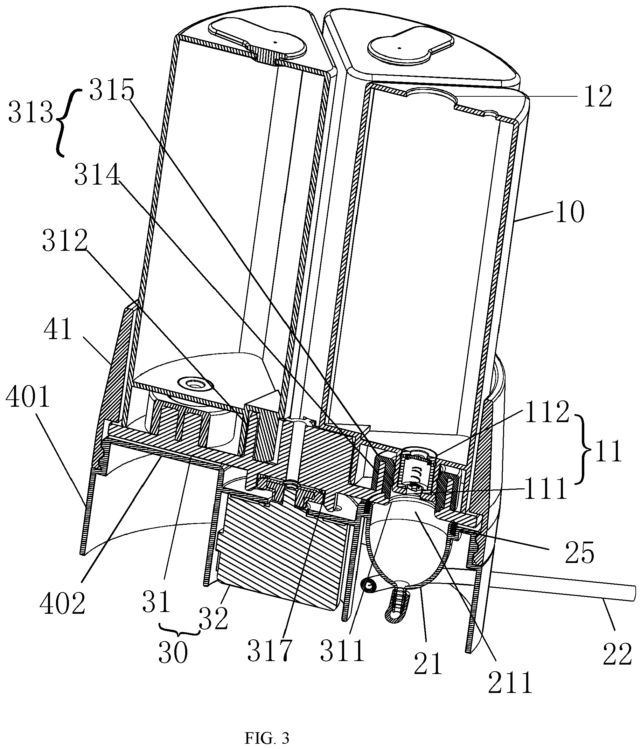

FIG. 1 is a schematic three-dimensional structural diagram of a feeding system provided by an embodiment of the present disclosure; FIG. 2 is a schematic structural diagram of a feeding apparatus provided by an embodiment of the present disclosure; and FIG. 3 is a schematic three-dimensional cross-sectional structural diagram of a feeding system provided by an embodiment of the present disclosure, as shown in FIGs. 1 to 3.

In one embodiment of the present disclosure, a cooking device is provided, including: a main body (not shown in the drawings) and a feeding system. The main body has a cooking container, and the cooking container is used to contain food ingredients and cooperate with other functional components on the main body to achieve cooking of food ingredients. The feeding system is used to deliver seasonings into the cooking container to season the ingredients in the cooking container.

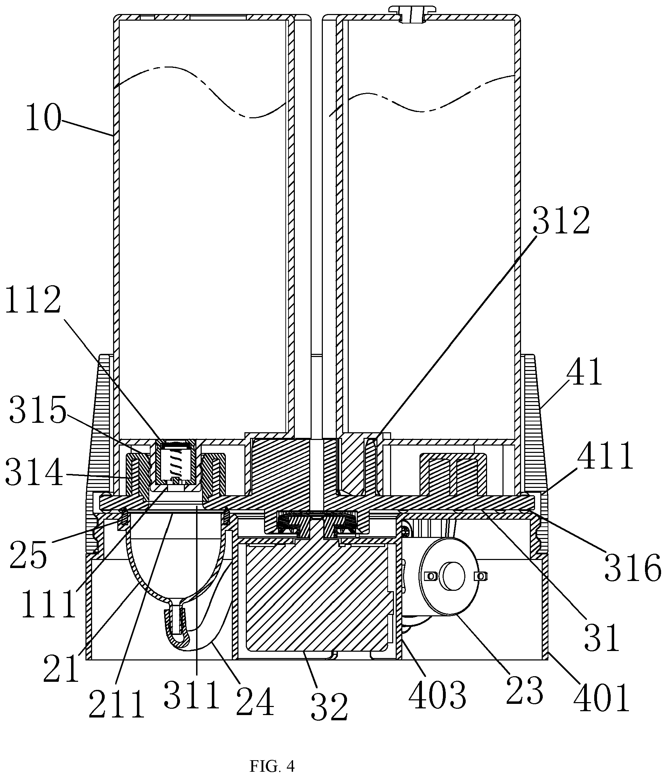

One possible way of implementing the feeding system is that the feeding system includes a plurality of material boxes 10, a feeding apparatus 20 and a switching apparatus 30. Referring to FIGs. 3 and 4, the material box 10 is provided with a discharging structure 11. The feeding apparatus 20 has a feeding element 21 and a discharging element 22 interconnected with each other, and the discharging element 22 is interconnected with the cooking container. The switching apparatus 30 is used to switch the discharging structure 11 of different material boxes 10 to a position corresponding to the feeding element 21, so that when the discharging structure 11 is in an open state, cooking material in corresponding material box 10 is transported to the cooking container through the feeding element 21 and the discharging element 22. The technical solution provided by the embodiment of the present disclosure may switch the discharging structure 11 of different material boxes 10 to a position to correspond feeding element 21 by the switching apparatus 30, thereby realizing multiple and cyclic feeding into the cooking container by the plurality of material boxes 10. The cooking efficiency is improved, meanwhile, the feeding amount may be accurately controlled by the feeding apparatus 20, and the measurement is accurate.

In some implementable embodiments of the present disclosure, the cooking device includes, but is not limited to, a cooking machine, a food processer, a kitchen machine, etc. The main body provides support for the cooking container. The main body may also be called the platform of the cooking device. Various functional components of the cooking device are provided based on the main body, such as a mounting base and a cooking container based on the main body. The mounting base is provided with a pot cover assembly. Further, other functional components may also be provided based on the main body. For example, the main body is also provided with a heating part and a control part. The control part and the mounting base are respectively provided on the outer periphery of the heating part. The heating part includes but is not limited to an electromagnetic heating structure, and the heating part may be used to heat the cooking container to achieve cooking of food. The control part includes a display screen and an interactive part. The interactive part is, but is not limited to, at least one of a touch screen, a control button, and a voice input device. By the interactive part, the user may input control instructions to the cooking device, such as selecting dishes to cook, cooking time, reservation time, etc. By the display screen, the user may know whether the control instructions are entered correctly and learn the cooking status. Of course, the main body may be also equipped with functional components such as a control system and a driving system, which will not be described here.

In the embodiment of the present disclosure, the switching apparatus 30 switches the discharging structure 11 of different material boxes 10 to a position corresponding to the feeding element 21 in a manner including but not limited to the followings. One possible way is that the position of the feeding element 21 is relatively fixed, and the switching apparatus 30 drives the plurality of material boxes 10 to move, so that the discharging structure 11 of different material boxes 10 is moved to a position corresponding to the feeding element 21, to achieve feeding to the cooking container of different material boxes 10 with multiple times in turn. Another possible way is that the positions of the plurality of material boxes 10 are relatively fixed, and the switching apparatus 30 drives the feeding element 21 to move, so that the feeding element 21 is moved to a position corresponding to the discharging structure 11 of different material boxes 10, to achieve feeding to the cooking container of different material boxes 10 with multiple times in turn. The different ways in which the switching apparatus 30 provided by the embodiment of the present disclosure switches the discharging structure 11 of different material boxes 10 to a position corresponding to the feeding element 21 are introduced below by specific embodiments. It should be noted that under the condition that the structures do not conflict, the technical features in each embodiment may be referenced and learned from each other.

First to be introduced is the position of the feeding element 21 being relatively fixed, and the switching apparatus 30 driving the plurality of material boxes 10 to move to make the discharging structure 11 of different material boxes 10 to a position corresponding to the feeding element 21.

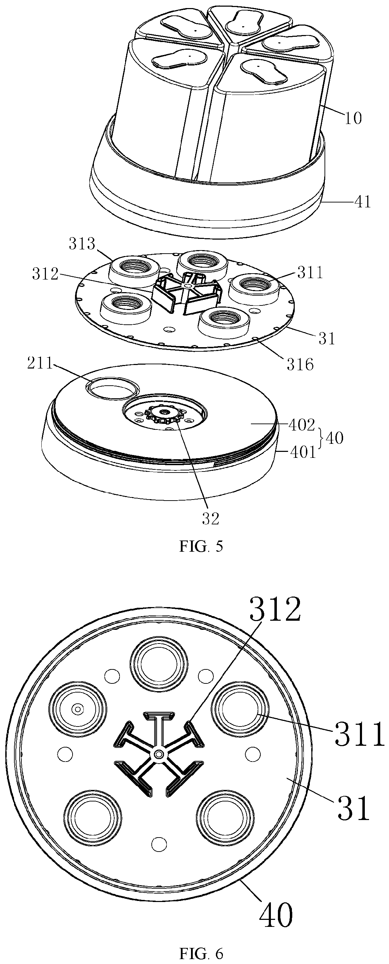

Continuing to refer to FIGs. 3 and 4, in the embodiment of the present disclosure, the switching apparatus 30 is in driving connection with a plurality of material boxes 10 for driving the plurality of material boxes 10 to move. One possible way of implementing the switching apparatus 30 is that the switching apparatus 30 includes a driver 32. When the driver 32 is running, it is able to drive the plurality of material boxes 10 to move, so as to switch the discharging structure 11 of different material boxes 10 to a position corresponding to the feeding element 21. Depending on the different setting modes of the material boxes 10 and the different arrangements of the plurality of material boxes 10, the movement mode of the material boxes 10 includes but is not limited to rotation and linear motion. During the switching, the relative position of the feeding apparatus 20 is fixed, that is, the relative position of the feeding element 21 is fixed, and the plurality of material boxes 10 move relative to the feeding element 21, so that the different material boxes 10 is switched to a position corresponding to the feeding element 21. Accordingly, when the discharging structure 11 is in the open state, the cooking materials in different material boxes 10 may be transported into the cooking container through the feeding element 21 and the discharging element 22. Referring to FIG. 5 in conjunction with FIG. 3 and FIG. 4, in the embodiment of the present disclosure, in order to facilitate the switching apparatus 30 synchronous driving the plurality of material boxes 10, the feeding system also includes a mounting plate 31, and the plurality of material boxes 10 are provided on the mounting plate 31. The plurality of material boxes 10 may be formed into a whole through the mounting plate 31, and the switching apparatus 30 is able to drive the plurality of material boxes 10 to move synchronously by the mounting plate 31 to improve material feeding efficiency.

One way for the switching apparatus 30 driving the mounting plate 31 is that the switching apparatus 30 includes a driver 32. The output shaft of the driver 32 is in driving connection with the rotation center of the mounting plate 31 to drive the mounting plate 31 to rotate, and drive the plurality of material boxes 10 to move accordingly by the mounting plate 31. The driver 32 includes but is not limited to a motor. When the driver 32 is turned on, the mounting plate 31 is driven to rotate by the output shaft, and the plurality of material boxes 10 is driven by the mounting plate 31 accordingly, to achieve switching the discharging structure 11 of different material boxes 10 to a position corresponding to the feeding element 21.

Continuing to refer to FIGs. 3 to 5, the mounting plate 31 is provided with a discharge hole 311 corresponding to the discharge structure 11 of the material box 10. One way of connecting the material box 10 and the mounting plate 31 is as shown in FIG. 6. The mounting plate 31 is provided with a plurality of snap-in posts 312 on a side facing the material box 10. Each of the snap-in posts 312 corresponds to one discharging hole 311. The bottom of the material box 10 is provided with a snap-in slot for use with the snap-in post 312, and the material box 10 is in connection with the snap-in post 312 by the snap-in slot. According to the different arrangements of the plurality of material boxes 10, the setting methods of the snap-in posts 312 are also different. In one implementation of the snap-in posts 312, the snap-in posts 312 have a T-shaped structure, and the plurality of snap-in posts 312 are mounted on the mounting plate 31 with the center as the center and provided in a radial pattern. The plurality of material boxes 10 are respectively connected corresponding to one snap-in post 312, so that the plurality of material boxes 10 are spaced apart along the circumferential direction of the mounting plate 31. When the material box 10 is in connection with the snap-in post 312, the discharge structure 11 of the material box 10 corresponds to the discharge hole 311 at the corresponding position.

Further, the discharging structure 11 is located at the bottom of the material box 10. In order to make the material in the material box 10 flow out from the discharging hole 311 more smoothly, one feasible way is to locate the mounting plate 31 below the material box 10. The relative position between the material box 10 and the mounting plate 31 is in an up-and-down distribution relationship, which makes it easier for the material in the material box 10 to flow out of the material box 10, making the material discharged from the material box 10 cleaner, and the outflowing materials are less likely to flow back, reducing the situation of odor transferring.

Further, in order to make the relative position between the discharging structure 11 and the discharging hole 311 on the material box 10 more stable, one possible way is, continue to refer to FIGs. 3 to 5, the mounting plate 31 being provided with a connection protrusion 313 and the connecting protrusion 313 being provided with a discharge hole 311 with an insertion depth. The discharge structure 11 of the material box 10 is at least partially inserted into the discharge hole 311. The contact area between the discharging hole 311 and the discharging structure 11 may be increased by the connecting protrusion 313. When the mounting plate 31 rotates, the connecting protrusion 313 may better drive the discharging structure 11 to move, thereby driving the material box 10 to move. At the same time, the connection protrusion 313 provides support for the discharging structure 11, which improves the connection stability between the discharging hole 311 and the discharging structure 11.

In the embodiment of the present disclosure, one implementation method of the connecting protrusion 313 is, referring to FIG. 3 and FIG. 4, the connecting protrusion 313 including: an annular connecting wall 314 and an annular elastic element 315. The annular elastic element 315 is provided on the annular connecting wall 314 to form an elastic discharge hole 311 on the inner wall of the annular connecting wall 314. The annular connecting wall 314 forms a supporting frame of the connecting protrusion 313 to realize the rigid functions of the connecting protrusion 313, such as maintaining the overall shape of the connecting protrusion 313 and providing force for the material box 10 when the mounting plate 31 rotates. At the same time, based on the elastic characteristics of the annular elastic element 315, the aperture of the discharge hole 311 may be elastically changed. When the discharge structure 11 of the material box 10 is inserted into the discharge hole 311, the annular elastic element 315 is squeezed, making an interference connection between the discharge structure 11 and the discharge hole 311, improving the connection stability between the discharge hole 311 and the discharge structure 11, and also having a sealing effect on the discharge hole 311, reducing the risk of the cooking material discharged from the discharge structure 11 leaking from the discharge hole 311.

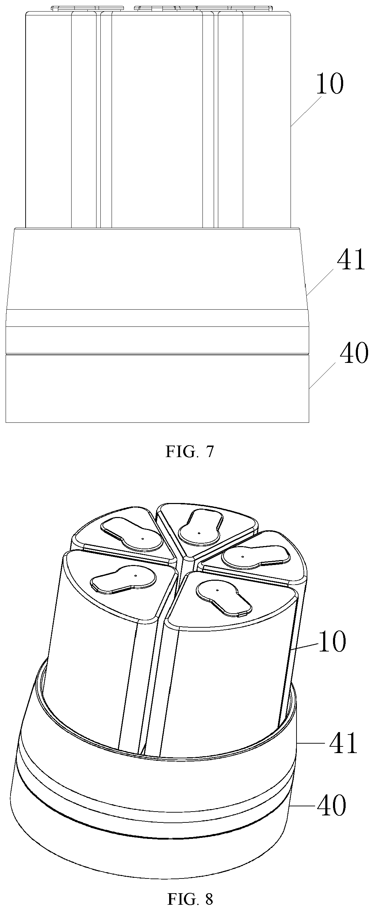

Further, in order to achieve better sealing performance of the discharge hole 311, one possible way is to provide at least one annular groove on the outer wall of the discharge structure 11 of the material box 10. An annular protrusion adapted to the annular groove is provided at a corresponding position on the inner wall of the discharge hole 311. The discharge structure 11 of the material box 10 is at least partially inserted into the discharge hole 311, and the annular protrusion at the corresponding position is embedded in the annular groove for sealing. By the annular groove and the annular protrusion, the contact area between the discharging structure 11 and the discharging hole 311 may be increased, making the connection between the discharging structure 11 and the discharging hole 311 more stable. At the same time, by the annular groove and annular protrusion, the shape of the gap between the discharge structure 11 and the discharge hole 311 is non-linear, and combined with the elastic characteristics of the annular elastic element 315, the sealing performance may be effectively improved. Of course, in some implementable embodiments of the present disclosure, the annular groove may also be provided on the inner wall of the discharge hole 311, and the annular protrusion may be provided on the outer wall of the discharge structure 11. Continuing to refer to FIGs. 3 and 4, in some implementable embodiments of the present disclosure, the driver 32 and the plurality of material boxes 10 are located on different sides of the mounting plate 31. The driver 32 and the plurality of material boxes 10 are separated by the mounting plate 31. On the one hand, mutual interference between the driver 32 and the material boxes 10 may be avoided, and the heat generated when the driver 32 is running may be prevented from causing damage to the cooking materials in the material box 10. On the other hand, the driver 32 and the plurality of material boxes 10 are provided side by side, which may prevent the driver 32 from occupying the space where the material boxes 10 are located leading to the reducing of the space occupied by the material boxes 10, that is, the size of the material boxes 10 should be reduced, so that the volume of the material box 10 should be smaller accordingly, which affects the efficiency of adding materials to the cooking container. In order to further integrate the feeding system into a whole, referring to FIG. 7 in conjunction with FIGs. 1 to 5, the feeding system also includes an outer cover, and at least part of the plurality of material boxes 10 is provided in the outer cover. When the switching apparatus 30 drives the mounting plate 31 to rotate, the mounting plate 31 rotates relative to the outer cover. At least part of the plurality of material boxes 10 may be wrapped by the outer cover to prevent external objects from interfering with the rotating components. At the same time, the space enclosed by the outer cover protects the rotating component. One possible implementation of the outer cover is that the outer cover includes a first mounting bracket 40. The first mounting bracket 40 has a first side and a second side opposite to each other. The switching apparatus 30 and the feeding apparatus 20 are both provided on the first mounting bracket 40 and located on the first side of the first mounting bracket 40. The mounting plate 31 and the plurality of material boxes 10 are located on the second side of the first mounting bracket 40. Taking the orientations in FIG. 2 and FIG. 3 as an example, the first side of the first mounting bracket 40 is the lower side, and the second side is the upper side. The switching apparatus 30 and the feeding apparatus 20 are integrated into a whole by the first mounting bracket 40, so that the modularity of the feeding system becomes higher and it is convenient for users to use.

One possible way to implement the first mounting bracket 40 is that the first mounting bracket 40 includes a cylindrical side wall 401 and a load-bearing platform 402 connected to the cylindrical side wall 401. The cylindrical side wall 401 and the load-bearing platform 402 are enclosed an accommodation space. The switching apparatus 30 and the feeding apparatus 20 are all provided in the accommodation space, and the discharging element 22 extends out of the accommodation space and is in connection with the cooking container. The load-bearing platform 402 is provided with an opening and a driving port, and the inlet 211 of the feeding element 21 is interconnected with the opening. When transporting materials, the discharge structure 11 on the material box 10 corresponds to the position of the opening, and then corresponds to the inlet 211 of the feeding element 21 accordingly. Further, the feeding element 21 and the load-bearing platform 402 are of an integrally formed structure. The switching apparatus 30 is in connection with the mounting plate 31 in such a way that the output shaft of the driver 32 passes through the driving port and is in connection with the mounting plate 31. One way of connecting the output shaft to the mounting plate 31 is, as shown in FIG. 3, one side of the mounting plate 31 facing the load-bearing platform 402 is provided with a driving groove 317 with an internal tooth. The output shaft of the driver 32 is provided with a driving gear. The driving gear extends into the driving groove 317 and is meshed with the internal tooth. When the driver 32 drives the output shaft to rotate, the output shaft drives the mounting plate 31 to rotate by the driving gear. In order to prevent the driving gear from protruding from the load-bearing platform 402, a receiving groove is provided on the side of the load-bearing platform 402 facing the mounting plate 31 at a position corresponding to of the driver 32. The driving gear is located in the receiving groove so as not to protrude from the surface of the load-bearing platform 402. The groove wall of the driving groove 317 at least partially extends into the receiving groove and is in connection with the driving gear.

Further, in order to reduce the impact of the heat generated by the driver 32 on the cooking materials when the driver 32 is working, one possible way is to provide an isolation plate 403 on the circumferential periphery of the driver 32. The isolation plate 403 encloses an isolation space, and the driver 32 is provided in the isolation space. By providing the isolation plate 403, the driver 32 is isolated from the outside and avoids contact between the driver 32 and the feeding apparatus 20, thereby reducing the impact of heat on the cooking materials, which may lead to affect the taste of the food in the cooking container.

Further, referring to FIG. 7 with continued reference to FIGs. 1 to 5, the outer cover further includes a second mounting bracket 41. The second mounting bracket 41 is in connection with the second side of the first mounting bracket 40 so as to form a half-pack space to receiving the a part of the plurality of material boxes 10 and the mounting plate 31. The inner wall of the half-pack space of the second mounting bracket 41 is provided with a limiting groove 411 that matches the edge of the mounting plate 31. The mounting plate 31 and the plurality of material boxes 10 are integrated into a whole by the second mounting bracket 41, so that the modularity of the feeding system becomes higher and it is convenient for users to use. The second mounting bracket 41 includes but is not limited to a cylindrical structure, and is in connection with the cylindrical side wall 401 of the first mounting bracket 40. The second mounting bracket 41 plays a certain protective role on the material box 10, meanwhile serves as limiting and guiding functions for the rotation of the mounting plate 31, making the rotation of the mounting plate 31 more stable.

In some implementable embodiments of the present disclosure, the first mounting bracket 40 and the second mounting bracket 41 may be snap-fitted, or the cylindrical side wall 401 of the first mounting bracket 40 may be provided with an external thread, and the inner wall the second mounting bracket 41 may be provided with an internal thread, so that the second mounting bracket 41 and the first mounting bracket 40 may be threadedly connected. The first mounting bracket 40 and the second mounting bracket 41 make the assembly of the feeding system more convenient. One possible assembly method is to first install the driver 32 and the feeding apparatus 20 on the first mounting bracket 40; then, install the mounting plate 31 on the second mounting bracket 41, and then install the plurality of material boxes 10 on the mounting plate 31; finally, connect the first mounting bracket 40 and the second mounting bracket 41 to complete the assembly of the feeding system.

When the feeding system is in use, the mounting plate 31 rotates relative to the load-bearing platform 402 and the limiting groove 411. In order to make the rotation of the mounting plate 31 smoother, referring to FIGs. 4 and 5, one possible way is to provide a rolling element 316 between the mounting plate 31 and the load-bearing platform 402. The mounting plate 31 is rotatably connected to the load-bearing platform 402 by the rolling element 316. The rolling element 316 includes, but is not limited to, a ball and a pin roller. The rolling element 316 may be provided on one of the mounting plate 31 and the load-bearing platform 402, or the rolling element 316 may be provided on both the mounting plate 31 and the load-bearing platform 402. The friction force between the mounting plate 31 and the load-bearing platform 402 may be reduced by the rolling element 316, making the rotation of the mounting plate 31 more smoothly, meanwhile reducing the wear of the mounting plate 31 and the load-bearing platform 402, extending the service life accordingly.

Further, a rolling element 316 is provided between the edge of the mounting plate 31 and the groove wall of the limiting groove 411. The edge of the mounting plate 31 is rotatably connected to the groove wall of the limiting groove 411 by the rolling element 316. The rolling element 316 may be provided on one of the mounting plate 31 and the groove wall of the limiting groove 411, or the rolling element 316 may be provided on both the mounting plate 31 and the groove wall of the limiting groove 411. The friction force between the mounting plate 31 and the groove wall of the limiting groove 411 may be reduced by the rolling element 316, so that the rotation of the mounting plate 31 is smoother, and the wear of the mounting plate 31 and the groove wall of the limiting groove 411 are also reduced, extending the service life accordingly.

Referring to FIG. 3 and FIG. 4, in combination of FIG. 2, in the embodiment of the present disclosure, one implementation of the feeding element 21 is that the feeding element 21 is a funnel, and the end face of the large mouth end of the funnel is provided with a sealing ring 25 sealing with the mounting plate 31. The large mouth end of the funnel is the inlet 211 of the feeding element 21. When the discharging structure 11 of the material box 10 is opened, the funnel collects cooking materials by the large mouth end. After the cooking materials enter the funnel, they are gathered to the smaller mouth end and then are discharger by the smaller mouth end. The sealing ring 25 on the funnel cooperates with the mounting plate 31 to form a sealed space between the funnel, the discharging hole 311 and the discharging structure 11, ensuring that the cooking materials flowing out from the discharging structure 11 enter the funnel and reducing side flow.

In order to realize the transportation of cooking materials in the feeding apparatus 20, the feeding apparatus 20 also includes a feeding pump 23. The smaller mouth end of the funnel is in connection with the feeding pump 23 by the feeding pipe 24. The discharging element 22 is in connection with the feeding pump 23. The discharging element 22 includes, but is not limited to, a transporting pipe. When feeding, the feeding pump 23 is turned on, and the discharging structure 11 of the material box 10 is opened. Under the action of the feeding pump 23, the cooking material inside the material box 10 flows out of the material box 10, and the cooking material passes through the inlet 211 of the funnel 211 entering the funnel, and then flows into the cooking container through the feeding pipe 24 and the discharging element 22. Meanwhile, with the cooperation of the switching apparatus 30, the discharging structure 11 of different material boxes 10 may be switched to a position corresponding to the funnel, so that the cooking material in different material boxes 10 may be added to the cooking container.

Further, referring to FIG. 4, one possible way of realizing the discharging structure 11 is that the discharging structure 11 includes a discharging port 111 at the bottom of the material box 10 and a one-way valve 112. The one-way valve 112 is in connection with the material box 10 and blocks the discharging port 111. When the feeding pump 23 is turned on, the one-way valve 112 is triggered to open, so that the inside of the material box 10 is interconnected with the outside through the discharging port 111. When feeding material, the switching apparatus 30 drives the plurality of material boxes 10 to rotate, so that the outlet structure of one of the material boxes 10 corresponds to the position of the funnel. The feeding pump 23 is turned on, and the feeding pump 23 generates negative pressure when working, so that the one-way valve 112 is opened. At this time, the outlet 111 is interconnected with the outside. The cooking material in the material box 10 may flows out of the material box 10. The cooking material enters the funnel through the inlet 211 of the funnel, and then flows into cooking container through the feeding pipe 24 and the discharging element 22. At the same time, by controlling the working time of the feeding pump 23, the flow rate of the cooking material in the material box 10 may be controlled, thereby achieving accurate measurement. Further, the sealing ring 25 on the funnel cooperates with the mounting plate 31, so that a sealed space is formed between the funnel, the discharge hole 311 and the discharge structure 11, thereby improving the airtightness of the sealed space. Further, in order to achieve multiple uses of the material box 10, the material box 10 is also provided with a feeding port 12. When the cooking material in the material box 10 is used up, the user may replenish the material box 10 through the feeding port 12, so that the material box 10 may be used multiple times and repeatedly to reduce usage costs.

Further, one way of connecting the one-way valve 112 to the material box 10 is that the bottom of the material box 10 is provided with a discharging slot protruding from the bottom. The bottom of the discharging slot is provided with a discharging port 111. The one-way valve 112 is provided in the discharging slot. By providing a discharging slot, the one-way valve 112 may be prevented from occupying the internal space of the material box 10, so that the inner cavity of the material box 10 may be reasonably utilized and more cooking materials may be accommodated. At the same time, the discharging slot protrudes from the bottom of the material box 10, making it easier for the discharging structure 11 to be inserted into the discharging hole 311.

In the embodiment of the present disclosure, in addition to the above-mentioned switching apparatus 30 driving the movement of the plurality of material boxes 10 so that the discharging structure 11 of different material boxes 10 correspond to the position of the feeding element 21, the switching apparatus 30 may also be used to drive the feeding element 21 to move. The positions of the plurality of material boxes 10 are relatively fixed, so that different material boxes 10 may feed into the cooking container multiple times and cyclically.

Described below is a method in which the positions of the plurality of material boxes 10 being relatively fixed, and the switching apparatus 30 driving the feeding element 21 to move, so that the discharging structure 11 of different material boxes 10 correspond to the position of the feeding element 21.

In the embodiment of the present disclosure, the switching apparatus 30 is in driving connection with the feeding apparatus 20 to drive the feeding apparatus 20 to move. The relative positions of the plurality of material boxes 10 are fixed, and the switching apparatus 30 drives the feeding apparatus 20 to move, thereby driving the feeding element 21 in the feeding apparatus 20 to correspond to the position of the discharging structure 11 on different material boxes 10, so that when the discharging structure 11 is in an open state, the cooking material in the material box 10 may be transported to the cooking container through the feeding element 21 and the discharging element 22. Further, the switching apparatus 30 is able to drive the overall movement of the feeding apparatus 20, and then correspond to the discharging structure 11 of different material boxes 10 through the inlet 211 of the feeding element 21. Alternatively, the switching apparatus 30 only drives the feeding element 21 to move, so that the inlet 211 of the feeding element 21 corresponds to the discharging structure 11 of different material boxes 10.

Further, the feeding system also includes a mounting plate 31 on which a plurality of material boxes 10 are provided. The plurality of material boxes 10 may be formed into a whole by the mounting plate 31. What is different from the solution in the above embodiment is that the driver 32 drives the feeding apparatus 20 to move, and the position of the mounting plate 31 is fixed, so that the feeding element 21 on the feeding apparatus 20 may correspond to the position of the discharging structure 11 of different material boxes 10. The connection method between the mounting plate 31 and the material box 10 may refer to the method described in the above embodiment, which will not be described again here.

Further, the feeding system also includes an outer cover, and the mounting plate 31 is fixed in position relative to the outer cover. At least part of the plurality of material boxes 10 may be wrapped by the outer cover. At the same time, the mounting plate 31, the switching apparatus 30 and the feeding apparatus 20 may also be wrapped in the outer cover. No rotating components may be seen from the appearance part, which provides a user with a safe visual effect. At the same time, the space enclosed by the outer cover protects the rotating components.

The implementation of the outer cover may refer to the implementation of the outer cover described in the above embodiments. One possible implementation of the outer cover is that the outer cover includes a first mounting bracket 40 and a second mounting bracket 41. The first mounting bracket 40 includes a cylindrical side wall 401 and a load-bearing platform 402 connected to the cylindrical side wall 401. The cylindrical side wall 401 and the load-bearing platform 402 form an accommodation space. The switching apparatus 30 and the feeding apparatus 20 are both provided in the accommodation space. The discharging element 22 extends the accommodation space and is connected with the cooking container. The load-bearing platform 402 is provided with an opening corresponding to the position of the discharging structure 11. When discharging material, the inlet of the feeding element 21 moves to the corresponding opening, so that the discharging structure 11 on the material box 10 corresponds a position of the import to 211 of the feeding element 21.

The second mounting bracket 41 is in connection with the second side of the first mounting bracket 40 to form a half-pack space on the second side of the first mounting bracket 40 to accommodate a part of the plurality of material boxes 10 and the mounting plate 31 in the half-pack space. The inner wall of the half-pack space of the second mounting bracket 41 is provided with a limiting groove 411 that matches the edge of the mounting plate 31. The edge of the mounting plate 31 may be clamped in the limiting groove 411 so that the positions of the mounting plate 31 and the second installation bracket 41 are fixed.

It should be noted that in the different ways in which the above-mentioned switching apparatus 30 switches the discharging structure 11 of different material boxes 10 to correspond to the position of the feeding element 21, the implementation of each component, in the case where the structure does not conflict, the technical features is different in each embodiment may be referenced and learned from each other. Further, on the basis of the above embodiments, referring to FIGs. 1 to 7, correspondingly, embodiments of the present disclosure also provide a feeding system, including: a plurality of material boxes 10, a feeding apparatus 20 and a switching apparatus 30. The material box 10 is provided with a discharging structure 11. The feeding apparatus 20 has a feeding element 21 and a discharging element 22 interconnected with each other, and the discharging element 22 is interconnected with the cooking container. The switching apparatus 30 is used to switch the discharging structure 11 of different material boxes 10 to correspond to a position of the feeding element 21 so that when the discharging structure 11 is in the open state, the cooking material in the corresponding material box 10 are transported to the cooking container by the feeding element 21 and the discharging element 22.

According to the technical solution provided by the embodiment of the present disclosure, the feeding system may be applied to cooking device. The cooking device includes a main body with a cooking container on the main body. The switching apparatus 30 may switch the discharging structure 11 of different material boxes 10 to correspond to the position of the feeding element 21, thereby realizing multiple and cyclic feeding of material into the cooking container through the plurality of material boxes 10, thereby improving the cooking efficiency. Meanwhile, the feeding amount may be accurately controlled by the feeding apparatus 20, the measurement is accurate.

Further, depending on the components driven and connected by the switching apparatus 30, the switching methods are also different. One possible way is that the switching apparatus 30 is in driving connection with the plurality of material boxes 10 to drive the movement of the plurality of material boxes 10. The relative position of the feeding apparatus 20 is fixed, and the switching apparatus 30 drives the plurality of material boxes 10 to move, thereby driving different material boxes 10 to correspond to the position of the feeding element 21, so that when the discharging structure 11 is in the open state, the cooking material in the material boxes 10 may be transported into the cooking container through the feeding element 21 and the discharging element 22. Another feasible way is that the switching apparatus 30 is in driving connection with the feeding apparatus 20 to drive the feeding apparatus 20 to move. The relative positions of the plurality of material boxes 10 are fixed, and the switching apparatus 30 drives the feeding apparatus 20 to move, thereby driving the feeding element 21 in the feeding apparatus 20 to correspond to the position of the discharging structure 11 on different material boxes 10, so that when the discharging structure 11 is in an open state, the cooking material in the material box 10 may be transported to the cooking container through the feeding element 21 and the discharging element 22. Further, the switching apparatus 30 is able to drive the overall movement of the feeding apparatus 20, and then correspond to the discharging structure 11 of different material boxes 10 through the inlet 211 of the feeding element 21. Alternatively, the switching apparatus 30 only drives the feeding element 21 to move, so that the inlet 211 of the feeding element 21 corresponds to the discharging structure 11 of different material boxes 10.

It should be noted that the implementation of the feeding system may refer to the content recorded in the above embodiments, and will not be described again here. The technical solution adopted in the present disclosure will be described below in combination with specific application scenarios to assist understanding. The following application scenario takes a cooking machine as an example.

### Application scenario one

The user may stir-fry through the cooking machine, put the ingredients into the cooking container, input the cooking instructions through the control unit, close the pot cover assembly on the cooking container, and the cooking machine starts cooking the ingredients.

According to the set cooking time, liquid seasoning is delivered to the cooking container through the feeding system. The switching apparatus 30 drives the plurality of material boxes 10 to rotate through the mounting plate 31 so that a certain material box 10 corresponds to the position of the funnel.

When feeding material, the feeding pump 23 is turned on, and the discharging structure 11 on the material box 10 is turned on. Under the action of the feeding pump 23, the cooking material inside the material box 10 flows out of the material box 10. The cooking material enters the funnel through the inlet 211 of the funnel, and then flows into the cooking container through the feeding pipe 24 and the discharging element 22. Cooperating with the switching apparatus 30, the discharging structure 11 of different material boxes 10 may be switched to correspond to the position of the funnel, so that the cooking material in different material boxes 10 may be added to the cooking container multiple times and cyclically.

At the same time, by controlling the opening time of the feeding pump 23, the flow rate of the cooking material may be accurately controlled, resulting in accurate measurement.

### Application scenario two

The user may stir-fry through the cooking machine, put the ingredients into the cooking container, input the cooking instructions by the control unit, close the pot cover assembly on the cooking container, and the cooking machine starts cooking the ingredients.

According to the set cooking time, liquid seasoning is delivered to the cooking container by the feeding system. The switching apparatus 30 drives the funnel on the feeding apparatus 20 to rotate so that a certain material box 10 corresponds to the position of the funnel.

When feeding material, the feeding pump 23 is turned on, and the discharging structure 11 on the material box 10 is turned on. Under the action of the feeding pump 23, the cooking material inside the material box 10 flows out of the material box 10. The cooking material enters the funnel through the inlet 211 of the funnel, and then flows into the cooking container through the feeding pipe 24 and the discharging element 22. Cooperating with the switching apparatus 30, the discharging structure 11 of different material boxes 10 may be switched to correspond to the position of the funnel, so that the cooking material in different material boxes 10 may be added to the cooking container multiple times and cyclically.

At the same time, by controlling the opening time of the feeding pump 23, the flow rate of the cooking material may be accurately controlled, resulting in accurate measurement.

In practicing the embodiments of the present disclosure, the inventor found that when a user uses traditional cooking machines, the cooking efficiency is usually low and the feeding pipe is difficult to clean.

The reason is that in traditional cooking device, when adding seasonings, it is usually a single addition, which affects the cooking efficiency. At the same time, the material is easy to remain in the feeding pipe. If it is not cleaned for a long time, the material will easily deteriorate and produce odor, thus affecting user's experience.

In view of the above problems, embodiments of the present disclosure provide a cooking device and a feeding system that solve the above problems, which may realize multiple and cyclic feeding, and may also clean the feeding pipe.

The technical solutions in the embodiments of the present disclosure will be clearly and completely described below with reference to the accompanying drawings in the embodiments of the present disclosure. Obviously, the described embodiments are only some of the embodiments of the present disclosure, but not all of the embodiments. Based on the embodiments in the present disclosure, all other embodiments obtained by those skilled in the art without creative efforts shall fall within the scope of protection of the present disclosure.

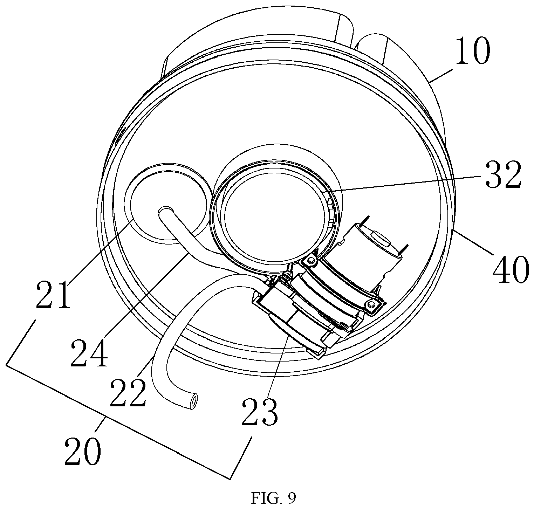

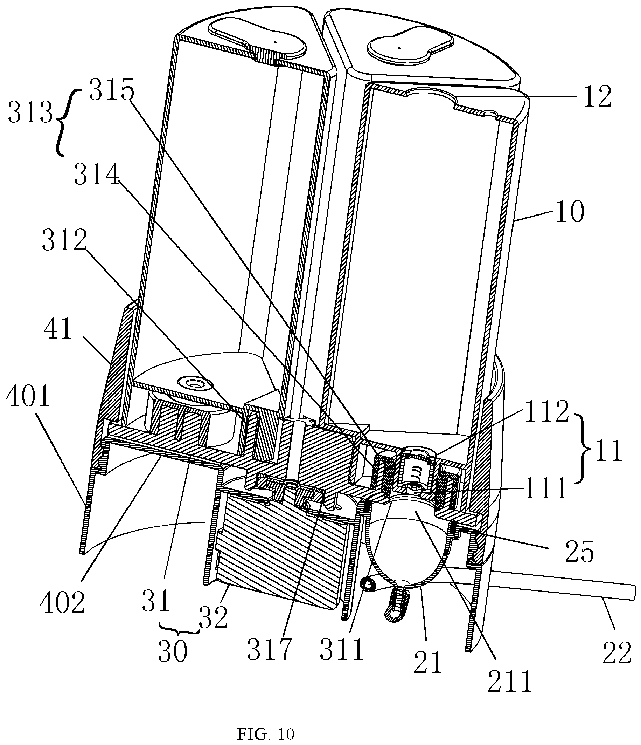

As shown in FIGs. 8 to 10, FIG. 8 is a schematic three-dimensional structural diagram of a feeding system provided by an embodiment of the present disclosure; FIG. 9 is a schematic structural diagram of a feeding apparatus provided by an embodiment of the present disclosure; and FIG. 10 is a schematic three-dimensional cross-sectional structural diagram of a feeding system provided by an embodiment of the present disclosure.

In one embodiment of the present disclosure, a cooking device is provided, including: a main body (not shown in the drawings) and a feeding system. The main body has a cooking container, and the cooking container is used to hold food ingredients and cooperate with other functional components on the main body to achieve cooking of food ingredients. The feeding system is used to deliver seasonings into the cooking container to season the ingredients in the cooking container.

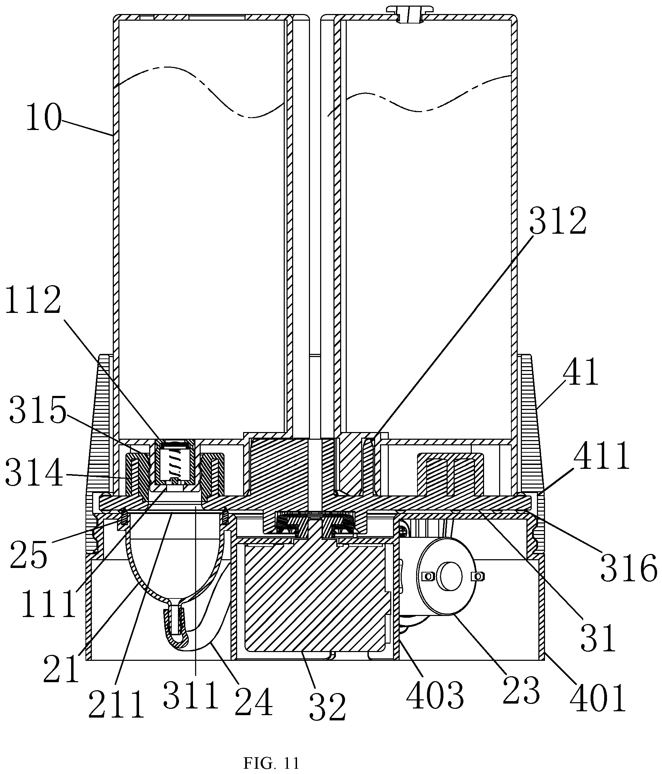

One possible way of implementing the feeding system is that the feeding system includes a plurality of material boxes 10, a feeding apparatus 20 and a switching apparatus 30. Referring to FIGs. 10 and 11, the material box 10 is provided with a discharging structure 11. The feeding apparatus 20 has a feeding element 21 and a discharging element 22 interconnected with each other, and the discharging element 22 is interconnected with the cooking container. The switching apparatus 30 is used to switch the discharging structure 11 of different material boxes 10 to correspond to a position of the feeding element 21, so that when the discharging structure 11 is in the open state, the cooking material in corresponding material box 10 is transported to the cooking container through the feeding element 21 and the discharging element 22. The technical solution provided by the embodiment of the present disclosure may switch the discharging structure 11 of different material boxes 10 to correspond the position of the feeding element 21 through the switching apparatus 30, thereby realizing multiple and cyclic feeding into the cooking container through the plurality of material boxes 10. The cooking efficiency is improved. At the same time, the feeding amount may be accurately controlled through the feeding apparatus 20, and the measurement is accurate.

In some implementable embodiments of the present disclosure, the cooking device includes, but is not limited to, a cooking machine, a food processer, a kitchen machine, etc. The main body provides support for the cooking container. The main body may also be called the platform of the cooking device. Various functional components of the cooking device are provided based on the main body, such as a mounting base and a cooking container based on the main body. The mounting base is provided with a pot cover assembly. Further, other functional components may also be provided based on the main body. For example, the main body is also provided with a heating part and a control part. The control part and the mounting base are respectively provided on the outer periphery of the heating part. The heating part includes but is not limited to an electromagnetic heating structure, and the heating part may be used to heat the cooking container to achieve cooking of food. The control part includes a display screen and an interactive part. The interactive part is, but is not limited to, at least one of a touch screen, a control button, and a voice input device. By the interactive part, the user may input control instructions to the cooking device, such as selecting dishes to cook, cooking time, reservation time, etc. By the display screen, the user may know whether the control instructions are entered correctly and learn the cooking status. Of course, the main body may be also equipped with functional components such as a control system and a driving system, which will not be described here.

In the embodiment of the present disclosure, the switching apparatus 30 switches the discharging structure 11 of different material boxes 10 to a position corresponding to the feeding element 21 in a manner including but not limited to the followings. One possible way is that the position of the feeding element 21 is relatively fixed, and the switching apparatus 30 drives the plurality of material boxes 10 to move, so that the discharging structure 11 of different material boxes 10 is moved to a position corresponding to the feeding element 21, to achieve feeding to the cooking container of different material boxes 10 with multiple times in turn.

Another possible way is that the positions of the plurality of material boxes 10 are relatively fixed, and the switching apparatus 30 drives the feeding element 21 to move, so that the feeding element 21 is moved to a position corresponding to the discharging structure 11 of different material boxes 10, to achieve feeding to the cooking container of different material boxes 10 with multiple times in turn. The different ways in which the switching apparatus 30 provided by the embodiment of the present disclosure switches the discharging structure 11 of different material boxes 10 to a position corresponding to the feeding element 21 are introduced below by specific embodiments. It should be noted that under the condition that the structures do not conflict, the technical features in each embodiment may be referenced and learned from each other.

First to be introduced is the position of the feeding element 21 being relatively fixed, and the switching apparatus 30 driving the plurality of material boxes 10 to move to make the discharging structure 11 of different material boxes 10 to a position corresponding to the feeding element 21.

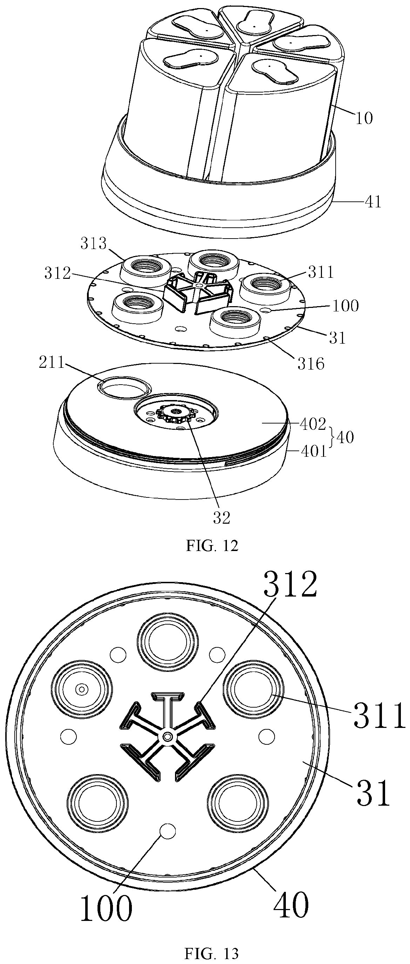

Continuing to refer to FIGs. 10 and 11, in the embodiment of the present disclosure, the switching apparatus 30 is in driving connection with a plurality of material boxes 10 for driving the plurality of material boxes 10 to move. One possible way of implementing the switching apparatus 30 is that the switching apparatus 30 includes a driver 32. When the driver 32 is running, it is able to drive the plurality of material boxes 10 to move, so as to switch the discharging structure 11 of different material boxes 10 to a position corresponding to the feeding element 21. Depending on the different setting modes of the material boxes 10 and the different arrangements of the plurality of material boxes 10, the movement mode of the material boxes 10 includes but is not limited to rotation and linear motion. During the switching, the relative position of the feeding apparatus 20 is fixed, that is, the relative position of the feeding element 21 is fixed, and the plurality of material boxes 10 move relative to the feeding element 21, so that the different material boxes 10 is switched to a position corresponding to the feeding element 21. Accordingly, when the discharging structure 11 is in the open state, the cooking materials in different material boxes 10 may be transported into the cooking container through the feeding element 21 and the discharging element 22. Referring to FIG. 12 in conjunction with FIG. 10 and FIG. 11, in the embodiment of the present disclosure, in order to facilitate the switching apparatus 30 synchronous driving the plurality of material boxes 10, the feeding system also includes a mounting base 31, and the plurality of material boxes 10 are provided on the mounting base 31. The plurality of material boxes 10 may be formed into a whole through the mounting base 31, and the switching apparatus 30 is able to drive the plurality of material boxes 10 to move synchronously by the mounting base 31 to improve material feeding efficiency. One way for the switching apparatus 30 driving the mounting base 31 is that the switching apparatus 30 includes a driver 32. The output shaft of the driver 32 is in driving connection with the rotation center of the mounting base 31 to drive the mounting base 31 to rotate, and drive the plurality of material boxes 10 to move accordingly by the mounting base 31. The driver 32 includes but is not limited to a motor. When the driver 32 is turned on, the mounting base 31 is driven to rotate by the output shaft, and the plurality of material boxes 10 is driven by the mounting base 31 accordingly, to achieve switching the discharging structure 11 of different material boxes 10 to a position corresponding to the feeding element 21.

Continuing to refer to FIGs. 10 to 12, the mounting base 31 is provided with a discharge hole 311 corresponding to the discharge structure 11 of the material box 10. One way of connecting the material box 10 and the mounting base 31 is as shown in FIG. 6. The mounting base 31 is provided with a plurality of snap-in posts 312 on a side facing the material box 10. Each of the snap-in posts 312 corresponds to one discharging hole 311. The bottom of the material box 10 is provided with a snap-in slot for use with the snap-in post 312, and the material box 10 is in connection with the snap-in post 312 by the snap-in slot. According to the different arrangements of the plurality of material boxes 10, the setting methods of the snap-in posts 312 are also different. In one implementation of the snap-in posts 312, the snap-in posts 312 have a T-shaped structure, and the plurality of snap-in posts 312 are mounted on the mounting base 31 with the center as the center and provided in a radial pattern. The plurality of material boxes 10 are respectively connected corresponding to one snap-in post 312, so that the plurality of material boxes 10 are spaced apart along the circumferential direction of the mounting base 31. When the material box 10 is in connection with the snap-in post 312, the discharge structure 11 of the material box 10 corresponds to the discharge hole 311 at the corresponding position.

Further, the discharging structure 11 is located at the bottom of the material box 10. In order to make the material in the material box 10 flow out from the discharging hole 311 more smoothly, one feasible way is to locate the mounting base 31 below the material box 10. The relative position between the material box 10 and the mounting base 31 is in an up-and-down distribution relationship, which makes it easier for the materials in the material box 10 to flow out of the material box 10, making the material discharged from the material box 10 cleaner, and the outflowing materials are less likely to flow back, reducing the situation of odor transferring.

Further, in order to make the relative position between the discharging structure 11 and the discharging hole 311 on the material box 10 more stable, one possible way is, continue to refer to FIGs. 10 to 12, the mounting base 31 being provided with a connection protrusion 313 and the connecting protrusion 313 being provided with a discharge hole 311 with an insertion depth. The discharge structure 11 of the material box 10 is at least partially inserted into the discharge hole 311. The contact area between the discharging hole 311 and the discharging structure 11 may be increased by the connecting protrusion 313. When the mounting base 31 rotates, the connecting protrusion 313 may better drive the discharging structure 11 to move, thereby driving the material box 10 to move. At the same time, the connection protrusion 313 provides support for the discharging structure 11, which improves the connection stability between the discharging hole 311 and the discharging structure 11.

In the embodiment of the present disclosure, one implementation method of the connecting protrusion 313 is, referring to FIG. 10 and FIG. 11, the connecting protrusion 313 including: an annular connecting wall 314 and an annular elastic element 315. The annular elastic element 315 is provided on the annular connecting wall 314 to form an elastic discharge hole 311 on the inner wall of the annular connecting wall 314. The annular connecting wall 314 forms a supporting frame of the connecting protrusion 313 to realize the rigid functions of the connecting protrusion 313, such as maintaining the overall shape of the connecting protrusion 313 and providing force for the material box 10 when the mounting base 31 rotates. At the same time, based on the elastic characteristics of the annular elastic element 315, the aperture of the discharge hole 311 may be elastically changed. When the discharge structure 11 of the material box 10 is inserted into the discharge hole 311, the annular elastic element 315 is squeezed, making an interference connection between the discharge structure 11 and the discharge hole 311, improving the connection stability between the discharge hole 311 and the discharge structure 11, and also having a sealing effect on the discharge hole 311, reducing the risk of the cooking material discharged from the discharge structure 11 leaking from the discharge hole 311.

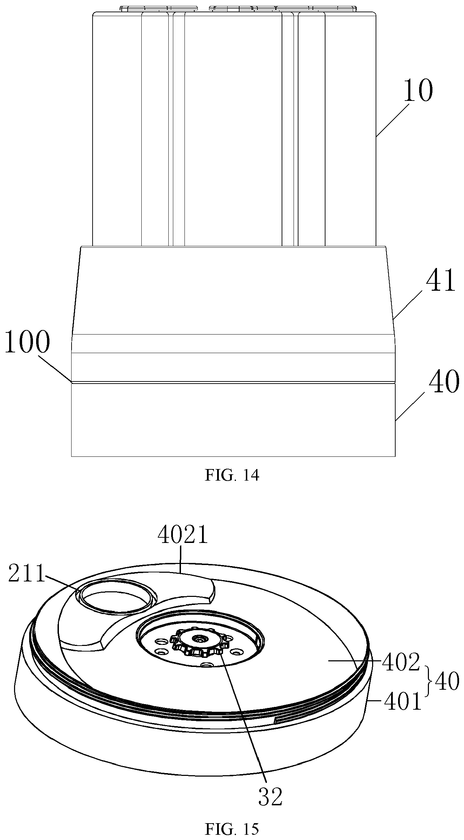

Further, in order to achieve better sealing performance of the discharge hole 311, one possible way is to provide at least one annular groove on the outer wall of the discharge structure 11 of the material box 10. An annular protrusion adapted to the annular groove is provided at a corresponding position on the inner wall of the discharge hole 311. The discharge structure 11 of the material box 10 is at least partially inserted into the discharge hole 311, and the annular protrusion at the corresponding position is embedded in the annular groove for sealing. By the annular groove and the annular protrusion, the contact area between the discharging structure 11 and the discharging hole 311 may be increased, making the connection between the discharging structure 11 and the discharging hole 311 more stable. At the same time, by the annular groove and annular protrusion, the shape of the gap between the discharge structure 11 and the discharge hole 311 is non-linear, and combined with the elastic characteristics of the annular elastic element 315, the sealing performance may be effectively improved. Of course, in some implementable embodiments of the present disclosure, the annular groove may also be provided on the inner wall of the discharge hole 311, and the annular protrusion may be provided on the outer wall of the discharge structure 11. Continuing to refer to FIGs. 10 and 11, in some implementable embodiments of the present disclosure, the driver 32 and the plurality of material boxes 10 are located on different sides of the mounting base 31. The driver 32 and the plurality of material boxes 10 are separated by the mounting base 31. On the one hand, mutual interference between the driver 32 and the material boxes 10 may be avoided, and the heat generated when the driver 32 is running may be prevented from causing damage to the cooking materials in the material box 10. On the other hand, the driver 32 and the plurality of material boxes 10 are provided side by side, which may prevent the driver 32 from occupying the space where the material boxes 10 are located leading to the reducing of the space occupied by the material boxes 10, that is, the size of the material boxes 10 should be reduced, so that the volume of the material box 10 should be smaller accordingly, which affects the efficiency of adding materials to the cooking container. In order to further integrate the feeding system into a whole, referring to FIG. 14 in conjunction with FIGs. 8 to 12, the feeding system also includes an outer cover, and at least part of the plurality of material boxes 10 is provided in the outer cover. When the switching apparatus 30 drives the mounting base 31 to rotate, the mounting base 31 rotates relative to the outer cover. At least part of the plurality of material boxes 10 may be wrapped by the outer cover to prevent external objects from interfering with the rotating components. At the same time, the space enclosed by the outer cover protects the rotating component.

At the same time, the structural gap between the outer cover and the mounting base 31 may also be used as a part of a cleaning channel 100. When the structural gap is used as the cleaning channel 100, the through hole on the mounting base 31 may be omitted. One possible implementation of the outer cover is that the outer cover includes a first mounting bracket 40. The first mounting bracket 40 has a first side and a second side opposite to each other. The switching apparatus 30 and the feeding apparatus 20 are both provided on the first mounting bracket 40 and located on the first side of the first mounting bracket 40. The mounting base 31 and the plurality of material boxes 10 are located on the second side of the first mounting bracket 40. Taking the orientations in FIG. 9 and FIG. 10 as an example, the first side of the first mounting bracket 40 is the lower side, and the second side is the upper side. The switching apparatus 30 and the feeding apparatus 20 are integrated into a whole by the first mounting bracket 40, so that the modularity of the feeding system becomes higher and it is convenient for users to use.

One possible way to implement the first mounting bracket 40 is that the first mounting bracket 40 includes a cylindrical side wall 401 and a load-bearing platform 402 connected to the cylindrical side wall 401. The cylindrical side wall 401 and the load-bearing platform 402 are enclosed an accommodation space. The switching apparatus 30 and the feeding apparatus 20 are all provided in the accommodation space, and the discharging element 22 extends out of the accommodation space and is in connection with the cooking container. The load-bearing platform 402 is provided with an opening and a driving port, and the inlet 211 of the feeding element 21 is interconnected with the opening. When transporting materials, the discharge structure 11 on the material box 10 corresponds to the position of the opening, and then corresponds to the inlet 211 of the feeding element 21 accordingly. Further, the feeding element 21 and the load-bearing platform 402 are of an integrally formed structure.

The switching apparatus 30 is in connection with the mounting base 31 in such a way that the output shaft of the driver 32 passes through the driving port and is in connection with the mounting base 31. One way of connecting the output shaft to the mounting base 31 is, as shown in FIG. 10, one side of the mounting base 31 facing the load-bearing platform 402 is provided with a driving groove 317 with an internal tooth. The output shaft of the driver 32 is provided with a driving gear. The driving gear extends into the driving groove 317 and is meshed with the internal tooth. When the driver 32 drives the output shaft to rotate, the output shaft drives the mounting base 31 to rotate by the driving gear. In order to prevent the driving gear from protruding from the load-bearing platform 402, a receiving groove is provided on the side of the load-bearing platform 402 facing the mounting base 31 at a position corresponding to of the driver 32. The driving gear is located in the receiving groove so as not to protrude from the surface of the load-bearing platform 402. The groove wall of the driving groove 317 at least partially extends into the receiving groove and is in connection with the driving gear.

Further, in order to reduce the impact of the heat generated by the driver 32 on the cooking materials when the driver 32 is working, one possible way is to provide an isolation plate 403 on the circumferential periphery of the driver 32. The isolation plate 403 encloses an isolation space, and the driver 32 is provided in the isolation space. By providing the isolation plate 403, the driver 32 is isolated from the outside and avoids contact between the driver 32 and the feeding apparatus 20, thereby reducing the impact of heat on the cooking materials, which may lead to affect the taste of the food in the cooking container.

Further, referring to FIG. 14 with continued reference to FIGs. 8 to 12, the outer cover further includes a second mounting bracket 41. The second mounting bracket 41 is in connection with the second side of the first mounting bracket 40 so as to form a half-pack space to receiving the a part of the plurality of material boxes 10 and the mounting base 31. The inner wall of the half-pack space of the second mounting bracket 41 is provided with a limiting groove 411 that matches the edge of the mounting base 31. The mounting base 31 and the plurality of material boxes 10 are integrated into a whole by the second mounting bracket 41, so that the modularity of the feeding system becomes higher and it is convenient for users to use. The second mounting bracket 41 includes but is not limited to a cylindrical structure, and is in connection with the cylindrical side wall 401 of the first mounting bracket 40. The second mounting bracket 41 plays a certain protective role on the material box 10, meanwhile serves as limiting and guiding functions for the rotation of the mounting base 31, making the rotation of the mounting base 31 more stable.

In some implementable embodiments of the present disclosure, the first mounting bracket 40 and the second mounting bracket 41 may be snap-fitted, or the cylindrical side wall 401 of the first mounting bracket 40 may be provided with an external thread, and the inner wall the second mounting bracket 41 may be provided with an internal thread, so that the second mounting bracket 41 and the first mounting bracket 40 may be threadedly connected. The first mounting bracket 40 and the second mounting bracket 41 make the assembly of the feeding system more convenient. One possible assembly method is to first install the driver 32 and the feeding apparatus 20 on the first mounting bracket 40; then, install the mounting base 31 on the second mounting bracket 41, and then install the plurality of material boxes 10 on the mounting base 31; finally, connect the first mounting bracket 40 and the second mounting bracket 41 to complete the assembly of the feeding system.

Further, referring to FIGs. 14 and 15, another possible way to realize the cleaning channel 100 is as follows: when the mounting base 31 drives the material box 10 to rotate, the discharging structure 11 of the material box 10 and the inlet 211 of the feeding element 21 stagger the predetermined position, there is a gap between the mounting base 31 and the inlet 211 of the feeding element 21. There is also a gap between the first mounting bracket 40 and the second mounting bracket 41. Said gap serves as the cleaning channel 100 or a part of the cleaning channel 100 to communicate with the air, so that the air flows through the feeding element 21 and the discharging element 22, thereby taking away the cooking material remaining inside the feeding apparatus 20.

One way to present a gap between the mounting base 31 and the inlet 211 of the feeding element 21 is to provide an airflow groove on the load-bearing platform 402, a convex plate 4021 in the airflow groove, and the inlet 211 of the feeding element 21 is provided on the convex plate 4021. When the discharging structure 11 of the material box 10 corresponds to the inlet 211 of the feeding element 21, the material box 10 may feed material by the feeding element 21. When the material box 10 and the convex plate 4021 rotate relative to each other and the discharge structure 11 of the material box 10 and the inlet 211 of the feeding element 21 stagger the predetermined position, the air flow groove cooperates with the gap between the first mounting bracket 40 and the second mounting bracket 41 to form the cleaning channel 100 or a part of the cleaning channel 100 to interconnect the air, so that the air flows through the feeding element 21 and the discharging element 22 to take away the cooking material remaining inside the feeding apparatus 20.

When the feeding system is in use, the mounting base 31 rotates relative to the load-bearing platform 402 and the limiting groove 411. In order to make the rotation of the mounting base 31 smoother, referring to FIGs. 11 and 12, one possible way is to provide a rolling element 316 between the mounting base 31 and the load-bearing platform 402. The mounting base 31 is rotatably connected to the load-bearing platform 402 by the rolling element 316. The rolling element 316 includes, but is not limited to, a ball and a pin roller. The rolling element 316 may be provided on one of the mounting base 31 and the load-bearing platform 402, or the rolling element 316 may be provided on both the mounting base 31 and the load-bearing platform 402. The friction force between the mounting base 31 and the load-bearing platform 402 may be reduced by the rolling element 316, making the rotation of the mounting base 31 more smoothly, meanwhile reducing the wear of the mounting base 31 and the load-bearing platform 402, extending the service life accordingly.

Further, a rolling element 316 is provided between the edge of the mounting base 31 and the groove wall of the limiting groove 411. The edge of the mounting base 31 is rotatably connected to the groove wall of the limiting groove 411 by the rolling element 316. The rolling element 316 may be provided on one of the mounting base 31 and the groove wall of the limiting groove 411, or the rolling element 316 may be provided on both the mounting base 31 and the groove wall of the limiting groove 411. The friction force between the mounting base 31 and the groove wall of the limiting groove 411 may be reduced by the rolling element 316, so that the rotation of the mounting base 31 is smoother, and the wear of the mounting base 31 and the groove wall of the limiting groove 411 are also reduced, extending the service life accordingly.

Referring to FIG. 9 and FIG. 10 and FIG. 11, in the embodiment of the present disclosure, one implementation of the feeding element 21 is that the feeding element 21 is a funnel, and the end face of the large mouth end of the funnel is provided with a sealing ring 25 sealing with the mounting base 31. The large mouth end of the funnel is the inlet 211 of the feeding element 21. When the discharging structure 11 of the material box 10 is opened, the funnel collects cooking materials by the large mouth end. After the cooking materials enter the funnel, they are gathered to the smaller mouth end and then are discharger by the smaller mouth end. The sealing ring 25 on the funnel cooperates with the mounting base 31 to form a sealed space between the funnel, the discharging hole 311 and the discharging structure 11, ensuring that the cooking materials flowing out from the discharging structure 11 enter the funnel and reducing side flow.

In order to realize the transportation of cooking materials in the feeding apparatus 20, the feeding apparatus 20 also includes a feeding pump 23. The smaller mouth end of the funnel is in connection with the feeding pump 23 by the feeding pipe 24. The discharging element 22 is in connection with the feeding pump 23. The discharging element 22 includes, but is not limited to, a transporting pipe. When feeding, the feeding pump 23 is turned on, and the discharging structure 11 of the material box 10 is opened. Under the action of the feeding pump 23, the cooking material inside the material box 10 flows out of the material box 10, and the cooking material passes through the inlet 211 of the funnel 211 entering the funnel, and then flows into the cooking container through the feeding pipe 24 and the discharging element 22. Meanwhile, with the cooperation of the switching apparatus 30, the discharging structure 11 of different material boxes 10 may be switched to a position corresponding to the funnel, so that the cooking material in different material boxes 10 may be added to the cooking container.

Further, referring to FIG. 11, one possible way of realizing the discharging structure 11 is that the discharging structure 11 includes a discharging port 111 at the bottom of the material box 10 and a one-way valve 112. The one-way valve 112 is in connection with the material box 10 and blocks the discharging port 111. When the feeding pump 23 is turned on, the one-way valve 112 is triggered to open, so that the inside of the material box 10 is interconnected with the outside through the discharging port 111. When feeding material, the switching apparatus 30 drives the plurality of material boxes 10 to rotate, so that the outlet structure of one of the material boxes 10 corresponds to the position of the funnel. The feeding pump 23 is turned on, and the feeding pump 23 generates negative pressure when working, so that the one-way valve 112 is opened. At this time, the outlet 111 is interconnected with the outside. The cooking material in the material box 10 may flows out of the material box 10. The cooking material enters the funnel through the inlet 211 of the funnel, and then flows into cooking container through the feeding pipe 24 and the discharging element 22. At the same time, by controlling the working time of the feeding pump 23, the flow rate of the cooking material in the material box 10 may be controlled, thereby achieving accurate measurement.

Further, the sealing ring 25 on the funnel cooperates with the mounting base 31, so that a sealed space is formed between the funnel, the discharge hole 311 and the discharge structure 11, thereby improving the airtightness of the sealed space. Further, in order to achieve multiple uses of the material box 10, the material box 10 is also provided with a feeding port 12. When the cooking material in the material box 10 is used up, the user may replenish the material box 10 through the feeding port 12, so that the material box 10 may be used multiple times and repeatedly to reduce usage costs.

Further, one way of connecting the one-way valve 112 to the material box 10 is that the bottom of the material box 10 is provided with a discharging slot protruding from the bottom. The bottom of the discharging slot is provided with a discharging port 111. The one-way valve 112 is provided in the discharging slot. By providing a discharging slot, the one-way valve 112 may be prevented from occupying the internal space of the material box 10, so that the inner cavity of the material box 10 may be reasonably utilized and more cooking materials may be accommodated. At the same time, the discharging slot protrudes from the bottom of the material box 10, making it easier for the discharging structure 11 to be inserted into the discharging hole 311.

In the embodiment of the present disclosure, in addition to the above-mentioned switching apparatus 30 driving the movement of the plurality of material boxes 10 so that the discharging structure 11 of different material boxes 10 correspond to the position of the feeding element 21, the switching apparatus 30 may also be used to drive the feeding element 21 to move. The positions of the plurality of material boxes 10 are relatively fixed, so that different material boxes 10 may feed into the cooking container multiple times and cyclically.

Described below is a method in which the positions of the plurality of material boxes 10 being relatively fixed, and the switching apparatus 30 driving the feeding element 21 to move, so that the discharging structure 11 of different material boxes 10 correspond to the position of the feeding element 21.

In the embodiment of the present disclosure, the switching apparatus 30 is in driving connection with the feeding apparatus 20 to drive the feeding apparatus 20 to move. The relative positions of the plurality of material boxes 10 are fixed, and the switching apparatus 30 drives the feeding apparatus 20 to move, thereby driving the feeding element 21 in the feeding apparatus 20 to correspond to the position of the discharging structure 11 on different material boxes 10, so that when the discharging structure 11 is in an open state, the cooking material in the material box 10 may be transported to the cooking container through the feeding element 21 and the discharging element 22. Further, the switching apparatus 30 is able to drive the overall movement of the feeding apparatus 20, and then correspond to the discharging structure 11 of different material boxes 10 through the inlet 211 of the feeding element 21. Alternatively, the switching apparatus 30 only drives the feeding element 21 to move, so that the inlet 211 of the feeding element 21 corresponds to the discharging structure 11 of different material boxes 10.

Further, the feeding system also includes a mounting base 31 on which a plurality of material boxes 10 are provided. The plurality of material boxes 10 may be formed into a whole by the mounting base 31. What is different from the solution in the above embodiment is that the driver 32 drives the feeding apparatus 20 to move, and the position of the mounting base 31 is fixed, so that the feeding element 21 on the feeding apparatus 20 may correspond to the position of the discharging structure 11 of different material boxes 10. The connection method between the mounting base 31 and the material box 10 may refer to the method described in the above embodiment, which will not be described again here.

Further, the feeding system also includes an outer cover, and the mounting base 31 is fixed in position relative to the outer cover. At least part of the plurality of material boxes 10 may be wrapped by the outer cover. At the same time, the mounting base 31, the switching apparatus 30 and the feeding apparatus 20 may also be wrapped in the outer cover. No rotating components may be seen from the appearance part, which provides a user with a safe visual effect. At the same time, the space enclosed by the outer cover protects the rotating components.

The implementation of the outer cover may refer to the implementation of the outer cover described in the above embodiments. One possible implementation of the outer cover is that the outer cover includes a first mounting bracket 40 and a second mounting bracket 41. The first mounting bracket 40 includes a cylindrical side wall 401 and a load-bearing platform 402 connected to the cylindrical side wall 401. The cylindrical side wall 401 and the load-bearing platform 402 form an accommodation space. The switching apparatus 30 and the feeding apparatus 20 are both provided in the accommodation space. The discharging element 22 extends the accommodation space and is connected with the cooking container. The load-bearing platform 402 is provided with an opening corresponding to the position of the discharging structure 11. When discharging material, the inlet of the feeding element 21 moves to the corresponding opening, so that the discharging structure 11 on the material box 10 corresponds a position of the import to 211 of the feeding element 21.

The second mounting bracket 41 is in connection with the second side of the first mounting bracket 40 to form a half-pack space on the second side of the first mounting bracket 40 to accommodate a part of the plurality of material boxes 10 and the mounting base 31 in the half-pack space. The inner wall of the half-pack space of the second mounting bracket 41 is provided with a limiting groove 411 that matches the edge of the mounting base 31. The edge of the mounting base 31 may be clamped in the limiting groove 411 so that the positions of the mounting base 31 and the second installation bracket 41 are fixed.

Further, referring to FIG. 14 and FIG. 15, another possible way to realize the cleaning channel 100 is as follows: when the loading platform 402 drives the feeding element 21 to rotate, the discharging structure 11 of the material box 10 and the inlet 211 of the feeding element 21 stagger the predetermined position, there is a gap between the mounting base 31 and the inlet 211 of the feeding element 21. There is also a gap between the first mounting bracket 40 and the second mounting bracket 41. Said gap serves as the cleaning channel 100 or a part of the cleaning channel 100 to communicate with the air. One way to present a gap between the mounting base 31 and the inlet 211 of the feeding element 21 is to provide an airflow groove on the load-bearing platform 402, a convex plate 4021 in the airflow groove, and the inlet 211 of the feeding element 21 is provided on the convex plate 4021. When the discharging structure 11 of the material box 10 corresponds to the inlet 211 of the feeding element 21, the material box 10 may feed material by the feeding element 21. When the material box 10 and the convex plate 4021 rotate relative to each other and the discharge structure 11 of the material box 10 and the inlet 211 of the feeding element 21 stagger the predetermined position, the air flow groove cooperates with the gap between the first mounting bracket 40 and the second mounting bracket 41 to form the cleaning channel 100 or a part of the cleaning channel 100 to interconnect the air, so that the air flows through the feeding element 21 and the discharging element 22 to take away the cooking material remaining inside the feeding apparatus 20.

It should be noted that in the different ways in which the above-mentioned switching apparatus 30 switches the discharging structure 11 of different material boxes 10 to correspond to the position of the feeding element 21, the implementation of each component, in the case where the structure does not conflict, the technical features is different in each embodiment may be referenced and learned from each other.

Further, on the basis of the above embodiments, referring to FIGs. 8 to 14, correspondingly, embodiments of the present disclosure also provide a feeding system, including: a plurality of material boxes 10, a feeding apparatus 20 and a switching apparatus 30. The material box 10 is provided with a discharging structure 11. The feeding apparatus 20 has a feeding element 21 and a discharging element 22 interconnected with each other, and the discharging element 22 is interconnected with the cooking container. The switching apparatus 30 is used to switch the discharging structure 11 of different material boxes 10 to correspond to a position of the feeding element 21 so that when the discharging structure 11 is in the open state, the cooking material in the corresponding material box 10 are transported to the cooking container by the feeding element 21 and the discharging element 22.

According to the technical solution provided by the embodiment of the present disclosure, the feeding system may be applied to cooking device. The cooking device includes a main body with a cooking container on the main body. The switching apparatus 30 may switch the discharging structure 11 of different material boxes 10 to correspond to the position of the feeding element 21, thereby realizing multiple and cyclic feeding of material into the cooking container through the plurality of material boxes 10, thereby improving the cooking efficiency. Meanwhile, the feeding amount may be accurately controlled by the feeding apparatus 20, the measurement is accurate.

Further, depending on the components driven and connected by the switching apparatus 30, the switching methods are also different. One possible way is that the switching apparatus 30 is in driving connection with the plurality of material boxes 10 to drive the movement of the plurality of material boxes 10. The relative position of the feeding apparatus 20 is fixed, and the switching apparatus 30 drives the plurality of material boxes 10 to move, thereby driving different material boxes 10 to correspond to the position of the feeding element 21, so that when the discharging structure 11 is in the open state, the cooking material in the material boxes 10 may be transported into the cooking container through the feeding element 21 and the discharging element 22.

Another feasible way is that the switching apparatus 30 is in driving connection with the feeding apparatus 20 to drive the feeding apparatus 20 to move. The relative positions of the plurality of material boxes 10 are fixed, and the switching apparatus 30 drives the feeding apparatus 20 to move, thereby driving the feeding element 21 in the feeding apparatus 20 to correspond to the position of the discharging structure 11 on different material boxes 10, so that when the discharging structure 11 is in an open state, the cooking material in the material box 10 may be transported to the cooking container through the feeding element 21 and the discharging element 22. Further, the switching apparatus 30 is able to drive the overall movement of the feeding apparatus 20, and then correspond to the discharging structure 11 of different material boxes 10 through the inlet 211 of the feeding element 21. Alternatively, the switching apparatus 30 only drives the feeding element 21 to move, so that the inlet 211 of the feeding element 21 corresponds to the discharging structure 11 of different material boxes 10.

It should be noted that the implementation of the feeding system may refer to the content recorded in the above embodiments, and will not be described again here. The technical solution adopted in the present disclosure will be described below in combination with specific application scenarios to assist understanding. The following application scenario takes a cooking machine as an example.

### Application scenario one

The user may stir-fry through the cooking machine, put the ingredients into the cooking container, input the cooking instructions through the control unit, close the pot cover assembly on the cooking container, and the cooking machine starts cooking the ingredients.

According to the set cooking time, liquid seasoning is delivered to the cooking container through the feeding system. The switching apparatus 30 drives the plurality of material boxes 10 to rotate through the mounting base 31 so that a certain material box 10 corresponds to the position of the funnel.

When feeding material, the feeding pump 23 is turned on, and the discharging structure 11 on the material box 10 is turned on. Under the action of the feeding pump 23, the cooking material inside the material box 10 flows out of the material box 10. The cooking material enters the funnel through the inlet 211 of the funnel, and then flows into the cooking container through the feeding pipe 24 and the discharging element 22. Cooperating with the switching apparatus 30, the discharging structure 11 of different material boxes 10 may be switched to correspond to the position of the funnel, so that the cooking material in different material boxes 10 may be added to the cooking container multiple times and cyclically.

At the same time, by controlling the opening time of the feeding pump 23, the flow rate of the cooking material may be accurately controlled, resulting in accurate measurement.

### Application scenario two

The user may stir-fry through the cooking machine, put the ingredients into the cooking container, input the cooking instructions by the control unit, close the pot cover assembly on the cooking container, and the cooking machine starts cooking the ingredients.

According to the set cooking time, liquid seasoning is delivered to the cooking container by the feeding system. The switching apparatus 30 drives the funnel on the feeding apparatus 20 to rotate so that a certain material box 10 corresponds to the position of the funnel.

When feeding material, the feeding pump 23 is turned on, and the discharging structure 11 on the material box 10 is turned on. Under the action of the feeding pump 23, the cooking material inside the material box 10 flows out of the material box 10. The cooking material enters the funnel through the inlet 211 of the funnel, and then flows into the cooking container through the feeding pipe 24 and the discharging element 22. Cooperating with the switching apparatus 30, the discharging structure 11 of different material boxes 10 may be switched to correspond to the position of the funnel, so that the cooking material in different material boxes 10 may be added to the cooking container multiple times and cyclically.

At the same time, by controlling the opening time of the feeding pump 23, the flow rate of the cooking material may be accurately controlled, resulting in accurate measurement.

Further, on the basis of the above embodiments, the embodiments of the present disclosure also provide a cooking device. The difference between the cooking device in the embodiment of the present disclosure and the cooking device described in the above embodiments is that, see FIG. 12 and FIG. 13, the cooking device includes a cleaning channel 100, by which the feeding apparatus 20 may be auxiliary cleaned, thereby ensuring that the feeding apparatus 20 remains clean before each addition of ingredients, to avoid mixing and odor mixing of different cooking materials. At the same time, after completing cooking operation, the cleaning channel 100 is used to assist in cleaning the feeding apparatus 20 to prevent the cooking material from remaining in the feeding apparatus 20 and avoid bacterial growth that may occur if the cooking material is not cleaned for a long time, causing the cooking material to deteriorate and produce odor. The specific solution is as follows:
With reference to FIGs. 8 to 11, in one embodiment of the present disclosure, a cooking device is provided, including: a main body (not shown in the drawings) and a feeding system. The main body has a cooking container, and the cooking container is used to contain food ingredients and cooperate with other functional components on the main body to achieve cooking of food ingredients. The feeding system is used to deliver seasonings into the cooking container to season the ingredients in the cooking container.

One implementation method of the feeding system is that the feeding system includes a plurality of material boxes 10, a feeding apparatus 20, a switching apparatus 30 and a cleaning channel 100. Referring to FIGs. 10 and 11, the material box 10 is provided with a discharging structure 11. The feeding apparatus 20 has a feeding element 21 and a discharging element 22 interconnected with each other.

Referring to FIG. 12 and FIG. 13, the cleaning channel 100 is used to interconnect the medium of the auxiliary cleaning feeding apparatus 20. According to different cleaning requirements, the medium used to clean the feeding apparatus 20 includes but is not limited to air, clean water, and an aqueous solution containing detergent.

The switching apparatus 30 is used to switch the discharging structure 11 of different material boxes 10 to correspond to a position of the feeding element 21, so that when the discharging structure 11 is in the open state, the cooking material in corresponding material box 10 is transported to the cooking container through the feeding element 21 and the discharging element 22. At the same time, the switching apparatus 30 is also used to switch the feeding element 21 to correspond to the cleaning channel 100, so as to assist in cleaning the feeding apparatus 20 with the help of the cleaning channel 100. The technical solution provided by the embodiment of the present disclosure may switch the discharging structure 11 of different material boxes 10 to correspond the position of the feeding element 21 by the switching apparatus 30, thereby realizing multiple and cyclic feeding into the cooking container through the plurality of material boxes 10. The cooking efficiency is improved. At the same time, the feeding amount may be accurately controlled through the feeding apparatus 20, and the measurement is accurate. In addition, by the providing of the cleaning channel 100, the feeding apparatus 20 may be auxiliary cleaned. For example, the feeding apparatus 20 is cleaned before each feeding, so as to avoid mixing of various cooking materials in the feeding device 20 by the feeding of plurality of material boxes 10. For another example, after the cooking operation is completed, the feeding apparatus 20 may be cleaned to reduce the residual cooking material in the feeding apparatus 20 and avoid the growth of bacteria if left uncleaned for a long time, resulting in the deterioration of the cooking materials, which produces odor.

Further, one possible way to realize the cleaning channel 100 is that, referring to FIGs. 12 and 13, the feeding system also includes a mounting base 31, a plurality of material boxes 10 are provided on the mounting base 31, and a plurality of discharge holes 311 corresponding to the discharging structures 11 of the plurality of material boxes 10 respectively. A through hole is provided between adjacent discharge holes 311 on the mounting base 31, which forms at least a part of the cleaning channel 100. According to different requirements, the mounting base 31 may be implemented in a variety of ways. For example, when the plurality of material boxes 10 is rotating object, the mounting base 31 may be implemented by a rotating plate. When the plurality of material boxes 10 is fixed object, the mounting base 31 is a component that provides support for the plurality of material boxes 10.

Further, the discharging structure 11 is located at the bottom of the material box 10. In order to make the material in the material box 10 flow out from the discharging hole 311 more smoothly, one feasible way is to locate the mounting base 31 below the material box 10. The relative position between the material box 10 and the mounting base 31 is in an up-and-down relationship, which makes it easier for the material in the material box 10 to flow out of the material box 10, making the material discharged from the material box 10 cleaner, and the outflowing materials are less likely to flow back, reducing the situation of odor transferring.

The through hole on the mounting base 31 at least forms a part of the cleaning channel 100, allowing the feeding apparatus 20 to interconnection with the cleaning medium. When the switching apparatus 30 switches the feeding element 21 to correspond to the cleaning channel 100, the switching apparatus 30 works so that the cleaning medium flows through the feeding element 21 and the discharging element 22, thereby taking away the cooking material remaining inside the feeding apparatus 20, so as to ensure the cleanliness of the feeding apparatus 20 to avoid mixing of various cooking materials in the feeding apparatus 20 when feeding by the plurality of material boxes 10. After the cooking operation is completed, the feeding apparatus 20 is cleaned again by the air flow to reduce the cooking material remaining in the feeding apparatus 20 and to avoid the growth of bacteria if left uncleaned for a long time, resulting in the deterioration of the cooking materials and the generation of odor.

For example, referring to FIG. 14 and FIG. 15, another possible way to realize the cleaning channel 100 is as follows: when the inlet 211 of the feeding element 21 rotates to a predetermined position that is offset from the material box 10, there is a gap between the material box 10 and the inlet 211 of the feeding element 21. Said gap serves as the cleaning channel 100 or a part of the cleaning channel 100 to interconnect the air, so that the air flows through the feeding element 21 and the discharging element 22, thereby taking away the remaining cooking material inside the feeding apparatus 20.

In some implementable embodiments of the present disclosure, when the feeding apparatus 20 is cleaned, after the residual cooking material flowing out of the discharging element 22 may enter different areas according to different needs. Taking the cleaning medium as air as an example, one way to remove residual cooking material is that when the discharging element 22 corresponds to that of the material box 10, the discharging element 22 interconnects with the cooking container to discharge the cooking material in the material box 10 into the cooking container. When the discharging element 22 is in connection with the cleaning channel 100, the discharging element 22 interconnects with the outside air. The residual cooking materials in the feeding apparatus 20 may be discharged into the cooking container. This method may be applied in the cooking process when the cooking device cooking, or after cooking is completed and the dishes are taken out of the cooking container, but before the cooking container is cleaned.

Another way is that when the position of the discharging element 22 corresponds to that of the material box 10, the discharging element 22 interconnects with the cooking container to discharge the cooking material in the material box 10 into the cooking container. When the discharging element 22 is in connection with the cleaning channel 100, the discharging element 22 interconnects the outside air. The residual cooking material in the feeding apparatus 20 may be discharged into a recovery container driven by the air flow. This method may be applied in the cooking process when the cooking device cooking, or after cooking is completed. In this way, the interconnection channel of the discharging element 22 needs to be switched back and forth in the cooking container and the recovery container. In order to realize the switching of the interconnection channel, one possible way is that the feeding apparatus 20 also includes a channel switching valve. The channel switching valve interconnects the discharging element 22. The channel switching valve has at least three interfaces, one of which interconnects the discharging element 22, so that there are at least two channels between the discharging element 22 and other interfaces to discharge the cooking materials outflowing from the discharging element 22 to different areas.

Taking the channel switching valve as a three-way valve as an example, after the three-way valve interconnects the discharging element 22, the other two interfaces of the three-way valve interconnects the cooking container and the recovery container respectively. When the discharging element 22 corresponds to the position of the material box 10, the three-way valve opens the interconnection channel between the discharging element 22 and the cooking container, and the interconnection channel between the discharging element 22 and the recovery container is closed, so that the discharging element 22 interconnects the cooking container, so that the cooking material in the material box 10 may be discharged into the cooking container. When the discharging element 22 interconnects the cleaning channel 100, the three-way valve opens the interconnection channel between the discharging element 22 and the recovery container, the interconnection channel between the discharging element 22 and the cooking container is closed, and the discharging element 22 interconnects the cleaning medium, so that the residual cooking material in the feeding apparatus 20 may be discharged into the recovery container.

When the cleaning medium is cleaning liquid, if the cooking device is in the cooking process, when the discharging element 22 is in connection with the cleaning channel 100, the residual cooking materials in the feeding apparatus 20 may be discharged to the recovery container under the drive of the liquid flowing, to avoid affecting the dishes in the cooking container. If the cooking device completes cooking and the dishes are taken out of the cooking container, when the discharging element 22 is in connection with the cleaning channel 100, the residual cooking material in the feeding apparatus 20 may be discharged to the cooking container or into the recovery container, under the drive of the liquid flowing. For example, a certain material box 10 may be used as a cleaning material box to contain clean water or cleaning liquid. The switching apparatus 30 works and the inlet 211 of the feeding apparatus 20 is in connection with the cleaning material box. At this time, the channel between said cleaning material box and the inlet 211 forms the cleaning channel 100 or a part of the cleaning channel. Driven by the liquid flow, the residual cooking material in the feeding apparatus 20 may be discharged into a recovery container. The recovery container may be an additional container or a cooking container itself.

Further, the cleaning medium may be a combination of air and cleaning liquid. During the cooking process, the residual cooking material in the feeding apparatus 20 may be discharged into the cooking container through the air. While cleaning the feeding apparatus 20, it does not affect the cooking of the material in the cooking container. After the cooking is completed and the dishes are taken out of the cooking container, the feeding apparatus 20 may be cleaned once with air and then with cleaning fluid to make the feeding apparatus 20 cleaner.

Further, in some implementable embodiments of the present disclosure, the feeding apparatus 20 also includes a feeding pump 23. The feeding pump 23 interconnects the feeding element 21 by the feeding pipe 24, and the discharging element 22 interconnects the feeding pump 23. When the through hole corresponds to the feeding element 21, the feeding pump 23 works to generate suction force, under action of which the residual cooking material in the feeding apparatus 20 is discharged from the discharging element 22. When the feeding pump 23 is turned on, negative pressure is generated. The cleaning medium flows through the feeding element 21 and the discharging element 22, taking away the residual cooking material in the feeding apparatus 20 to ensure the cleanliness of the feeding apparatus 20.

In the embodiment of the present disclosure, the ways in which the switching apparatus 30 switches the feeding element 21 to correspond to the discharging structure 11 of different material boxes 10 and different cleaning channels 100 include but are not limited to the following. One possible way is, the position of the feeding element 21 is relatively fixed, and the switching apparatus 30 is in driving connection with the mounting base 31 to drive the plurality of material boxes 10 to move, so that the feeding element 21 corresponds to the discharging structure 11 of different material boxes 10, and corresponds to the position of different cleaning channels 100. Another possible way is, the position of the mounting base 31 is relatively fixed, and the switching apparatus 30 is in driving connection with the feeding apparatus 20 to drive the feeding apparatus 20 to move, so that the feeding element 21 on the feeding apparatus 20 corresponds to the position of the discharging structure 11 of different material boxes 10, different material boxes 10 may be realized to feed materials into the cooking container multiple times and cyclically, and the feeding element 21 corresponds to the position of different cleaning channels 100, so as to realize the cleaning to the feeding apparatus 20.

First, the way of the position of the feeding element 21 being relatively fixed and the switching apparatus 30 driving the mounting base 31 to move is introduced.

With reference to FIGs. 9 to 11, and continuing to refer to FIGs. 12 and 13, one possible implementation of the switching apparatus 30 is that the switching apparatus 30 includes a driver 32. The output shaft of the driver 32 is in driving connection with the rotation center of the mounting base 31, so that when the mounting base 31 is driven to rotate, the mounting base 31 drives the plurality of material boxes 10 to move. The mounting base 31 is used to mount a plurality of material boxes 10 and drive the plurality of material boxes 10 to rotate. The mounting base 31 is provided with a plurality of discharge holes 311 respectively corresponding to the discharging structure 11 of the plurality of material boxes 10. A through hole is provided between adjacent discharge holes 311.

When the driver 32 is running, the mounting base 31 is driven to rotate, so that the mounting base 31 drives a plurality of material boxes 10 to rotate, so that one of the material boxes 10 corresponds to the position of the feeding element 21. When feeding material, the feeding pump 23 is turned on, and the discharging structure 11 on the material box 10 opened. Under the action of the feeding pump 23, the cooking material inside the material box 10 flows out of the material box 10. The cooking material enters the feeding element 21 through the inlet 211 of the feeding element 21, and then flows into the cooking material through the feeding pipe 24 and the discharging element 22. With cooperation of the switching apparatus 30, the discharging structure 11 of different material boxes 10 may be switched to correspond a position of the feeding element 21, so that cooking materials in different material boxes 10 may be added to the cooking container multiple times and cyclically.

Before switching from one material box 10 to the next material box 10, the driver 32 drives the mounting base 31 to rotate so that the feeding element 21 corresponds to the position of the through hole, the feeding pump 23 is turned on generate negative pressure. By sucking the cleaning medium through the through hole, for example, when the cleaning medium is air, the feeding pump 23 sucks the air through the through hole, and the air flow passes through the feeding apparatus 20 under the action of the suction force, and the residual material in the feeding apparatus 20 is brought out by the airflow. The residual material flowing out may flow into the cooking container or the recovery container to ensure the cleanliness of the feeding apparatus 20 and avoid multiple cooking materials being mixed in the feeding apparatus 20 when feeding through the plurality of material boxes 10. After the cooking operation is completed, the feeding apparatus 20 is cleaned again with the cleaning medium to reduce the residual material in the feeding apparatus 20 and avoid the growth of bacteria if left uncleaned for a long time, resulting in the deterioration of the cooking materials and the generation of odor. In the embodiment of the present disclosure, in addition to cleaning the feeding apparatus 20 by air flow as described above, the feeding apparatus 20 may also be cleaned by cleaning liquid.

One possible way is that the feeding system further includes at least one cleaning box. The cleaning box contains cleaning fluid. The cleaning box is provided with at least part of the cleaning channel 100 and the cleaning valve. The cleaning valve is provided in the cleaning channel 100. The implementation of the cleaning box may refer to the implementation of the material box 10, and the implementation of the cleaning valve may refer to the implementation of the one-way valve 112. Cleaning fluid includes, but are not limited to, clean water and aqueous solutions containing detergent.

One way of cleaning is that the switching apparatus 30 drives the feeding element 21 to correspond to the cleaning channel 100, and the feeding pump 23 is turned on, triggering the opening of the cleaning valve, so that the cleaning liquid in the cleaning box flows out of the cleaning box, and the cleaning liquid flows into the feeding element 21, and then cooperates with the suction force of the feeding pump 23 to clean the feeding apparatus 20. According to different cleaning requirements, the feeding apparatus 20 may be cleaned with different cleaning fluid. For example, when switching different material boxes 10 for feeding, the feeding apparatus 20 may be cleaned with clean water before each feeding. The sewage for cleaning the feeding apparatus 20 may flow into the recovery container to avoid mixing of various cooking materials in the feeding apparatus 20 when feeding material through the plurality of material boxes 10. After the cooking operation is completed, the feeding apparatus 20 is cleaned with an aqueous solution containing detergent, and then rinsed with clean water. The sewage for cleaning the feeding apparatus 20 may flow into the recovery container, thereby reducing the residual cooking material in the feeding apparatus 20 and avoiding avoid the growth of bacteria if left uncleaned for a long time, resulting in the deterioration of the cooking materials, which produces odor.

It should be noted that in the embodiment of the present disclosure, the method of cleaning the feeding apparatus 20 with air and the method of cleaning the feeding apparatus 20 with cleaning liquid may be implemented separately or combined together. For example, when switching different material boxes 10 for feeding, the feeding apparatus 20 may be cleaned by air flow before each feeding. After the cooking operation is completed, the feeding apparatus 20 is cleaned with an aqueous solution containing detergent, and then rinsed with clean water, thereby cleaning the entire feeding apparatus 20.

In the embodiment of the present disclosure, the cleaning method of the feeding apparatus 20 may be automatically completed through a predetermined program. Further, the feeding system also includes a control apparatus. The control apparatus is electrically connected to the switching apparatus 30 and is used to control the switching apparatus 30 to switch the feeding element 21 to correspond to the cleaning channel 100 to clean the feeding apparatus 20 before switching from one material box 10 to another material box 10. And/or, after the cooking device completes the cooking task, the switching apparatus 30 is controlled to switch the feeding element 21 to correspond to the cleaning channel 100 to clean the feeding apparatus 20. The switching action of the switching apparatus 30 may be automatically controlled by the control apparatus, thereby automatically completing the position correspondence between the feeding element 21 and the cleaning channel 100, so as to realize the cleaning operation with regard to the feeding apparatus 20.

In order to make the cleaning operation smoother, the feeding apparatus 20 includes a feeding pump 23. The control apparatus is also used to control the feeding pump 23 to work to generate suction force when the feeding element 21 corresponds to the cleaning channel 100. The residual cooking material in the feeding apparatus 20 is discharged from the discharging element 22 under the action of suction force. The switching apparatus 30 and the feeding pump 23 in the feeding apparatus 20 are both controlled by the control apparatus, thereby making the control nodes more accurate and making the cleaning operation smoother.

In some implementable embodiments of the present disclosure, when the feeding apparatus 20 is cleaned, the residual cooking material after flowing out of the discharging element 22 may enter different areas according to different needs. One way of realizing this is that the feeding apparatus 20 further includes a channel switching valve. The channel switching valve interconnects the discharging element 22, and is in connection with a control apparatus. The control apparatus is used to control the on and off of the channel switching valve and the switching of channels to discharge the outflowing cooking materials to different areas. The channel switching valve includes at least two interconnection channels. For example, the channel switching valve has two interconnection channels. One interconnection channel interconnects the discharging element 22 and the cooking container, and the other interconnection channel interconnects the discharging element 22 and the recovery container.

When the discharging element 22 corresponds to the material box 10, the channel switching valve opens the interconnection channel between the discharging element 22 and the cooking container, and closes the interconnection channel between the discharging element 22 and the recovery container, so that the discharging element 22 and the recovery container are interconnected, and the discharging element 22 may discharge the cooking material in the material box 10 into the cooking container.

When the discharging element 22 interconnects the cleaning channel 100, the channel switching valve opens the interconnection channel between the discharging element 22 and the recovery container, closes the interconnection channel between the discharging element 22 and the cooking container, and the discharging element 22 and the cleaning medium are interconnected, the residual cooking material in the feeding apparatus 20 may be discharged into the recovery container.

In the embodiment of the present disclosure, in addition to the above-mentioned switching apparatus 30 driving the mounting base 31 to move so that the feeding element 21 corresponds to the position of the cleaning channel, the switching apparatus 30, the switching apparatus 30 may also drive the feeding element 21 to move, and the position of the mounting base 31 is relatively fixed, so that different material boxes 10 may feed the cooking container multiple times and cyclically, and the feeding apparatus may be cleaned through the cleaning channel.

What is described below is the way in which the position of the mounting base 31 is relatively fixed and the switching apparatus 30 drives the feeding element 21 to move. In the embodiment of the present disclosure, a plurality of material boxes 10 is provided on the mounting base 31. The plurality of material boxes 10 may be formed into a whole by the mounting base 31. What is different from the solution in the above embodiment is that the driver 32 drives the feeding apparatus 20 to move, and the position of the mounting base 31 is fixed, so that the feeding element 21 on the feeding apparatus 20 may correspond to the position of the discharging structure 11 of different material boxes 10. The connection method between the mounting base 31 and the material box 10 may refer to the method described in the above embodiment, which will not be described again here.

The switching apparatus 30 is in driving connection with the feeding apparatus 20 to drive the feeding apparatus 20 to move. The relative position of the mounting base 31 is fixed, that is, the relative positions of the plurality of material boxes 10 are fixed. The switching apparatus 30 drives the feeding apparatus 20 to move, thereby driving the feeding element 21 in the feeding apparatus 20 to correspond the position of the discharging structure 11 on different material boxes 10. When the discharging structure 11 is in the open state, the cooking material in the material box 10 may be transported to the cooking container through the feeding element 21 and the discharging element 22. Before the feeding element 21 is switched from one feeding box 10 to the next feeding box 10, the switching apparatus 30 drives the feeding apparatus 20 to rotate so that the feeding element 21 corresponds to the position of the through hole. When the feeding pump 23 is turned on, negative pressure is generated when the feeding pump 23 working, which sucks the cleaning medium through the through hole to remove the remaining material in the feeding apparatus 20. The residual material flowing out may flow into the cooking container or the recovery container, to ensure the cleanliness of the feeding apparatus 20 degree, so as to prevent a variety of cooking materials from being mixed in the feeding apparatus 20 when feeding through the plurality of material boxes 10. After the cooking operation is completed, the feeding apparatus 20 is cleaned again with the cleaning medium to reduce the residual cooking material in the feeding apparatus 20 and avoid the growth of bacteria if left uncleaned for a long time, resulting in the deterioration of the cooking materials and the generation of odor.

Further, the switching apparatus 30 is able to drive the overall movement of the feeding apparatus 20, and then correspond to the discharging structure 11 of different material boxes 10 through the inlet 211 of the feeding element 21. Alternatively, the switching apparatus 30 only drives the feeding element 21 to move, so that the inlet 211 of the feeding element 21 corresponds to the discharging structure 11 of different material boxes 10.

It should be noted that the above-mentioned switching apparatus 30 switches the discharging structure 11 of different material boxes 10 in different ways, the implementation of each component, in the case where the structure does not conflict, technical features in different embodiments may be referenced and learned from each other, and will not be described one by one here.

Further, on the basis of the above embodiments, referring to FIGs. 8 to 14, correspondingly, embodiments of the present disclosure also provide a feeding system, including: a plurality of material boxes 10, a feeding apparatus 20, a cleaning channel 100 and switching apparatus 30. The material box 10 is provided with a discharging structure 11. The feeding apparatus 20 has a feeding element 21 and a discharging element 22 interconnected with each other. The cleaning channel 100 is used to interconnect the medium that assists in cleaning the feeding apparatus 20. The switching apparatus 30 is used to switch the discharging structure 11 of different material boxes 10 to correspond the position of the feeding element 21, so that when the discharging structure 11 is in the open state, the cooking material in corresponding material box 10 is transported to the cooking container through the feeding element 21 and the discharging element 22. The feeding element 21 is switched to correspond to the cleaning channel 100, so as to assist in cleaning the feeding apparatus 20 with the help of the cleaning channel 100.

According to the technical solution provided by the embodiment of the present disclosure, the feeding system may be applied to a cooking device. The cooking device includes a main body and a cooking container on the main body. The discharging structure 11 of different material boxes 10 may be switched to correspond the position of the feeding element 21 by the switching apparatus 30, thereby realizing multiple and cyclic feeding into the cooking container through the plurality of material boxes 10. The cooking efficiency is improved. At the same time, the feeding amount may be accurately controlled through the feeding apparatus 20, and the measurement is accurate. In addition, by the providing of the cleaning channel 100, the feeding apparatus 20 may be auxiliary cleaned. For example, the feeding apparatus 20 is cleaned before each feeding, so as to avoid mixing of various cooking materials in the feeding device 20 by the feeding of plurality of material boxes 10. For another example, after the cooking operation is completed, the feeding apparatus 20 may be cleaned to reduce the residual cooking material in the feeding apparatus 20 and avoid the growth of bacteria if left uncleaned for a long time, resulting in the deterioration of the cooking materials, which produces odor.

Further, one possible way to realize the cleaning channel 100 is that, referring to FIGs. 12 and 13, the feeding system also includes a mounting base 31, a plurality of material boxes 10 are provided on the mounting base 31, and a plurality of discharge holes 311 corresponding to the discharging structures 11 of the plurality of material boxes 10 respectively. A through hole is provided between adjacent discharge holes 311 on the mounting base 31, which forms at least a part of the cleaning channel 100. According to different requirements, the mounting base 31 may be implemented in a variety of ways. For example, when the plurality of material boxes 10 is rotating object, the mounting base 31 may be implemented by a rotating plate. When the plurality of material boxes 10 is fixed object, the mounting base 31 is a component that provides support for the plurality of material boxes 10.

The through hole on the mounting base 31 at least forms a part of the cleaning channel 100, allowing the feeding apparatus 20 to interconnection with the cleaning medium. When the switching apparatus 30 switches the feeding element 21 to correspond to the cleaning channel 100, the switching apparatus 30 works so that the cleaning medium flows through the feeding element 21 and the discharging element 22, thereby taking away the cooking material remaining inside the feeding apparatus 20, so as to ensure the cleanliness of the feeding apparatus 20 to avoid mixing of various cooking materials in the feeding apparatus 20 when feeding by the plurality of material boxes 10. After the cooking operation is completed, the feeding apparatus 20 is cleaned again by the air flow to reduce the cooking material remaining in the feeding apparatus 20 and to avoid the growth of bacteria if left uncleaned for a long time, resulting in the deterioration of the cooking materials and the generation of odor.

In the embodiment of the present disclosure, in addition to cleaning the feeding apparatus 20 by air flow as described above, the feeding apparatus 20 may also be cleaned by cleaning liquid. One possible way is that the feeding system further includes at least one cleaning box. The cleaning box contains cleaning fluid. The cleaning box is provided with at least part of the cleaning channel 100 and the cleaning valve. The cleaning valve is provided in the cleaning channel 100. The implementation of the cleaning box may refer to the implementation of the material box 10, and the implementation of the cleaning valve may refer to the implementation of the one-way valve 112. Cleaning fluid includes, but are not limited to, clean water and aqueous solutions containing detergent.

One cleaning method is that the switching apparatus 30 drives the feeding element 21 to move, the mounting base 31 is fixed, so that the feeding element 21 corresponds to the cleaning channel 100. The feeding pump 23 is turned on, and the cleaning valve is triggered to open, so that the cleaning liquid inside the cleaning box flows out of the cleaning box, the cleaning liquid flows into the feeding element 21, and then cooperates with the suction force of the feeding pump 23 to clean the feeding apparatus 20. According to different cleaning requirements, the feeding apparatus 20 may be cleaned with different cleaning fluid. For example, when switching different material boxes 10 for feeding, the feeding apparatus 20 may be cleaned with clean water before each feeding. The sewage for cleaning may flow into the recovery container to avoid mixing of various cooking material in the feeding apparatus 20 when feeding material through the plurality of material boxes 10. After the cooking operation is completed, the feeding apparatus 20 is cleaned with an aqueous solution containing detergent, and then rinsed with clean water. The sewage for cleaning the feeding apparatus 20 may flow into the recovery container, thereby reducing the residual cooking material in the feeding apparatus 20 and avoiding avoid the growth of bacteria if left uncleaned for a long time, resulting in the deterioration of the cooking materials, which produces odor.

Another cleaning method is that the switching apparatus 30 drives the mounting base 31 to move, the feeding element 21 is fixed, so that the feeding element 21 corresponds to the cleaning channel 100. The feeding pump 23 is turned on, and the cleaning valve is triggered to open, so that the cleaning liquid inside the cleaning box flows out of the cleaning box, and the cleaning liquid flows into the feeding element 21, and then cooperates with the suction force of the feeding pump 23 to clean the feeding apparatus 20.

It should be noted that in the embodiment of the present disclosure, the method of cleaning the feeding apparatus 20 with air and the method of cleaning the feeding apparatus 20 with cleaning liquid may be implemented separately or combined together. For example, when switching different material boxes 10 for feeding, the feeding apparatus 20 may be cleaned by air flow before each feeding. After the cooking operation is completed, the feeding apparatus 20 is cleaned with an aqueous solution containing detergent, and then rinsed with clean water, thereby cleaning the entire feeding apparatus 20.

It should be noted that the implementation of the feeding system may refer to the content recorded in the above embodiments, and will not be described again here. The technical solution adopted in the present disclosure will be described below in combination with specific application scenarios to assist understanding. The following application scenario takes a cooking machine as an example.

### Application scenario three

The user may stir-fry through the cooking machine, put the ingredients into the cooking container, input the cooking instructions through the control unit, close the pot cover assembly on the cooking container, and the cooking machine starts cooking the ingredients.

According to the set cooking time, liquid seasoning is delivered to the cooking container through the feeding system. The switching apparatus 30 drives the plurality of material boxes 10 to rotate through the mounting base 31 so that a certain material box 10 corresponds to the position of the funnel.

When feeding material, the feeding pump 23 is turned on, and the discharging structure 11 on the material box 10 is turned on. Under the action of the feeding pump 23, the cooking material inside the material box 10 flows out of the material box 10. The cooking material enters the funnel through the inlet 211 of the funnel, and then flows into the cooking container through the feeding pipe 24 and the discharging element 22. Cooperating with the switching apparatus 30, the discharging structure 11 of different material boxes 10 may be switched to correspond to the position of the funnel, so that the cooking material in different material boxes 10 may be added to the cooking container multiple times and cyclically.

Before switching from one material box 10 to another material box 10, the funnel will correspond to the position of the through hole, and the cleaning medium will be sucked through the through hole to clean the feeding apparatus 20. The residual material flowing out may flow into the cooking container or a recovery container, to avoid the mixing of a variety of cooking materials in the feeding apparatus 20.

After the cooking operation is completed, the feeding apparatus 20 is cleaned again by the air flow, and the residual material flowing out may flow into the recovery container, reducing the cooking material remaining in the feeding apparatus 20 and avoiding the growth of bacteria that may occur if the cooking materials are not cleaned for a long time, which lead to a producing of odor.

### Application scenario four

The user may stir-fry through the cooking machine, put the ingredients into the cooking container, input the cooking instructions through the control unit, close the pot cover assembly on the cooking container, and the cooking machine starts cooking the ingredients.

According to the set cooking time, liquid seasoning is delivered to the cooking container by the feeding system. The switching apparatus 30 drives the funnel on the feeding apparatus 20 to rotate so that a certain material box 10 corresponds to the position of the funnel.

When feeding material, the feeding pump 23 is turned on, and the discharging structure 11 on the material box 10 is turned on. Under the action of the feeding pump 23, the cooking material inside the material box 10 flows out of the material box 10. The cooking material enters the funnel through the inlet 211 of the funnel, and then flows into the cooking container through the feeding pipe 24 and the discharging element 22. Cooperating with the switching apparatus 30, the discharging structure 11 of different material boxes 10 may be switched to correspond to the position of the funnel, so that the cooking material in different material boxes 10 may be added to the cooking container multiple times and cyclically.

Before switching from one material box 10 to another material box 10, the funnel will correspond to the position of the cleaning channel, and the feeding apparatus 20 will be cleaned through the cleaning medium, such as air or cleaning liquid, and the residual material flowing out may flow into the cooking container or a or a recovery container, to avoid the mixing of a variety of cooking materials in the feeding apparatus 20.

After the cooking operation is completed, the feeding apparatus 20 is cleaned with an aqueous solution containing detergent in the cleaning box, and the feeding apparatus 20 is rinsed with clean water. The residual material flowing out may flow into the recovery container, thereby reducing the amount of cooking materials in the feeding apparatus 20, which may prevent bacteria from growing if not cleaned for a long time, causing the cooking materials to deteriorate and produce odor.

In the existing technology, some cooking utensils use scrapers and water flow to clean the inner cavity, and at the same time use air flow and heat to dry the inner cavity; some cooking utensils use external water sources and built-in nozzles to utilize the impact and flow of water to achieve self-cleaning of the inner cavity of the pot; another example is to design internal flow channels and elastic bodies in the stirring paddle, so that the stirring paddle body may achieve telescopic displacement, in which, the reset state may realize stirring, and the bounced state may realize scraping of the inner wall. Generally speaking, the existing technology mainly uses scraping and water jet impact to achieve cleaning of the inner wall of the pot.

However, these existing technical solutions also have many problems, such as:
first, it is impossible to clean the inner wall and the pot cover at the same time, only the inner wall of the pot may be cleaned;
second, in solutions that rely on water jets or fluid pressure, the designed nozzle pores and flow channels are at risk of being blocked by food and condiment residues, and the narrow flow channels are more difficult to clean after being contaminated. Over time, bacteria and mold will breed, easily causing secondary pollution; similarly, if the mixing paddle is telescopic, the telescopic part is difficult to clean, which may contain dirt; and
third, by the design of multiple flow channel increases the sealing requirements of the product, and the design of elastic body also has the disadvantage of low reliability in real user usage scenarios.

To this end, the present disclosure provides the following embodiments to solve or improve at least some of the above problems. In order to enable those in the technical field to better understand the solution of the present disclosure, the technical solution in the embodiment of the present disclosure will be clearly and completely described below in conjunction with the drawings in the embodiment of the present disclosure. In some features described in the specification, claims and above-mentioned drawings of the present disclosure, descriptions such as "first" and "second" are used to distinguish different components, parts, modules, devices, etc., and do not represent the order of precedence, and does not limit the "first" and "second" to be different types. In addition, the embodiments described below are only some of the embodiments of the present disclosure, rather than all of the embodiments. Based on the embodiments in the present disclosure, all other embodiments obtained by those skilled in the art without creative efforts shall fall within the scope of protection of the present disclosure.

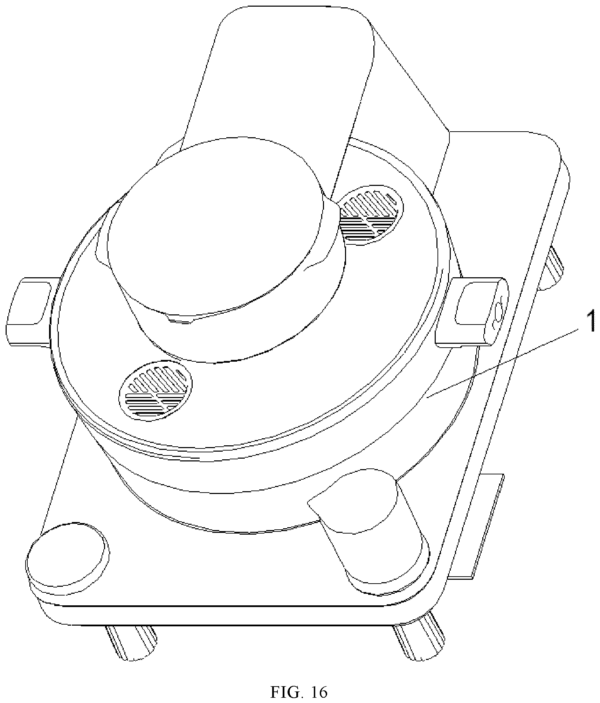

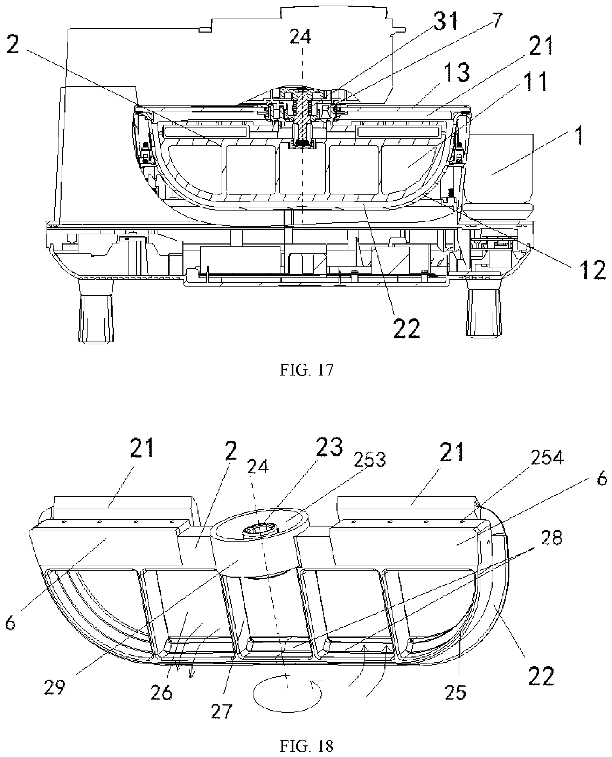

FIGs. 16 and 17 show a schematic structural diagram of a cooking device provided by an embodiment of the present disclosure. As shown in the drawings, the cooking device 1 includes: a cooking body 12, a cover body 13, a cleaning piece 2, and a driving apparatus (both shown in FIG. 16 and FIG. 17, and an output end 31 of the driving apparatus is shown in FIG. 17), etc. As shown in FIG. 17, the cover body 13 covers the cooking body 12 to form a closed cooking cavity 11. The cover body 13 may be an automatic cover body, that is, it may be controlled and driven by corresponding control, drive components to realize automatic closing or automatic opening; or, the cover body 13 may be a cover body that is opened and closed manually, which is not limited by this embodiment. The driving apparatus is used to output driving force, such as linear reciprocating motion, rotational motion, etc. The cleaning piece 2 is located in the cooking cavity 11 and in connection with the driving apparatus. Referring to the embodiment shown in FIG. 17, the cleaning piece 2 is in contact with the inner wall of the cooking body 12 and the inner wall of the cover body 13, and is used to clean the inner wall of the cooking body 12 and the inner wall of the cover body 13 under the driving of the driving apparatus.

It should be explained here: when the cooking device is a device for processing different ingredients, the understanding of the cooking body may be different. For example, when the cooking device is a stir-fry machine, the cooking body is the pot body for cooking, and the cover body is the pot cover; when the cooking device is a smart rice cooker, the cooking body is the pot for cooking, and the cover body is the rice cooker lid; when the cooking device is pulping machine (such as a wall breaking machine, etc.), the cooking body is the pulping body, and the cover body is the machine cover; etc.

The cleaning piece 2 has a cleaning execution part 20, which includes at least two execution parts. For example, at least two execution parts include at least: a first execution part 21 and a second execution part 22. The first execution part 21 abuts against the inner wall of the cover body 13 to clean the inner wall of the cover body 13; the second execution part 22 abuts against the inner wall of the cooking body 12 to clean inner wall of the cooking body 12. As shown in FIG. 18, a specific implementation structure of the cleaning piece, the first execution part 21 and the second execution part 22 may be an integral part, and the integral part may be called a cleaning execution part, and the cleaning execution part may be made of elastic materials, such as rubber, silicone, plastic, brush, loofah, etc. Because cooking device is food equipment and needs to meet food-grade requirements, food-grade silicone loofah, etc. may be used in the cleaning execution part. Of course, in other embodiments, the first execution part 21 and the second execution part 22 may also be two parts. These two parts are provided at different positions of the cleaning piece to act on different areas of the cooking cavity, covering most or all areas on the inner wall of the cooking body and cover body.

In an implementable solution, the driving apparatus may be provided on the cooking body. For example, the driving apparatus is provided at the bottom of the cooking body and outside the inner cavity of the cooking body. The cleaning piece is in connection with the driving apparatus at the bottom of the cooking body inner cavity. For example, the output end of the driving apparatus extends from the bottom of the cooking body inner cavity to the cooking body inner cavity, and the cleaning piece is in connection with the output end. For another example, the connecting component of the cleaning piece extends from the bottom of the cooking body inner cavity to the outside of the cooking body inner cavity to be connected to the output end of the driving apparatus. Referring to another feasible solution shown in FIG. 17, the driving apparatus is provided on the cover body 13; the cleaning part 2 is detachably connected to the driving apparatus; the cleaning part is provided with a docking structure 23. The docking structure 23 is docked with the output end 31 of the driving apparatus, and is in connection with the output end 31 by magnetic attraction. More specifically, as shown in FIG. 17, the docking structure 23 may be a hexagonal mounting hole provided on the cleaning piece; a magnetic component 4 is provided at the bottom of the hexagonal mounting hole, as shown in FIG. 19. The output end 31 of the driving apparatus is an output shaft with a hexagonal cross-section. The output shaft is inserted into the internal hexagonal mounting hole, and then connected to the cleaning piece 2 through magnetic attraction. During specific implementation, the magnetic attraction force of the magnetic component 4 may be determined based on the quality of the cleaning piece, the sealing requirements of the connection between the cleaning piece and the driving apparatus, etc. For example, in the embodiment shown in FIG. 19, the cleaning piece 2 is provided with an inner hexagonal mounting hole, the upper end of the inner hexagonal mounting hole is open, and a magnetic component 4 (such as a magnet) is provided at the bottom, and the magnetic component 4 is fixed on the supporting element 5 of the cleaning piece 2 by the bottom connection. The supporting element 5 may be connected to the cleaning part 2 using threads, snaps or other connection methods.

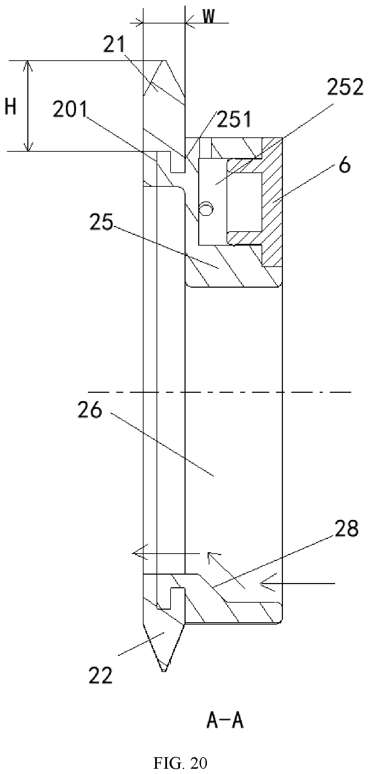

Continuing to refer to the embodiment shown in FIGs. 17 to 19, the cleaning piece 2 has an axis extending along the depth direction of the cooking cavity 11. The cleaning piece 2 includes an axially symmetrical frame 25 with the axis 24 as the axis of symmetry. A cleaning execution part 20 is provided around the periphery of the axially symmetrical frame 25 for abutting against the inner wall of the cooking cavity 11. Following the above content, the cleaning execution part 20 may include, but is not limited to, a first execution part 21 and a second execution part 22. Referring to the embodiment shown in FIGs. 20 and 21, the cleaning execution part 20 is a single piece, and the inner side of the single piece (that is, the inner contour that matches the periphery of the axisymmetric frame 25) has a first slot 201. Correspondingly, a protrusion may be provided on the outer periphery of the axially symmetrical frame 25. The protrusion may extend outward from the outer circumferential surface of the axisymmetric frame 25, or as shown in FIG. 20, may first extend from one end surface of the axisymmetric frame 25 and then extend outwardly along a direction paralleling to the end surface to form a "L"-shaped protrusion. Such as the protrusion shown in FIG. 20, essentially forms a second slot 251 with one end surface of the axisymmetric frame 25. The protrusion is inserted into the first slot 201 of the cleaning execution part 20 to complete the connection between the cleaning execution part and the axisymmetric frame 25. It should be added here is that the cleaning execution part 20 needs to exceed the axisymmetric frame 25 after the installation is completed, so that the cleaning execution part 20 may work normally.

For a structure where the driving apparatus outputs rotational power, the cleaning piece 2 has an axially symmetrical structure. The advantage of which avoiding lateral displacement during rotation caused by the installation gap between the cleaning piece 2 and the output end 31 of the driving apparatus, which makes some further reflection of a gap or insufficient friction between the edge and the wall of the cooking cavity 11 (such as the inner wall of the cover).

Further, in the embodiment shown in FIGs. 18 to 20, the axisymmetric frame 25 has a through hole 26. The through hole 26 is provided with a rectifying structure inside to rectify the flow direction of the cleaning liquid that is stirred and flows through the through hole 26 when the cleaning piece 2 moves in the cooking cavity 11. The rectifying structure includes at least one rectifying wall 27 extending along the axis 24 direction. The at least one rectifying wall 27 and the hole wall of the through hole 26 form at least one rectifying hole. Further, the axisymmetric frame 25 may also be provided with a flow guide structure. The flow guide structure includes a flow guide wall 28, and the flow guide wall 28 is provided on hole wall at the bottom of the cavity of the through hole 26, near the cooking cavity 11. Specifically, as shown in FIG. 20, the guide wall 28 is an inclined plane. When the cleaning liquid flows to the lower part of the guide wall 28 according to the arrow shown in FIG. 20, it flows under the guidance of the guide wall 28 to pass through the through hole 26 of the axisymmetric frame 25, that is, the rectifying hole mentioned above.

The cleaning part 2 is designed with a rectifying wall and a diversion wall, which may effectively rectify and guide the water flow when the cleaning part moves (such as high-speed rotation) and prevent the turbulence of the water flow from splashing around. Specifically, the rectifying wall may adopt a straight arm structure as shown in FIG. 18. The edges and corners of the rectifying wall 27 may adopt the design of arc transition, or the side surface of the rectifying wall facing the cleaning fluid may be a semi-circular arc cylinder. The guide wall 28 may adopt the slope design shown in FIG. 20, which may well prevent oil stains from remaining on the cleaning piece. Since the rectifying wall and the diversion wall are designed with arcs, slopes and other structural surfaces, and there are no slits that are difficult to clean, the cleaning piece structure provided in this embodiment also facilitates users to perform more precise cleaning and disinfection.

In summary, it may be seen that the solution provided by this embodiment has a simple overall structure, is easy to install and disassemble, and has strong reliability and practicality. The solution provided by this embodiment may quickly realize self-cleaning of the inner wall of the cover body and the inner wall of the pot body at the same time, replacing the user's frequent cleaning operations during cooking and improving the user's cooking experience. In addition, the structure of this embodiment is simple. There are few recesses, corners and other structures that are easy to trap dirt and are difficult to clean. Most of them are implemented with convex structures, which are not easy to trap dirt and reduce secondary pollution caused by bacterial growth.

In addition, it is also important to note that the solution provided by this embodiment may achieve a rapid self-cleaning effect, that is, after the cooking device has finished cooking a dish, the cleaning piece may quickly clean the cooking body and the cover body at the same time, so that the cooking device may quickly cook the next dish.

Using the solution provided by the embodiment of the present disclosure, on the premise of ensuring the cleaning effect of the cooking device, the cleaning time of the cooking device may be controlled to be very short, such as between 1 and 40 seconds, or even shorter, such as between 12 and 33 seconds.

Specifically, the cleaning execution part 20 described in this embodiment may be an elastic scraper, a cleaning brush, a cleaning sponge or a cleaning cloth. The cleaning execution part 20 includes but is not limited to the first execution part 21 and the second execution part 22 mentioned above, that is, the first execution part 21 and the second execution part 22 may be an integral structure. The elastic scraper strip may be a food-grade silicone scraper strip, and the silicone scraper strip is integrally formed with the axisymmetric frame 25 of the cleaning part 2 using a coating process. In specific implementation, the cleaning piece 2 is installed in the cooking cavity 11 in an interference installation manner. Specifically, the interference amount between the cleaning execution part 20 of the cleaning piece 2 and the inner wall may be controlled between 0.1 mm and 3 mm, including 0.1 mm and 3 mm. Further, the interference amount between the cleaning execution part 20 and the inner wall may be controlled between [0.2 mm and 2.5 mm], including 0.2 mm and 2.5 mm. As shown in the structure of the cleaning execution part 20 in FIG. 20, the dimension of H of the cleaning execution part 20 may be any size from 1 mm to 30 mm, and further, H may be any size from 3 mm to 25 mm. The dimension of W (that is, the thickness) of the cleaning execution part 20 may be any size from 2 mm to 10 mm, and further, the dimension of W may be any size from 3 mm to 8 mm. The outer edge of the cleaning execution part, that is, the execution head, as shown in FIG. 20, may be in the shape of an isosceles triangle, the vertex angle may be controlled at [10°, 60°], and the height may be controlled at [2mm, 15mm].

Using the cooking device provided in this embodiment, the user may manually inject cleaning liquid into the cooking cavity before initiating self-cleaning. The cleaning part 2 does not have a water channel or a spray structure. In this way, the cleaning part has a simple structure and no small structures such as a spray port, making it difficult for bacteria to breed. Or, referring to the schematic structural diagram of the cleaning piece 2 shown in FIGs. 18 to 24, the cleaning piece 2 has a built-in water channel 252 and at least one water inlet 253 and at least one water outlet 254. The at least one water inlet 253 interconnects the at least one water outlet 254 through the built-in water channel 252; the cleaning liquid entering the built-in water channel 252 through the at least one water inlet 253 is discharged through the at least one water outlet 254 to inject cleaning liquid into the cooking cavity 11.

During specific implementation, in order to ensure that the liquid discharged from the water outlet 254 has a certain water pressure and achieve the effect of flushing the inner wall of the cooking cavity 11, in this embodiment: the liquid flow total area of the at least one water inlet 253 is larger than the liquid flow area of the built-in water channel 252; the liquid flow area of the built-in water channel 252 is larger than the liquid flow total area of the at least one water outlet 254. To be more intuitive, the liquid flow total area of at least one water inlet 253 is set to S 1, the liquid flow area of the built-in water channel 252 is S2, and the liquid flow total area of at least one water outlet 254 is set to S3. The relationship between them is: S3≤S2≤S1.

The water outlet cross section of the water outlet 254 may be circular, elliptical, equilateral or unequal polygonal, or any cross-sectional shape that facilitates flow. The equivalent circular radius range of the water outlet cross section of the water outlet 254 may be [1 mm, 5 mm], which ensures water inlet flux and facilitates cleaning.

As mentioned above, the cooking device 1 includes a cover body 13 and a cooking body 12. The at least one water outlet 254 includes a water outlet facing the cover body 13 and/or a water outlet facing the side wall of the cooking body 12. More specifically, there is a water outlet at the inner wall position corresponding to the upper part of the cooking body 12 (that is, the part near the cover body 13). Setting the water outlet 254 toward the cover body 13 (that is, setting it upward) and/or setting it toward the side wall of the cooking body 12 (that is, setting it sideways) may reduce the probability being clogged by the washed out substances (such as oil spots, small residues, etc.) or entering into the outlet.

If the built-in waterway 252 is a sealed structure and cannot be disassembled, then the inside of the built-in waterway 252 is also a place where bacteria may breed. In order to facilitate disassembly and cleaning, in this embodiment, a sealing cover 6 is provided on the cleaning piece 2. When the sealing cover 6 is in an open state, the built-in water channel 252 is exposed to the outside. As shown in a specific embodiment shown in FIGs. 18 to 24, the frame of the cleaning piece 2 is an axially symmetrical structure (i.e., an axially symmetrical frame). At the top of the left and right sides of the symmetry axis (i.e., the axis 24 shown in FIG. 18) is designed a built-in waterway 252 and multiple water outlets 254 being evenly arranged. As shown in the embodiment shown in FIG. 17, the cover body 13 is provided with a water source interface 7. The driving apparatus is provided on the cover body 13. The cleaning piece 2 is provided with a docking structure 23. The docking structure 23 is docked with the output end 31 of the driving apparatus, and is magnetically attracted to the output end 31 of the driving apparatus. Referring to FIGs. 18 and 21, a docking wall 29 surrounding the docking structure 23 is provided on the periphery of the docking structure 23. The end part of the docking wall 29 is in sealing contact with the cover body 13. A water inlet channel 255 is formed between the docking wall 29 and the docking structure 23, and the water inlet channel 255 interconnects the built-in water channel 252. The at least one water inlet 253 is located at the opening of the water inlet channel 255. The sealing contact is achieved between the end part of the docking wall 29 and the cover body 13 through a sealing member (such as a sealing ring). As shown in FIG. 17, the docking wall 29 is an annular wall, and end part of which is an annular end face. An annular U-shaped groove is provided at a corresponding position of the cover body 13 matching the annular wall. The sealing ring may be provided in the annular U-shaped groove, and the annular wall of the docking wall 29 is inserted into the annular U-shaped groove and comes into contact with the sealing ring to achieve a sealed connection. The sealing pressure between the docking wall 29 and the cover is determined by the magnetic attraction force of the magnetic component 4. For example, for a cooking machine for household use, the magnetic attraction force generated by the magnetic component 4 may be controlled at [20N, 80N], and further, it may be controlled at [30N, 65N], which may maintain reliable sealing and rotation, may also keep the cleaning piece and the driving apparatus from being disconnected.

The left and right built-in waterways are sealed with left and right sealing covers that are easy to achieve. The sealing cover is covered with a food-grade silicone sealing ring, which enables easy disassembly and cleaning of the built-in waterway of the cleaning piece, eliminating sanitary dead corners and avoiding secondary contamination caused by oil residue, mold, and bacteria.

Here, the built-in water channel in the cleaning piece is designed to be open, and all water channels are sealed by sealing rings distributed on the sealing covers (left sealing cover, right sealing cover), making it easy to disassemble and clean. The built-in water channel not only ensures reliable water filling, but also cools the cleaning piece well, making it easy for users to disassemble at the end of cleaning without burning their hands.

The cleaning execution part described in this embodiment may be provided not only with one, but also with two or more. That is, at least two cleaning execution parts may be provided on the shaft pair frame 25. These cleaning execution parts may be made of the same material or different materials. For example, the multiple cleaning execution parts provided on the axially symmetrical frame 25 include food-grade silicone scrapers, cleaning sponges, cleaning brushes, etc. At least two of the cleaning execution parts are provided in a direction perpendicular to the plane of the axisymmetric frame. The direction perpendicular to the plane of the axisymmetric frame is the extension direction of the dotted line 256 shown in FIG. 23.

FIGs. 22, 23 and 24 show the structure of a cleaning piece having two cleaning execution parts 20. The embodiment of the cleaning piece shown in FIGs. 22 to 24 is based on the structure shown in FIGs. 18 to 24, and adds a cleaning execution part 20. The two cleaning execution parts 20 are provided along the direction in which the dotted line 256 in FIG. 23 extends. At least one water outlet 254 on the cleaning piece may be located between the two cleaning execution parts 20. The two cleaning execution parts 20 are detachably connected to the frame body of the cleaning piece (i.e., the axially symmetrical frame). During specific implementation, the detachable connection method may be designed according to the material of the cleaning execution parts. For example, when the cleaning execution part 20 on the right side in FIG. 23 is an elastic scraper (such as a food-grade silicone scraper), the elastic scraper may adopt a slot-protrusion connection way mentioned above to achieve the connection with the frame. When the cleaning execution part 20 on the left side in FIG. 23 is a cleaning cloth or a cleaning sponge, a connecting piece 8 may be provided on the outer edge of the frame body of the cleaning piece (i.e., the axially symmetrical frame 25), and the connecting piece 8 may be a Velcro, etc., the cleaning cloth or cleaning sponge may be connected to the frame body through Velcro. When disassembling, just peel off the cleaning cloth or sponge from the Velcro.

Compared with a structure where one cleaning execution part is provided, the same cleaning part rotates once, and two or more cleaning execution parts are provided to double the number of actions on the cooking cavity wall, improving cleaning efficiency. In addition, if two or more cleaning execution components are made of different materials, the cleaning characteristics of each material may be combined, and the cleaning effect may be significantly improved.

Further, the cooking device provided in this embodiment also includes a heating apparatus (not shown in the drawings) and a control apparatus (not shown in the drawings). The heating apparatus may be provided below the outside of the cooking cavity of the cooking body 12, or may be provided around the cooking cavity, etc. This embodiment is not specifically limited in this regard. The control apparatus may be provided outside the cooking cavity, away from the heating apparatus, such as outside the cover body of the cooking device 1, etc., which is not specifically limited here.

The control apparatus is electrically connected to the driving apparatus and the heating apparatus, and is used to control the operation of the heating apparatus to heat the cleaning liquid in the cooking cavity to generate steam. The steam condensate is formed at the cavity wall area of the cooking cavity 11 that is exposed to the steam, and also used to control the operation of the driving apparatus to drive the cleaning piece. At least part of the cavity wall area of the cooking cavity 11 is cleaned under the combined action of the counteracting force of the cleaning piece 2, steam and steam condensate. Normally, the area of the cavity wall that may be exposed to steam is the area above the cleaning liquid level of the cooking cavity, which may include the upper part of the inner wall of the cooking body and the inner wall of the cover body.

In this embodiment, the process of injecting the cleaning liquid into the cooking cavity 11 may also be implemented automatically, without the user having to manually inject the cleaning liquid into the cooking cavity 11. Specifically, the cooking device provided in this embodiment further includes a water control valve (not shown in the drawings). The control apparatus is electrically connected to the water control valve and used to control the opening or closing of the water control valve. After starting the self-cleaning program, the control apparatus controls the water valve to open to inject cleaning liquid into the cooking cavity, controls the heating apparatus to heat the cleaning liquid in the cooking cavity, waits for a first preset time period, and finally, controls the driving apparatus to drive the cleaning piece to move.

What needs to be added here is that the control logic of the control apparatus will be introduced in detail in the method embodiments below.

Another embodiment of the present disclosure provides a self-cleaning method for cooking device. The execution subject of the method described in this embodiment may be the control apparatus in the above-mentioned cooking device embodiment, which is implemented based on the structure of the above-mentioned cooking device embodiment. The method may include the following steps:
101. the heating apparatus is started to heat the cleaning liquid in the cooking cavity to generate steam.
102. the driving apparatus is started to drive the cleaning piece to move in the cooking cavity.

The steam condensate is formed at a position of the cavity wall area of the cooking cavity that is in contact with steam. At least part of the cavity wall area of the cooking cavity get cleaned under the combined action of the counteracting force of the cleaning piece, steam and steam condensate.

Before starting the heating apparatus in step 101 or while starting the heating apparatus, this embodiment provides that the method may also include the following steps:
103. the water control valve is controlled to open to inject cleaning liquid into the cooking cavity.

Because it takes a certain amount of time for the cleaning liquid to be heated to generate steam, and it also takes a process for the substances attached to the cooking cavity to soften under the action of steam and steam condensation water, so the driving apparatus may be started after the heating apparatus has been heated for a certain period of time. That is, the above-mentioned step 102 starts the driving apparatus to drive the cleaning piece to move in the cooking cavity, which may be specifically:
After the heating apparatus heats for a first preset time period, the driving apparatus is started to drive the cleaning piece to move in the cooking cavity.

In order to improve the cleaning effect, the above-mentioned step 102 starts the driving apparatus to drive the cleaning piece to move in the cooking cavity, which may be specifically as follows:
The driving apparatus is controlled to output periodically changing power, so that the action speed of the cleaning piece changes periodically.

More specifically, "controlling the driving apparatus to output power that changes periodically" may mean: controlling the driving apparatus to output power that alternates between acceleration and deceleration cycles.

Further, in addition to controlling the driving apparatus to output periodically changing power, the driving apparatus may also be controlled to output power in different directions. For example, if the driving apparatus outputs rotational power, the driving apparatus may be controlled to output alternating power of clockwise rotation and counterclockwise rotation. That is, step 102 in this embodiment may be specifically: The driving apparatus is controlled to output alternating power of clockwise rotation and counterclockwise rotation.

The above method embodiments will be further described below with reference to specific application examples.

Step 1. Control the opening of the water control valve and start the heating apparatus at the same time. This not only saves cleaning time, but also quickly heats the water to generate hot steam.

The entire cleaning time t0 is controlled between 1s and 40s, preferably between 12s and 33s.

Assume that the entire self-cleaning time is t0; for example, t0 is controlled between 1s and 40s, and more specifically, t0 is controlled between 12s and 33s. Then the duration of water injection t1 should always be less than t0; that is, t0-t1 is between 1s and 38s, and more specifically, t0-t1 is between 2s and 30s. At the same time, the water injection volume is related to the overall flux of the water outlet. Assume that the water injection volume is V1, V1 is [0.1L, 5L], and more specifically, V1 is [0.2L, 2.5L]. Then, the water injection time may be determined based on the overall flux and water injection volume of the water outlet.

Step 2. Enter the waiting state for the waiting time t2.

T2 may be controlled at [-10s, 10s], more specifically, t2 may be controlled at [-5s, 5s]. The heating apparatus may work in the maximum power mode. For example, the maximum power of the heating apparatus may be between 1Kw and 5Kw, more specifically, it may be between 1.1Kw and 4.5Kw.

Step 3. When the time t2 reaches, start the driving apparatus to drive the cleaning part. For example, the driving apparatus is a motor that outputs rotational power. The cleaning piece rotates in the cooking cavity driven by the motor. The rotation speed of the cleaning piece may be controlled at [10rpm, 1000rpm], further, it may be controlled at [30rpm, 900rpm].

More specifically, there is an alternating process of acceleration and then deceleration in the rotation speed. Pulse scraping is more conducive to quickly removing oil residue in the inner cavity. The acceleration process is controlled at [0.5s, 5s], and the acceleration is controlled at [2r/s2, 2000r/ s2]; the deceleration process is controlled at [0.5s, 1s], the deceleration is controlled at [10r/s2, 2000r/s2]; a pulse period is controlled at [1s, 6s], and the entire cleaning cycle includes one or more pulse periods, for example, the number of cycles is controlled at [1, 5]. Alternatively, there is an alternating process of clockwise and then counterclockwise rotation in the direction of rotation, and scraping that continuously changes the direction is more conducive to quickly removing attachments in the cooking cavity. For example, if the attachment is large, scraping the attachment from one direction and then scraping the attachment from the opposite direction may speed up the removal of the attachment.

Step 4. After the cleaning is completed (that is, the number of cleaning cycles is full or the cleaning time t0 is reached), shut down the driving apparatus and the heating apparatus.

The control valve is closed after the water injection time t1 is reached.

The cooking device provided by the embodiments of the present disclosure may include: soy milk machine, rice cooker, smart pressure cooker, cooking machine, food processor, etc. In addition to being applicable to cooking device, the technical solutions provided by the embodiments of the present disclosure may also be extended to device in more fields. Such device has an accommodation cavity for preparing corresponding substances. After the preparation is completed, the accommodation cavity needs to be cleaned. That is, another embodiment of the present disclosure provides a device with a self-cleaning function, which includes: a device body, a cleaning piece, a driving apparatus, a heating apparatus and a control apparatus. The device body has an accommodation cavity. The cleaning piece is located in the accommodation cavity and abuts against the inner wall of the accommodation cavity. The driving apparatus is provided on the device body and in connection with the cleaning piece. The control apparatus is electrically connected to the driving apparatus and the heating apparatus, and is used to control the operation of the heating apparatus to heat the cleaning liquid in the accommodation cavity to generate steam. The cavity wall area of the accommodation cavity being in contact with the steam is heated by the steam and the steam condensate is. The oily residue remaining on the inner wall of the cooking cavity is heated and softened. The control apparatus is also used to control the operation of the driving apparatus to drive the cleaning piece to move. At least part of the cavity wall area of the accommodation cavity is cleaned under the combined action of the counteracting force of the cleaning piece, steam softening and steam condensate.

Because the external structure and internal structure of device in different fields will be different, this embodiment does not limit the external structure and internal structure of the device body.

The cleaning piece of the cooking device provided in this article is available as a separate accessory for the user to choose from. For example, when the user chooses the cleaning piece, the cooking device does not have a self-cleaning function. After the user selects the cleaning piece, the user may download the self-cleaning program through the Internet or a smart terminal and load the self-cleaning program on the cooking device. In this way, the cooking device has a self-cleaning function. When the self-cleaning function needs to be activated, the user may remove the stirring paddle from the cooking device and replace it with a cleaning piece, and then select the self-cleaning function through the control on the cooking device.

Therefore, another embodiment of the present disclosure provides a self-cleaning accessory. The self-cleaning accessory includes: a frame and a cleaning execution part. The frame has a connecting end for connecting with an external driving apparatus. The cleaning execution part is provided on the outer periphery of the frame and is used to abut against the cavity wall of an external to-be-cleaned inner cavity. The cleaning execution part may work in an environment with steam, and is driven by the driving apparatus to move in the to-be-cleaned inner cavity, and exert force on the cavity wall, so that the substance on the cavity wall being softened by the steam and steam condensate may be taken way.

Specifically, the structure of the frame may be an axially symmetrical frame. The structure described in the above embodiments of the cooking device and the structure shown in FIGs. 18 to 24 will not be described again here. The structure of the cleaning execution part may also be referred to the corresponding description above and the structure shown in FIGs. 17 to 24, which will not be described again here.

In summary, the technical solutions provided by various embodiments of the present disclosure creatively realize the simultaneous and rapid self-cleaning of the pot cover and the inner wall of the pot. On the premise of ensuring the cleaning effect, the cleaning time may be shortened as much as possible and the user's cooking efficiency may be improved.

One of the innovations of the technical solution provided by each embodiment of the present disclosure is that: combined with the self-deformation characteristics of silica gel, the cleaning brush is installed in an interference manner with the inner wall to be cleaned, and the cleaning brush rotates at high speed under the action of the rotating motor, and at the same time drives the hot water in the pot to flow rapidly in a circular motion, to realize the flushing of the inner wall of the pot, the high-temperature steam generated by heating the water condenses in contact with the pot cover, heating and softening the oil stains on the inner wall of the pot cover. The oil stains on the inner wall of the pot cover quickly detach from the inner wall under the action of the scraping force of the cleaning brush, the heating and softening of high-temperature steam and condensed water, and the action of water flow to achieve self-cleaning. The entire cleaning action is simple and efficient.

The second innovation of the technical solution provided by each embodiment of the present disclosure is that: in terms of implementation form, special structures and parts such as nozzles, slits, and springs are avoided, and the sanitary dead angles that develops secondary pollution of the cleaning brush itself are avoided to the greatest extent, while also improving the reliability and practicality of the overall solution. The third innovation of the technical solution provided by each embodiment of the present disclosure is that: the structure is easy to disassemble, specifically, the cleaning brush and built-in waterway are all easy for the user to disassemble, so that more detailed cleaning may be performed after meals, which is not only convenient and easy to use, but also maximizes convenience for the user to clean, disinfect and store, the method and device are simple, reliable and highly practical.

The technical solutions provided by each embodiment of the present disclosure are described below in conjunction with specific application scenarios:

### Application scenario one

A user uses a cooking device, such as woks, to cook. After frying one dish, the cooking cavity of the cooking machine may need to be cleaned before frying the next dish to avoid odor transfer and over cooking. After the cooking machine finishes cooking one dish, the cover body opens and the user may put the cooked dishes in the cooking machine onto a plate. After the dishes being put the plate, the user may easily close the cover body on the cooking body. At this time, the cooking machine detects that the self-cleaning conditions are currently met, and automatically starts the self-cleaning program. The control apparatus of the cooking machine controls the opening of the water control valve to inject cleaning liquid (such as water, or an aqueous solution containing detergent, etc.) into the cooking body, and at the same time starts the heating apparatus to heat the cleaning liquid in the cooking body. The control apparatus controls the driving apparatus (such as a rotating motor) to drive the cleaning piece to rotate at high speed. The silicone scraper on the cleaning piece is installed in an interference fit with the cover body and cooking body. The high-temperature steam cleaning liquid softens the oil stains on the wall of the pot cover and the cooking body. Under the action of the friction between the high-speed rotating silicone scraper and the pot cover and the cooking body and the impact of the hot water flow, the cover body and the cooking body are cleaned together. The entire cleaning time lasts 15 seconds, which is when the user carries the fried and plated dishes from the kitchen to the dining table in the living room, and then from the dining table in the living room back to the kitchen. The user does not need to wait for a long time for the cooking machine to complete the self-cleaning, then the user may quickly start frying the next dish, and the efficiency is very high.

### Application scenario two

The user uses a cooking device, such as a food processor, to make rice cereal. For a cooking machine, the cover body in the cooking device is the cover of the cooking machine, and the cooking body in the cooking device is the pulping body of the cooking machine. A user puts multiple varieties of ingredients into the food processor, such as walnuts, purple rice, white rice, millet, peanuts, etc. After the cooking machine finishes working, because the rice paste is relatively viscous, the inner wall of the pulping body of the food processor is covered with rice paste that may not be poured out. At this time, the user may start the self-cleaning program of the cooking device, and the cleaning execution part on the cleaning part of the cooking device is in interference fit with the inner wall of the pulp making machine. Driven by the rotating motor, the cleaning piece rotates at high speed to stir up the high-speed flow of cleaning liquid in the machine body. Under the scouring of the liquid and the scraping of the cleaning piece, the machine wall of the cooking machine is clean. However, liquid mixed with rice paste is also splashed on the cover of the food processor. Because the existing cleaning piece may not work with regard to the cover, the high-speed flowing cleaning liquid in the machine cannot be splashed on the cover, so the user has to take the cover to the sink to the clean.

Replacing the above-mentioned cleaning piece with the cleaning piece mentioned in the embodiments of the present disclosure, that is, in addition to the second execution part in interference fit with the inner wall of the pulp making machine, the cleaning execution part of the cleaning part also has a first execution part in interference fit with the machine cover. In this way, when the cleaning part rotates at high speed, the first execution part scrapes the attachments or liquid on the machine cover, and the second execution part scrapes the inner wall of the pulping body. The cover and pulping may be completed at the same time in one self-cleaning procedure. The user no longer needs to clean the machine cover separately.

In the existing technology, some cooking devices use scrapers and water flow to clean the inner cavity, and at the same time use air flow and heat to dry the inner cavity; some cooking devices use external water sources and built-in nozzles to utilize the impact and flow of water to achieve self-cleaning of the pot cavity. Generally speaking, the existing technology mainly uses scraping and water jet impact to achieve cleaning of the inner wall of the pot.

However, these existing technical solutions also have many problems, such as:
first, it is impossible to clean the inner wall and the pot cover at the same time, only the inner wall of the pot may be cleaned;
second, in solutions that rely on water jets or fluid pressure, the designed nozzle pores and flow channels are at risk of being blocked by food and condiment residues, and the narrow flow channels are more difficult to clean after being contaminated. Over time, bacteria and mold will breed, easily causing secondary pollution; similarly, if the mixing paddle is telescopic, the telescopic part is difficult to clean, which may contain dirt; and
third, by the design of multiple flow channel increases the sealing requirements of the product, and the design of elastic body also has the disadvantage of low reliability in real user usage scenarios.

In order to enable those in the technical field to better understand the solution of the present disclosure, the technical solutions in the embodiments of the present disclosure will be clearly and completely described below in conjunction with the drawings in the embodiment of the present disclosure.

Some of the processes described in the specification, claims, and above-mentioned drawings of the present disclosure include multiple operations that appear in a specific order. These operations may not be performed in the order in which they appear in this document or may be performed in parallel. The sequence numbers of operations, such as 101, 102, etc., are only used to distinguish different operations. The sequence numbers themselves do not represent any execution order. Additionally, these processes may include more or fewer operations, and the operations may be performed sequentially or in parallel. It should be noted that the descriptions such as "first" and "second" in this article are used to distinguish different messages, devices, modules, etc., and do not represent the order, nor do they limit "first" and "second" are different types.

The technical solutions in the embodiments of the present disclosure will be clearly and completely described below with reference to the accompanying drawings in the embodiments of the present disclosure. Obviously, the described embodiments are only some of the embodiments of the present disclosure, but not all of the embodiments. Based on the embodiments in the present disclosure, all other embodiments obtained by those skilled in the art without creative efforts shall fall within the scope of protection of the present disclosure.

FIG. 25 is a schematic structural diagram of a cooking device provided by an embodiment of the present disclosure; and FIG. 26 is a partial cross-sectional view of the cleaning piece in the cooking device provided by an embodiment of the present disclosure when it is in the cooking mode. Refer to FIGs. 25 and 26, the embodiment of the present disclosure provides a cooking device, including: a device main body 1, a cleaning piece 3, a driving apparatus 4 and a control apparatus (not shown in the drawings). The device main body 1 includes a cooking body 101 and a cover body 7, and the cooking body 101 and the cover body 7 cooperate to form a cooking cavity 2.

The cleaning piece 3 is located in the cooking cavity 2, which may move in the cavity, and has at least two working modes. For example, FIG. 26 and FIG. 27 respectively show embodiments in which the cleaning piece 3 is in different working modes. In FIG. 27, when the cleaning piece 3 is in the cleaning working mode, the cleaning piece 3 is in contact with the cover body 7 to clean the cover body 7, or, in the cleaning working mode, the cleaning piece 3 is in contact with (or abut against) the inner wall of the cooking cavity 2 above (such as the inner wall of the cover body 7), and the cleaning piece 3 also is in contact with (or contact and abut against) the side wall of the cooking cavity 2 (such as the inner wall of the cooking body 101 or the inner wall of the pot). In FIG. 26, when the cleaning piece 3 is in the cooking working mode, the cleaning piece 3 moves in the cooking cavity 2 to present a gap with the cover body 7 or, in the cooking working mode, the cleaning piece 3, there is a gap between the cleaning piece 3 and the inner wall of the cooking cavity 2 (such as the inner wall of the cover body 7), and the lateral edge of the cleaning piece 3 is in connection with (or contact and abut against) the side wall of the cooking cavity 2 (such as the inner wall of the cooking body 101 or the inner wall of the pot body). What is different from the cleaning piece 3 in the cleaning mode is that when the cleaning piece 3 is in the cooking mode, the side wall area of the cooking cavity 2 in contact with the lateral edge of the cleaning piece 3 moves downward compared to the cleaning mode. The driving apparatus 4 is provided on the device body 1 and is in connection with the cleaning piece 3 for outputting driving power to drive the cleaning piece 3 to move. The control apparatus is electrically connected to the driving apparatus 4, and is used to control the operation of the driving apparatus 4 to drive the cleaning piece 3 to move. When the cleaning piece 3 is in different postures, it contacts the inner wall of the cooking cavity 2 in different areas of the cooking cavity 2.

What needs to be added here is that the postures of the cleaning piece 3 in this embodiment are not limited to the two postures shown in FIG. 26 and FIG. 27, and may also have a third posture, a fourth posture, etc. during specific implementation. For example, based on the cooking working mode, the cleaning piece 3 may continue to swing down to the third posture, and based on the third posture, the cleaning piece 3 may continue to swing down until it contacts the bottom of the cooking cavity 2.

In addition, the above "contact and abut against" means that the cleaning piece 3 is in contact with the inner wall, and the cleaning piece 3 has a certain force on the inner wall of the cooking cavity 2. The existence of this force may, on the one hand, eliminate the gap caused by the cleaning piece 3 not being able to fully fit due to the manufacturing error of the cleaning piece 3 and the inner wall of the cooking cavity 2, and on the other hand, it may improve the scratching effect of the cleaning piece 3 on the inner wall of the cooking cavity 2, to help clean and aid cooking.

Specifically, in the embodiment shown in FIGs. 25, 2 and 3, the device main body 1 includes a cooking body 101 and a cover body 7. The cover body 7 covers the opening of the cooking body 101 to form a closed cooking cavity 2. That is, the inner wall of the cooking cavity 2 includes the inner wall of the cooking body 101 and the inner wall of the cover body 7. The cleaning piece 3 is able to clean the first area of the inner wall of the cooking cavity 2 in the cleaning working mode. When the cleaning piece 3 changes to the cooking working mode, the second area of the inner wall of the cooking cavity 2 may be cleaned. For example, as shown in FIG. 27, when the cleaning piece 3 is in the cleaning working mode, the cleaning piece 3 is driven by the driving apparatus 4 to clean the first area of the inner wall of the cooking body 101 and the inner wall of the cover body 7. When the cleaning piece 3 changes into the cooking working mode, as shown in FIG. 26, the cleaning piece 3 is driven by the driving apparatus 4 to clean the second area of the inner wall of the cooking body 101. In addition to the cleaning function, the cleaning piece 3 may also assist in cooking to scrape off attachments attached to the inner wall of the cooking body 101, such as ingredients, sauces, condiments, etc., thereby eliminating the need to disassemble and assemble the cleaning piece 3, which brings a good user experience to the user.

It should be explained here: when the cooking device is a device for processing different ingredients, the understanding of the cooking cavity 2 may be different. For example, when the cooking device is a stir-fry machine, the cooking body 101 is the pot body for cooking, and the cover body 7 is the pot cover; when the cooking device is a smart rice cooker, the cooking body 101 is the pot for cooking, and the cover body 7 is the rice cooker lid; when the cooking device is pulping machine (such as a wall breaking machine, etc.), the cooking body 101 is the pulping body, and the cover body 7 is the machine cover; etc.

The technical solutions provided by the embodiments of the present disclosure will be introduced in further detail below.

In the cooking device provided by the embodiment of the present disclosure, there are at least two ways for the cleaning piece 3 to contact or disengage from the cover body 7. One of the ways is shown in FIG. 35. The cleaning piece 3 conducts linear motion along the depth direction of the cooking cavity 2. When the device is in the cooking mode, the cleaning piece 3 moves downward along the depth direction of the cooking cavity 2. At this time, the cleaning piece 3 is out of contact with the cover body 7. When the device is in the cleaning mode, the cleaning piece 3 moves up along the depth direction of the cooking cavity 2. At this time, the cleaning piece 3 is in contact with the cover body 7. Referring to another way shown by FIGs. 26 and 3, the cleaning piece 3 rotates in the cooking cavity 2. FIG. 26 shows the cleaning piece 3 in the cooking mode, and the cleaning piece 3 separates from the cover body 7. FIG. 27 shows the cleaning piece 3 in the cleaning working mode, and the cleaning piece 3 is in contact with the cover body 7. The cooking device changes the working mode so that the cleaning piece 3 selectively contacts or does not contact the cover body 7, thereby improving the working efficiency of the cleaning piece 3 and further reducing the energy consumption of the equipment.

An embodiment of the present disclosure provides a cooking device. Referring to FIG. 26, when the cooking device is in the cooking mode, the cleaning piece 3 exerts force on the inner wall of the cooking cavity 2 that is in contact, so that the cooking materials attached to the inner wall are detached. Referring to FIG. 27, when the cooking device is in the cleaning mode, the cleaning piece 3 is in different postures and contacts the inner wall of different areas of the cooking cavity 2 to clean the inner wall. In different postures, the cleaning piece 3 and the inner wall of the cooking cavity 2 are in interference contact, which is the same as the contact and abut against mentioned above. The interference amount may be [0.1mm, 2mm]. Specifically, the interference amount may be any value in [0.2mm, 1.5mm]. The cleaning piece 3 has a certain force on the contact area of the inner wall of the cooking cavity 2. When the driving apparatus drives the cleaning piece 3 to move, the cleaning piece 3 may complete the cleaning work or assist in cooking, ensuring the strength of the cleaning and improving the cleaning efficiency of cleaning piece 3 at the same time.

Further, when the cleaning piece 3 is in one of at least two postures, the contact force between a part of the edge of the cleaning piece 3 and the inner wall of the corresponding area is smaller than the contact force between the other edge of the cleaning piece 3 and the inner wall of the corresponding area. For example, the contact force between the upper edge of the cleaning piece 3 and the inner wall of the cover body 7 is smaller than the contact force between the lateral edges of the cleaning piece 3 and the inner wall of the cooking body 101. For convenience of description, the above-mentioned posture of the cleaning piece 3 is referred to as the fifth posture below. Alternatively, a part of the edge of the cleaning piece 3 is in contact with the inner wall of the corresponding area, and there is a gap between the other part of the edge of the cleaning piece 3 and the inner wall of the corresponding area. Referring to FIG. 26, the cleaning piece 3 is in the cooking mode. The lateral edge of the cleaning piece 3 is in contact with the inner wall of the cooking body 101, and there is a gap between the upper edge of the cleaning piece 3 and the inner wall of the cover body 7.

When the cooking device is cooking, there is a high probability that the food will adhere to the inner wall of the cooking body 101, such as the upper area close to the cover body 7. If the attached ingredients are not scraped or shoveled off, the quality of the final dish will be affected. The probability of ingredients being attached to the cover body 7 is small, and most of them will have soups, seasonings, etc. attached, which will have little impact on the quality of the finished dishes. If the cleaning piece 3 remains in the cleaning mode (i.e., the posture shown in FIG. 27) when the cooking device is in the cooking mode, the cover body 7 will generate greater resistance, which will inevitably increase the load on the driving apparatus. During the cooking working mode, the cleaning piece 3 is in the fifth posture or the cooking working mode mentioned above, in the case of no impact on the quality of dishes or little impact, the resistance caused by interference contact with the lid body 7 may be reduced, and the load of the driving device may be reduced.

Referring to FIGs. 25 and 28a, a cooking device provided by an embodiment of the present disclosure further includes a connecting component 5. The connecting component 5 is in connection with the power output end 41 of the driving apparatus 4. The cleaning piece 3 is in connection with the connecting component 5 through the variable position structure 6, and may move relative to the connecting component 5 to have at least two postures. In one solution of the embodiment of the present disclosure, the connecting component 5 is provided with a power end connection hole 11, and the power end connection hole 11 is cooperatively connected with the power output end 41 of the driving apparatus 4. For example, the power output end 41 is a hexagonal prism power shaft, and the corresponding power end connection hole 11 is an inner hexagonal mounting hole adapted to the hexagonal prism power shaft.

Further, referring to FIG. 28b, a magnetic body 15 (such as a magnet) and an end cover 16 are provided at the bottom of the connection hole in the embodiment of the present disclosure. Correspondingly, the power output end 41 is a material that may be magnetized by a magnet. When the power output end 41 is provided in the power end connection hole 11, the magnetic body 15 may produce a magnetic attraction effect on the power output end 41, thereby making the two or the connection is stable. The end cover 16 seals the magnetic body 15 in the power end connection hole 11. During specific implementation, a sealing member (such as a sealing ring, etc.) may be provided between the end cover 16 and the power end connection hole 11 of the connecting component 5 to play a sealing role, so that cooking materials are not easy to enter the narrow gap and ensure the clean and hygienic of the device.

Referring to a specific embodiment shown in FIG. 28a, the connecting component 5 is provided with a first extending arm 12 and a second extending arm 13; there is a gap between the first extending arm 12 and the second extending arm 13. The end of the cleaning piece 3 is located in the gap between the first extending arm 12 and the second extending arm 13. The first extending arm 12, the second extending arm 13 and the cleaning piece 3 are all provided with a through hole 19, and the through holes of the three are interconnected. Referring to FIG. 29, the cleaning piece 3 is rotatably connected to the first extending arm 12 and the second extending arm 13 through the part 14 passing through the three through holes 19. For example, the part 14 may include, but are not limited to, a pin 17 and a locking screw 18. During installation, the pin 17 may be inserted into the three interconnected through holes from one side, and then the locking screw 18 may be screwed into the threaded hole of the pin 17 from the other side. Since the connection of the cleaning piece 3 is a rotatable connection, a certain gap is provided between the pin 17 and the through hole 19, in which the radial gap between the two is maintained at [0.02mm, 0.1mm], and the end face gap may be maintained at [0.02 mm, 0.5mm].

In another solution of the embodiment of the present disclosure, the first extending arm 12 and the second extending arm 13 may be provided on the cleaning piece 3, and the connecting component 5 is provided with an insertion end, and the insertion end may be inserted into a space between the first extending arm 12 and the second extending arm 13. Similarly, the insertion end, the first extending arm 12 and the second extending arm 13 may also be connected through the above-mentioned pin and locking screw. In the embodiment of the present disclosure, the posture change of the cleaning piece 3 is realized through the variable position structure 6. That is, a variable position structure 6 is also provided at the connection position between the cleaning piece 3 and the connecting component 5. The pin 17 and the locking screw 18 may realize the displacement of the cleaning piece 3 relative to the connecting component 5, and the variable position structure 6 may lock the posture of the cleaning piece 3 after displacement, so that the cleaning piece 3 maintains a constant posture.

Referring to the embodiments provided in FIGs. 28a, 29 and 31, the variable position structure 6 includes: a stop spring 61, a stop thimble 62 and at least two limiting holes. At least two limiting holes are provided on the connecting component 5. More specifically, at least two limiting holes are provided on the first extending arm 12 or the second extending arm 13 of the connecting component 5, and the limiting holes are blind hole, with the opening facing the other extending arm. For example, in the structure shown in FIG. 28a, at least two limiting holes are provided on the first extending arm 12, and the openings face the second extending arm 13. The cleaning piece 3 is provided with a first mounting hole 65. The stop thimble 62 and the stop spring 61 are provided in the first installation hole 65; and the stop thimble 62 cooperates with at least one of the two limiting holes through the stop spring 61 to keep the cleaning piece 3 in one posture.

Specifically, the stop thimble 62 includes a thimble head and a thimble column; and the stop spring 61 is sleeved on the thimble column. The stop thimble 62 and the stop spring 61 are provided in the first installation hole 65, as shown in FIGs. 29 and 31. The thimble head is located in one of the at least two limiting holes. The stop spring 61 is in a deformed state and has a certain preload force. One end of the stop spring 61 resists the thimble head of the stop thimble 62, and the other end resists the second extending arm 13. The amount of insertion of the thimble head of the stop thimble 62 into the limiting hole may be between 0.5mm and 3.5mm; a more specific amount of insertion may be any one value between [1mm, 2.5mm].

The center of each hole in at least two limiting holes is on a circle with a center of the through hole on the first extending arm 12 as the center o and the radius R. This embodiment does not limit the radius R, and it may be determined based on actual design requirements during specific implementation. The selection range of the central angle θ formed by the line connecting the hole centers of two adjacent limiting holes and the circle center o may be [1°, 25°]. Specifically, the central angle θ may be any angle of [3°, 15°].

At least two limiting holes are interconnected, so that the user may change the posture of the cleaning piece 3 simply by turning the cleaning piece 3. For example, in a specific embodiment shown in FIG. 32, the variable position structure has two limiting holes, namely a first limiting hole 63 and a second limiting hole 64. The two limiting holes 63 and 64 are interconnected.

Referring to FIGs. 29 and 31, the first extending arm 12 is provided with a first limiting hole 63 and a second limiting hole 64. When the head of the stop thimble 62 is located in the first limiting hole 63, as shown in FIG. 27, the cleaning piece 3 is in the cleaning working mode. When the head of the stop thimble 62 is located at the second limiting hole 64, as shown in FIG. 26, the cleaning piece 3 is in the cooking mode. In the embodiment provided by the present disclosure, a plurality of limiting holes at different positions may also be provided on the first extending arm 12. Usually, the user only needs to change the stop thimble 62 to cooperate with different limiting holes to make the cleaning piece 3 stable in different postures relative to the connecting component 5, the cleaning piece 3 is driven by the driving apparatus 4 to complete cleaning of different areas.

Of course, other structures may also be used to realize the posture change of the cleaning piece 3. For example, a pluggable plug-in element is provided at the connection between the cleaning piece 3 and the connecting component 5. The user pulls out the plug-in element, and the plug-in element comes out of a limiting hole. After changing the posture of the cleaning piece 3 relative to the connecting component 5, the user releases the plug-in element, and the plug-in element returns under the action of elastic recovery force and inserts it into another limiting hole.

Or, in another feasible solution (no corresponding drawing), at least two limiting holes are provided on the cleaning piece 3, and the connecting component 5 is provided with a second mounting hole. The stop thimble 62 and the stop spring 61 are provided in the second mounting hole. The stop pin cooperates with at least one of the two limiting holes through the stop spring 61 to keep the cleaning piece 3 in one posture. This solution is applicable to the solution mentioned above: the cleaning piece 3 is provided with two connecting arms, and the connecting component is provided with an insertion end for inserting the two connecting arms.

In the embodiment of the present disclosure, see FIGs. 35 and 36, the cooking device includes a connecting component and a lifting component. The lifting component is in connection with the power output end 41 of the driving apparatus. The lifting component is used to drive the power output end 41 to product linear motion along the depth direction of the cooking cavity 2. The cleaning piece 3 is in connection with the power output end 41 of the driving apparatus through the connecting component 5. When the device is in the cleaning working mode, the lifting component drives the power output end 41 to move downward along the depth direction of the cooking cavity 2, and the connecting component 5 in connection with the power output end 41 also moves downward along the depth direction of the cooking cavity 2. At the same time, the cleaning piece 3 in connection with the connecting component 5 also moves downward along the depth direction of the cooking cavity 2, and the cleaning piece 3 separates from the cover body 7. When the device is in the cooking mode, the lifting component drives the power output end 41 to move upward along the depth direction of the cooking cavity 2, and the connecting component 5 connected to the power output end 41 also moves upward along the depth direction of the cooking cavity 2, and at the same time, the cleaning piece 3 in connection with the connecting component 5 also moves upward along the depth direction of the cooking cavity 2, and the cleaning piece 3 contacts the cover body 7. In the embodiment of the present disclosure, the movement range of the lifting component driving power output end 41 has a certain range. Normally, the movement range of the lifting component driving power output end 41 is between 1 and 3 mm. In the embodiment of the present disclosure, the lifting component drives the cleaning piece 3 to move upward or downward along the depth direction of the cooking cavity 2. By connecting the lifting component to the control apparatus of the device, when the device is in the process of switching between the cooking working mode and the cleaning working mode, the device may automatically switch the working mode without human intervention. At the same time, the connecting component 5 and the cleaning piece 3 have an integrated structure, or the cleaning piece 3 is fixedly connected to the connecting component 5 through the connecting component. Since the cleaning piece 3 and the connecting component 5 are directly fixedly connected, eliminating the complex variable position structure 6, so that the combined body formed by the cleaning component 3 and the connecting component 5 has a smaller volume, and the cooking cavity 2 has a larger volume.

Further, referring to FIG. 36, the lifting component includes: a motor 20, a driving wheel 23, a connecting rod 21 and a lever shaft 22. The connecting rod 21 is in connection with the main structure of the device through the lever shaft 22. In a specific manner, there is a connecting hole at a position close to the middle of the connecting rod 21. The lever shaft 22 passes through the connecting hole and is rotatably connected to the main structure of the device. One end of the connecting rod 21 is in connection with the power output end 41, and the other end of the connecting rod 21 is in contact with the driving wheel 23. The driving wheel 23 is provided on the shaft of the motor 20 and is fixedly connected to the motor shaft. The motor 20 provides power for the rotation of the driving wheel 23, and the driving wheel 23 is a cam or a special-shaped wheel. The power output end 41 is equipped with an elastic element 24, such as a spring, and the elastic element 24 is always in a compressed state. When the relatively large radius rim of the driving wheel 23 contacts the connecting rod 21, the end of the connecting rod 21 that contacts the driving wheel 23 moves downward relative to the lever shaft 22, and the section of the connecting rod 21 connecting the power output end 41 moves upward relative to the lever shaft 22, so the power output end 41 moves upward under the driving of the connecting rod 21, and at the same time, other components connected to the power output end 41 move upward, and finally the cleaning piece 3 and the cover body 7 are in contact. When the relatively small radius rim of the driving wheel 23 contacts the connecting rod 21, the power output end 41 and the cleaning piece 3 move downward to the lever balance position under the action of the elastic element 24, and finally the cleaning piece 3 and the cover body 7 are separated from each other. In this embodiment, the motor 20 drives the driving wheel 23 to rotate, and through the lever action of the connecting rod 21 and at the same time driving the connecting rod 21 to drive the movement of the power output end 41, not only enable the cleaning piece 3 to move upward or downward along the depth direction of the cooking cavity 2, but also may make the device do not require manual operation when switching working modes, providing convenience for the user. An elastic element 24 is provided at the connection between the power output end 41 and the main structure of the device. The elastic element 24 may enable the power output end 41 to move upward or downward along the depth direction of the cooking cavity 2, in addition to the reset function, which makes the movement smooth and fluency, helping to extend the service life of the equipment. In order to simplify the design, according to another embodiment, the lifting component includes: a motor 20 and a driving wheel 23. The motor 20 is in connection with the power output end 41 through the driving wheel 23 and directly drives the power output end 41 to rise and fall. Or in another embodiment, the lifting component includes: a motor 20 and a driving connection component (not shown in the drawings). The motor 20 is in connection with the power output terminal 41 through the driving connection component, and directly drives the power output terminal 41 to rise and fall.

Referring to FIGs. 25 to 27, the device main body 1 provided by the embodiment of the present disclosure includes: a cooking body 101 and a cover body 7. The cooking body 101 has an inner cavity with an opening; the cover body 7 covers the opening to form a closed cooking cavity 2. The cleaning piece 3 includes: a first execution part 31 and a second execution part 32. The first execution part 31 abuts against the inner wall of the cover body 7 and is used to clean the inner wall of the cover body 7. The second execution part 32 abuts against the inner wall of the cooking body 101, and is used to clean the inner wall of the cooking body 101. The first execution part 31 and the second execution part 32 are the cleaning piece execution part 34, and the cleaning execution part 34 is provided on the cleaning frame 33. In the cleaning state, as shown in FIG. 27, the cleaning piece 3 is in the cleaning working mode. In this state, the cleaning piece 3 is in interference contact with the inner wall of the cover body 7 and the cavity inner wall of the cooking cavity 2, which may be rotated under the driving force of the driving apparatus 4 to realize scraping of the cavity inner wall of the cooking cavity 2, thus playing a cleaning role. In the cooking state, as shown in FIG. 26, the cleaning piece 3 is in the cooking working mode. In this state, the cleaning piece 3 is completely separated from the inner wall of the cover body 7, but is always in contact with the inner wall of the cooking cavity 2. The advantage of this is that it not only reduces the unnecessary movement of not scraping the pot cover during cooking, but also reduces the resistance of the cleaning piece 3 and improves the effective power of the driving apparatus 4. At the same time, the cleaning piece 3 that is always in contact with the inner wall of the cooking cavity 2 may scrape the dishes, condiments, soups, etc. that move onto the inner wall of the pot during cooking back into the cooking cavity 2 to ensure accurate cooking of materials. As shown in FIG. 28, a specific implementation structure of the cleaning piece 3, the first execution part 31 and the second execution part 32 may be an integral part, and this integral part may be called the execution part of the cleaning piece 3. The execution part of the cleaning piece 3 may be made of elastic materials, such as rubber, silicone, plastic, brush, loofah, etc. Because cooking device is food equipment and needs to meet food-grade requirements, food-grade silicone loofah, etc. may be used in the cleaning execution part. Of course, in other embodiments, the first execution part 21 and the second execution part 22 may also be two parts. These two parts are provided at different positions of the cleaning piece to act on different areas of the cooking cavity, covering most or all areas on the inner wall of the cooking body and cover body.

Referring to FIGs. 32 to 34, a cooking device provided by an embodiment of the present disclosure further includes a transmission component 9 and a stirring paddle 8. The transmission component 9 is provided on the connecting component 5. The transmission component 9 has an access end and an output end. The access end is used to access the power output by the driving apparatus 4, and the output end is in connection with the stirring paddle 8 to drive the stirring paddle 8 to move. The transmission component 9 is composed of a first transmission part 92 and a second transmission part 91. The first transmission part 92 and the second transmission part 91 are transmission connected. The first transmission part 92 is provided with an access end, and the access end is a power end connection hole 11 and the power end connection hole 11 is connected to the driving apparatus 4. The second transmission member 91 is provided with an output end. The output end is the stirring paddle mounting hole 10. The stirring paddle mounting hole 10 is in connection with the stirring paddle 8. When the first transmission member 92 rotates driven by the driving apparatus 4, the second transmission member 91 also rotates synchronously, and the stirring paddle 8 also rotates synchronously driven by the second transmission component 9. The stirring paddle 8 may not only stir the food during cooking, but also when the device is being cleaned, the high-speed rotation of the stirring paddle 8 may stir the cleaning liquid in the cooking cavity 2 to the inner wall of the cooking cavity 2, while also improving the fluidity and impact force of the cleaning liquid to clean the cooking cavity 2 through the impact force of the cleaning liquid, thereby improving the cleaning efficiency.

In the embodiment of the present disclosure, see FIGs. 26 and 33, the cleaning piece 3 and the stirring paddle 8 are located on two sides of the access end. The cleaning piece 3 and the stirring paddle 8 are provided at 180 degrees. This arrangement may make two sides of the connecting component 5 tend to a balanced state as much as possible. Since the stirring paddle 8 of the cleaning piece 3 is provided on the opposite side relative to the connecting component 5, when the connecting component 5 drives the cleaning piece 3 and the stirring paddle 8 to rotate, the connecting component 5 experiences the smallest force, thereby increasing the service life of the connecting component 5.

Further, in the embodiment of the present disclosure, the main body 1 of the device also includes a heating apparatus (not shown in the drawings). The heating apparatus is not only used to heat the food during cooking, but also may be used to heat the cleaning liquid during cleaning, to improve the cleaning effect of the cleaning liquid; the control apparatus (not shown in the drawings) is electrically connected to the heating apparatus and is used to control the operation of the heating apparatus to heat the cleaning liquid in the cooking cavity 2 to generate steam, and steam condensate is formed at the inner wall area of the cooking cavity 2 contacting the steam. At least part of the inner wall area of the cooking cavity 2 is cleaned under the combined action of the contact force of the cleaning piece 3, steam and steam condensate. Cleaning the inner wall of the cooking cavity 2 by heating the cleaning liquid not only speeds up the cleaning, but also sterilizes the cooking cavity 2 through high temperature. In this embodiment, the process of injecting the cleaning liquid into the cooking cavity 2 may also be implemented automatically, without the user having to manually inject the cleaning liquid into the cooking cavity 2. Specifically, the cooking device provided in this embodiment also includes a water control valve (not shown in the drawings). The control apparatus is electrically connected to the water control valve and is used to control the opening or closing of the water control valve. After starting the self-cleaning program, the control apparatus controls the water valve to open and injects cleaning liquid into the cooking cavity 2, controls the heating apparatus to heat the cleaning liquid in the cooking cavity 2, and after waiting for the first preset time, controls the driving apparatus 4 to work to drive the cleaning piece 3 to act.

The solution provided by the above embodiment is to manually switch the posture of the cleaning piece 3. In essence, the posture switching of the cleaning piece 3 may also be realized automatically, without the user having to open the cover body 7 of the cooking device to manually switch. That is, the cooking device provided by the embodiment of the present disclosure may further include: a switching apparatus (not shown in the drawings). The switching apparatus is electrically connected to the control apparatus, and is used to drive the cleaning piece 3 to switch between at least two postures under the control of the control apparatus. The switching apparatus may be provided at the connection between the cleaning piece 3 and the connecting component 5, or may also be provided on the cover body 7. When the user starts the cleaning program, when the cleaning piece 3 is cleaning the inner wall of the cooking cavity 2, under the control of the control apparatus, the cleaning piece 3 may complete the switching of different postures and clean different areas. The degree of automation of this method is high, the user does not need to manually change the posture of the cleaning piece 3, which may bring a good use experience to the user.

The cooking device provided by the embodiments of the present disclosure may include: soymilk machines, rice cookers, smart pressure cookers, cooking machines, food processors, juicers, etc. In addition to being applicable to cooking device, the technical solutions provided by the embodiments of the present disclosure may also be extended to device in more fields. Such device has an accommodation cavity for preparing corresponding substances. After the preparation is completed, the accommodation cavity needs to be cleaned. That is, another embodiment of the present disclosure provides a device with a self-cleaning function, which includes: a device body 1, a cleaning piece 3, a driving apparatus 4, a heating apparatus and a control apparatus. The device body has an accommodation cavity. The cleaning piece 3 is located in the accommodation cavity, and has at least two postures. The driving apparatus 4 is provided on the device body and in connection with the cleaning piece 3. The control apparatus 4 is electrically connected to the driving apparatus 4, and is used to control the operation of the driving apparatus 4. When in different postures, the cleaning piece 3 contacts different area of the inner wall. At least part of the inner wall area of the accommodation cavity 2 is cleaned under the combined action of the counteracting force of the cleaning piece 3. Different areas of inner wall area of the accommodation cavity 2 are cleaned by changing different postures of the cleaning piece 3. Because the external structure and internal structure of device in different fields will be different, this embodiment does not limit the external structure and internal structure of the device body.

For the specific structures of components such as the cleaning piece 3 and the device main body, please refer to the corresponding contents in the above embodiments and will not be described again here.

On the cooking device provided in this article, the cleaning assembly formed by the connecting component 5 and the cleaning piece 3 may be used as a separate accessory for the user to choose. After the user selects the cleaning assembly, after the cooking device completes a cooking task, the user does not need to replace the stirring paddle 8 with the cleaning piece 3 and then start the cleaning function; the user may directly start the cleaning function to complete the self-cleaning of the device.

Therefore, the embodiment of the present disclosure also provides a cleaning and stirring accessory, which includes: a connecting component 5, a cleaning piece 3 and a stirring paddle 8. The connecting component 5 has a connecting component for connecting with the driving apparatus 4 of the cooking device; the connecting component 5 not only has the function of connecting, but also may transmit the power output by the driving apparatus 4. The cleaning piece 3 is variably connected to the connecting component 5 to have at least two postures. The stirring paddle 8 is provided on the connecting component 5 and performs stirring action driven by the driving apparatus 4. When the cleaning piece 3 is in different postures, it contacts the inner wall of different areas of the cooking cavity 2; in the cleaning working mode, the cleaning piece 3 is in the first posture, and the cleaning piece 3 contacts the cover body 7 to clean the cover body 7, or the cleaning piece 3 is in contact with the inner wall of different areas of the cooking cavity 2 to clean the inner wall; in the cooking mode, the cleaning piece 3 is in the second posture through variable position to present a gap with the cover body 7, and at the same time the cleaning piece 3 cooperates with the stirring paddle 8 to exert force on the cavity inner wall being in contact, so that the cooking materials attached to the cavity inner wall of the cavity are detached.

Specifically, the connection relationship between the cleaning piece 3 and the connecting component 5 is the same as the connection relationship indicated in the above-mentioned cooking device embodiment and shown in FIGs. 28 to 9, and will not be described again here.

For the structure of the cleaning execution part, reference may also be made to the corresponding descriptions above and the structures shown in FIGs. 28 to 9, which will not be described again here.

The control logic of the control apparatus in the cooking device provided by the embodiment of the present disclosure will be described below with reference to specific application examples.

Step 1. Control the opening of the water control valve and start the heating apparatus at the same time. This not only saves cleaning time, but also quickly heats the water to generate hot steam.

The entire cleaning time t0 is controlled between 1s and 40s, preferably between 12s and 33s.

Assume that the entire self-cleaning time is t0; for example, t0 is controlled between 1s and 40s, and more specifically, t0 is controlled between 12s and 33s. Then the duration of water injection t1 should always be less than t0; that is, t0-t1 is between 1s and 38s, and more specifically, t0-t1 is between 2s and 30s. At the same time, the water injection volume is related to the overall flux of the water outlet. Assume that the water injection volume is V1, V1 is [0.1L, 5L], and more specifically, V1 is [0.2L, 2.5L]. Then, the water injection time may be determined based on the overall flux and water injection volume of the water outlet.

Step 2. Enter the waiting state for the waiting time t2.

T2 may be controlled at [-10s, 10s], more specifically, t2 may be controlled at [-5s, 5s]. The heating apparatus may work in the maximum power mode. For example, the maximum power of the heating apparatus may be between 1Kw and 5Kw, more specifically, it may be between 1.1Kw and 4.5Kw.

Step 3. When the time t2 reaches, start the driving apparatus to drive the cleaning part. For example, the driving apparatus is a motor that outputs rotational power. The cleaning piece rotates in the cooking cavity driven by the motor. The rotation speed of the cleaning piece may be controlled at [10rpm, 1000rpm], further, it may be controlled at [30rpm, 900rpm].

More specifically, there is an alternating process of acceleration and then deceleration in the rotation speed. Pulse scraping is more conducive to the cleaning piece 3 stirring the cleaning liquid and causing the cleaning liquid to splash on the inner wall of the cooking cavity, thereby helping to remove oily residues from the inner cavity. The acceleration process is controlled at [0.5s, 5s], and the acceleration is controlled at [2r/s2, 2000r/ s2]; the deceleration process is controlled at [0.5s, 1s], the deceleration is controlled at [10r/s2, 2000r/s2]; a pulse period is controlled at [1s, 6s], and the entire cleaning cycle includes one or more pulse periods, for example, the number of cycles is controlled at [1, 5]. Alternatively, there is an alternating process of clockwise and then counterclockwise rotation in the direction of rotation, and scraping that continuously changes the direction is more conducive to quickly removing attachments in the cooking cavity. For example, if the attachment is large, scraping the attachment from one direction and then scraping the attachment from the opposite direction may speed up the removal of the attachment.

Step 4: Drive the switching apparatus to adjust the posture of the cleaning piece so that the cleaning piece 3 is in the cooking mode. At this time, step 1, step 2 and step 3 are repeated in sequence.

After this cleaning stage is completed, depending on the specific situation, the switching apparatus (such as the lifting component described above) may also be controlled to adjust the posture of the cleaning piece 3 so that the cleaning piece 3 is in the third posture and cleaning is performed. After the cleaning process is completed, the driving apparatus 4 may adjust the posture of the cleaning piece to change in different postures, and perform repeated cleaning.

Step 5: After the cleaning is completed (that is, the number of cleaning cycles is full or the cleaning time t0 is reached), shut down the driving apparatus 4, shut down the heating apparatus, and adjust the posture of the cleaning piece 3 so that the cleaning piece 3 is in the cooking mode.

The control valve is closed after the water injection time t1 is reached.

One of the innovations of the technical solution provided by each embodiment of the present disclosure is that the cleaning piece 3 may change at least two postures. In the cleaning working mode, the cleaning execution part of the cleaning piece 3 may contacts the inner wall of the cover body 7 and the cavity inner wall of the cooking cavity 2. Combined with the self-deformation characteristics of the cleaning execution part, and is installed in an interference manner with the inner wall to be cleaned, so that the cleaning piece 3 is able to clean the inner wall of the cover body 7 and the cavity inner wall of the cooking cavity 2 at the same time. When the cleaning piece 3 is in the cooking mode, the contact force between the first execution part 31 of the cleaning piece 3 and the inner wall in the corresponding area is reduced, or there is a gap between the first execution part 31 of the cleaning piece 3 and the inner wall in the corresponding area. The second execution part 32 of the cleaning piece 3 is in interference contact with the inner wall. During cooking, the cleaning piece 3 may assist cooking, so that the cleaning piece 3 has different functions in different postures, and the user does not need to disassemble the cleaning piece 3 during use.

The second innovation of the technical solution provided by each embodiment of the present disclosure is that the cleaning piece 3 and the stirring paddle 8 are connected through the connecting component 5 to form an assembly, and the assembly is installed on the cooking device. When the device is cooking, the stirring paddle 8 stirs the food to be cooked, and the cleaning piece 3 assists in cooking. When cleaning the cooking device, the stirring paddle 8 and the cleaning piece 3 work at the same time to complete the cleaning work. When the user uses this combination to clean, there is no need to replace and install the cleaning piece 3 of the stirring paddle 8 back and forth.

The technical solutions provided by each embodiment of the present disclosure are described below in conjunction with specific application scenarios:

### Application scenario 1

A user uses a cooking device, such as woks, to cook. After frying one dish, the cooking cavity of the cooking machine may need to be cleaned before frying the next dish to avoid odor transfer and over cooking. After the cooking machine finishes cooking one dish, the cover body opens and the user may put the cooked dishes in the cooking machine onto a plate. After the dishes being put the plate, the user manually (or automatically by the switching apparatus, such as the lifting component described above) adjusts the cleaning piece to the cleaning working mode, and then closes the cover body on the cooking body. At this time, the cooking machine detects that the self-cleaning conditions are currently met, and automatically starts the self-cleaning program. The control apparatus of the cooking machine controls the opening of the water control valve to inject cleaning liquid (such as water, or an aqueous solution containing detergent, etc.) into the cooking body, and at the same time starts the heating apparatus to heat the cleaning liquid in the cooking body. The control apparatus controls the driving apparatus (such as a rotating motor) to drive the cleaning piece to rotate in high speed, the cleaning piece stirs the cleaning liquid to make the cleaning liquid splash to the cavity inner wall of the cooking cavity and the inner wall of the cover body. At the same time, the silicone scraper on the cleaning piece is installed in an interference fit with the cover body and cooking body. The high-temperature steam cleaning liquid softens the oil stains on the wall of the pot cover and the cooking body. Under the action of the friction between the high-speed rotating silicone scraper and the pot cover and the cooking body and the impact of the hot water flow, the cover body and the cooking body are cleaned together. The entire cleaning time lasts 15 seconds, which is when the user carries the fried and plated dishes from the kitchen to the dining table in the living room, and then from the dining table in the living room back to the kitchen. The user does not need to wait for a long time for the cooking machine to complete the self-cleaning, then the user may quickly start frying the next dish, and the efficiency is very high.

### Application scenario 2

The user uses a cooking device, such as a food processor, to make rice cereal. For a cooking machine, the cover body in the cooking device is the cover of the cooking machine, and the cooking body in the cooking device is the pulping body of the cooking machine. A user puts multiple varieties of ingredients into the food processor, such as walnuts, purple rice, white rice, millet, peanuts, etc. After the cooking machine finishes working, because the rice paste is relatively viscous, the inner wall of the pulping body of the food processor is covered with rice paste that may not be poured out. At this time, the user may start the self-cleaning program of the cooking device, and the cleaning execution part on the cleaning part of the cooking device is in interference fit with the inner wall of the pulp making machine. Driven by the rotating motor, the cleaning piece rotates at high speed to stir up the high-speed flow of cleaning liquid in the machine body. Under the scouring of the liquid and the scraping of the cleaning piece, the machine wall of the cooking machine is clean. However, liquid mixed with rice paste is also splashed on the cover of the food processor. Because the existing cleaning piece may not work with regard to the cover, the high-speed flowing cleaning liquid in the machine cannot be splashed on the cover, so the user has to take the cover to the sink to the clean.

Replacing the above-mentioned cleaning piece with the cleaning piece mentioned in the embodiments of the present disclosure, that is, in addition to the second execution part in interference fit with the inner wall of the pulp making machine, the cleaning execution part of the cleaning part also has a first execution part in interference fit with the machine cover. In this way, when the cleaning part rotates at high speed, the first execution part scrapes the attachments or liquid on the machine cover, and the second execution part scrapes the inner wall of the pulping body. The cover and pulping may be completed at the same time in one self-cleaning procedure. The user no longer needs to clean the machine cover separately. In addition, the cleaning piece may continuously switch cleaning postures during the cleaning process to improve the cleaning effect on the pulping body and machine cover.

In summary, the solution provided by the embodiment of the present disclosure realizes the variable position setting of the cleaning piece, so that the cleaning piece has at least two postures. The cleaning piece is able to clean different areas in the cooking cavity in different postures. For example, when the cleaning piece is in at least one of the two postures, the cleaning piece is able to clean the inner wall of the cooking body and the cover at the same time. When the cleaning piece is in another posture of the at least two postures, the cleaning piece is able to clean the inner wall of the cooking body alone. In addition to the cleaning function, the cleaning piece may also assist in cooking. When the user is ready to cook, the user only needs to change the posture of the cleaning piece, and the cleaning piece may assist cooking during cooking, thus eliminating the need to disassemble and assemble the cleaning piece, which brings a good user experience to the user.

Referring to FIGs. 37 to 41b, the cooking device 1 provided by the embodiment of the present disclosure includes a base 10, a pot cover 20 and a pot 30. The base 10 has a front side and a rear side opposite to each other, which are located on the same axis AX in the horizontal direction of the base 10, that is, on the axis AX in the direction from the rear side toward the front side. The base 10 may be, but is not limited to, provided with a display operation panel 110 on the front side, a column 130 on the rear side, and a cooktop 140 provided between the front side and the rear side. One end of the cantilever 210 of the pot cover 20 is pivotally connected to the column 130, and the other end is in connection with the cover body 220 of the pot cover 20, so that the cover body 220 is suspended above the base 10, and the cover body 220 may follow the rotation of the cantilever 210 relative to the column 120 to close to or away from the pot 30 to open or close the cover body 220 of the pot 30.

The cooktop 140 is a recessed structure on the base 10, the inner edge 141 of which sinks from the surface of the base 10, and the outer edge 142 of which surrounds the surface of the base 10 and bulging from the surface 10. Limiting parts 143a, 143b, and 143c are provided on the cooktop 140 to prevent the pot 30 from being displaced relative to the cooktop 140 when the pot 30 is placed on the cooktop 140, such as rotating left and right along the outer edge 142 of the cooktop 140, flipping or sliding. The limiting parts 143a and 143b may be provided on the bottom surface 1411 or the side surface 1412 of the inner edge 141, or they may be provided on both the bottom surface 1411 and the side surface 1412. The limiting part 143c is provided on the outer edge 142.

As shown in FIGs. 41 to 44, in an embodiment in which the limiting part 143a is provided on the bottom surface 1411 of the inner edge 141 and the limiting part 143b is provided on the side surface 1412 of the inner edge 141, the constituent materials of the limiting parts 143a and 143b may be a material with a high surface friction coefficient, such as a stop-slip mat or anti-slip mat composed of polymer materials such as silicone, rubber or epoxy resin. Therefore, in this embodiment, the limiting parts 143a and 143b may also play a buffering role when the pot 30 and the cooktop 140 are in contact, reducing damage and noise caused by collision between the two.

The number of the limiting parts 143a and 143b may be multiple, and they are dispersedly provided on the bottom surface 1411 and the side surface 1412 of the inner edge 141. For example, they are symmetrically distributed at three points on the bottom surface 1411 and the side surface 1412 in the form of an equilateral triangle. At the same time, in order to enhance the stop-slip and anti-slip effect, the vertices of the triangle distributed on the bottom surface 1411 and the vertices of the triangle on the side 1412 may also be selectively provided in opposite directions, for example, they are located on two ends of the axis AX of the base 10 opposite to each other, so that the plurality of limiting parts 143a and 143b form two overlapping and opposite triangular shapes in the projection direction of the cooktop 140, so that the limiting parts 143b distributed at two points of the bottom surface 1411 and the limiting part 143a distributed at one point of the side surface 1412 also form a shape of an equilateral triangle shape, to better form evenly distributed resistance at multiple positions on the surface of the pot 30.

Therefore, when the pot 30 is placed on the cooktop 140, the surfaces at the bottom and sides of the pot 30 contact the corresponding limiting portions 143b and 143a respectively, and the friction force generated by the contact with each other and the gravity of the pot 30 form a resistance on the cooktop 140 that blocks the relative movement of the pot 30, so that the pot 30 is limited to the cooktop 140 and prevents the pot 30 from rotating along the circumferential direction of the cooktop 140 (that is, the direction in which the edge surrounds), the cooking operation may run more smoothly, reduce energy consumption and improve efficiency.

In addition, in this embodiment, since the material of the limiting parts 143a and 143b has a buffering effect, when the bottom and side of the pot 30 come into contact with the corresponding limiting parts 143b and 143a, the limiting parts 143a and 143b are sound-absorbing and shock-absorbing, which may reduce or eliminate the noise caused by hard contact between the pot 30 and the cooktop 140, thereby improving user experience.

In some embodiments of the present disclosure, a positioning element may also be selectively provided on the pot 30, for example, the positioning element is provided on the surface of the pot body 310 of the pot 30 at a position corresponding to the limiting parts 143a and 143b. The positioning element may be, but is not limited to, a protruding structure formed on the surface of the pot body 310, which may be a rough structure compared to the surrounding smooth surface, such as an array formed of multiple protrusions or a single protrusion. Moreover, when the pot body 310 of the pot 30 is placed on the cooktop 140, the positioning element and the limiting parts 143a and 143b are combined with each other and in interference contact. That is, the positioning element is at least partially embedded in the limiting parts 143a, 143b, so that the positioning element and the limiting parts 143a, 143b are combined with each other in a manner similar to matching concave and convex structures, so as to increase the contact area and improve the resistance between each other. Therefore, in addition to using an interference contact arrangement, a concave structure corresponding to an array of bumps or bumps may also be provided on the surface of the limiting parts 143a and 143b that contacts the positioning element, so that after the positioning element and the limiting parts 143a, 143b are combined with each other, they are limited by the physical structure and may not easily detach from the limiting parts 143a and 143b, thus preventing the pot 30 from rotating in the horizontal direction on the cooktoptop 140. Please refer to FIGs. 39a to 42b, in the embodiment in which the limiting part 143c is provided on the outer edge 142 of the cooktop 140, the limiting part 143c on the cooktop 140 and the positioning element 320 of the pot 30 are configured as a matching concave-convex structure. In this embodiment, the limiting part 143c is a groove and the positioning element 320 is a convex whose shape and structure match the groove as an example, but it is not limited to this.

The limiting part 143c may be provided in the form of a semi-open groove on the inner surface or the outer surface of the outer edge 142 of the cooktop 140, that is, it is recessed on the inner surface or the outer surface, but does not penetrate the outer edge 142; or a groove is provided on the outer edge 142 with a fully open hollow structure that runs through the inner and outer surfaces of the outer edge 142 (as shown in FIG. 41). Therefore, when the pot 30 is placed on the cooktop 140, the positioning element 320 on the pot body 30 is correspondingly engaged and fixed in the limiting part 143c, so that the ability of rotating along the outer edge 142 of the cooktop 140 of the pot body 30 is restricted. Thereby, the problem of the pot body 30 is easy to rotate the cooktop 140 during cooking is solved.

In addition, in order to be more ergonomic in use and close to the user's operating habits, the position of the limiting part 143c on the cooktop 140 may be such that when the pot 310 is placed on the cooktop 140, the angle between the pot handle 330 connected to the pot body 310 and the axis AX of the base 10 is 30~60 degrees, such as 30 degrees, 40 degrees, 45 degrees, 50 degrees or 60 degrees. This allows the user to operate the cooking device 1 more smoothly when facing the front side of the base 10 or the direction in which the pot cover 20 is opened (or the axis direction of the cantilever 210). The axis direction of the cantilever 210 may be the same as or different from the axis AX direction of the base 10. Therefore, in some embodiments of the present disclosure, the position of the limiting part 143c may also be based on the axis of the cantilever 210, so that the angle θ between the pot handle 330 and the axis of the cantilever 210 is 30 to 60 degrees.

It may be understood that in the embodiment of the present disclosure, in order to allow the pot handle 330 of the pot body 30 to operate at an operating angle of 30 to 60 degrees with the axis AX of the base 10 or the axis of the cantilever 210, it may also set the position of the limiting part 143c at a position on the cooktop 140 at an angle of 30 to 60 degrees with the axis AX of the base 10 or the axis of the cantilever 210. In addition, the positioning element 320 of the pot 30 is provided on the pot body 310 at a position corresponding to the pot handle 320, for example, it is provided below the pot body 310 where the pot handle 320 is connected, or is extended from the pot handle 320 to increase the convenience of operation. At the same time, when the number of the limiting portions 143b is multiple, their positions may be symmetrically provided on the two opposite sides of the axis AX, that is, the left and right sides, for example, symmetrically provided at an included angle of 45 degrees to meet usage requirement of different strong hands. For example, a left-handed user may use the positioning element of the pot handle 330 combined with the limiting part on the left side of the axis AX (as shown in FIG. 43); a right-handed user may use the positioning element of the pot handle combined with the limiting part on the right side of the axis AX (as shown in FIG. 44).

It is worth noting that in other embodiments of the present disclosure, the limiting part 143c may also include a plurality of sub-units provided at intervals, for example, in a structural form of three grooves as a group, provided at intervals being provided on the top of the edge 142 of the cooktop 140, having angles of 30 degrees, 45 degrees and 60 degrees with the axis respectively. In this way, the user may also choose different placement angles when picking up and placing the pot 30 on the cooktop 140 according to the holding angle habit, which is more convenient in use.

As shown in FIG. 41a, in the embodiment of the present disclosure, the position where the limiting part 143c is in connection with the top of the outer edge 142 may be set as a rounded corner structure, so that when the pot 30 is placed on the cooktop 140, it may play the role of guiding the positioning element 320 to slide into and combine with the limiting part 143c. For example, in operation, when placing the pot 30, the user only need to make the positioning element 320 on the pot body 310 contact the position adjacent to the limiting part 143c on the cooktop 140, and the rounded corner structure and the weight of pot 30 may be used for assisting the sliding into the limiting part 143c. By the limiting of the concave-convex matching structure, the pot 30 is prevented from rotating relative to the cooktop 140 in the horizontal direction.

In addition, in the present disclosure, for the embodiment in which the limiting parts 143a, 143b, and 143c are provided on both the outer edge 142 and the inner edge 141 of the cooktop 140, the pot body 310 of the pot 30 is not only subjected to fixing and limiting in horizontal direction by the limiting part 143c provided on the outer edge 142, the bottom and sides of the pot body 310 are also subjected to fixing and limiting by the limiting parts 143a and 143b provided on the inner edge 141.The limiting part 143a located on the bottom surface 1411 of the inner edge performs auxiliary positioning through the frictional resistance generated by its own material characteristics and the own gravity of the pot 30. At the same time, when the pot cover 20 of the cooking device is closed, since the pot body 310 is clamped by the limiting parts 143a of the cover body 220 and the inner edge bottom surface 1411 between the pot cover 20 and the cooktop 140, the pot 30 is also limited and fixed in the vertical direction of the base 10, thereby preventing the pot 30 from rotating along the horizontal direction and turning left and right along the axis AX.

Please refer to FIG. 42a and FIG. 42b. In another embodiment of the present disclosure, the plurality of limiting parts 143a located on the bottom surface of the inner edge 141 of the cooktop 140 may also extend along the circumferential direction of the pot and be provided in a long strip structure. The circumferential direction of the pot may be regarded as the direction in which the pot may rotate clockwise or counterclockwise relative to the cooktop 140 on the horizontal plane. Therefore, the limiting part 143a may form resistance in the rotation direction of the pot, and through the configuration of a long strip structure to increase the contact area between them, thus preventing the pots from rotating on the cooktop 140. In addition, the limiting part 143a may also be used as a bottom support structure for the pot on the cooktop 140, and cooperates with the limiting part 143b of side to prevent the pot from being displaced on the cooktop 140. In addition, a temperature measuring element 144 may also be provided between the plurality of limiting parts 143a provided at intervals on the inner edge bottom surface 1411 of the cooktop 140 to control the temperature of the pot during cooking or cleaning. The initial height of the temperature measuring element 144 is slightly higher than the limiting part 143a, and may be driven by the elastic element provided at its bottom to be displaced in the direction of gravity. Therefore, when the pot is placed on the cooktop 140, the temperature measuring element 144 will bear the weight of the pot and retract toward the bottom surface 1411 of the cooktop 140, thus pressing the temperature measuring piece 144 and the limiting part 143a on the bottom surface 1411 at the same time.

Since the temperature measuring element 144 is usually made of metal material, the friction force in contact with the bottom of the pot is small, so the position of each temperature measuring element 144 may be adjusted in the configuration of the limiting parts 143a and 143b, and at the same time, it is located on the same axis as one of the limiting parts 143a of the bottom surface 1411 and one of the limiting parts 143b of the side surface 1412. For example, if the same axis is between the limiting part 143a of the bottom surface 1411 and the limiting part 143b on the side; or the angle between the two limiting parts 143b spaced on the side 1412 is 90 degrees, the temperature measuring element 144 is exactly located between the two limiting parts 143b; alternatively, the limit part 143c located at the upper edge 142 and the temperature measuring part 144 are located on the same axis line, and the limiting part 143c limits the position of the pot, to overcome the influence caused by the low friction between the temperature measuring element 144 and the pot. The above are only used as examples, but are not limited thereto.

The application scenario of the cooking machine as an embodiment of the present disclosure will be further described below using cooking device.

When using the cooking device, when the user has cooking needs such as stir-frying or stirring ingredients, the pot may be placed on the cooktop top of the base. The user may selectively place the pot on the left or right side of the axis of the base in such a way that the angle between the pot handle and the axis is 30 degrees, 45 degrees or 60 degrees according to their own usage habits of taking pot. During this process, the user may manually align the positioning element and combine it with the limiting part on the cooktop to limit and fix the pot; or the user may contact the positioning element at a position adjacent to the limiting part, to make the positioning element slide in through the rounded corner structure and be combined into the limiting part. At this time, since the positioning element is limited by the structure of the limiting part in the horizontal direction, the pot is prevented from rotating on the cooktop top. At the same time, through the auxiliary limiting and buffering effect of the limiting part provided on the bottom and side of the inner edge of the cooktop, it plays a sound-absorbing and shock-absorbing effect, reduces the sound of the pot and the cooktop colliding with each other, and plays a role in protecting the pot to avoid collision damage. Then, the user places the ingredients into the pot and closes the pot cover. At this time, the cover body of the pot cover and the limiting part located on the bottom surface of the inner edge clamp the pot body, so that the pot is also limited and fixed in the vertical direction. Therefore, when the user clicks on the operation menu on the display operation panel on the front of the base and starts the cooking program, the spatula set on the pot cover rotates in the pot body, stirring and stir-frying the ingredients in the horizontal direction. The inertial force will be resisted by the limiting structure formed between the limiting part on the outer edge of the cooktop and the positioning piece, preventing the pot from rotating on the cooktop due to this inertial force. At the same time, the vibration caused by the impact of the food on the inner wall of the pot will be absorbed by the limiter set on the inner edge of the cooktop, preventing the pot from shaking, flipping and other undesirable situations, so that the cooking device may operate smoothly to ensure the complete the cooking process.

Referring to FIGs. 39 to 41, in other embodiments of the present disclosure, the limiting part 143b of the base 10 and the positioning element 320 of the pot 30 may also be coupled to each other through magnetic force. In this embodiment, one of the limiting part 143b and the positioning element 320 is a magnet, and the other is a magnet with opposite magnetism, or a magnetic piece composed of magnetic material or metal material that may be attracted by the magnet. In this embodiment, the limiting part 143b is a magnet and the positioning element is an iron piece as an example, but it is not limited to this. The limiting part 143b is provided on the top or inside of the outer edge 142 of the cooktop 140, and the positioning element 320 is provided on the pot body 310 of the pot 30, and the number of the positioning element 320 may be one or more. When the number of positioning element 320 is multiple, the position of the positioning element 320 corresponds to the position of the limiting part 143b. Therefore, when the pot 30 is placed on the cooktop 140, the positioning element 320 on the pot body 310 is attracted to the limiting part 143b by magnetic force. At this time, since the positioning element 320 is firmly coupled to the limiting part 143b, the ability of the pot 30 to displace relative to the cooktop 140 (at least the inertial force of rotation along the outer edge 142 in the horizontal direction) is lost. Therefore, when the pot 30 is performing cooking operations such as stir-frying or stirring, it may be prevented from rotating on the cooktop 140 or flipping along the axis AX, so that the cooking operations may be performed stably.

Similar to the above embodiment, the limiting part 143b and the positioning element 320 are combined with each other through magnetic force, which may also play a role in automatically guiding the positioning element 320 to be combined with the limiting part 143b. For example, when the pot 30 is placed on the cooktop 140, as long as the positioning element 320 on the pot body 310 contacts the position adjacent to the limiting part 143b on the cooktop 140, through the magnetic attraction between each other, the positioning part may be rotated with the pot body to the corresponding limit part 143b. After being combined with the limiting part, the pot 30 is blocked from rotating in the horizontal direction relative to the cooktop 140 by magnetic force.

In addition, when using cooking device, because the moisture in the ingredients will evaporate during the cooking process, it will be emitted from the inside of the pot to any opening. The water vapor will condense when it encounters cold parts, causing the machine to be covered with condensation water after cooking a dish. The often contains grease, which makes the surface of the machine dirty. This condensed water or oily water must be effectively collected and flowed back, otherwise a large amount of residual liquid will accumulate on the surface of the machine, which may easily cause problems such as inconvenient cleaning for a user and easy odor for a long time. Please refer to FIG. 37, FIG. 38, FIG. 45 to FIG. 47. Therefore, in the embodiment of the present disclosure, a pivot part 131 is provided at an end of the column 130 of the base 10 away from the base 10, for the rotating shaft and the rotating shaft motor to engage, so that the cantilever 210 of the pot cover 20 may be pivotally connected to the rotating shaft and being carried on the pivot part 131. A liquid receiving groove 132 is provided below the pivot part 131. The liquid receiving groove 132 may be provided on the side of the column 130 facing the cooktop 140, or may be provided around the column 130 along the circumferential direction of the column 130. In this embodiment, liquid receiving groove 132 is provided on the side of the column 130 facing the cooktop 140 and on two adjacent opposite sides, and is surrounded by three sides as an example, but it is not limited to this. The notch 1321 of liquid receiving groove 132 faces the pivot part 131, and the outer diameter of the notch 1321 matches the outer diameter of the end of the cantilever 210 connected to the column 130, so that when the cover body 220 of the pot cover 20 is opened upward, the liquid attached to the cover body 220 or dripping onto the cantilever is pulled by gravity and flows into the notch 1321 smoothly.

In addition, in some embodiments of the present disclosure, the top surface 1322 of the liquid receiving groove 132 surrounding the notch 1321 may be optionally provided as an inclined plane that is inclined toward the cooktop 140 in the direction of gravity, and the inclination angle is between 10 and 30 degrees., such as 10 degrees, 15 degrees, 25 degrees or 30 degrees, etc. When the pot body 310 of the pot 30 is placed on the cooktop 140, the height of the pot body 310 is slightly higher than the height of the notch 1321 adjacent to the side of the pot body 310. For example, the height of the flange 312 on the base body 110 that surrounds the opening 311 at a position of the pot body 310 is slightly higher than the height of the notch 1321 on the side of the base body 110 facing the pot body 310. The height of a top of the slope formed on the notch 1321 by the top face of the liquid tank 132 (near the end of the column 130) on the base body 110 is less than or equal to the height of the flange 312 on the base body 110, and the height of the bottom end of the slope (the end extending toward the cooktop 140) on the base body 110 is less than the height of the top and the flange 312 on the base body 110, respectively, so that the flange 312 is suspended on the notch 1321. Since during the cooking process, when the cover body 220 of the pot cover 20 is lowered to the cooking position P1 and contacts the flange 312 of the pot body 310, part of the condensed water or oil and water and other liquids accumulate on the position where the flange 312 and the cover body 220 contacting due to adhesion and capillary action. When the cover body 220 moves to the pot lifting position P2 and is out of contact with the flange 312, the accumulated liquid is pulled by the cohesive force and gravity and falls along the flange 312 toward the outside of the pot 310. At this time, by configuring the flange 312 to be suspended above the notch 1321, the falling liquid may flow into liquid receiving groove 132 through the notch 1321, thus preventing the liquid from dripping to the cooktop 140 or the base 110 causing pollution.

In some embodiments of the present disclosure, the contact part 1323 may also be selectively provided on the side of the liquid receiving groove 132 facing the pot body 310. For example, the contact part 1323 is provided on the side of the notch 1321 close to the pot body 310. When the pot body 310 is placed on the cooktop 140, the height difference between the flange 312 of the pot body 310 and the contact part of the liquid receiving groove on the base body is between 3mm and 20mm, such as 7mm, 10mm or 15mm, etc., so that the outer surface of the side wall of the pot body 310 may be separated from the contact part 1323 by a gap, which is about 2 mm to 10 mm, such as 3 mm, 5 mm or 8 mm. The size of said gap is usually less than or equal to the film thickness of film the liquid formed on the side wall of the pot body 310 or diameter of the droplet, to make the liquid flowing downward along the outer surface of the side wall of the pot body 310 may be guided by the contact part 1323 into the notch 1321. In addition, in some embodiments of the present disclosure, the structural forms of the contact part 1323 and the flange 312 match, for example, an arc-shaped structure with a curved surface or an arc surface, curvature or radian of which is smaller than the curvature or radian of the flange 312, allowing the contact part 1323 and the flange 312 to have a larger overlapping area within the projection range.

Meanwhile, in some embodiments, the side of the liquid receiving groove 132 facing the cooktop 140 is provided to protrude toward the direction of the cooktop 140 and is flush with or partially overlaps the outer edge 142 of the cooktop 140 in the projection direction. For example, the liquid receiving groove 132 is configured as a stepped structure with a wide top and a narrow bottom, so that the side of the notch 1321 located on the wider side or the contact part 1323 and the outer edge 142 of the cooktop 140 may be close to each other within the projection range or extend into the projection range of the flange 1323; and when the cover body 220 is moved to the pot lifting position P2, the side of the cover body 220 adjacent to the side of the liquid receiving groove 132 overlaps with the notch 1321 in the direction of gravity, allowing the liquid attached to the cover body 220 to slide down along the inner surface 221 of the cover body 220 into the notch 1321 under the action of gravity. The side of the cover body 220 adjacent to the liquid receiving groove 132 may be the outer edge 222 of the cover body 220 or the inner edge 223 provided on the inner surface 221 of the cover body 220. The inner edge 223 may be a rib formed by extrusion or bending of the cover body 220 itself, surrounding along the circumference, or may be a sealing ring made of silicone, rubber or other materials. During the cooking process, water vapor and oil vapor will accumulate on the inner surface 221 of the pot cover 20 facing the pot 30, and flow along the inner surface 221 to the inner edge 223 when the pot cover 20 is opened. At this time, the inner edge 223 may play the role of buffering the flow rate of the liquid. The liquid is slightly concentrated and then flows toward the direction of the notch 1321 into liquid receiving groove 132, which may prevent the liquid from hitting the wall of liquid receiving groove 132 and then spraying into the external environment due to excessive flow speed.

Therefore, in the embodiment of the present disclosure, the top surface 1322 of the liquid receiving groove 132 surrounding the notch 1321 is set as a slope, so that the notch 1321 may be closer to the pot cover 20. When the cover body 220 is in the pot lifting position P2, the distance between the outer edge 222 or the inner edge 223 of the cover body 220 and the notch 1321 is shorten; and the notch 1321 is located below the flange 312 at the opening 311 of the pot body 310, so that the liquid accumulated on the cover body 220 and the flange 312 may be received at the same time. In this way, it may be avoided that the position of the notch 1321 is too high, which is only suitable for receiving the liquid accumulated on the cover body 220, but cannot receive the liquid on the flange 312; and the position of the notch 1321 is too low, which is only suitable for receiving the liquid accumulated on the flange 312, but cannot receive the liquid on the cover body 220. In addition, some liquid may drip from the cover body 220 to one end of the cantilever 210 pivotally connected to the column 130 and slide down along the end surface 211. The liquid sliding down from the end surface 211 of the cantilever 210 just falls into the liquid receiving grooves 132 extending to the opposite sides of the column 130. Therefore, the liquid receiving groove 132 provided in the embodiment of the present disclosure may serve as a multi-directional liquid collection and anti-fouling function.

In one application scenario, the user may use the cantilever of the pot cover to flip the cover body between the cooking position and the pot-raising position, so that the cover body may be lowered toward the cooktop, covering the opening of the pot body to cook ingredients. Or lift it in the opposite direction to the pot lifting position, exposing the opening of the pot body, so that the pot body may be easily taken out from the cooktop. During the cooking process or after the cooking is completed, when the user lifts the cover body from the pot body, part of the water vapor or oil and water accumulated on the flange of the pot body flows toward the liquid receiving groove along the surface of the flange, and flows or drips into the notch of the liquid receiving groove under the action of gravity. At this time, some liquid may flow downward along the outer wall of the pot, and when it contacts the contact part of the liquid receiving groove, it will be guided to the direction of the notch, and flows into the liquid receiving groove. At the same time, the liquid accumulated on the cover body flows downward to the inner edge under the action of gravity, and is buffered by the inner edge, concentratedly guided in the direction of the notch, and flows into the liquid receiving groove through the notch. Based on the above, after the cooking operation is completed, especially at the moment when the pot is lifted, the user does not need to worry about water vapor or liquid mixed with oil stains randomly splashing into the cooking device or the external environment, which satisfies the user's operating experience.

Please refer to FIG. 45 and FIG. 46. In terms of collecting water vapor and liquid mixed with oil, in this embodiment, a leakage hole 133 is provided in liquid receiving groove 132, and a drainage channel 134 is provided in the column 130. The leakage hole 133 is provided at the bottom of the liquid receiving groove 132 along the gravity direction of the downward flow of liquid, and penetrates the bottom of the liquid receiving groove 132. The inlet end 1341 of the drainage channel 134 is in connection with the bottom of liquid receiving groove 132 and interconnects with the leakage hole 133; the outlet end 1342 of the drainage channel 134 extends along the gravity direction or the axis direction of the column 130 and interconnects with the external environment. The liquid receiving groove 132 may also optionally be provided with a flow guide slope 1324 that is inclined toward the direction of the leakage hole 133, which may be the bottom surface in the liquid receiving groove 132 or the inner wall surface of the liquid receiving groove 132. In some embodiments, the flow guide slope 1324 may be the bottom surface of the side of the liquid receiving groove 132 facing the cooktop 140, or the bottom surface that is inclined from the two opposite sides of the liquid receiving groove 132 on the column 130 toward the side of the cooktop 140. The flow guide slope 1324 may extend to the leakage hole 133. In other embodiments, the inner diameter of the liquid receiving groove 132 may also be set to gradually taper from the groove opening 1321 toward the leakage hole 133, so that the entire wall surface in the liquid receiving groove 132 forms an inclined flow guide slope 1324. The above are just examples, but are not limited thereto.

Therefore, when the liquid flows from the notch 1321 into the liquid receiving groove 132, it will be guided by the flow guide slope 1324 to the leakage hole 133 and flow into the guide channel 134. The outlet end 1342 of the drainage channel 134 may be interconnected with the water pipeline of the external environment, so that the liquid may be discharged to the corresponding device for purification treatment or waste treatment. In the embodiment of the present disclosure, a detachable liquid box 135 is optionally provided at one end of the column 130 connected to the base 110 to collect the liquid flowing into liquid receiving groove 132. The liquid box 135 is provided with a liquid collection port 1351, which position corresponds to the outlet end 1342 of the drainage channel 134, and the liquid collection port 1351 is interconnected with the outlet end 1342, so that the liquid may flows into the liquid box 135 pass through the liquid collection port 1351 after flowing out of the outlet end 1342. It may be understood that an inclined plane 1352 inclined toward the inside of the liquid box 135 may also be provided at a position corresponding to the liquid collection port 1351 in the liquid box 135, so that the liquid may better flow into the internal space of the liquid box 135, to prevent oil dirt from adhering to the liquid collection port 1351 and causing obstruction.

In the application scenario of this embodiment, after the liquid flows into the liquid receiving groove, the user waits for the liquid to flow into the liquid container through the leakage hole and the drainage channel. After the liquid has been collected for a period of time, the user only needs to remove the liquid container from the column. After taking it out, pouring out the liquid and cleaning the liquid box, the liquid box may be installed on the column again. It is quite easy to operate and does not require extensive cleaning of the cooking device to complete daily maintenance.

For the cleaning and maintenance of liquid receiving troughs and drainage channels that are also susceptible to liquid contamination, in some embodiments of the present disclosure, structures such as the liquid receiving groove and the drainage channel for collecting and guiding liquids may be selectively configured in a disassemble method for easy disassembly and cleaning.

See FIG. 45 and FIG. 47 to FIG. 51. In the embodiment of the present disclosure, the column 130 includes a column body 136 and a flow guide bracket 137 detachable from the column body 136. The column body 136 is provided on the base 110, and the flow guide bracket 137 is detachably provided on an end of the column body 136 away from the base 110. The flow guide bracket 137 includes a sleeve 1371, a liquid receiving groove 132 and a flow guide tube 1372. The pivoting part 131 and the liquid receiving groove 132 are respectively provided on the upper half and the lower half of the sleeve 1371, and the sleeve 1371 has a sleeve hole 1373 for being sleeved on the column body 136. The liquid receiving groove 132 is provided on the surface of the sleeve 1371, and a notch 1321 is provided at the top of the liquid receiving groove 132, so that the notch 1321 is adjacent to the pivot part 131 to facilitate receiving the liquid flowing from the pot cover 20 and the pot 30. The liquid leakage hole 133 is provided eccentrically at the bottom of the liquid contact groove 132 relative to the sleeve hole 1373 and penetrates the liquid contact groove 132. The position of the liquid leakage hole 133 in the liquid contact groove 132 may be along the direction of gravity of the liquid contact groove 132, or along the axis direction of the sleeve hole 1373, so that when the liquid flows into the liquid receiving groove 132, it may naturally flow into the leakage hole 133 due to gravity. One end of the guide tube 1372 is in connection with a position where the leakage hole 133 is provided at the bottom of liquid receiving groove 132, and the other end extends along the gravity direction of liquid receiving groove 132 or the axial direction of the sleeve hole 1373. The drainage channel 134 is provided in the drainage tube 1372, and may be selectively provided coaxially or off-axis with the drainage tube 1372, depending on the appearance and structure of the drainage tube 1372 or the relative position of liquid port 1351 of the liquid box 135.

As described in the previous embodiment, the bottom surface of the liquid receiving groove 132 is provided with a flow guide slope 1324 extending toward the leakage hole 133. Moreover, there are a bent section 1331 and a vertical section 1332 connected with each other in the leakage hole 133. The bent section 1331 and the vertical section 1332 may be formed by extending from the bottom surface of the liquid receiving groove 132 into the liquid leakage hole 133, or by extending the flow guide slope 1324 into the liquid leakage hole 133. In this embodiment, the bent section 1331 and the vertical section 1332 are used as part of the bottom surface as an example. The bent section 1331 is in connection with the flow guide slope 1324, and the vertical section 1332 extends along the direction of gravity. In some embodiments of the present disclosure, the vertical section 1332 may extend to be flush with the outer surface of the bottom of the liquid receiving groove 132, or extend outside the liquid receiving groove 132, and protrude from the bottom of the liquid receiving groove 132 to make the leakage hole form a nozzle structure, so that the liquid may better flow from the inlet end 1341 of the drainage channel 134 through this structure. Therefore, in an embodiment in which the vertical section 1332 protrudes from the bottom of the liquid receiving groove 132 so that the leakage hole forms a nozzle structure, the outer diameter of the side of the vertical section 1332 adjacent to the bent section 1331 may be set to be larger than the outer diameter of the side away from the bent section 1331. On the outer diameter of one side of the bent section 1331, the leakage hole 133 forms a sharp mouth or funnel structure with an outer diameter that is wider at the top and narrower at the bottom at the inlet end 1341 of the drainage channel 134, thereby reducing the flow of liquid to the end edge of the leakage hole 133. The contact area makes it easier for the liquid to fall toward the liquid box 135 due to gravity, thus improving the liquid collection efficiency.

In the application scenario of the above embodiment, during the cooking process, the moisture or oily liquid flowing into the liquid receiving groove from the pot cover and/or body may be guided to the leakage hole through the diversion slope. In the leakage hole, the liquid is affected by the rounded corner structure of the bent section and flows into the vertical section. Since the cross-sectional area of the leakage hole at the outlet of the vertical section is small, the gravity of the liquid is greater than the adhesion at the outlet and the liquid slides down into the drainage channel, and flows along the drainage channel into the liquid box. At this time, the user may remove the liquid box from the column for cleaning, and simultaneously or periodically remove the guide bracket from the column for cleaning and maintenance, so that the cooking device as a whole may be kept clean and meet user needs.

Compared with the above-mentioned waste management of liquids such as condensed water or oil and water in cooking device, another issue worthy of attention is the seasoning feeding and steam management of cooking device. At present, most of the feeding methods of this type of cooking device are to manually or automatically open the lid of the pot and then add it manually. This solution cannot centrally manage the steam, causing the steam water stains to stick to the base or the cooktop, affecting the user experience. Second, the lid is opened frequently to artificially add ingredients and the amount may not be controlled, which affects the cooking experience and taste.

Therefore, the embodiment of the present disclosure also proposes a new implementation technical solution for the position of the seasoning entrance and the steam management port of cooking device such as cooking machines, food processors, and chef machines, making it more convenient and cleaner for a user to cook.

Referring to FIGs. 45, 52 and 53, the cleaning device 1 provided by the embodiment of the present disclosure includes a base 10 and a pot cover 20, in which a feeding hole 225 and an exhaust port 226 are provided on the outer surface 224 of the cover body 220 of the pot cover 20, respectively penetrating to the inner surface 221 of the cover body 220. The cantilever 210 of the pot cover 20 includes a main body 212 and a smoke exhaust pipe 213. The front end 2121 of the main body 212 is in connection with the cover body 220, and the rear end 2122 is pivotally connected to the column 130 of the base 10, so that the cover body 220 may be lowered to the cooking position and lifted to the pot-raising position above the base 10. In addition, the main body 212 is provided with a spatula mounting part 2123 and a feeding pipe 2124. The spatula mounting part 2123 is provided on the bottom surface of the front end 2121 for mounting the spatula assembly on the cantilever 210. The feeding end 2124a of the feeding pipe 2124 is provided at the rear end 2122 of the main body 212 and extends out of the main body 212 to receive seasonings from an external supply source. The discharging end 2124b of the feeding pipe 2124 is provided at the front end 2121 of the main body 212 and is interconnected with the feeding hole 225 to supply seasonings into the feeding hole so as to be added to the pot body through the feeding hole.

In some embodiments of the present disclosure, the feeding hole 225 and the exhaust hole 226 are provided on the cover body 220. The feeding hole 225 is located within the projection range of the cantilever body 212 of the pot cover 10 on the horizontal plane, and the exhaust hole 226 is in square or circular shape, in order to promptly discharge the smoke during the cooking process, the area of the smoke exhaust port is greater than or equal to 1000 square millimeters. The exhaust hole 226 is adjacent to the cantilever body 212 of the pot cover 10, and the feeding hole 225 and the exhaust hole 226 are located on both sides of the axis extending from the front end to the rear end of the pot cover cantilever body 212. Relative to the axis 2123 of the spatula mounting part, the handle 230 is located on the front side of the pot cover body 220, and the feeding hole 225 and the exhaust hole 226 are both located on the rear side of the pot cover body 220. The feeding hole 225 and the exhaust hole 226 are adjacent to and surrounding the axis 2123. In order to prevent interference, the distances between the feeding hole 225 and the axis 2123, and the exhaust hole 226 and the axis 2123 range from 30MM to 100MM. This position of the exhaust hole 226 may prevent the smoke discharged from the exhaust hole 226 from harming the cooking user. The feeding pipe 2124 may be in the form of a single pipe passing through the main body 212, or may be composed of multiple components. In the embodiment of the present disclosure, the feeding pipe 2124 includes an outer pipe 2124c, an inner pipe 2124d and a feeding joint 2124e. One end of the outer pipe 2124c is inserted into the rear end 2122 of the main body 212, and the other end extends out of the main body 212 as the feeding end 2124a. The inner pipe 2124d is provided in the lower housing 212a of the main body 212 and is connected between the outer pipe 2124a and the feeding joint 2124e. The feeding joint 2124e is provided in the lower housing 212a and exposed on the bottom surface of the lower housing 212a for docking with the feeding hole 225 on the cover body 220. Through the above configuration, only the upper housing 212b is removed from the lower housing 212a of the main body 212, and the components of the feeding pipe 2124 may be disassembled, assembled and replaced. In terms of installation, maintenance and cleaning of the feeding pipe 2124 is quite simple and efficient.

In addition, in the embodiment of the present disclosure, the feeding joint 2124e may be, but is not limited to, fixed on the lower housing 212a of the main body 212 through a buckle, and the discharge end 2124b located on the feeding joint 2124e is inserted into the feeding hole 225 of the cover body 220, allowing the seasoning to flow into the pot body 310 through the feeding pipe 2124, thereby completing the seasoning action. Since the opening of the pot cover 20 is not involved in this process, the frequency of manually opening the pot cover 20 may be reduced, and the amount of seasoning added may be controlled. At the same time, water vapor in the pot body 310 may be avoided from escaping, the water ratio may be maintained, and the food texture may also be maintained.

As shown in FIG. 54 and FIG. 55, at the same time, at the position where the feeding joint 2124e and the corresponding feeding port 225 are provided, the feeding joint 2124e and the smoke exhaust pipe 213 are respectively provided on the opposite sides of the spatula mounting part 2123, so that the feeding joint 2124e and the smoke exhaust pipe 213 are respectively located on two sides of the axis of the main body 212 (or the axis of the spatula mounting part 2123). At the same time, the feeding hole 225 and the exhaust port 226 on the cover body 220 are also located on opposite sides of the spatula mounting part 2123 to be connected to the feeding joint 2124e and the smoke exhaust pipe 213 respectively. Therefore, without contacting the centrally located spatula mounting part 2123, the feeding joint 2124e and the feeding hole 225 may be closer to the horizontal and vertical axes of the spatula mounting part 2123, thereby preventing seasonings from being added to the outer ring of the pot body 310, thus preventing uneven mixing from affecting the taste of the food. At the same time, it may also prevent the seasoning from being guided by the rising airflow and flowing to the exhaust port 226, and from being scattered to the external environment.

As shown in FIGs. 52, 17 and 56 to 23, the smoke exhaust pipe 213 is provided adjacent to the front end 2121 of the main body 212, corresponding to one side 2125 of the exhaust port 226, and are detachably combined with each other through matching connecting component. For example, in some embodiments of the present disclosure, matching magnet and iron sheet, or magnetically attracted magnet and matching magnet, may be provided between the smoke exhaust pipe 213 and the side 2125 of the main body 212 to make the smoke exhaust pipe 213 attach to the side 2125 through magnetic force. In other embodiments of the present disclosure, matching hook and buckle groove may also be provided between the smoke exhaust pipe 213 and the side 2125 of the main body 212 to fix the smoke exhaust pipe 213 to the main body 212 through the buckle mechanism. In this embodiment, the magnet 2131 is provided on the smoke exhaust pipe 213 and the matching magnet 2 that is magnetically attracted to the magnet 2131 is provided on the side of the main body 212 as an example, but it is not limited to this.

The smoke exhaust pipe 213 includes a flue 2132 and a magnet 2131, and the flue 2132 is covered with a flue rubber 2133. The magnet 2131 is provided on the surface of the flue 2132 and embedded in the flue rubber 2133, so that a bump 2134 outwardly raised is formed on the surface of the flue 2132. At the same time, a corresponding groove 2125b is provided on the side 2125 of the main body 212, so that the smoke exhaust pipe 213 and the side 2125 of the main body 212 may be combined with each other through the concave and convex matching structure of the bump 2134 and the groove 2125b, and to block the smoke exhaust pipe 213 of the displacement along the axial direction of the main body 212, to prevent the smoke exhaust pipe 213 and the exhaust port 226 from deviating from each other and failing to connect. In addition, the bump 2134 is selectively provided with a guide inclined surface 2134a in the axial direction of the flue 2132, and an inclined plane 2125c matching the guide inclined surface 2134a is provided in the groove 2125b. Therefore, when the smoke exhaust pipe 213 is combined with the side 2125 of the main body 212, the guide inclined surface 2134a and the inclined plane 2125c are in contact with each other along the axial direction of the smoke exhaust pipe 213 in the concave and convex structure to provide upper and lower limits, to limit the smoke exhaust pipe 213 being displaced along its axial direction to prevent the smoke exhaust pipe 213 from being pulled away from the exhaust port 226. Based on the above, through the front and rear limits and the upper and lower limits of the concave and convex structure, the smoke exhaust pipe 213 may be correctly and stably installed on the side 2125 of the main body 212, and the smoke generated during the cooking process may pass through the exhaust port 226 and the smoke exhaust pipe 213 being excluded centrally.

Secondly, in some embodiments of the present disclosure, a sealing ring 214 is provided at one end of the smoke exhaust pipe 213 facing the exhaust port 226, which may be formed by, but is not limited to, extending from the flue rubber 2133. The surface of the sealing ring 214 is provided in an inclined way with a flange 2141, which protrudes from the end of the smoke exhaust pipe 213 at a certain angle. When the smoke exhaust pipe 213 is combined with the main body 212 and docked with the exhaust port 226, the sealing ring 214 is attached to the outer periphery of the exhaust port 226 on the surface of the cover body 220, and the flange 2141 is embedded in the exhaust port 226, and make the smoke exhaust pipe 213 and the exhaust port 226 form an end face seal. During this process, the smoke exhaust pipe 213 is subjected to the downward force of the vertical slope formed when the guide inclined surface 2134a and the inclined plane 2125c in the concave and convex structure are in contact with each other, and the smoke exhaust pipe 213 is pulled down toward the exhaust port 226, to make which attaches to the surface of the cover body 220 to form an airtight structure to achieve the purpose of centralized emission of smoke.

Further, the overall height of the smoke exhaust pipe 213 on the cover body 220 may also be selectively set to be higher than the height of the main body 212 on the cover body 220 by a distance d, so that the concentrated smoke may smoothly escape from the smoke exhaust pipe 213 to dissipate to the external environment without allowing the smoke to escape into the main body 212, so as to avoid leaving stains on the main body 212 and affecting the user experience. In some embodiments, in order to prevent the smoke in the smoke exhaust pipe 213 from harming the cooking user, the smoke exhaust pipe 213 extends upward from the exhaust port 226 to a predetermined height, and the height range is: 50MM-150MM, preferably 75MM, the extension height of which is greater than the height of the cantilever body 212 of the pot cover.

In addition, in the above embodiment, since the position between the smoke exhaust pipe 213 and the main body 212 is limited by magnetic attraction and the concave and convex structure, the smoke exhaust pipe 213 may be disassembled and cleaned when cooking is completed. In some embodiments of the present disclosure, a pressing portion 2135 is selectively provided at the end of the smoke exhaust pipe 213 away from the exhaust port 226 and extends a predetermined distance along the radial direction of the smoke exhaust pipe 213 to lengthen the force arm, allowing the pressing portion 2135 to drive the smoke exhaust pipe 213 to be separated from the main body 212 and the exhaust port 226 at the same time, so as to facilitate the disassembly and removal of the smoke exhaust pipe 213.

Please refer to FIG. 60 and FIG. 61. The pot cover provided by another embodiment of the present disclosure is roughly the same in structure as the pot cover of the above-mentioned embodiment. The difference between the two is that in this embodiment, a detection module is provided on the main body 212 of the cantilever 210, and an element to be detected that cooperates with a detection module is provided on the smoke exhaust pipe 213. The detection module is used to sense the element to be detected and identify whether the smoke exhaust pipe 213 and the main body 212 are combined or separated. Therefore, the detection module and the element to be detected may be, but are not limited to, provided in a concave-convex structure matching between the side 2125 of the main body 212 and the smoke exhaust pipe 213. For example, the detection module is provided in the lower shell 212b of the main body 212 corresponding to the position of groove 2125b, the element to be detected is provided on the side of the smoke exhaust pipe 213 where the bump 2134 is formed. Moreover, the detection module may be, but is not limited to, a photoelectric sensor, a Hall sensor, a micro switch, etc. The element to be detected may be a corresponding reflector, magnet and contact point.

In this embodiment, the detection module is the Hall sensor 215 and the element to be detected is the magnet 2131 as an example, but it is not limited to this. When the cooking process is in progress, if the smoke exhaust pipe 213 is not installed on the exhaust port 226, the Hall sensor 215 located in the main body 212 cannot detect the magnet 2131 on the smoke exhaust pipe 213, so the detected Hall voltage is a low value, and then after receiving this signal, a pop-up window will pop up on the display operation panel of the base to remind the user to install the smoke exhaust pipe 213. The user may choose to skip it or install it in time and continue cooking. When the smoke exhaust pipe 213 is installed and the Hall sensor 215 detects that the Hall voltage is high, the pop-up window will not appear and the user may use it normally. Through this configuration, when performing a cooking procedure that easily generates a large amount of oily smoke, the user may be prompted so that the user may install the smoke exhaust pipe 213 in real time to facilitate smoke management.

See FIG. 62 to FIG. 65. The pot cover 20 provided in the embodiment of the present disclosure may optionally be provided with a handle 230 on the cover body 220, so that the cover body 220 may be detachably coupled to the main body 212 of the cantilever 210 to facilitate the disassembly, assembly and cleaning of the cover body 220. The cover body 220 is provided with a mounting hole 227, and the handle 230 is correspondingly provided in the mounting hole 227. The spatula mounting part 2123 located on the main body 212 is coupled to the handle 230 and engaged in the mounting hole 227.

The handle 230 includes a housing 231 and two support arms 232 that are telescopic relative to the housing 231. At the same time, the front end 2121 of the main body 212 is provided with two fulcrums 2121a to cooperate with the two support arms 232, which are respectively provided on two opposite sides of the spatula mounting part 2123. The handle 230 may be extended toward the front end 2121 of the main body 212 through the two support arms 232 and combined with the corresponding fulcrum 2121a to complete the installation of the cover body 220 on the cantilever 210; or the two support arms 232 retract in the direction towards the housing 231 to separate it from the corresponding fulcrum 2121a, so as to remove the cover body 220 from the cantilever 210.

The housing 231 of the handle 230 is provided with a pressing part 233 and a mounting base 234. The pressing part 233 is used to drive the two support arms 232 to telescope relative to the housing 231, and the mounting base 234 is used to provide the spatula mounting part 2123 on the main body 212 to combine. The two support arms 232 are provided on the housing 231 in pairs. Each support arm 232 includes a sliding rod 2321, an elastic element 2322 and a lever 2323. One end of the sliding rod 2321 is inserted into the mounting base 234, and the other end extends out of the mounting base 234. The elastic element 2322 and the lever 2323 are provided in the housing 231. One end of the elastic element 2322 is fixed in the housing 231, and the other end corresponds to the sliding rod 2321, and prevents the sliding rod 2321 from retracting toward the mounting base 234, so that the sliding rod 2321 is normally maintained in a state of extending from the mounting base 234. The lever 2323 is pivoted in the housing 231 and may rotate in the horizontal direction. One end of the lever 2323 contacts the side of the end surface of the sliding rod 2321 away from the elastic element 2322, and the other end extends toward the pressing portion 233.

When an external force is applied to the pressing part 233, the pressing part 233 pushes the lever 2323 toward the mounting base 234, causing the lever 2323 to reversely rotate in the horizontal direction, thereby pushing against the end surface of the sliding rod 2321 and driving the sliding rod 2321 to retract toward the mounting base 234 and compress the elastic element 2322. Moreover, when the external force is released from the pressing part 233, the sliding rod 2321 is pushed by the elastic restoring force of the elastic element 2322, extends toward the mounting base 234, and drives the lever 2323 to reversely rotate in the horizontal direction and return to the starting state. Therefore, through the above-described quick-release configuration, the cover body 220 may be easily and quickly disassembled and assembled on the cantilever 210.

In other embodiments of the present disclosure, a groove 2123a extending along the axial direction may also be selectively provided on the spatula mounting part 2123, and the fulcrums 2121a on both sides are provided with a retaining groove 2121b and a bump 2121c. At the same time, a positioning element 2341, such as a slider, that matches the groove 2123a is provided on the mounting base 234 of the cover body 220, and a guide surface 2321a is provided at an angle at one end of the sliding rod 2321 extending out of the mounting base 234. Through the configuration of the above structure, the cover body 220 may be combined with the main body 212 of the cantilever 210 through a bottom-up assembly method.

In operation, the cover body 220 is inserted into the groove 2123a of the spatula mounting part 2123 through the positioning element 2341 of the mounting base 234, and force is exerted on the cover body 220, so that the cover body 220 outputs force upward in the direction of the axis of the spatula mounting part 2123 under the guidance of groove 2123a. When the sliding rod 2321 contacts the fulcrum 2121a, the guide surface 2321a of the sliding rod 2321 is pushed by the bump 2121c of the fulcrum 2121a, causing the sliding rod 2321 to retract toward the mounting base 234. As the cover body 220 continues to move upward, when the guide surface 2321a of the sliding rod 2321 passes through the bump 2121c of the fulcrum 2121a, the sliding rod 2321 is pushed by the elastic restoring force and extends in the direction of the fulcrum 2121a, so that the end the sliding rod 2321 providing with the guide surface 2321a is correspondingly engaged in the retaining groove 2121b of the fulcrum 2121a. At this time, the synergy of the positioning element 2341 and the two fulcrums 2121a forms a three-point support, so that the cover body 220 and the spatula mounting part 2123 form a complete force field, supporting the cover body 220 from falling, thereby achieving the installation of the cover body 220 on the cantilever 210.

When the user needs to remove the cover body 220 for maintenance or cleaning, the user only needs to lightly press the pressing part 233 at the front end of the handle 230, the lever 2323 is pushed to rotate around its rotation center through the pressing part 233, thereby driving the sliding rod 2321 to move backward and compress the elastic element 2322. At this time, the sliding rod 2321 retracts from the retaining groove 2121b on the cantilever 210, causing the cover body 220 to lose two supporting points, so that the cover body 220 may be removed. After cleaning, the cantilever 210 may be installed back according to the above installation method.

Therefore, in this embodiment, at a certain tilt angle, the cover body 220 may be easily installed by simply pushing the cover body 220 upward in the direction of the front end 2121 of the cantilever 210, and may be easily disassembled for cleaning by lightly pressing the pressing portion 233 of the handle 230, allowing the user to have a better experience when cooking.

See FIG. 54, 58, 66, and 67. It is worth noting that in some embodiments of the present disclosure, the cover body 220 also includes a flat area 240 and a bending area 250. The flat area 240 is a flat area on the cover body 220 that is relatively flat relative to other areas, and the flat area 240 extends outward from the center of the cover body 220 in a horizontal direction (radial direction). The bending area 250 surrounds the periphery of the flat area 240 and is bent toward the direction of the base 10, thereby forming an arcuate area on the cover body 220. Through the arrangement of the flat area 240, it is easier to guide and recover condensed water on the cover body 220 during the cooking process. Moreover, each component connected to the cover body 220 may be better provided on the cover body 220, such as the handle 230, the cantilever 210, the spatula assembly 40, etc. At the same time, the smoke exhaust pipe 213 and the feeding joint 2124e may be better and accurately positioned on the cover body 220, and the sealing effect may be ensured after being connected to the exhaust port and the feeding hole, ultimately forming a reliable, sealed, and concentrated smoke exhaust structure.

In addition, this configuration of the cover body 220 may also be used in other embodiments of the present disclosure, to quickly guide the stained water droplets remaining on the cover body 220 into the pot body 310 through the curvature of the bending area 250, which plays the role of convenient collection and pouring. At the same time, when the cover is opened, the ratio of the flat area 240 and the bending area 250 may also be adjusted to match the position of the liquid receiving groove 132 provided on the column 130 of the base 10. Therefore, the water droplets formed on the cover body 220 after the cooking process will gradually converge from the flat area 240 to the bending area 250 on the edge, and finally flows towards the receiving groove 132 down into the leakage hole through the guiding of inner edge 223 (for example, the sealing ring) provided on the bending area 250, to achieve the purpose of collecting and processing the liquid on the cover body 220.

In some embodiments of the present disclosure, the cover body 220 includes a flat area 240 and a bending area 250 which are co-centric, and the feeding hole 225 and the exhaust hole 226 are located in the flat area 240. When the square aperture of the exhaust hole 226 is large enough, the exhaust hole 226 may extend from the flat area 240 to the bending area 250, but the exhaust hole 226 is at least partially located in the flat area 240. In order to ensure the stability of the cover body 220 and the backflow of water vapor inside, the diameter of the flat area 240 ranges from 150mm to 200mm, such as 165mm, 170mm, or 190mm. In the ring formed by the flat area 240 and the bending area 250, the diameter of the flat area is greater than or equal to half of the maximum diameter of the ring in the bending area. The bending area 250 is bent toward the direction of the base 10, and its radius of curvature is greater than.

In some embodiments of the present disclosure, the cross-section of the cover body 220 is an arc-shaped structure, and the curvature radius of the arc ranges from 350mm to 1500mm, such as 400mm, 670mm or 1250mm.

It is understandable that in the use of cooking device, in addition to technical issues such as the recovery of waste liquid accumulated on the pot cover and the exhaust of oil fume, another technical issue worth noting is the cleaning procedure inside the pot body. For example, in the current use of automatic cooking pots, after the customer finishes cooking, there is a large amount of residual oil and residue on the inner cavity and lid of the pot, which requires the customer to clean it manually. In this regard, embodiments of the present disclosure also provide a cleaning device, which is equipped with a spatula assembly that may be used for cooking and be suitable for cleaning the cavity of the pot body.

As shown in FIGs. 65 and 68, the cooking device 1 provided by the embodiment of the present disclosure includes a pot 30. The pot 30 includes a pot body 310, a pot cover 20 and a spatula assembly 40. In some embodiments of the present disclosure, the cooking device 1 may further include a base 10 for carrying the pot body 310. The cover body 220 of the pot cover 20 is driven by the cantilever 210 to close or lift on the pot body 310. When the cover body 220 covers the pot body 310, the inner cavity of the pot body 310 forms a sealed space for cooking ingredients, that is, a cooking cavity is formed. The spatula assembly 40 is provided on the pot cover 20 and extends into the inner cavity of the pot body 310 when the pot cover 20 covers the pot body 310 to stir the ingredients and to scrub the bottom surface 313 and the inner wall surface 314 of the pot body 310 and the inner surface 221 of the pot cover 20 after the cooking process. In addition, in some embodiments of the present disclosure, the cooking device 1 may be an intelligent Internet of Things terminal device including a control module. The control module may be, but is not limited to, a computer-readable storage medium containing a computer program stored therein. When the computer program is executed, it may implement the steps in the self-cleaning method and control method of the cooking device provided by the embodiments of the present disclosure. Accordingly, embodiments of the present disclosure may be provided as a method, system, or computer program product; may take the form of an entirely hardware embodiment, an entirely software embodiment, or an embodiment that combines software and hardware aspects. It may also take the form of a computer program product implemented on one or more computer-usable storage media (including but not limited to disk storage, CD-ROM, optical storage, etc.) containing computer-usable program code. In a typical configuration, a computing device includes one or more processors (CPUs), input/output interfaces, network interfaces, and memory. Memory may include non-permanent storage in computer-readable media, random access memory (RAM) and/or non-volatile memory, such as read-only memory (ROM) or flash memory (flash RAM). The above are just examples to illustrate the possible forms and compositions of the control module, but are not limited thereto.

In the above embodiment of the present disclosure, the control module may be used to drive the cantilever 210 of the pot cover 20 to swing, so that the cover body 220 may be opened and closed on the pot body 310, and the spatula assembly 40 may be driven to move. The control module may be according to the menu content intelligently selected by the user or the control module before the cooking device 1 starting, such as the menu stored in the cooking device 1, or the menu obtained from the Internet of Things, makes adaptive adjustments to the movement mode of the spatula assembly 40 so that the spatula of the spatula assembly 40 may be used in multiple modes such as revolution, rotation, and lifting within the pot body 310 to realize a 360-degree self-cleaning operation program within the pot body 310 without any dead ends.

Please refer to FIG. 69 to FIG. 72. The spatula assembly 40 is located in the cooking cavity. The spatula assembly 40 includes a driving apparatus 410, a spatula 420, a transmission apparatus 430 and a lifting apparatus 440. The driving apparatus 410 is in driving connection with the spatula assembly and is used to drive the spatula 420 to rotate; for example, the driving apparatus 410 includes a rotation mechanism and a first power output shaft 412. The rotating mechanism includes a rotating motor 411 and a pulley. The rotating motor 411 is provided in the spatula mounting part 2123 at the front end of the cantilever 210. One end of the first power output shaft 412 is in connection with the rotating motor 411 through the pulley, and the other end passes through the cover body 220, and is in connection with the spatula 420 at a side of the inner surface 221 side of the cover body 220. The control module is electrically connected to the driving apparatus 410 and the lifting apparatus 440 respectively, and is used to selectively start the movement of the driving apparatus 410 and/or the lifting apparatus 440 according to cooking conditions, and adaptively control the rotational speed and/or lifting speed of the spatula 420. For example, the rotating motor 411 is started to drive the first power output shaft 412 to rotate, thereby driving the spatula 420 to revolve in the pot body 310 through the first power output shaft 412. During this process, the driving apparatus 410 starts the transmission apparatus 430 synchronously to drive the spatula 420 to rotate in the pot body 310. This is further explained below. The lifting apparatus 440 is provided on the cover body 220 and is in driving connection with the spatula 420. The lifting apparatus 440 is able to drive the spatula 420 to move up and down relative to the pot body 310 between the first position and the second position.

When the spatula 420 is in the first position, the spatula 420 is in close contact with the inner surface of the cover body 220; driven by the driving apparatus 410, the spatula 420 is able to clean the inner surface of the cover body 220 in the first position. When the spatula 420 is in the second position, the spatula 420 is out of contact with the inner surface of the cover body 220. For example, the first position may be the highest position where the spatula 420 rises, and the second position may be the lowest position where the spatula 420 descends.

When the spatula 420 is in the first position, the spatula 420 is in clearance fit or interference fit with the inner wall surface 314 of the pot body 310, and the spatula 420 is clearance fit or interference fit with the bottom surface of the pot body 310. When the spatula 420 is in the second position, the spatula 420 has an interference fit with the inner wall surface 314 of the pot body 310, and the spatula 420 has an interference fit with the bottom surface of the pot body 310. When the spatula 420 is in the second position, driven by the driving apparatus 410, the spatula 420 is able to clean the bottom surface and the inner wall surface 314 of the pot body 310 in the second position. When the spatula 420 is in the second position, the spatula 420 is in interference contact with the bottom surface and the inner wall surface 314 of the pot body 310, and is able to clean the bottom surface and the inner wall surface 314 of the pot body 310 in the first position. Therefore, at least it may be realized that when the spatula 420 rises to the first position, the spatula 420 cleans the cover body 220, and when the spatula 420 descends to the second position, the spatula 420 cleans the pot body 310. Thereby, while the spatula 420 is able to clean the pot, it also prevents the spatula 420 from being constantly in contact with the cover body 220 and the pot body 310 and causing wear and tear, thereby affecting the service life of the spatula 420. The spatula 420 includes a bracket 421, a mixing spatula 422 and an auxiliary spatula 423. The bracket 421 is in connection with the cover body 220. The mixing spatula 422 and the auxiliary spatula 423 may be respectively provided on the bracket 421, and both the mixing spatula 422 and the auxiliary spatula 423 may rotate relative to the cover body 220. The rotation axis of the mixing spatula 422 is parallel and spaced apart the rotation axis of the auxiliary spatula 423. Further, the rotation axis of the auxiliary spatula 423 may coincide with the central axis of the cover body 220. That is to say, the rotation center of the auxiliary spatula 423 is located at the rotation center of the cover body 220. When the auxiliary spatula 423 rotates, the inner surface of the cover body 220 may be evenly cleaned along the circumferential direction of the cover body 220.

Exemplarily, the bracket 421 is provided with a main shaft hole 4211 and an auxiliary shaft hole 4212 provided at intervals (as shown in FIG. 38). The first power output shaft 412 of the driving apparatus 410 is locked on the bracket 421 through the main shaft hole 4211, so that the bracket 421 may use the main shaft hole 4211 as the axis center to rotate driven by the first power output shaft 412. The mixing spatula 422 is in connection with the bracket 421 at a position corresponding to the auxiliary shaft hole 4212 through a second power output shaft 431. The second power output shaft 431 may be formed by extending from one end of the mixing spatula 422 connected to the bracket 421, which belongs to a part of the mixing spatula 422; or one of the components belonging to the transmission apparatus 430, externally connected to the mixing spatula 422.

The mixing spatula 422 may include a mixing part 4222 and a connecting component connecting the mixing part 4222 to the cover body 220. When the cover body 220 covers the pot body 310, the mixing part 4222 faces the bottom surface and the inner wall surface 314 of the pot body 310. Specifically, the connecting component may be a rod 4221 and a mixing part 4222. One end of the rod 4221 is in connection with the bracket 421. The mixing part 4222 is in connection with an end of the rod 4221 away from the bracket 421 and extends outward along the radial direction on at two opposite sides of the rod 4221. The extension distance of one side may at least cover the main shaft hole 4211 in the projection direction, for example, extends to the connection between the auxiliary spatula 423 and the bracket 421, so that when the mixing spatula 422 rotates in the pot body 310, both the central area and the peripheral area in the pot body 310 may be covered. In addition, the mixing part 4222 may be, but is not limited to, a sheet-like structure bent in opposite directions on opposite sides of the rod 4221, and the mixing part 4222 may be covered with an elastomer, such as resin, rubber or a combination thereof, so that the mixing part may bent and deformed when it collides with the hard material, and part of it is pressed against the hard material. Therefore, in this embodiment, the mixing part 4222 may interfere with the bottom surface 313 and the inner wall surface 314 in the inner cavity of the pot 310 when the cover body 220 covers the pot body 310, so that part of the mixing part 4222 bents and deforms when contacting the bottom surface 313 and the inner wall surface 314 in the pot body 310, to abut against the bottom surface 313 and the inner wall surface 314.

During the movement of the spatula 420 from the first position to the second position, the interference between the second execution part 4232 and the side of the pot body 310 increases. During the movement of the spatula 420 from the first position to the second position, the interference between the mixing part 4222 and the bottom surface of the pot body 310 increases.

The auxiliary spatula 423 is in connection with the side of the bracket 421 where the main shaft hole 4211 is provided, so that the auxiliary spatula 423 and the mixing spatula 422 are located on two sides of the main shaft hole 4211 opposite to each other respectively. The auxiliary spatula 423 includes a first execution part 4231 and a second execution part 4232. When the cover body 220 covers the pot body 310, the first execution part 4231 faces the inner surface of the cover body 220, and the second execution part 4231 faces the inner wall surface 314 of the pot body 310. The first execution part 4231 extends radially to the edge of the cover body 220 at the axis of rotation of the auxiliary spatula 423. The first execution part 4231 and the second execution part 4232 may be integrally formed or separately formed, and both may be L-shaped. The first execution part 4231 extends outward along the radial direction of the bracket 421, and the second execution part 4232 is in connection with the outwardly extending end of the first execution part 4231, that is, connected to the end of the first execution part 4231 away from the bracket 421, and the side of the bracket 421 on which the mixing spatula 422 is provided extends along the axial direction of the main shaft hole 4211 so that the horizontal positions of the second execution part 4232 and the mixing spatula 422 are located on the same side of the bracket 421. Therefore, when the cover body 220 covers the pot body 310, the auxiliary spatula 423 faces the inner surface 221 of the cover body 220 with the first execution part 4231, and faces the inner wall surface 314 of the pot body 310 with the second execution part 4232. Similarly, the first execution part 4231 and the second execution part 4232 are respectively covered with elastomers, so that the first execution part 4231 and the second execution part 4232 are respectively provided on the auxiliary spatula 423 in a form similar to a spatula or scraper. Therefore, the inner surface 221 of the cover body 220 and the inner wall surface 314 of the pot body 310 may be contacted with each other in an interference fit manner.

During the movement of the spatula 420 descending from the first position to the second position, the interferences between the spatula 420 and the inner wall 314 and bottom surface of the pot body 310 increases. That is, the contact pressures between the spatula 420 and 314 and the bottom surface increases. It may be understood that the greater the contact pressure between the spatula 420 and the inner wall of the pot body 310, the better the scraping effect on the inner wall of the pot body 310 will be when the spatula 420 rotates. When clean water or cleaning liquid is injected into the pot body 310, or steam is injected to clean the pot body 310, the greater the contact pressure between the spatula 420 and the inner wall of the pot body 310, the better the cleaning effect. Therefore, the contact pressure between the spatula 420 and the pot body 310 is controlled by the lifting apparatus 440, thereby allowing the cooking device to work in different cleaning modes or different cooking modes.

In some specific embodiments, when the spatula 420 is in the first position, the first execution part 4231 is in interference contact with the inner surface of the cover body 220, and the interference amount may be controlled at [0.05mm, 5mm]. Preferably, said interference amount is controlled at [0.1mm, 3.5mm].

When the spatula 420 is in the first position, the second execution part 4232 remains abutting against the inner wall surface 314 of the pot body 310. The actual position may be separating, abutting against, or interfering with. The gap between the second execution part 4232 and the side surface of the pot body 310 is kept at [-2mm, 2mm]. Preferably, said gap is kept at [-1mm, 2mm].

When the spatula 420 is in the first position, the mixing part 4222 remains abutting against the bottom surface of the pot body 310. The actual position may be separating, abutting against, or interfering with. The gap between the mixing part 4222 and the bottom surface of the pot body 310 is kept at [-1.5mm, 1.5mm], preferably, the gap is maintained between [-0.8mm, 0.8mm].

When the spatula 420 is in the second position, the first execution part 4231 is completely separated from the inner surface of the cover body 220, and the gap is controlled at [0.5mm, 6mm]. Preferably, the value is controlled at [1mm, 3mm]. When the spatula 420 is in the second position, the second execution part 4232 remains abutting against the inner wall surface 314 of the pot body 310. The actual position may be separating, abutting against, or interfering with, and the gap is controlled at [-2mm, 0mm]. Preferably, the value is controlled at [-1mm, 0mm].

When the spatula 420 is in the second position, the mixing part 4222 maintains interference with the bottom surface of the pot body 310, and the interference amount is controlled at [0.5 mm, 6 mm]. Preferably, the interference value is controlled at [0.5 mm, 3 mm]. It is worth noting that in the embodiment of the present disclosure, the sum of the length of the second execution part 4232 of the auxiliary spatula 423 extending along the axial direction and the height of the mixing part 4222 on the bottom surface 313 of the pot body 310 exactly matches The height of the inner wall surface 314 of the pot body 310 along the axis direction. Therefore, when the spatula 420 rotates in the pot body 310 driven by the first power output shaft 412, the contact area between the second execution part 4232 and the mixing part 4222 may surround the entire inner wall surface 314. In this embodiment, the sum of the extension length of the second execution part 4232 and the height of the mixing part 4222 is greater than the height of the inner wall surface 314, so that the second execution part 4232 partially overlaps the mixing part 4222 in the axial direction. In some embodiments of the present disclosure, the sum of the extension length of the second execution part 4232 and the height of the mixing part 4222 is exactly equal to the height of the inner wall surface 314. In addition, in other embodiments of the present disclosure, the second execution part 4232 and the mixing part 4222 may also be separated by a gap in the axial direction, and then driven up and down by the lifting apparatus 440 to achieve the effect of full contact with the inner wall surface 314.

At the same time, the arc angle transition may also be used at the connection between the second execution part 4232 and the first execution part 4231, so that the structural shape of which may be consistent with or adapted to the arc angle of the bending area 250 of the cover body 220. In this way, when the spatula 420 rotates in the pot body 310, the bottom surface 313 of the pot body 310 may be covered by the mixing part 4222 of the mixing spatula 422, and the inner wall surface 314 of the pot body 310 may be covered by the second execution part 4232 and the mixing part 4222, and the inner surface 221 of the pot cover 20 is covered by the first execution part 4231 and the second execution part 4232, thereby comprehensively covering all surfaces in the inner cavity of the pot body 310. In addition to better mixing ingredients during cooking, it may also have a comprehensive cleaning effect in subsequent cleaning procedures. In the embodiment of the present disclosure, the spatula assembly 40 is located inside the pot body 310 and may rotate under the driving of the driving apparatus 30 to stir the ingredients in the pot body 310. The driving apparatus 30 is in driving connection with the spatula assembly 40 through a first power output shaft 412 to drive the spatula assembly 40 to rotate around a rotation axis (i.e., the revolution axis in FIG. 75).

In order to prevent high temperature from affecting the service life and oil splash from contaminating the driving apparatus 30, in the embodiment of the present disclosure, the driving apparatus 30 may be installed on the outside of the pot cover 20, and a clearance hole is provided in the pot cover 20 for the output shaft of the driving apparatus 30 passing through to connect with the spatula assembly 40.

Please refer to FIGs. 69 and 75 in conjunction with the present disclosure. In the embodiment of the present disclosure, the spatula assembly 40 includes an auxiliary spatula 423. The auxiliary spatula 423 has a scraper arm 4233 and an extension arm 4234. The scraper arm 4233 is close to the inner wall of the pot body 310, and contacts with the inner wall of pot cover 20. In this embodiment, the auxiliary spatula 423 may be generally in the shape of a long strip, such as a long rod shape or a long plate shape. The scraper arm 4233 is in contact with the inner side wall of the pot cover 20. When the driving apparatus 30 drives the auxiliary spatula 423 to rotate, the scraper arm 4233 rotates to scrape off food residues and oil stains on the inner side wall of the pot cover 20 to achieve the purpose of cleaning the pot cover 20.

In order to better stir and stir-fry the ingredients, in some embodiments, the auxiliary spatula 423 also has a cleaning function. Specifically, the scraper arm 4233 has a horizontal scraping edge 4233a and a vertical scraping edge 4233b connected with each other. The horizontal scraping edge 4233a is in contact with the inner side wall of the pot cover 20, and is used to scrape off the food residue and oil stains on the inner side wall of the pot cover 20 to clean the pot cover. The vertical scraping edge 4233b extends downward from the horizontal scraping edge 4233a and is close to the inner wall of the pot body 310 for stirring the ingredients in the pot body.

In order to scrape off the food materials adhered to the inner wall of the pot body 310, stir with the mixing spatula 422, or similarly scrape the food materials on the inner wall of the pot body 310 to achieve cleaning purposes. In one embodiment, the vertical scraping edge 4233b is in contact with the inner wall of the pot body 310.

In order to better fit the shape of the pot and achieve better scraping effect, in one embodiment, the top surface of the horizontal scraping edge 4233a and the inner side wall of the pot cover 20 are provided in a profiling manner. The profiling here refers the shape of the top surface of the horizontal scraping edge 4233a matches the shape of the inner side wall of the pot cover 20, and the entire top surface of the horizontal scraping edge 4233a fully fits the inner side wall of the pot cover 20, so that the horizontal scraping edge 4233a may scrape the entire inner side wall of the pot cover 20 during the rotation of the auxiliary spatula 423. Similarly, the side surface of the vertical scraping edge 4233b is also provided in a profiling manner with the inner wall of the pot body 310, that is, the side shape of the vertical scraping edge 4233b matches the shape of the inner wall of the pot body 310.

In addition, the horizontal scraping edge 4233a and the vertical scraping edge 4233b are smoothly connected through arc edges, so as to be able to contact the connection between the pot body 310 and the pot cover 20, and remove the food at the connection between the pot body 310 and the pot cover 20 by scraping.

In order to avoid scratching marks on the pot body 310 and the pot cover 20, in one embodiment, a second elastic body 4236 is provided on the scraping arm 4233, and the scraping arm 4233 contacts the inner walls of the pot body 310 and the pot cover 20 through the second elastic body 4236. Optionally, the second elastic body 4236 may be integrally injection molded with the main body of the scraper arm 4233. The second elastic body 4236 is preferably soft rubber; the main body of the scraper arm 4233 is made of hard rubber to ensure strength. The one-piece injection molding method may reduce installation and prevent the two connected parts from detaching.

Please refer to FIGs. 75 and 76 in conjunction with the present disclosure. Further, in the embodiment of the present disclosure, the auxiliary spatula 423 also has an extension arm 4234. The scraper arm 4233 and the extension arm 4234 are respectively located on two sides of the rotation axis. The extension arm 4234 is provided with a protruding structure 4235, and the protruding structure 4235 abuts against the inner side wall of the pot cover 20.

In the embodiment of the present disclosure, when the spatula assembly 40 is in the state of cleaning the pot cover 20, the scraping arm 4233 of the auxiliary spatula 423 contacts the inner side wall of the pot cover 20 to clean the pot cover 20. In the direction in which the extension arm 4234 is close to the pot cover 20, another protruding structure 4235 extends out. Simultaneously, the protruding structure 4235 also contacts the inner side wall of the pot cover 20. When the reaction force generated by the pot cover 20 pushes the scraper arm 4233 downward, the extension arm 4234 located on the other side of the rotation axis has a tendency to tilt upward, so that the protruding structure 4235 always abuts against the inner side wall of the pot cover 20, thereby balancing the force of the pot cover 20 on the scraper arm 4233. Through the design of this solution, when the spatula assembly 40 is cleaning the pot cover 20, the forces at both ends are kept balanced, and the protruding structure 4235 of the auxiliary spatula 423 of the spatula assembly 40 is always in contact with the inner side wall of the pot cover 20, thereby achieving better cleaning effect of pot cover 20. The spatula assembly 40 makes full use of the balance of the auxiliary spatula 423 itself, to achieve complete and reliable contact between the auxiliary spatula 423 and the inner side wall of the pot cover 20. In the structural design, the problem of unilateral side tilt caused by processing errors and installation errors.

At the same time, the balancing protruding structure 4235 and the scraper arm 4233 are distributed on two sides of the rotation axis. The balancing protruding structure 4235 also takes into account the cleaning of the pot cover 20. The extension arm 4234 may be set to be shorter, close to the position of the rotation axis, to clean the position where the cleaning scraper arm 4233 cannot clean, performing compensating for each other. In this way, through the left and right balance design, the problem of the scraper arm 4233 being unable to fully and reliably contact the pot cover 20 caused by the unilateral tilt is solved, and at the same time, the cleaning ability of the auxiliary spatula 423 in the sanitary blind spots is enhanced.

In some embodiments, the extension arm 4234 has a predetermined length in the horizontal direction, and its length is less than or equal to the length of the horizontal scraping edge 4233a of the scraping arm 4233. The horizontal distance between the protruding structure 4235 and the rotation axis is less than or equal to the horizontal distance between the horizontal scraping edge 4233a of the scraping arm 4233 and the rotation axis. In some other embodiments, the extension arm 4234 includes a horizontal extension part and a vertical extension part (not shown). A protruding structure 4235 is provided on the horizontal extension part. The protruding structure 4235 on the horizontal extension part contacts the inner side wall of the pot cover 20. The vertical extension part is close to the inner side wall of the pot body 310; the extension arm 4234 and the scraper arm 4233 have the same structure, and both are symmetrical about the center of the rotation axis.

In some embodiments, the protruding structure 4235 and the second elastic body 4236 are distributed on two sides of the rotation axis and respectively contact the inner side wall of the pot cover 20. During the rotation of the spatula assembly 40, the protruding structure 4235 forms a circular first motion trajectory on the inner side wall of the pot cover 20, and the second elastic body 4236 forms a circular second motion trajectory on the inner side wall of the pot cover 20. The projections of the first motion trajectory and the second motion trajectory on the plane are at least partially coincided.

In some embodiments, the protruding structure 4235 is elongated, and the length direction of the protruding structure 4235 is along the width direction of the extension arm 4234 and extends to two opposite sides in the width direction of the extension arm 4234. In other embodiments, the length direction of the protrusion structure 4235 is along the length direction of the extension arm 4234. In this way, when the extension arm 4234 rotates about the rotation axis, the radius of action of the protrusion structure 4235 is larger and may scrape more are of the inner wall of the pot cover. Of course, in other embodiments, the protruding structure 4235 may also be in a point shape, such as a cylindrical shape or a hemispherical shape.

Multiple protruding structures 4235 may be provided on the extending arm 4234. The multiple protruding structures 4235 may be provided in a matrix, annular shape or a linear arrangement. Taking a linear arrangement as an example, the multiple protruding structures 4235 may be distributed at linear intervals along the length direction of the extension arm 4234.

The scraper arm 4233 and the extension arm 4234 are respectively provided on two sides of the rotation axis, including the following situations: the scraper arm 4233 and the extension arm 4234 extend in opposite directions, that is, the included angle between them is 180°. Alternatively, the scraper arm 4233 and the extension arm 4234 are respectively provided on two sides of the rotation axis, which also includes the following situations: the scraper arm 4233 and the extension arm 4234 generally extend in opposite directions, and the angle between them is close to 180°, for example, but not limited to 160°, as long as the two may maintain a balanced force. In order to achieve force balance and prevent the scraper arm 4233 from tilting downward, the angle between the scraper arm 4233 and the extension arm 4234 is set to be greater than 90°. In some other embodiments, the spatula assembly 40 includes at least one scraper arm 4233 and/or at least one extension arm 4234. For example, the spatula assembly 40 includes a scraper arm 4233 and an extension arm 4234. The scraper arm 4233 and the extension arm 4234 form a straight line. Alternatively, the spatula assembly 40 includes two scraper arms 4233 and two extension arms 4234, and the scraper arms 4233 and the extension arms 4234 form a cross-shaped auxiliary spatula 423. In addition, the spatula assembly 40 may also include more scraper arms 4233 and extension arms 4234, the plurality of scraper arms 4233 and extension arms 4234 being provided radially with the rotation axis as the center. Optionally, a plurality of scraping arms 4233 and extension arms 4234 are evenly distributed in the circumferential direction of the rotation axis, and the scraping arms 4233 and extension arms 4234 are alternately provided to form a symmetrical shape of the auxiliary spatula 423, so that the rotation of the auxiliary spatula 423 is more stable by taking the axis as the center.

The shape of the extension arm 4234 includes but is not limited to block, plate, rod, and cylindrical shapes. In addition, the length and width of the extension arm 4234 may be consistent, or the length of the extension arm 4234 may be much longer than the width, forming a strip shape.

In order to avoid wear on the pot cover 20, in one embodiment, at least part of the protruding structure 4235 is configured as a first elastic body 4235b, and the protruding structure 4235 contacts the inner side wall of the pot cover 20 through the first elastic body 4235b. In this embodiment, the first elastic body 4235b includes but is not limited to silicone, rubber or silicone rubber. At least, the portion of the protruding structure 4235 that contacts the inner side wall of the pot cover 20 is the first elastic body 4235b. In one embodiment, part of the protruding structure 4235 is a hard structure, and the other part is a first elastic body 4235b. Specifically, the protruding structure 4235 includes a connecting protrusion 4235a and a first elastic body 4235b, and the connecting protrusion 4235a is in connection with the extension arm. 4234, and the first elastic body 4235b wraps the connection protrusion 4235a. The connection protrusion 4235a is set to a hard structure, such as hard glue, to ensure strength. The first elastic body 4235b is soft rubber. The first elastic body 4235b wraps the entire outer side of the connecting protrusion 4235a, completely preventing the hard connecting protrusion 4235a from directly contacting the pot cover 20, thus preventing the pot cover 20 from being worn.

In order to facilitate the installation of the first elastic body 4235b, in one embodiment, the extension arm 4234 is provided with a mounting groove (not shown in the drawings). The mounting groove surrounds the connecting protrusion 4235a, and the edge of the first elastic body 4235b is engaged with the mounting groove. The installation groove may position and limit the first elastic body 4235b, reducing the possibility of movement of the first elastic body 4235b. At the same time, after the edge of the first elastic body 4235b is embedded in the installation groove, the edge of the first elastic body 4235b is fixed. The contact area between the first elastic body 4235b and the extension arm 4234 is large, and the fixing effect is good. Further, the first elastic body 4235b and the extension arm 4234 may also be integrally formed. In some other embodiments, the first elastic body 4235b entirely covers the outer surfaces of the extension arm 4234 and the connecting protrusion 4235a. The integrally wrapped structure reduces the gap, which is conducive to improving the cleaning effect of the spatula assembly 40.

Optionally, the connecting protrusion 4235a and the extension arm 4234 are integrally formed. For example, the connecting protrusion 4235a and the extension arm 4234 are both made of hard plastic injection molding. Of course, in other embodiments, the connecting protrusion 4235a and the extension arm 4234 may be made of stainless steel.

In another embodiment, the entire protruding structure 4235 is the first elastic body 4235b. The entire protruding structure 4235 may be integrally injection molded with the extension arm 4234. In order to ensure the strength and prevent the extension arm 4234 from being extruded and deformed, in one embodiment, the extension arm 4234 is injection molded with hard plastic.

In one embodiment, the length of the extension arm 4234 is shorter to reduce material usage. At the same time, the protruding structure 4235 is provided on the shorter extension arm 4234, close to the center of the pot cover 20, so that food residues at the center may be cleaned, and food residues in positions that are difficult to be cleaned by the scraper arm 4233 may be swept away. Of course, in other embodiments, the length of the extension arm 4234 may also be consistent with that of the scraper arm 4233. Further, the cooking device further includes a mixing spatula 422 installed on the extension arm 4234, and the mixing spatula 422 is located below the extension arm 4234. The mixing spatula 422 is located at the bottom of the pot body 310 to stir-fry the food in the pot body 310. The shape of the mixing spatula 422 may be a strip shape or a cross shape, etc.

The mixing spatula 422 has two motion states. In the first motion state, the mixing spatula 422 and the auxiliary spatula 423 rotate together. That is, when the auxiliary spatula 423 rotates around the rotation axis (the revolution axis in FIG. 38), it drives the mixing spatula 422 to revolve together. In the second motion state, the mixing spatula 422 itself also rotates around the rotation axis relative to the auxiliary spatula 423. The rotation axis and the revolution axis are parallel and both in the up and down direction. By rotating and revolving, the mixing spatula 422 has inconsistent rotation radii and different stirring ranges, which may better turn the ingredients at the bottom of the pot 310. The rotation and revolution may be performed at the same time, or only one of the rotations may be performed, for example, rotation and revolution may be performed alternately.

In the embodiment of the present disclosure, the protruding structure 4235 is provided at a position between the rotation axis and the revolution axis. Specifically, the auxiliary spatula 423 is provided with a rotation hole 4237, and the mixing spatula 422 has a second power output shaft 431 matched with the rotation hole 4237. The second power output shaft 431 may rotate relative to the rotation hole 4237, so that the mixing spatula 422 itself rotates. Along the direction of the rotation axis, the protruding structure 4235 may partially coincide with the rotation hole 4237.

The embodiment of the present disclosure also provides a spatula assembly 40. Please refer to the above-mentioned embodiments for the specific structure of the spatula assembly 40, which will not be described again here.

It should be noted that the first execution part 4231 in the above embodiment includes an extension arm 4234 and a horizontal scraping edge 4233a, and the second execution part 4232 is a vertical scraping edge 4233b.

In order to make the spatula 420 have a better cleaning effect on the pot body 310 and the cover body 220, the spatula 420 may be covered with an elastomer. The elastomer may be the first execution part 4231 including a first elastic part being used for scraping contact with the inner wall surface of the pot body 310; and/or the second execution part 4232 including a second elastic part being used for scraping contact with the inner wall surface 314 of the pot body 310; and/or, the mixing part 4222 including a third elastic body being used for scraping contact with the inner wall surface 314 of the pot body 310 and the bottom surface of the pot body 310. The first elastic part and the second elastic part may be integrally formed to form the above-mentioned second elastic body 4236.

As shown in FIG. 75 and FIG. 77, the first execution part 4231 includes a first rigid body, and the first elastic part covers the outer surface of the first rigid body; the second execution part 4232 includes a second rigid body, and the second elastic part covers on the second rigid outer surface. For example, the first rigid body and the second rigid body may be integrally formed, and the first rigid body and the second rigid body may be integrally die-cast to ensure reliable strength and hardness and increase the service life of the auxiliary spatula 423. The first elastic part and the second elastic part may also be integrally injection-molded and covered on the first rigid body and the second rigid body. It should be noted that the cross-sectional shapes of the first execution part 4231 and the second execution part 4232 may be the same. The cross-sectional shapes of everywhere of the first execution part 4231 and the second execution part 4232 may be the same.

A first elastic contact part J1 is formed on the first elastic part at a position for contacting the inner surface of the cover body 220. On the cross section of the first execution part 4231, the distance H1from the first elastic contact part J1 to the first rigid body is greater than the distance (W2, W3) from other positions on the first elastic part to the first rigid body. Therefore, when the first execution part 4231 cleans the cover body 220, due to the existence of the first rigid body, the entire first execution part 4231 may be prevented from being completely deformed, and due to the existence of the first elastic part, the execution part 4231 may be well fitted to the cover body 220 to ensure the cleaning effect. The distance H1 from the first elastic contact part J1 to the first rigid body is greater than the distance (W2, W3) from other positions on the first elastic part to the first rigid body, so that the side of the first execution part 4231 that contacts the cover body 220 has better deformation space further improves the cleaning effect.

The width W1 of the first elastic contact part J1 should be appropriate, and the width W1 of which should not be too large, so that the friction coefficient between the auxiliary spatula 423 and the cover body 220 and the inner wall 314 of the pot body 310 will not be too large, so that the resistance between 423 and the cover body 220 and the inner wall 314 of the pot body 310 is small, ensuring smooth rotation. The width W1 of the first elastic contact part J1 should not be too small to improve the wear resistance of the auxiliary spatula 423. Based on this, the width W1 of the first elastic contact part J1 may range from [0.1mm, 2mm]. Preferably, the width W1 range is controlled at [0.1mm, 1mm].

In some embodiments, the distance H1 between the first elastic contact part J1 and the first rigid body may range from [2 mm, 20 mm]. Preferably, the range H1 is controlled at [2 mm, 18 mm].

In some embodiments, the distance W2 from the side of the first elastic part to the first rigid body ranges from [0.5mm, 5mm]. Preferably, the range of W2 is controlled at [0.5mm, 3mm].

In some embodiments, the width W3 of the widest part of the first elastic part ranges from [3mm, 15mm]. Preferably, the range of W3 is controlled at [5mm, 12mm].

A second elastic contact part is formed on the second elastic part at a position for contacting the inner wall surface 314 of the pot. On the cross section of the second execution part 4232, the distance between the second elastic contact part and the second rigid body is greater than the distance from other positions on the second elastic contact part to the second rigid body. In this embodiment, the cross-sectional structures of the second elastic part and the second rigid body may be the same as the cross-sectional structures of the first elastic part and the first rigid body. Refer to the cross-sectional structure shown in FIG. 77. Therefore, the structures of the second elastic part and the second rigid body will not be described again here.

FIG. 78 is a cross-sectional view of the mixing spatula of the spatula provided by the embodiment of the present disclosure. Similarly, the mixing part 4222 includes a third rigid body 4222a, and a third elastic body 4222b covers the outer surface of the third rigid body 4222a. A third elastic contact part J3 is formed on the mixing part 4222 at a position for contacting the bottom surface of the pot body 310. On the cross section of the mixing part 4222, the distance H2 from the third elastic contact part J3 to the third rigid body is greater than the distance from other positions on the third elastic contact part to the third rigid body. As a result, the side of the mixing part 4222 that contacts the pot body 310 has a better deformation space, further improving the cleaning effect.

Specifically, the widest width W4 of the third elastic body 4222b of the mixing part 4222 ranges from [3mm, 15mm]. Preferably, the W4 range is controlled at [3mm, 10mm]; in some embodiments, the distance H2 between the third elastic body 4222b of the mixing part 4222 and the third rigid body ranges from [3mm, 25mm]. Preferably, the range of H2 is controlled at [3mm, 20mm].

Please refer to FIG. 69, FIG. 70, FIG. 72 to FIG. 38. The mixing spatula 422 and the auxiliary spatula 423 may be meshed and driven by a planetary gear set; the planetary gear set 432 includes a sun gear and a planetary gear. The sun gear is in connection with the auxiliary spatula, and the planetary gear is in connection with the mixing spatula 422. When the sun gear receives rotational power, the auxiliary spatula 423 rotates, and the mixing spatula 422 rotates while revolving around the rotation axis of the auxiliary spatula 423.

Specifically, the transmission apparatus 430 of the spatula assembly 40 is provided on the bracket 421 of the spatula 420. The transmission apparatus 430 includes a planetary gear set 432 and a second power output shaft 431 (in an embodiment in which the mixing spatula 422 has its own power output shaft, the transmission apparatus 430 may not include the second power output shaft 431). The planet gear set 432 includes a sun gear 4321 and a planet gear 4322, which are respectively provided on the bracket 421 at positions corresponding to the main shaft hole 4211 and the auxiliary shaft hole 4212, and the gears of the sun gear 4321 and the planet gear 4322 mesh with each other, so that one of them may drive the other one to rotate. The first power output shaft 412 penetrates the sun gear 4321 and is in connection with the main shaft hole 4211, and the axis center of the first power output shaft 412 may be used as the axis of revolution; the second power output shaft 431 penetrates the planet gear 4322 and is in connection with the main shaft hole 4211, and the axis center of the second power output shaft 431 may be used as the rotation axis center. Therefore, under the driving of the rotating motor 411, the first power output shaft 412 drives the bracket 421 to rotate; at this time, the sun gear 4321 rotates with the first power output shaft 412, causing the planet gear 4322 to rotate in the opposite direction, and also drives the second power output shaft 4321 to rotate, causing the mixing spatula 422 and the auxiliary spatula 423 follow the revolution of the bracket 421, and the mixing spatula 422 rotates on the bracket 421. Therefore, when the spatula 420 rotates in the pot body 310 along the circumferential direction of the pot body 310, the mixing spatula 422 may not only perform static stirring in the pot body 310 with the rotation of the bracket 421, but also may perform dynamic stirring through rotation, which may prevent the ingredients from being excessively concentrated in the central area of the pot 310 or dispersed to the peripheral areas during the stirring process, thereby providing a more uniform stirring effect. Further, with the characteristic of the auxiliary spatula 423 revolving along with the bracket 421, the ingredients splashed and attached to the inner wall during the mixing process may be scraped off and allowed to fall back into the mixing area of the mixing spatula 422, thereby avoiding the waste of some ingredients or uneven doneness.

Please refer to FIG. 69. The lifting apparatus 440 is in connection with the driving apparatus 410 and is used to drive the spatula 420 to rise or fall in the pot body 310 along the axial direction of the first power output shaft 412 (that is, the axial direction of the main shaft hole 4211). The lifting apparatus 440 may include a cam lifting mechanism, a spiral lifting mechanism, a rack and pinion lifting mechanism, etc. In this embodiment, a cam lifting mechanism in which the lifting apparatus 440 includes a cam 441, a cam motor 442 and a reset element 443 is used as an example, but is not limited to this.

The cam 441 is provided at the top end of the connecting component (the first power output shaft 412) within the main body 212 of the cantilever 210, and has a near rest point 4411 and a far rest point 4412 on the circumference of the cam 441. The cam motor 442 is electrically connected to the cam 441 to drive the cam 441 to rotate so that the near rest point 4411 and the far rest point 4412 may alternately contact the connecting component (the first power output shaft 412) to provide displacement stroke of the first power output shaft 412 in the axis direction. The reset element 443 is provided between the bracket 421 and the connecting component, and the deformation direction of the reset element 443 is consistent with the moving direction of the connecting component; when the far rest point of the cam 441 abuts against the connecting component, the reset element 443 is in a deformed state; when the cam 441 rotates from the far rest point to the near rest point and contacts the connecting component, the deformation amount of the reset element 443 gradually decreases. Specifically, the reset element 443 may be sleeved on the first power output shaft 412, which may be but is not limited to a preloaded spring or a tension spring, so that the first power output shaft 412 is pulled by the reset element 443 to be normally maintained at a first predetermined position, and may be displaced to the second predetermined position under the push of the cam 441. In this embodiment, the first predetermined position is where the spatula 420 approaches the pot cover 20 and contacts or presses against the inner surface 221 of the cover body 220, and the second predetermined position is where the spatula 420 approaches the bottom surface 313 of the pot body 310 and contacts or presses against the bottom surface 313 of the pot body 310. In some embodiments of the present disclosure, the first predetermined position and the second predetermined position may also be opposite to the present embodiment, and therefore are not limited to the examples illustrated in this embodiment.

Through the above configuration of the lifting apparatus 440, when the cam 441 is driven by the cam motor 442, the far rest point 4412 contacts the first power output shaft 412, so that the first power output shaft 412 is compressed and drives the spatula 420 to move downward to the second predetermined positions, and exerts force on the reset element 443. Therefore, when the cam motor 442 drives the cam 441 to rotate and the near rest point 4411 contacts the first power output shaft 412, the first power output shaft 412 is driven to move in a direction toward the first predetermined position under the elastic restoring force of the reset element 443. Thereby, the spatula 420 is driven to move upward to the first predetermined position.

In this way, in the cooking device 1 provided by the embodiment of the present disclosure, in addition to providing two-dimensional stirring and cleaning modes through the mixing spatula 422 and the auxiliary spatula 423 of the spatula 420, by the configuration of lifting apparatus 440, the mixing spatula 422 and the auxiliary spatula 423 may also rise or fall in the pot body 310 along the axis direction, thereby providing a multi-dimensional operation mode of 360-degree circular motion and achieving 360-degree stirring and cleaning of the inside of the pot body 310 without any dead ends.

In one application scenario, after the user operates the cooking device 1 to complete the cooking process, the cleaning mode may be selected on the display operation panel 120 to clean the inner cavity of the pot body 310. When the cover body 220 of the pot cover 20 covers the pot body 310, the second execution part 4232 of the auxiliary spatula 423 contacts the inner wall surface 314 of the pot body 310, and the mixing part 4222 of the mixing spatula 422 contacts the bottom surface 313 of the pot body 310 and the inner wall surface 314 close to the bottom surface 313 at the same time. At this time, water is poured into the pot body 310, and the rotating motor 411 is started, so that the first power output shaft 412 drives the mixing spatula 422 and the auxiliary spatula 423 of the spatula 420 to revolve in the pot body 310, causing the bottom surface 313 and the inner wall surface of the pot body 310 being cleaned in the circumferential direction. At the same time, under the operation of the planetary gear set 432, the mixing spatula 422 is driven by the second power output shaft 431 to rotate in the pot body 310, thereby the inner wall surface 314 and the bottom surface 313 of the pot body 310 is cleaned in the circumferential direction. Moreover, through the interference fit of the mixing spatula 422 and the auxiliary spatula 423 with the bottom surface 313 and the inner wall surface 314 of the pot body 310 respectively, attachments on the bottom surface 313 and the inner wall surface 314 may be scraped off to provide a better cleaning effect.

While the spatula 420 is rotating for cleaning, the lifting apparatus 440 may be used to drive the spatula 420 up and down in the pot body 310. When the cam 441 is driven by the cam motor 442 to move near the rest point 4411, the first power output shaft 412 drives the mixing spatula 422 to move upward under the action of the elastic restoring force of the reset element 443. At this time, the first execution part 4231 of the auxiliary spatula 423 is in interference fit with the inner surface 221 of the cover body 220, thereby scraping and cleaning the oil dirt or water vapor adhering to the cover body 220. When the cam 441 moves to the far rest point 4412, the first power output shaft 412 pushes the reset element 443 and drives the spatula 420 to move downward. At this time, the mixing spatula 422 is in interference fit with the bottom surface 313 of the pot body 310, thereby scraping and cleaning the bottom surface 313 of the pot body 310. When the spatula 420 moves downward, the pressure exerted by the first execution part 4231 of the auxiliary spatula 423 on the cover body 220 is released, thereby reducing the rotational resistance of the mixing spatula 422 when performing the cleaning task, thereby improving cleaning efficiency.

As shown in FIGs. 69 and 72, in some embodiments of the present disclosure, an elastic element 433, such as a spring or a spring, may be selectively provided on the second power output shaft 431. In this embodiment, the elastic element 433 is sleeved on the second power output shaft 431 in the form of a preloaded spring, and the opposite ends of the elastic element 433 respectively abut against the bracket 421 and the rod 4221 of the spatula 420. Therefore, when the lifting apparatus 440 drives the spatula 420 to descend to the second predetermined position in the pot body 310, the mixing part 422 contacts the bottom surface 313 of the pot body 310, the elastic element 433 will be affected by the downward pressure of the bracket 421 at the same time, and exerts the elastic restoring force on the rod body 4221, so that the mixing part 422 is pressed against the bottom surface 313 of the pot body 310. Similarly, when the lifting apparatus 440 drives the spatula 420 to rise to the first predetermined position in the pot body 310, the bracket 421 will be affected by the elastic restoring force of the reset element 443, causing the mixing part 422 to contact the bottom surface 313 of the pot body 310; at the same time, the first execution part 4231 of the auxiliary spatula 423 is pressed against the inner surface 221 of the cover body 220. Therefore, for some ingredients that are easy to stick to the pot or stick to the pot during cooking, through the above configuration, the mixing spatula 422 and the auxiliary spatula 423 may play a strong scraping role in cleaning the pot body 310 and the pot cover 20 effect. In addition to ensuring the quality of the dishes during the cooking process and avoiding scorching the pot, it may also provide a powerful scrubbing effect during the cleaning process after cooking to ensure the quality of cleaning. In some embodiments of the present disclosure, in order to reduce the scratch damage caused by the spatula 420 to the bottom surface 313 and the inner wall surface 314, when the spatula 420 is in the first predetermined position, the second predetermined position, or a position between the two, the pressure exerted by the mixing part 422 on the bottom surface 313 or the inner wall surface 314 of the pot body 310 is less than or equal to 10 Newtons (N).

In some embodiments, a cooking device is also provided, including: a pot, including a pot body and a cover body, the cover body covers the pot body to form a cooking cavity; a spatula assembly located in the cooking cavity, including a spatula and a lifting apparatus; the lifting apparatus provided on the cover and in driving connection with the spatula. The lifting apparatus is able to drive the spatula to perform movement up and down between the first position and the second position relative to the pot body; when the spatula is in the first position, the spatula is in close contact with the inner surface of the cover; when the spatula is in the second position, the spatula is out of contact with the inner surface of the cover.

In some embodiments, a cooking device is also provided, including: a pot, including a pot body and a cover body, the cover body covers the pot body to form a cooking cavity; a spatula assembly located in the cooking cavity, including a spatula and a lifting apparatus, which includes an auxiliary spatula that may be in contact with the cover body, and a mixing spatula that may be in contact with the bottom surface of the pot body; a lifting apparatus located on the cover body and in driving connection with the spatula. The lifting apparatus is able to drive the spatula to perform movement up and down between the first position and the second position relative to the pot body.

In addition, based on the liftable spatula 420, the cooking effect and user experience are further improved.

In some embodiments, a Hall element and a magnet may be installed on the mixing spatula 422. Specifically, the magnet may be installed on the mixing part 4222, the Hall element may be installed on the rod 4221, or the Hall element may be installed on the mixing part 4222, and the magnet is installed on the rod body 4221, so that the mixing part 4222 may position itself during rotation, so that the food at a specific location may be longitudinally divided by controlling the lifting and lowering at a designated position.

Assuming that each time the Hall element is detected, it represents one rotation of the mixing part 4222. That is, the time interval between two detections may be used to calculate the current rotation speed of the mixing part 4222, and then the angle of rotation in the next rotation cycle may be calculated based on the running time. Thereby the position of the mixing part 4222 is accurately positioned.

Further, the rotation speed may be updated every time the mixing part 4222 rotates, thereby obtaining real-time rotation speed and improving the positioning accuracy of the mixing part 4222.

In some embodiments, an infrared sensor camera may also be installed on the cover body 220, so that the infrared sensor camera may obtain a heat map of the food in the pot being heated in real time, and then calculate uneven heating of the food based on the heat map. The mixing part 4222 is controlled to first rise and then lower in the unevenly heated area to selectively disperse the ingredients so that they may be heated evenly. Further, the mixing part 4222 may also be controlled to lift and rotate in unevenly heated areas, thereby scraping off the unevenly heated areas and accurately stir-frying the unevenly heated parts so that they are evenly heated.

The inventor also found through creative work that the taste of the cooked dishes is related to the stirring speed and stirring time of the mixing spatula. Therefore, the embodiment of the present disclosure also dynamically adjusts the mixing speed of the mixing spatula. Specifically, a pressure sensor may be provided at the mixing part 4222; or a apparatus for detecting motor current may be designed at the driving motor of the spatula assembly 40. The greater the driving motor current, the greater the pressure on the mixing part 4222 is.

Based on the above, to control the rotation speed and lift of the mixing spatula 422, the design of a pressure sensor at the mixing part 4222 is taken as an example.

When it is detected that the pressure on the mixing spatula 422 is too high, the rotation speed of the mixing spatula 422 may be reduced first, and then the mixing spatula 422 may be driven to rise, and then the rotation speed of the mixing spatula 422 may be slowly increased. After a preset time (which may be a few seconds), the mixing spatula 422 is lowered. At this time, the pressure on the mixing spatula 422 is detected. When the pressure is within the normal range, normal stirring is continued. If the pressure is large, the above action may be repeated. When the number of calibrations is too many, or the rotation speed of the mixing spatula 422 is too low, an alarm signal may be sent (an alarm apparatus may be provided on the cooking device) to remind the user that the mixing spatula is blocked. When it is detected that the pressure on the mixing spatula 422 is too small, the rotation speed of the mixing spatula 422 may be increased, and then the mixing spatula 422 is driven down, and then the pressure on the mixing spatula 422 is detected. When the pressure is within the normal range, normal stirring is continued. If the pressure is small, the above action may be repeated. When the number of calibrations is too many, or the rotation speed of the mixing spatula 422 is too high, an alarm signal may be sent (an alarm apparatus may be set on the cooking device) to remind the user that there is no food in the pot and the pot is empty state. As a result, the safety and efficiency of cooking with the cooking device are improved.

Following on from the above, since different ingredients and different cooking methods cause different levels of oil stains and food residues in the pot, this kind of cooking device with a self-cleaning mode also needs to provide a variety of cleaning modes so that the user may choose according to their needs, or through the control module of the device itself, according to the content of the recipe selected by the user, the corresponding cleaning mode is selected to achieve the purpose of cleaning and meet the user's needs.

The self-cleaning method and control method of the above-mentioned cooking device and/or intelligent Internet of Things terminal device of the present disclosure will be further described below through some method embodiments.

Please refer to FIG. 79. When using the smart Internet of Things terminal device provided in an embodiment of the present disclosure, after closing the pot cover, the user may select the recipe through the display operation panel on the base by clicking. At this time, the control module loads the corresponding cooking parameters according to the recipe selected by the user. For example, according to the quality and proportion of various main ingredients and ingredients, parameters such as the cooking time, spatula rotation method, revolution speed, mixing spatula rotation speed, estimated steam volume, and the water volume of the water supply module, heating volume of the temperature control module, etc., are adaptively loaded. Then start each apparatus and module to work together to cook the main ingredients.

After the cooking of the main ingredients is completed, the control module may send a signal through the display operation panel to notify the user that the cooking of the ingredients is completed and remind the user that there is food ready to be taken out. Then, after the user covers the pot cover on the pot body again, the control module determines that the cooking program is over, starts the lifting apparatus, and moves the spatula to the first predetermined position in the pot body, so that the mixing spatula of the spatula is in interference fit with the bottom surface of the pot body (S100). Then, the control module starts the driving apparatus to drive the mixing spatula and auxiliary spatula of the spatula to revolve in the pot body with the first power output shaft as the axis, thereby cleaning the inner wall surface and the bottom surface of the pot body along the circumferential direction of the pot body (S110). At the same time, since the transmission apparatus may be linked by the driving apparatus, the transmission apparatus is started by the driving apparatus, driving the mixing spatula to rotate in the pot body with the second power auxiliary output shaft as the axis center, thereby cleaning the bottom surface of the pot body along the circumferential direction of the pot body (S120). During this process, through the interference fit characteristics of the side of the mixing spatula and the second execution part of the auxiliary spatula with the inner wall surface of the pot body, the residue adhering to the inner wall surface may be powerfully removed. At the same time, through the interference fit characteristics of the mixing part of the mixing spatula and the bottom surface of the pot body, the interference contact between the mixing part and the bottom surface of the pot body may also be used to powerfully remove residues. In addition, the lifting apparatus may also be used to drive the mixing part to move as far as possible towards the bottom of the pot body, so that the mixing part may be pressed against the bottom surface of the pot body under the action of downward pressure to provide a more powerful rotational cleaning mode to remove difficult-to-remove residue from the bottom surface.

Afterwards, after the predetermined cleaning times are completed, the control module stops the rotation of the spatula and ends the self-cleaning program.

In the above process, the control module may also start the water contact module to inject water into the pot body according to the difficulty of the main ingredients and ingredients sticking to the bottom surface and inner wall surface of the pot body during the cooking process, and start the temperature control module to heat the injected water, to generate steam in the pot body to soften the residue adhering to the bottom surface and inner wall surface. This makes it easier for the spatula to remove these residues, speeding up cleaning and improving efficiency. In addition, it may be understood that in the self-cleaning method or control method of the embodiment of the present disclosure, the starting position of the cleaning process may be the first cleaning position or the second cleaning position, and the two may be interchanged. The method in the above embodiment is not limited to starting from the first cleaning position and then moving to the second cleaning position.

In addition, after the self-cleaning procedure for the inner wall surface and bottom surface of the pot body is completed, it may be determined whether a suitable cleaning procedure is needed for the pot cover according to the user's needs or the selection of the recipe. In the cleaning process involving the pot cover, the spatula is able to clean the bottom surface and the inner wall surface of the pot body, and the inner surface of the pot cover at the same time. The difference is that the cleaning intensity of the inner surface of the pot cover will be emphasized. Similarly, the lifting apparatus is started through the control module to drive the spatula to move to the second predetermined position, so that the auxiliary spatula and the inner surface of the pot cover interfere with each other. At this time, the first execution part of the auxiliary spatula is in interference contact with the inner surface of the pot cover, and the second execution part and the side of the mixing part of the mixing spatula are in contact with the inner wall surface of the pot body at the same time. Therefore, when the control module starts the driving apparatus and drives the mixing spatula and the auxiliary spatula to rotate, the inner wall surface of the pot body and the inner surface of the pot cover may be cleaned simultaneously along the circumferential direction of the pot body. If it is combined with a lifting apparatus to drive the first execution part to press against the inner surface of the pot cover may also increase the cleaning intensity of the spatula on the pot cover. During the above process, the driving apparatus starts the transmission apparatus synchronously, driving the mixing spatula to rotate, so that the mixing spatula cleans the bottom surface of the pot body along the axis of the spatula, thereby achieving a 360-degree full view of the area to be cleaned in the pot body by the mixing spatula and the auxiliary spatula.

Please refer to FIG. 80. The controlling method of a cooking device provided in one embodiment of the present disclosure includes:
Determine the degree of contamination in the pot body, and select a regular cleaning program or an enhanced cleaning program based on the degree of pollution (S200). Similar to the previous self-cleaning method, the control module may determine the degree of contamination in the pot body based on the content of the selected recipe. If the degree of contamination is minor, choose to perform the regular cleaning procedure in the subsequent steps; if the degree of contamination is heavy, choose to perform the enhanced cleaning procedure. Next, the control module starts the lifting apparatus to move the spatula to the first cleaning position, and makes interference contact between the spatula and the bottom surface of the pot body (S210). In this step, the control module may pre-detect the current position of the spatula. If the current position of the spatula is already at the first cleaning position, this step may be omitted, or the lifting apparatus may be used to drive the mixing spatula along the rotation axis to press against the bottom surface of the pot body. Then, the control module starts the spatula to stir and clean within the cleaning time of the first value range (S220). Next, the spatula is moved to the second cleaning position, and the spatula is brought into interference contact with the inner surface of the pot cover (S230). After the spatula moves to the second cleaning position, the control module starts the spatula to stir and clean within the cleaning time of the second value range (S240). Finally, after the cleaning time in the second value range ends, cleaning ends (S250).

For example, under a regular cleaning program, the control module drives the lifting apparatus to drive the spatula to lower to the lowest position in the pot body, such as the first cleaning position. Then, selectively heat the pot body with maximum power and add water to the pot body with minimum flow rate, and time the water adding time T0, T0 is greater than 0 seconds and less than or equal to 200 seconds. Then, wait for T1 seconds, for example, greater than 0 seconds and less than or equal to 100 seconds. Then, the control module starts the driving apparatus to drive the spatula to rotate and stir for T2 seconds, such as greater than 0 seconds and less than or equal to 80 seconds. When the water adding time T0 seconds reaches the set value, stop adding water, and when stirring ends T2 seconds, stop stirring. Then the lifting apparatus is started through the control module to lift the spatula to the highest position, such as the second cleaning position. Then, the control module starts the driving apparatus to drive the spatula to rotate and stir for T3 seconds, T3 is greater than 0 seconds and less than or equal to 80 seconds. When T3 seconds are over, the control module starts the lifting apparatus to lower the spatula to the lowest position and stops heating to end the cleaning process.

Or under the enhanced cleaning program, similarly move the spatula to a predetermined position according to the purpose, for example, lower the spatula to the lowest position in the pot body. Then, selectively heat the pot body with maximum power and add water to the pot body with minimum flow rate, and time the water adding time T4, T4 is greater than 0 seconds and less than or equal to 200 seconds. Then, wait for T5 seconds, for example, greater than 0 seconds and less than or equal to 100 seconds. Then, the control module starts the driving apparatus to drive the spatula to rotate and stir for T6 seconds, for example, greater than 0 seconds and less than or equal to 100 seconds. When the water addition time T4 seconds reaches the set value, stop adding water, and when the stirring time T6 seconds ends, stop stirring. Then start the lifting apparatus through the control module to lift the spatula to the highest position, such as the second cleaning position. Then, the control module starts the driving apparatus to drive the spatula to rotate and stir for T7 seconds, T7 is greater than 0 seconds and less than or equal to 100 seconds. When T7 seconds are over, the control module starts the lifting apparatus to lower the spatula to the lowest position and stops heating to end the cleaning process.

After the cleaning process is completed, the control module sends a signal to the display operation panel to display or make a prompt sound to remind the user that the cleaning process is completed and the pot cover may be opened to pour water. And when confirming that the pot cover is closed again, the control module may also send a confirmation signal to prompt the user whether it needs to be cleaned again.

In addition, other embodiments of the present disclosure also provide a bionic cleaning program that simulates the user's manual cleaning method of cleaning the pot body and pot cover. For example, in these embodiments, if the target cleaning area is the first cleaning position, the control module activates the lifting apparatus to lift the spatula to the second cleaning position, and reduces the spatula rotation speed (if the spatula has started to rotate). Then, the lifting apparatus drives the spatula to move toward the first cleaning position, and at the same time, the driving apparatus gradually increases the rotation speed of the spatula, so that when the spatula reaches the first cleaning position, it is in interference fit with the inner surface of the pot cover and the upper part of the inner wall surface of the pot body at the highest rotation speed. This step is similar to the user's manual rotation to wipe and clean the pot body, which may improve cleaning efficiency and cleanliness.

Similarly, if the target cleaning area is the second cleaning position, the control module starts the lifting apparatus to lower the spatula to the first cleaning position. Then, drive the spatula to move in the direction toward the second cleaning position, and simultaneously increase the rotation speed of the spatula, so that when the spatula reaches the second cleaning position, it is in interference fit with the bottom surface of the pot body and the lower half of the inner wall surface of the pot body at the highest rotation speed. In this way, better cleaning results may be provided.

Please refer to FIG. 81. Specifically, the self-cleaning method and the control method provided by the embodiments of the present disclosure may be selected individually or mixed depending on the situation.

First, determine the degree of contamination in the pot (S300). The judgment method may be through the user's own judgment or through the cooking device. In this embodiment of the present disclosure, a control module is further provided in the base of the cooking device, which is at least electrically connected to the display operation panel, the driving apparatus and the lifting apparatus. In some embodiments of the present disclosure, the control module is also electrically connected to the water adding module, the temperature control module, etc., to provide corresponding control programs between various apparatuses or modules. The control module may determine whether the degree of pollution in the pot after the end of the current cooking program is general pollution or heavy pollution based on the recipe content selected by the user on the display operation panel.

For example, some ingredients are usually added to the cooking process, such as oils (such as various vegetable oils, chili oils, animal oils, oil consumption, etc.); sauces (such as tomato sauce, sesame sauce, etc.); seasonings with high oil content (such as edible oil seasonings with heavy oil stains such as base ingredients for hot pot); or auxiliary ingredients that are prone to paste (such as gravy, milk), etc. Therefore, the proportion or quality of these ingredients in the selected recipe may be used as a basis for judgment. For example, in this implementation, it is judged as heavy pollution when one of the following situations is met: when the mass of oil added to the recipe is greater than or equal to 10 grams, such as greater than or equal to 15 grams, 20 grams or 25 grams; when the mass of sauces added to the recipe is greater than 10 grams, such as greater than 15 grams, 18 grams or 23 grams; when the mass of heavily oily seasonings such as hot pot base is added to the recipe is greater than 10 grams, such as greater than 12 grams, 15 grams or 25 grams; and when excipients such as gravy and milk that are likely to produce paste is greater than 5 grams, such as greater than 6 grams, 8 grams or 12 grams. Therefore, in subsequent steps, the conventional cleaning program or the enhanced cleaning program may be selected based on the degree of contamination (S310). When it is judged to be heavily polluted, the enhanced program may be selected accordingly; conversely, if the ingredients in the recipe do not fall into the above conditions, it is judged to be general pollution, and the corresponding conventional cleaning procedure may be selected for cleaning.

Next, close the pot cover. The control module sends an instruction to the lifting apparatus to cause the cam motor to drive the cam to rotate and drive the first power output shaft to move the spatula to the first cleaning position in the pot body (S320). The first cleaning position may be when the spatula is lowered to the lowest position in the pot body or raised to the highest position in the pot body, where the lowest position is the interference fit position between the mixing part of the mixing spatula and the bottom surface of the pot body, and the highest position is the interference fit position between the first execution part of the auxiliary spatula and the inner surface of the cover body. Therefore, in this embodiment, the order of cleaning may be selected according to different usage requirements or habits: from the bottom to the top of the pot body to the cover body; or from top to bottom of the cover body to the pot body. After the spatula moves to the first cleaning position, water is added to the pot body (S330). In the step of turning on the water pump to add water, the amount of water added may be timed according to the preset water adding time, or the amount of water added may be calculated based on the weight of the main ingredient based on the preset basic amount. In the embodiment where the water adding time is preset, the water adding time may be set to a value range greater than 0 seconds and less than or equal to 200 seconds, or within a value range greater than 0 seconds and less than or equal to 190 seconds. For example, the value range may be [10s, 150s] (greater than or equal to 10 seconds, less than or equal to 150 seconds) or [5s, 170s], etc. In addition, in the embodiment where the amount of water added is calculated based on the weight of the main ingredient, the calculation may be performed by adding the basic amount of water plus one-tenth of the weight of the main ingredient in the pot. For example, in an embodiment where the basic amount is preset to 30 ml, and the main ingredients include 150 g of egg liquid and 350 g of tomatoes, the amount of water added is calculated as 30 ml + (150 + 350)/10, so it may be known that the amount of water added is 80 ml. The above methods of adding water to the pot are only examples and are not limited thereto.

In some embodiments of the present disclosure, the amount of water added may be set according to an electronic recipe preset on the cooking device. The electronic recipe includes a self-cleaning step. The self-cleaning step includes parameters such as self-cleaning mode, water adding amount, and self-cleaning time. The user may edit the amount of water added in the electronic recipe in advance, for example, the user may select 200ml, 300ml, etc. to complete the self-cleaning process.

In some embodiments of the present disclosure, the amount of water added may be matched according to the self-cleaning mode. The self-cleaning mode of the cooking device includes: at least one of light self-cleaning, moderate self-cleaning, and heavy self-cleaning modes. Each self-cleaning mode matches a preset water amount, including: light self-cleaning 200ml, moderate self-cleaning 300ml, and heavy self-cleaning 300~400ml. When the user or electronic recipe selects a self-cleaning mode, the amount of water added in the cleaning mode is directly selected. Different water addition amounts are suitable for different cleaning modes, which may save water consumption and improve user experience without reducing the cleaning effect. When the water adding program is in progress or after completion, the control module sends an instruction to the driving apparatus to cause the rotating motor to drive the first power output shaft to rotate to start the spatula and stir and clean within the cleaning time of the first value range (S340). The first value range may be, but is not limited to, greater than 0 seconds, less than or equal to 80 seconds, or greater than 0 seconds, less than or equal to 100 seconds, which depends on the selected cleaning method. Moreover, the starting method of the spatula may be selected the rotation speed of the first power output shaft within the value range of greater than 0 revolutions per second and less than or equal to 200 revolutions per second, or greater than 0 revolutions per second and less than or equal to 190 revolutions per second. For example, driven by the first power output shaft, let the mixing spatula and auxiliary spatula rotate at [20r/s, 150r/s] (greater than or equal to 20 revolutions per second, less than or equal to 150 revolutions) or [10r/ s,180r/s] revolves in the pot body. The rotation speed range of the auxiliary spatula 423 may be 30 to 150 rpm, which is proportional to the operation of the planetary gear set. Moreover, the rotation speed of the auxiliary spatula 423 is less than or equal to the rotation speed of the mixing spatula 422, which is more conducive to turning the ingredients reasonably without making them messy. In addition, in conjunction with the revolution of the first power output shaft, the rotation speed of the mixing spatula in the pot body may be a multiple of the revolution speed, and its value range is [0,10] (0 to 10 times). For example, the mixing spatula may rotate at 5 times to a revolution speed, to strengthen the scrubbing of the main areas where ingredients are concentrated in the pot body.

After the cleaning time in the first value range ends, move the spatula to the second cleaning position in the pot body (S350). In this step, after the cleaning time in the first value range is over, the spatula may be moved to the second cleaning position while the spatula continues to rotate; or the rotation and stirring may be stopped first, and then the spatula may be moved to the second cleaning position. The second cleaning position is different from the first cleaning position. For example, the first cleaning position is when the spatula is lowered to the lowest position in the pot body, and the second cleaning position is when the spatula is raised to the highest position in the pot body, and vice versa.

After the spatula is positioned at the second cleaning position, the spatula is started to stir and clean within the cleaning time of the second value range (S360). Similar to the first value range, the second value range may also be, but is not limited to, greater than 0 seconds, less than or equal to 80 seconds, or greater than 0 seconds, less than or equal to 100 seconds, etc. After the cleaning time in the second value range ends, cleaning ends (S370). The self-cleaning process of the cooking device is now complete.

In addition, in some embodiments of the present disclosure, the control module may also calculate the degree of contamination based on the proportion of ingredients to determine the number of executions of the above cleaning method, which may be calculated by the following formula: 1+(weight of the ingredients/30)=number of executions. For example, there are 32g of peanut oil in the ingredients of the recipe, and its corresponding number of executions is 1+(32/30), thus deducing 2 rounds of cleaning procedures to ensure the cleaning effect.

Based on the above, since excessive human intervention is not required during the cleaning process, and through multi-dimensional cleaning methods such as the revolution, rotation, and lifting of the spatula, all-round self-cleaning of the pot cover and the inner wall surface and bottom surface of the pot body may be quickly achieved. Moreover, under the premise of ensuring the cleaning effect, the pot may be washed quickly during the two cooking processes to avoid the transfer of smell between the two dishes and shorten the cleaning time as much as possible, thereby shortening the cooking time between the two dishes and improving the cooking efficiency.

The cleaning method in the embodiment of the present disclosure is further described below through some application scenarios.

Please refer to FIG. 82. In the application scenario where the regular cleaning program is selected based on the degree of contamination, after the pot cover is closed, lower the spatula to the lowest position in the pot body (S400). Moreover, water is added to the pot body for 190 seconds or 200 seconds, and the pot body is heated (S410). After this step is completed, a predetermined period of time may be selectively waited to allow steam to be generated in the pot body to soften the residue in the pot; or proceed to the next step directly. Then, start the spatula and continue to rotate and stir during the cleaning time, which ranges from greater than 0 seconds to less than or equal to 70 seconds or 80 seconds (S420). Let the mixing part of the mixing spatula scrape the bottom surface and the inner wall surface located on the lower side of the pot body in an interference fit manner, and use the auxiliary spatula to scrape the inner wall surface located on the upper side of the pot body. During this process, the process of adding water to the pot may still be in progress, so that water is added to the pot body while stirring. When the water adding time reaches the set value, water addition is stopped (S430). When the cleaning time is over, the spatula stops stirring and is raised to the highest position in the pot body (S440). Then start the spatula and continue to rotate and stir during the cleaning time, which ranges from greater than 0 seconds to less than or equal to 70 seconds or 80 seconds (S450). Afterwards, after the cleaning time is over, lower the spatula to the lowest position in the pot body, stop heating, and end the routine cleaning program (S460).

Please refer to FIG. 83. In the application scenario where the enhanced cleaning program is selected based on the degree of contamination, after the pot cover is closed, the spatula is lowered to the lowest position in the pot body (S500). Moreover, water is added to the pot body for 190 seconds or 200 seconds, and the pot body is heated (S510). In this step, heat at maximum power and add water at minimum flow you may be selected to ensure sufficient steam is generated in the pot. For example, using a power of 1800W to 2000W and a flow rate of 4 to 6ml/s, the water may continuously generate steam in the pot body. Therefore, the maximum power and minimum flow rate mentioned in the present disclosure may be defined as the combination of power and flow rate that may allow water to continuously generate steam in the pot body. After the above steps are completed, wait for a predetermined period of time to allow steam to be generated in the pot body and soften the residue in the pot body (S520). The value range of the predetermined duration is greater than 0 seconds and less than or equal to 100 seconds, such as 45 seconds, 60 seconds or 90 seconds. Then, start the spatula and continue to rotate and stir during the cleaning time, which ranges from greater than 0 seconds to less than or equal to 90 seconds or 100 seconds (S530). Let the mixing part of the mixing spatula scrape the bottom surface of the pot body and the inner wall surface located on the lower side in an interference fit manner, and let the auxiliary spatula to scrape the inner wall surface located on the upper side of the pot body. During this process, the process of adding water to the pot may still be in progress, so that water is added to the pot body while stirring. When the water adding time reaches the set value, water addition is stopped (S540). When the cleaning time is over, the spatula stops stirring and is raised to the highest position in the pot body (S550). Then start the spatula and continue to rotate and stir during the cleaning time, which ranges from greater than 0 seconds to less than or equal to 90 seconds or 100 seconds (S560). Afterwards, after the cleaning time is over, lower the spatula to the lowest position in the pot body, stop heating, and end the intensive cleaning program (S570).

Please refer to FIG. 84. In order to better remove the residues attached to the pot cover and pot body, embodiments of the present disclosure also provide a cleaning method, in which the pot cover may be wiped off and the pot body may be wiped off separately. In the cleaning method for the bottom surface and inner wall surface of the pot body, the step of starting the spatula and stirring and cleaning within the cleaning time of the first value range also includes:
Move the spatula to the second cleaning position and reduce the rotation speed of the spatula to the minimum (S600), such as 35 to 45 rpm. That is, first move the spatula away from the target area. In this embodiment, the spatula is first lifted to the highest position in the pot body. Then, move the spatula toward the first cleaning position while increasing the rotation speed (S610), causing the spatula to rotate and stir from the highest position to the lowest position in the pot body, and gradually increase the rotation speed. In this embodiment, the range of the rotation speed may be, but is not limited to, 20 to 100 rotations per minute. When the spatula contacts the bottom surface of the pot body, increase the rotation speed to the highest level (S620), such as 65 to 75 rpm. In this way, when the spatula rotates once inside the pot body, it will evenly clean part of the bottom surface and inner wall of the pot body. In addition, in the step of raising the rotation speed to the highest level, the control module detects whether the rotation speed is raised to the highest level when the spatula contacts the bottom surface of the pot body. If not, repeat the step of continuously moving the spatula towards the lowest position of the pot body, until the speed reaches the highest level; if so, proceed to the next step.

Then, the spatula is moved toward the second cleaning position while reducing the rotation speed (S630). This step is used as a buffer. If the spatula has not returned to the highest position in the pot body, continue to move the spatula toward the highest position in the pot body and reduce the rotation speed until the spatula is raised to the highest position in the pot body. Allow the spatula to repeat the aforementioned steps of moving toward the first cleaning position and gradually increasing the rotational speed, to ensure that the starting angle of the spatula is different for each rotation of the spatula in the pot body, until the bottom surface of the pot body and the inner wall located on the lower side are all scraped off. Therefore, in other embodiments of the present disclosure, the confirmation procedure of determining whether the cleaning range of the spatula on the bottom surface is fully covered may also be executed after each rotation of the spatula. If the judgment result is no, return to the step of moving the spatula to the second cleaning position and perform the corresponding steps. If the judgment result is yes, optionally move the spatula at a constant speed in the pot body, and contact the inner wall surface and bottom surface of the pot body to evenly rotate and scrape for around as a finish. After that, the spatula returns to the second cleaning position, stops stirring, and ends the cleaning process (S640).

It may be understood that the cleaning method for the inner surface of the cover body in the embodiment of the present disclosure is similar to the above-mentioned cleaning method for the bottom surface and inner wall surface of the pot body. The difference between the two is that the starting position and movement direction of the spatula are opposite. Therefore, in the cleaning method for the inner surface of the cover body, the step of starting the spatula and stirring and cleaning within the cleaning time of the second value range includes: moving the spatula assembly to the first cleaning position, and reduce the rotation speed of the spatula to the lowest level; move the spatula toward the second cleaning position while increasing the rotation speed; allow the spatula to contact the inner surface of the cover body and increase the rotation speed to the highest level; move the spatula assembly toward the first cleaning position while lowering the rotation speed; and the spatula assembly returns to the first cleaning position and stops stirring. The details are the same or similar to the above-mentioned cleaning method for the bottom surface and inner wall surface of the pot body, and will not be repeated here.

Finally, it should be noted that the above embodiments are only used to illustrate the technical solution of the present disclosure, but not to limit it; although the present disclosure has been described in detail with reference to the foregoing embodiments, those of ordinary skill in the art should understand that it may still be Modifications are made to the technical solutions described in the foregoing embodiments, or equivalent substitutions are made to some of the technical features; however, these modifications or substitutions do not cause the essence of the corresponding technical solutions to deviate from the spirit and scope of the technical solutions in the embodiments of the present disclosure.

## Claims

1. A cooking device, comprising:
a pot, comprising a pot body and a cover body, wherein the cover body covers the pot body to form a cooking cavity; and
a spatula assembly located in the cooking cavity, wherein the spatula assembly comprises a spatula, a lifting apparatus, and a driving apparatus;
the lifting apparatus is provided on the cover body and is in driving connection with the spatula, the lifting apparatus is able to drive the spatula to move up and down relative to the pot body between a first position and a second position;
the driving apparatus is in driving connection with the spatula so as to drive the spatula to rotate;
when the spatula is in the first position, the spatula in close contact with an inner surface of the cover body; under a drive of the driving apparatus, the spatula is able to clean the inner surface of the cover body in the first position;
when the spatula is in the second position, the spatula is out of contact with the inner surface of the cover body.

2. The cooking device according to claim 1, wherein when the spatula is in the first position, the spatula is in clearance fit or interference fit with an inner wall surface of the pot body, and the spatula is in clearance fit or interference fit with a bottom surface of the pot body;
when the spatula is in the second position, the spatula is an interference fit with the inner wall surface of the pot body, and the spatula is in an interference fit with the bottom surface of the pot body.

3. The cooking device according to claim 2, wherein when the spatula is in the second position, under the drive of the driving apparatus, the spatula is able to clean the bottom surface and the inner wall surface of the pot body in the second position.

4. The cooking device according to claim 2, wherein the spatula comprises: a bracket, a mixing spatula and an auxiliary spatula, and wherein the bracket is in connection with the cover body, and the mixing spatula and the auxiliary spatula are respectively provided on the bracket, and the mixing spatula and the auxiliary spatula are both able to rotate relative to the cover body;
a rotation axis of the mixing spatula is parallel to and spaced apart from a rotation axis of the auxiliary spatula.

5. The cooking device according to claim 4, wherein the rotation axis of the auxiliary spatula coincides with a central axis of the cover body.

6. The cooking device according to claim 4, wherein the mixing spatula and the auxiliary spatula are engaged and driven by a planetary gear set;
the planetary gear set comprises a sun gear and a planetary gear, the sun gear is in connection with the auxiliary spatula, the planetary gear is in connection with the mixing spatula, and the auxiliary spatula rotates when the sun gear receives rotational power, and the mixing spatula is trigger to rotate while rotating around the rotation axis of the auxiliary spatula.

7. The cooking device according to claim 4, wherein,
the mixing spatula comprises a mixing part and a connecting component connecting the mixing part to the cover body; when the cover body covers the pot body, the mixing part faces the bottom surface and the inner wall surface of the pot body.

8. The cooking device according to claim 7, wherein,
the auxiliary spatula comprises a first execution part and a second execution part, when the cover body covers the pot body, the first execution part faces the inner surface of the cover body, the second execution part faces the inner wall surface of the pot body, and the first execution part extends radially from the rotation axis of the auxiliary spatula to an edge of the cover body.

9. The cooking device according to claim 8, wherein during a movement of the spatula from the first position to the second position, an interference amount between the second execution part and the inner wall surface of the pot body increases;
and/or, during the movement of the spatula from the first position to the second position, the interference amount between the mixing part and the bottom surface of the pot body increases.

10. The cooking device according to claim 8, wherein the first execution part comprises a first elastic part, the first elastic part is used for scraping contact with the inner surface of the cover;
and/or, the second execution part comprises a second elastic part, the second elastic part is used for scraping contact with the inner wall surface of the pot body;
and/or, the mixing part comprises a third elastic body, the third elastic body is used for scraping contact with the inner wall surface of the pot body and the bottom surface of the pot body.

11. The cooking device according to claim 10, wherein the first execution part comprises a first rigid body, and the first elastic part covers an outer surface of the first rigid body;
the second execution part comprises a second rigid body, and the second elastic part covers an outer surface of the second rigid body.

12. The cooking device according to claim 11, wherein a first elastic contact part is formed on the first elastic portion at a position for contacting the inner surface of the cover body, on a cross section of the first execution portion, a distance from the first elastic contact part to the first rigid body is greater than a distance from other positions on the first elastic part to the first rigid body;
a second elastic contact part is formed on the second elastic part at a position for contacting the inner wall surface of the pot body, on a cross section of the second execution portion of the second execution portion, a distance from the second elastic part to the second rigid body is greater than a distance from other positions on the second elastic part to the second rigid body.

13. The cooking device according to claim 11, wherein the mixing part comprises a third rigid body, and the third elastic body covers an outer surface of the third rigid body.

14. The cooking device according to claim 13, wherein a third elastic contact part is formed on the mixing part at a position for contacting the bottom surface of the pot body, and on a cross section of the mixing part, a distance from the third elastic contact part to the third rigid body is greater than a distance from other positions on the third elastic body to the third rigid body.

15. The cooking device according to claim 8, wherein a sum of an extension length of the second execution part and a height of the mixing part is greater than a height of the inner wall surface of the pot body.

16. The cooking device according to claim 4, wherein the spatula has a connecting piece, the connecting piece is in connection with the spatula and is able to be movably provided on the bracket;
the lifting apparatus comprises:
a cam, having a near rest point and a far rest point on a circumference of the cam, wherein the cam is used for abutting contact with the connecting piece;
a cam motor, being in connection with the cam, and is used to drive the cam to rotate, so that the near rest point and the far rest point of the cam alternately abut against the connecting piece, so as to drive the spatula to move up and down.

17. The cooking device of claim 16, further comprising:
a reset element, the reset element is provided between the bracket and the connecting piece, and a deformation direction of the reset element is consistent with a moving direction of the connecting piece;
when the far rest point of the cam is in contact with the connecting piece, the reset element is in a deformed state;
during a process of the cam to rotate from the far rest point to the near rest point to be in contact with the connecting piece, a deformation amount of the reset element gradually decreases.

18. A cooking device, comprising:
a pot, comprising a pot body and a cover body, and the cover body covers the pot body to form a cooking cavity; and
a spatula assembly located in the cooking cavity, wherein the spatula assembly comprises a spatula and a lifting apparatus;
the lifting apparatus is provided on the cover body and is in driving connection with the spatula, the lifting apparatus is able to drive the spatula to move up and down relative to the pot body between a first position and a second position;
when the spatula is in the first position, the spatula is in close contact with an inner surface of the cover body;
when the spatula is in the second position, the spatula is out of contact with the inner surface of the cover body.

19. A cooking device, comprising:
a pot, comprising a pot body and a cover body, wherein the cover body covers the pot body to form a cooking cavity; and
a spatula assembly located in the cooking cavity, wherein the spatula assembly comprises a spatula and a lifting apparatus, the spatula comprises an auxiliary spatula being able to be in contact with the cover body, and a mixing spatula being able to be in contact with a bottom surface of the pot body;
the lifting apparatus is provided on the cover body, and is in driving connection with the spatula, the lifting apparatus is able to drive the spatula to move up and down relative to the pot body.
